(19)

Europäisches
Patentamt
European
Patent Office
Office européen
des brevets

(11)  **EP 4 597 875 A2**

(12)  **EUROPEAN PATENT APPLICATION**

(43) Date of publication:
06.08.2025   Bulletin 2025/32

(21) Application number: 25185024.4

(22) Date of filing: 20.12.2022

(51) International Patent Classification (IPC):
**H04B 7/08** (2006.01)

(52) Cooperative Patent Classification (CPC):
**H04L 5/0094; H04L 5/0044; H04L 5/0053;**
H04B 7/06952; H04B 7/088

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: 22.12.2021  US 202163292742 P
31.12.2021  US 202163295728 P
05.01.2022  US 202263296748 P
16.05.2022  US 202263342504 P
15.12.2022  US 202218066922

(62) Document number(s) of the earlier application(s) in
accordance with Art. 76 EPC:
**22911873.2 / 4 434 285**

(71) Applicant: Samsung Electronics Co., Ltd.
**Suwon-si, Gyeonggi-do 16677 (KR)**

(72) Inventors:
• **Zhu, Dalin**
**16677 Suwon-si (KR)**
• **Farag, Emad Nader**
**16677 Suwon-si (KR)**
• **Onggosanusi, Eko Nugroho**
**16677 Suwon-si (KR)**

(74) Representative: **Gulde & Partner**
**Patent- und Rechtsanwaltskanzlei mbB**
**Berliner Freiheit 2**
**10785 Berlin (DE)**

Remarks:
This application was filed on 24-06-2025 as a
divisional application to the application mentioned
under INID code 62.

(54) **METHOD AND APPARATUS FOR BEAM MANAGEMENT IN A MULTIPLE TRANSMISSION AND RECEPTION POINTS SYSTEM**

(57)   A method of operating a user equipment (UE) includes receiving downlink control information (DCI) indicating a plurality of transmission configuration indication (TCI) states; receiving first information in a control resource set (CORESET) configuration; and receiving second information indicating an association between one or more of the plurality of TCI states and the one or more CORESET groups. The first information indicates a value of CORESET group index provided by CORESETGroupIndex. The method further includes identifying, based on the CORESETGroupIndex indicated by the first information, a CORESET group of a CORESET in which a physical downlink control channel (PDCCH) carrying the DCI was received; determining, based on the identified CORESET group and the second information, a TCI state in the plurality of TCI states to use for reception of a physical downlink shared channel (PDSCH); and receiving the PDSCH using the determined TCI state.

EP 4 597 875 A2

**Description**

**[Technical Field]**

The present disclosure relates generally to wireless communication systems and, more specifically, the present disclosure relates to beam management for downlink (DL) and uplink (UL) channels and signals in a multiple transmission and reception points (multi-TRP) wireless communication system.

**[Background Art]**

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

**[Disclosure of Invention]**

**[Technical Problem]**

Aspects of the disclosure are to address at least the above-mentioned problems and/or disadvantages and to provide at least the advantages described below. Accordingly, an aspect of the disclosure is to provide an enhanced communication method. In addition, the disclosure is to provide a method and a user equipment (UE) for beam management in a multiple transmission and reception point system.

**[Solution to Problem]**

The present disclosure relates to wireless communication systems and, more specifically, the present disclosure relates to beam management for DL and UL channels and signals in a multi-TRP wireless communication system. In one embodiment, a user equipment (UE) is provided. The UE includes a transceiver configured to receive downlink control information (DCI) indicating a plurality of transmission configuration indication (TCI) states, first information in a control resource set (CORESET) configuration, and second information indicating an association between one or more of the plurality of TCI states and the one or more CORESET groups. The first information indicates a value of CORESET group index provided by CORESETGroupIndex. One or more CORESET groups each include one or more CORESETs configured with a same CORESETGroupIndex. The UE further includes a processor operably coupled with the transceiver. The processor is configured to identify, based on the CORESETGroupIndex indicated by the first information, a CORESET group of a CORESET in which a physical downlink control channel (PDCCH) carrying the DCI was received; and determine, based on the identified CORESET group and the second information, a TCI state in the plurality of TCI states to use for reception of a physical downlink shared channel (PDSCH). The determined TCI state is a joint or downlink TCI state. The transceiver is further configured to receive the PDSCH using the determined TCI state.
In another embodiment, a base station (BS) is provided. The BS includes a processor and a transceiver operably coupled to the processor. The transceiver is configured to transmit, in DCI, a plurality of TCI states; first information in a CORESET configuration; second information indicating an association between one or more of the plurality of TCI states and the one or more CORESET groups; and the PDSCH. The first information indicates a value of CORESET group index provided by CORESETGroupIndex. One or more CORESET groups each include one or more CORESETs configured with a same CORESETGroupIndex. The CORESETGroupIndex indicates a CORESET group of a CORESET in which a PDCCH carrying the DCI was transmitted. The CORESET group and the second information indicate a TCI state in the plurality of TCI states for a PDSCH. The TCI state is a joint or downlink TCI state.
In yet another embodiment, a method of operating a UE is provided. The method includes receiving DCI indicating a plurality of TCI states; receiving first information in a CORESET configuration; and receiving second information indicating an association between one or more of the plurality of TCI states and the one or more CORESET groups. The first information indicates a value of CORESET group index provided by CORESETGroupIndex. One or more CORESET groups each include one or more CORESETs configured with a same CORESETGroupIndex. The method further includes identifying, based on the CORESETGroupIndex indicated by the first information, a CORESET group of a CORESET in which a PDCCH carrying the DCI was received; determining, based on the identified CORESET group and the second information, a TCI state in the plurality of TCI states to use for reception of a PDSCH; and receiving the PDSCH using the determined TCI state. The determined TCI state is a joint or downlink TCI state.
Other technical features may be readily apparent to one skilled in the art from the following figures, descriptions, and claims.
Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system, or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for other certain words and phrases are provided throughout this patent document. Those of ordinary skill in the art should understand that in many if not most instances, such definitions apply to prior as well as future uses of such defined words and phrases.

[Advantageous Effects of Invention]

The disclosure relates to a 5G or 6G communication system for supporting a higher data transmission rate.

[Brief Description of Drawings]

For a more complete understanding of the present disclosure and its advantages, reference is now made to the following description taken in conjunction with the accompanying drawings, in which like reference numerals represent like parts:

FIGURE 1 illustrates an example of wireless network according to embodiments of the present disclosure;
FIGURE 2 illustrates an example of gNB according to embodiments of the present disclosure;
FIGURE 3 illustrates an example of UE according to embodiments of the present disclosure;
FIGURES 4 and 5 illustrate example of wireless transmit and receive paths according to this disclosure;
FIGURE 6A illustrates an example of wireless system beam according to embodiments of the present disclosure;
FIGURE 6B illustrates an example of multi-beam operation according to embodiments of the present disclosure;
FIGURE 7 illustrates an example of antenna structure according to embodiments of the present disclosure;
FIGURE 8 illustrates an example of multi-TRP system according to embodiments of the present disclosure;
FIGURE 9 illustrates an example of MAC CE based TCI state/beam indication for a multi-TRP operation according to embodiments of the present disclosure;
FIGURE 10 illustrates an example of DCI based TCI state/beam indication for a multi-TRP operation according to embodiments of the present disclosure;
FIGURE 11 illustrates an example of DCI based TCI state/beam indication (with MAC CE activated TCI states/codepoints) for a multi-TRP operation according to embodiments of the present disclosure;
FIGURE 12 illustrates a flowchart of a method for TCI state(s) indication and association to PDCCH candidate(s) according to embodiments of the present disclosure; and
FIGURE 13 illustrates a flowchart of a method for TCI state(s) indication and association to PDSCH(s) according to embodiments of the present disclosure.

[Mode for the Invention]

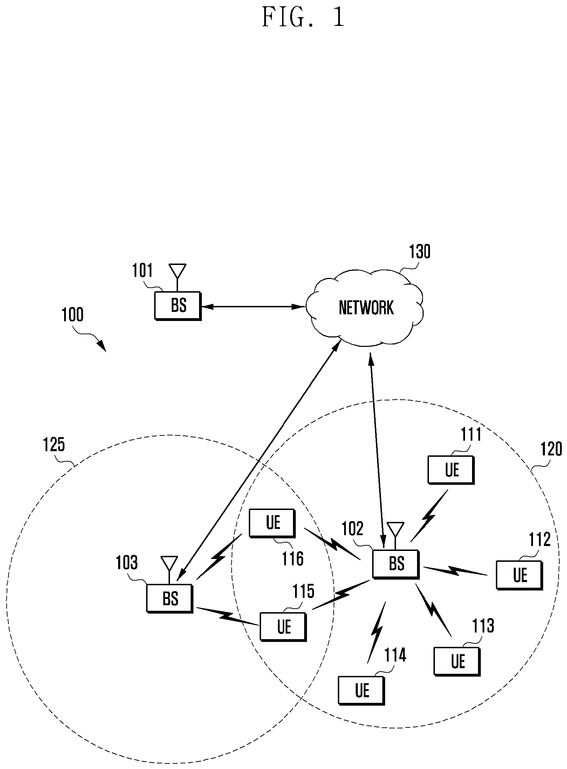

FIGURE 1 through FIGURE 13, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

The following documents are relevant for the present disclosure: 3GPP TS 38.211 v16.1.0, "NR; Physical channels and modulation"; 3GPP TS 38.212 v16.1.0, "NR; Multiplexing and Channel coding"; 3GPP TS 38.213 v16.1.0, "NR; Physical Layer Procedures for Control"; 3GPP TS 38.214 v16.1.0, "NR; Physical Layer Procedures for Data"; 3GPP TS 38.321 v16.1.0, "NR; Medium Access Control (MAC) protocol specification"; and 3GPP TS 38.331 v16.1.0, "NR; Radio Resource Control (RRC) Protocol Specification."

To meet the demand for wireless data traffic having increased since deployment of 4G communication systems and to enable various vertical applications, 5G/NR communication systems have been developed and are currently being deployed. The 5G/NR communication system is considered to be implemented in higher frequency (mmWave) bands, e.g., 28 GHz or 60GHz bands, so as to accomplish higher data rates or in lower frequency bands, such as 6 GHz, to enable robust coverage and mobility support. To decrease propagation loss of the radio waves and increase the transmission distance, the beamforming, massive multiple-input multiple-output (MIMO), full dimensional MIMO (FD-MIMO), array antenna, an analog beam forming, large scale antenna techniques are discussed in 5G/NR communication systems.

In addition, in 5G/NR communication systems, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancelation and the like.

The discussion of 5G systems and frequency bands associated therewith is for reference as certain embodiments of the present disclosure may be implemented in 5G systems. However, the present disclosure is not limited to 5G systems or the frequency bands associated therewith, and embodiments of the present disclosure may be utilized in connection with any frequency band. For example, aspects of the present disclosure may also be applied to deployment of 5G communication systems, 6G or even later releases which may use terahertz (THz) bands.

FIGURES 1-3 below describe various embodiments implemented in wireless communications systems and with the use of orthogonal frequency division multiplexing (OFDM) or orthogonal frequency division multiple access (OFDMA) communication techniques. The descriptions of FIGURES 1-3 are not meant to imply physical or architectural limitations to the manner in which different embodiments may be implemented. Different embodiments of the present disclosure may be implemented in any suitably arranged communications system.

FIGURE 1 illustrates an example wireless network according to embodiments of the present disclosure. The embodiment of the wireless network shown in FIGURE 1 is for illustration only. Other embodiments of the wireless network 100 could be used without departing from the scope of this disclosure.

As shown in FIGURE 1, the wireless network includes a gNB 101 (e.g., base station, BS), a gNB 102, and a gNB 103. The gNB 101 communicates with the gNB 102 and the gNB 103. The gNB 101 also communicates with at least one network 130, such as the Internet, a proprietary Internet Protocol (IP) network, or other data network.

The gNB 102 provides wireless broadband access to the network 130 for a first plurality of user equipments (UEs) within a coverage area 120 of the gNB 102. The first plurality of UEs includes a UE 111, which may be located in a small business; a UE 112, which may be located in an enterprise; a UE 113, which may be a WiFi hotspot; a UE 114, which may be located in a first residence; a UE 115, which may be located in a second residence; and a UE 116, which may be a mobile device, such as a cell phone, a wireless laptop, a wireless PDA, or the like. The gNB 103 provides wireless broadband access to the network 130 for a second plurality of UEs within a coverage area 125 of the gNB 103. The second plurality of UEs includes the UE 115 and the UE 116. In some embodiments, one or more of the gNBs 101-103 may communicate with each other and with the UEs 111-116 using 5G/NR, long term evolution (LTE), long term evolution-advanced (LTE-A), WiMAX, WiFi, or other wireless communication techniques.

Depending on the network type, the term "base station" or "BS" can refer to any component (or collection of components) configured to provide wireless access to a network, such as transmit point (TP), transmit-receive point (TRP), an enhanced base station (eNodeB or eNB), a 5G/NR base station (gNB), a macrocell, a femtocell, a WiFi access point (AP), or other wirelessly enabled devices. Base stations may provide wireless access in accordance with one or more wireless communication protocols, e.g., 5G/NR 3$^{rd}$ generation partnership project (3GPP) NR, long term evolution (LTE), LTE advanced (LTE-A), high speed packet access (HSPA), Wi-Fi 802.11a/b/g/n/ac, etc. For the sake of convenience, the terms "BS" and "TRP" are used interchangeably in this patent document to refer to network infrastructure components that provide wireless access to remote terminals. Also, depending on the network type, the term "user equipment" or "UE" can refer to any component such as "mobile station," "subscriber station," "remote terminal," "wireless terminal," "receive point," or "user device." For the sake of convenience, the terms "user equipment" and "UE" are used in this patent document to refer to remote wireless equipment that wirelessly accesses a BS, whether the UE is a mobile device (such as a mobile telephone or smartphone) or is normally considered a stationary device (such as a desktop computer or vending machine).

Dotted lines show the approximate extents of the coverage areas 120 and 125, which are shown as approximately circular for the purposes of illustration and explanation only. It should be clearly understood that the coverage areas associated with gNBs, such as the coverage areas 120 and 125, may have other shapes, including irregular shapes, depending upon the configuration of the gNBs and variations in the radio environment associated with natural and man-made obstructions.

As described in more detail below, one or more of the UEs 111-116 include circuitry, programing, or a combination thereof, for configuring DL and UL channels and signals in a multiple TRP system and for SRS configuration in a wireless communication system. In certain embodiments, and one or more of the gNBs 101-103 includes circuitry, programing, or a combination thereof, for configuring DL and UL channels and signals in a multiple TRP system and for SRS configuration in a wireless communication system.

Although FIGURE 1 illustrates one example of a wireless network, various changes may be made to FIGURE 1. For example, the wireless network could include any number of gNBs and any number of UEs in any suitable arrangement. Also, the gNB 101 could communicate directly with any number of UEs and provide those UEs with wireless broadband access to the network 130. Similarly, each gNB 102-103 could communicate directly with the network 130 and provide UEs with direct wireless broadband access to the network 130. Further, the gNBs 101, 102, and/or 103 could provide access to other or additional external networks, such as external telephone networks or other types of data networks.

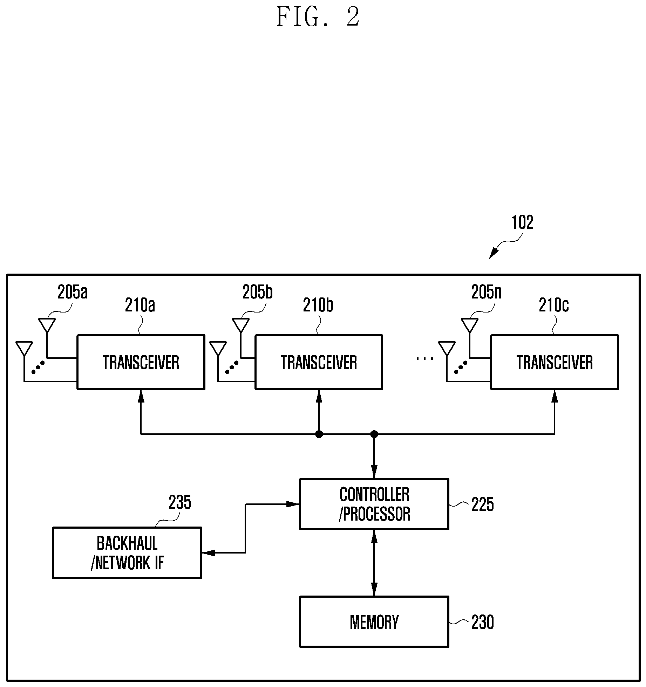

FIGURE 2 illustrates an example gNB 102 according to embodiments of the present disclosure. The embodiment of the gNB 102 illustrated in FIGURE 2 is for illustration only, and the gNBs 101 and 103 of FIGURE 1 could have the same or similar configuration. However, gNBs come in a wide variety of configurations, and FIGURE 2 does not limit the scope of this disclosure to any particular implementation of a gNB.

As shown in FIGURE 2, the gNB 102 includes multiple antennas 205a-205n, multiple transceivers 210a-210n, a controller/processor 225, a memory 230, and a backhaul or network interface 235.

The transceivers 210a-210n receive, from the antennas 205a-205n, incoming RF signals, such as signals transmitted by UEs in the network 100. The transceivers 210a-210n down-convert the incoming RF signals to generate IF or baseband signals. The IF or baseband signals are processed by receive (RX) processing circuitry in the transceivers 210a-210n and/or controller/processor 225, which generates processed baseband signals by filtering, decoding, and/or digitizing the baseband or IF signals. The controller/processor 225 may further process the baseband signals. Transmit (TX) processing circuitry in the transceivers 210a-210n and/or controller/processor 225 receives analog or digital data (such as voice data, web data, e-mail, or interactive video game data) from the controller/processor 225. The TX processing circuitry encodes, multiplexes, and/or digitizes the outgoing baseband data to generate processed baseband or IF signals. The transceivers 210a-210n up-converts the baseband or IF signals to RF signals that are transmitted via the antennas 205a-205n.

The controller/processor 225 can include one or more processors or other processing devices that control the overall operation of the gNB 102. For example, the controller/processor 225 could control the reception of UL channel signals and the transmission of DL channel signals by the transceivers 210a-210n in accordance with well-known principles. The controller/processor 225 could support additional functions as well, such as more advanced wireless communication functions. For instance, the controller/processor 225 could support beam forming or directional routing operations in which outgoing/incoming signals from/to multiple antennas 205a-205n are weighted differently to effectively steer the outgoing signals in a desired direction. Any of a wide variety of other functions could be supported in the gNB 102 by the controller/processor 225.

The controller/processor 225 is also capable of executing programs and other processes resident in the memory 230, such as processes for configuring DL and UL channels and signals in a multiple TRP system and for SRS configuration in a wireless communication system. The controller/processor 225 can move data into or out of the memory 230 as required by an executing process.

The controller/processor 225 is also coupled to the backhaul or network interface 235. The backhaul or network interface 235 allows the gNB 102 to communicate with other devices or systems over a backhaul connection or over a network. The interface 235 could support communications over any suitable wired or wireless connection(s). For example, when the gNB 102 is implemented as part of a cellular communication system (such as one supporting 5G/NR, LTE, or LTE-A), the interface 235 could allow the gNB 102 to communicate with other gNBs over a wired or wireless backhaul connection. When the gNB 102 is implemented as an access point, the interface 235 could allow the gNB 102 to communicate over a wired or wireless local area network or over a wired or wireless connection to a larger network (such as the Internet). The interface 235 includes any suitable structure supporting communications over a wired or wireless connection, such as an Ethernet or transceiver.

The memory 230 is coupled to the controller/processor 225. Part of the memory 230 could include a RAM, and another part of the memory 230 could include a Flash memory or other ROM.

Although FIGURE 2 illustrates one example of gNB 102, various changes may be made to FIGURE 2. For example, the gNB 102 could include any number of each component shown in FIGURE 2. Also, various components in FIGURE 2 could be combined, further subdivided, or omitted and additional components could be added according to particular needs.

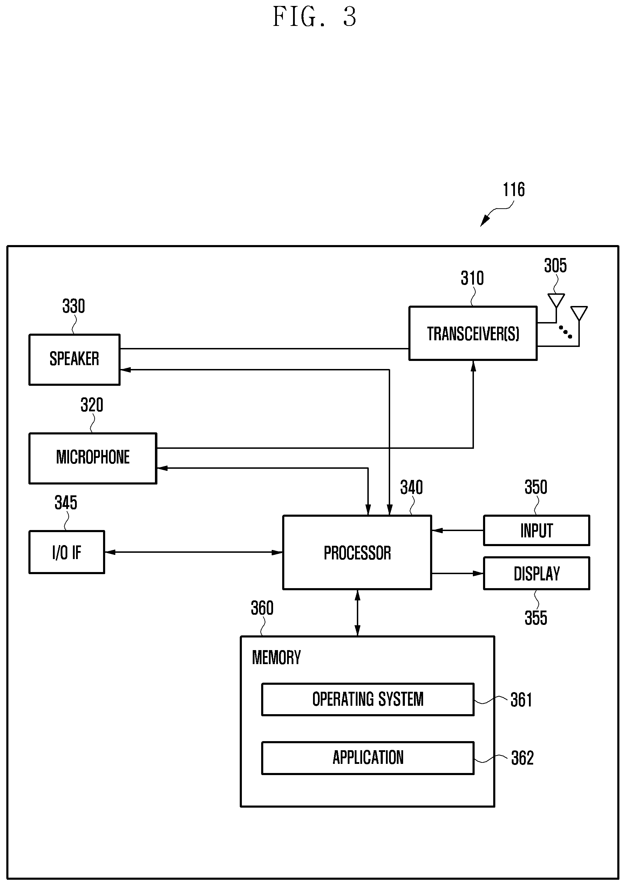

FIGURE 3 illustrates an example UE 116 according to embodiments of the present disclosure. The embodiment of the UE 116 illustrated in FIGURE 3 is for illustration only, and the UEs 111-115 of FIGURE 1 could have the same or similar configuration. However, UEs come in a wide variety of configurations, and FIGURE 3 does not limit the scope of this disclosure to any particular implementation of a UE.

As shown in FIGURE 3, the UE 116 includes antenna(s) 305, a transceiver(s) 310, and a microphone 320. The UE 116 also includes a speaker 330, a processor 340, an input/output (I/O) interface (IF) 345, a touchscreen 350, a display 355, and a memory 360. The memory 360 includes an operating system (OS) 361 and one or more applications 362.

The transceiver(s) 310 receives, from the antenna 305, an incoming RF signal transmitted by a gNB of the network 100. The transceiver(s) 310 down-converts the incoming RF signal to generate an intermediate frequency (IF) or baseband signal. The IF or baseband signal is processed by RX processing circuitry in the transceiver(s) 310 and/or processor 340, which generates a processed baseband signal by filtering, decoding, and/or digitizing the baseband or IF signal. The RX processing circuitry sends the processed baseband signal to the speaker 330 (such as for voice data) or is processed by the processor 340 (such as for web browsing data).

TX processing circuitry in the transceiver(s) 310 and/or processor 340 receives analog or digital voice data from the microphone 320 or other outgoing baseband data (such as web data, e-mail, or interactive video game data) from the processor 340. The TX processing circuitry encodes, multiplexes, and/or digitizes the outgoing baseband data to generate a processed baseband or IF signal. The transceiver(s) 310 up-converts the baseband or IF signal to an RF signal that is transmitted via the antenna(s) 305.

The processor 340 can include one or more processors or other processing devices and execute the OS 361 stored in the memory 360 in order to control the overall operation of the UE 116. For example, the processor 340 could control the reception of DL channel signals and the transmission of UL channel signals by the transceiver(s) 310, the RX processing circuitry, and the TX processing circuitry 315 in accordance with well-known principles. In some embodiments, the processor 340 includes at least one microprocessor or microcontroller.

The processor 340 is also capable of executing other processes and programs resident in the memory 360, such as processes for configuring DL and UL channels and signals in a multiple TRP system and for SRS configuration in a wireless communication system.

The processor 340 can move data into or out of the memory 360 as required by an executing process. In some embodiments, the processor 340 is configured to execute the applications 362 based on the OS 361 or in response to signals received from gNBs or an operator. The processor 340 is also coupled to the I/O interface 345, which provides the UE 116 with the ability to connect to other devices, such as laptop computers and handheld computers. The I/O interface 345 is the communication path between these accessories and the processor 340.

The processor 340 is also coupled to the touchscreen 350 and the display 355. The operator of the UE 116 can use the touchscreen 350 to enter data into the UE 116. The display 355 may be a liquid crystal display, light emitting diode display, or other display capable of rendering text and/or at least limited graphics, such as from web sites. The memory 360 is coupled to the processor 340. Part of the memory 360 could include a random-access memory (RAM), and another part of the memory 360 could include a Flash memory or other read-only memory (ROM). Although FIGURE 3 illustrates one example of UE 116, various changes may be made to FIGURE 3. For example, various components in FIGURE 3 could be combined, further subdivided, or omitted and additional components could be added according to particular needs. As a particular example, the processor 340 could be divided into multiple processors, such as one or more central processing units (CPUs) and one or more graphics processing units (GPUs). In another example, the transceiver(s) 310 may include any number of transceivers and signal processing chains and may be connected to any number of antennas. Also, while FIGURE 3 illustrates the UE 116 configured as a mobile telephone or smartphone, UEs could be configured to operate as other types of mobile or stationary devices.

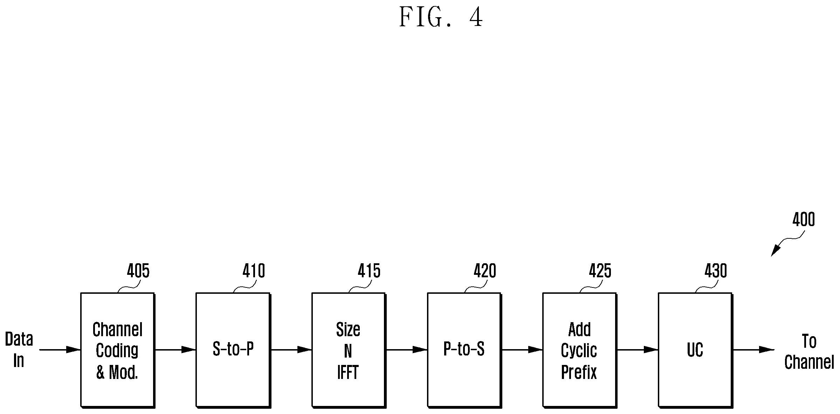

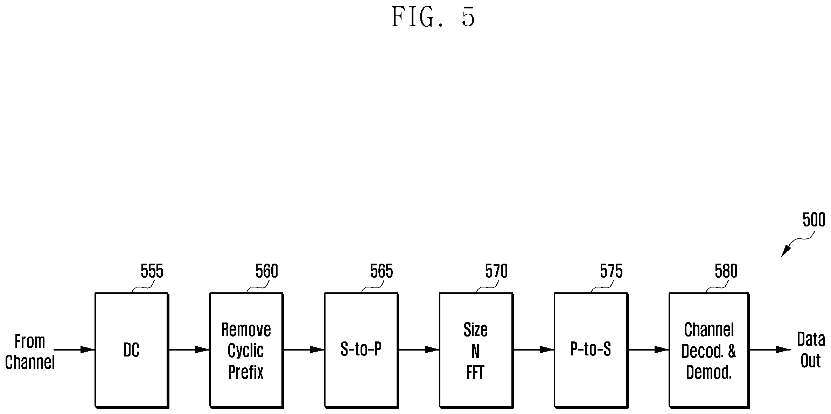

FIGURE 4 and FIGURE 5 illustrate example wireless transmit and receive paths according to this disclosure. In the following description, a transmit path 400 may be described as being implemented in a gNB (such as the gNB 102), while a receive path 500 may be described as being implemented in a UE (such as a UE 116). However, it may be understood that the receive path 500 can be implemented in a gNB and that the transmit path 400 can be implemented in a UE. In some embodiments, the receive path 500 is configured to support the codebook design and structure for systems having 2D antenna arrays as described in embodiments of the present disclosure.

The transmit path 400 as illustrated in FIGURE 4 includes a channel coding and modulation block 405, a serial-to-parallel (S-to-P) block 410, a size N inverse fast Fourier transform (IFFT) block 415, a parallel-to-serial (P-to-S) block 420, an add cyclic prefix block 425, and an up-converter (UC) 430. The receive path 500 as illustrated in FIGURE 5 includes a down-converter (DC) 555, a remove cyclic prefix block 560, a serial-to-parallel (S-to-P) block 565, a size N fast Fourier transform (FFT) block 570, a parallel-to-serial (P-to-S) block 575, and a channel decoding and demodulation block 580.

As illustrated in FIGURE 4, the channel coding and modulation block 405 receives a set of information bits, applies coding (such as a low-density parity check (LDPC) coding), and modulates the input bits (such as with quadrature phase shift keying (QPSK) or quadrature amplitude modulation (QAM)) to generate a sequence of frequency-domain modulation symbols.

The serial-to-parallel block 410 converts (such as de-multiplexes) the serial modulated symbols to parallel data in order to generate N parallel symbol streams, where N is the IFFT/FFT size used in the gNB 102 and the UE 116. The size N IFFT block 415 performs an IFFT operation on the N parallel symbol streams to generate time-domain output signals. The parallel-to-serial block 420 converts (such as multiplexes) the parallel time-domain output symbols from the size N IFFT block 415 in order to generate a serial time-domain signal. The add cyclic prefix block 425 inserts a cyclic prefix to the time-domain signal. The up-converter 430 modulates (such as up-converts) the output of the add cyclic prefix block 425 to an RF frequency for transmission via a wireless channel. The signal may also be filtered at baseband before conversion to the RF frequency.

A transmitted RF signal from the gNB 102 arrives at the UE 116 after passing through the wireless channel, and reverse operations to those at the gNB 102 are performed at the UE 116.

As illustrated in FIGURE 5, the downconverter 555 down-converts the received signal to a baseband frequency, and the remove cyclic prefix block 560 removes the cyclic prefix to generate a serial time-domain baseband signal. The serial-to-parallel block 565 converts the time-domain baseband signal to parallel time domain signals. The size N FFT block 570 performs an FFT algorithm to generate N parallel frequency-domain signals. The parallel-to-serial block 575 converts the parallel frequency-domain signals to a sequence of modulated data symbols. The channel decoding and demodulation block 580 demodulates and decodes the modulated symbols to recover the original input data stream.

Each of the gNBs 101-103 may implement a transmit path 400 as illustrated in FIGURE 4 that is analogous to transmitting in the downlink to UEs 111-116 and may implement a receive path 500 as illustrated in FIGURE 5 that is analogous to receiving in the uplink from UEs 111-116. Similarly, each of UEs 111-116 may implement the transmit path 400 for transmitting in the uplink to the gNBs 101-103 and may implement the receive path 500 for receiving in the downlink from the gNBs 101-103.

Each of the components in FIGURE 4 and FIGURE 5 can be implemented using only hardware or using a combination of hardware and software/firmware. As a particular example, at least some of the components in FIGURES 4 and FIGURE 5 may be implemented in software, while other components may be implemented by configurable hardware or a mixture of software and configurable hardware. For instance, the FFT block 570 and the IFFT block 515 may be implemented as configurable software algorithms, where the value of size N may be modified according to the implementation.

Furthermore, although described as using FFT and IFFT, this is by way of illustration only and may not be construed to limit the scope of this disclosure. Other types of transforms, such as discrete Fourier transform (DFT) and inverse discrete Fourier transform (IDFT) functions, can be used. It may be appreciated that the value of the variable N may be any integer number (such as 1, 2, 3, 4, or the like) for DFT and IDFT functions, while the value of the variable N may be any integer number that is a power of two (such as 1, 2, 4, 8, 16, or the like) for FFT and IFFT functions.

Although FIGURE 4 and FIGURE 5 illustrate examples of wireless transmit and receive paths, various changes may be made to FIGURE 4 and FIGURE 5. For example, various components in FIGURE 4 and FIGURE 5 can be combined, further subdivided, or omitted and additional components can be added according to particular needs. Also, FIGURE 4 and FIGURE 5 are meant to illustrate examples of the types of transmit and receive paths that can be used in a wireless network. Any other suitable architectures can be used to support wireless communications in a wireless network.

A unit for DL signaling or for UL signaling on a cell is referred to as a slot and can include one or more symbols. A bandwidth (BW) unit is referred to as a resource block (RB). One RB includes a number of sub-carriers (SCs). For example, a slot can have duration of one millisecond and an RB can have a bandwidth of 180 KHz and include 12 SCs with inter-SC spacing of 15 KHz. A slot can be either full DL slot, or full UL slot, or hybrid slot similar to a special subframe in time division duplex (TDD) systems.

DL signals include data signals conveying information content, control signals conveying DL control information (DCI), and reference signals (RS) that are also known as pilot signals. A gNB transmits data information or DCI through respective physical DL shared channels (PDSCHs) or physical DL control channels (PDCCHs). A PDSCH or a PDCCH can be transmitted over a variable number of slot symbols including one slot symbol. A UE can be indicated a spatial setting for a PDCCH reception based on a configuration of a value for a transmission configuration indication state (TCI state) of a control resource set (CORESET) where the UE receives the PDCCH. The UE can be indicated a spatial setting for a PDSCH reception based on a configuration by higher layers or based on an indication by a DCI format scheduling the PDSCH reception of a value for a TCI state. The gNB can configure the UE to receive signals on a cell within a DL bandwidth part (BWP) of the cell DL BW.

A gNB transmits one or more of multiple types of RS including channel state information RS (CSI-RS) and demodulation RS (DMRS). A CSI-RS is primarily intended for UEs to perform measurements and provide channel state information (CSI) to a gNB. For channel measurement, non-zero power CSI-RS (NZP CSI-RS) resources are used. For interference measurement reports (IMRs), CSI interference measurement (CSI-IM) resources associated with a zero power CSI-RS (ZP CSI-RS) configuration are used. A CSI process consists of NZP CSI-RS and CSI-IM resources. A UE can determine CSI-RS transmission parameters through DL control signaling or higher layer signaling, such as an RRC signaling from a gNB. Transmission instances of a CSI-RS can be indicated by DL control signaling or configured by higher layer signaling. A DMRS is transmitted only in the BW of a respective PDCCH or PDSCH and a UE can use the DMRS to demodulate data or control information.

UL signals also include data signals conveying information content, control signals conveying UL control information (UCI), DMRS associated with data or UCI demodulation, sounding RS (SRS) enabling a gNB to perform UL channel measurement, and a random access (RA) preamble enabling a UE to perform random access. A UE transmits data information or UCI through a respective physical UL shared channel (PUSCH) or a physical UL control channel (PUCCH). A PUSCH or a PUCCH can be transmitted over a variable number of slot symbols including one slot symbol. The gNB can configure the UE to transmit signals on a cell within an UL BWP of the cell UL BW.

UCI includes hybrid automatic repeat request acknowledgement (HARQ-ACK) information, indicating correct or incorrect detection of data transport blocks (TBs) in a PDSCH, scheduling request (SR) indicating whether a UE has data in the buffer of UE, and CSI reports enabling a gNB to select appropriate parameters for PDSCH or PDCCH transmissions to a UE. HARQ-ACK information can be configured to be with a smaller granularity than per TB and can be per data code block (CB) or per group of data CBs where a data TB includes a number of data CBs.

A CSI report from a UE can include a channel quality indicator (CQI) informing a gNB of a largest modulation and coding scheme (MCS) for the UE to detect a data TB with a predetermined block error rate (BLER), such as a 10% BLER, of a precoding matrix indicator (PMI) informing a gNB how to combine signals from multiple transmitter antennas in accordance with a multiple input multiple output (MIMO) transmission principle, and of a rank indicator (RI) indicating a transmission rank for a PDSCH. UL RS includes DMRS and SRS. DMRS is transmitted only in a BW of a respective PUSCH or PUCCH transmission. A gNB can use a DMRS to demodulate information in a respective PUSCH or PUCCH. SRS is transmitted by a UE to provide a gNB with an UL CSI and, for a TDD system, an SRS transmission can also provide a PMI for DL transmission. Additionally, in order to establish synchronization or an initial higher layer connection with a gNB, a UE can transmit a physical random-access channel.

In the present disclosure, a beam is determined by either of: (1) a TCI state, which establishes a quasi-colocation (QCL) relationship between a source reference signal (e.g., synchronization signal/physical broadcasting channel (PBCH) block (SSB) and/or CSI-RS) and a target reference signal; or (2) spatial relation information that establishes an association to a source reference signal, such as SSB or CSI-RS or SRS. In either case, the ID of the source reference signal identifies the beam.

The TCI state and/or the spatial relation reference RS can determine a spatial Rx filter for reception of downlink channels at the UE, or a spatial Tx filter for transmission of uplink channels from the UE.

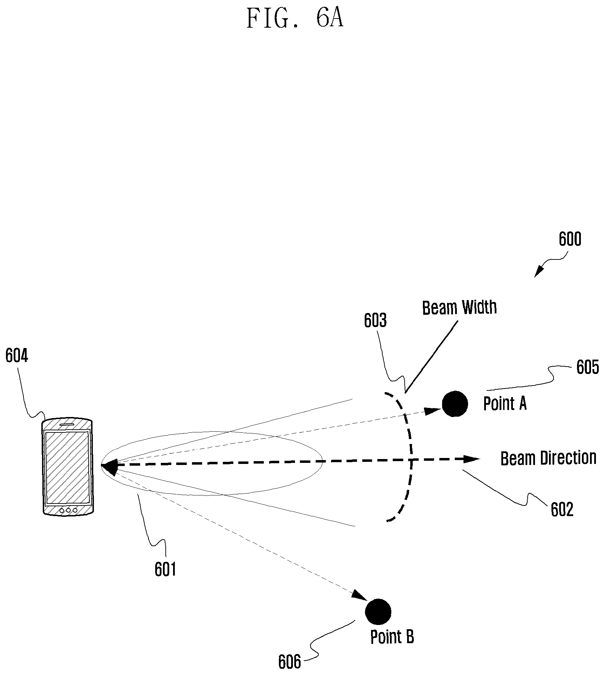

FIGURE 6A illustrates an example wireless system beam 600 according to embodiments of the present disclosure. An embodiment of the wireless system beam 600 shown in FIGURE 6A is for illustration only.

As illustrated in FIGURE 6A, in a wireless system a beam 601, for a device 604, can be characterized by a beam direction 602 and a beam width 603. For example, a device 604 with a transmitter transmits radio frequency (RF) energy in a beam direction and within a beam width. The device 604 with a receiver receives RF energy coming towards the device in a beam direction and within a beam width. As illustrated in FIGURE 6A, a device at point A 605 can receive from and transmit to the device 604 as point A is within a beam width of a beam traveling in a beam direction and coming from the device 604.

As illustrated in FIGURE 6A, a device at point B 606 cannot receive from and transmit to the device 604 as point B is outside a beam width of a beam traveling in a beam direction and coming from the device 604. While FIGURE 6A, for illustrative purposes, shows a beam in 2-dimensions (2D), it may be apparent to those skilled in the art, that a beam can be in 3-dimensions (3D), where the beam direction and beam width are defined in space.

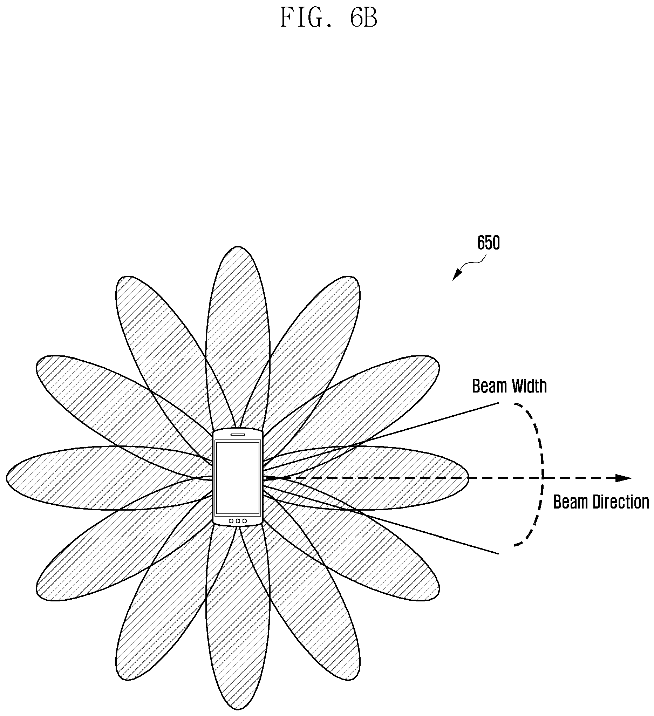

FIGURE 6B illustrates an example multi-beam operation 650 according to embodiments of the present disclosure. An embodiment of the multi-beam operation 650 shown in FIGURE 6B is for illustration only.

In a wireless system, a device can transmit and/or receive on multiple beams. This is known as "multi-beam operation" and is illustrated in FIGURE 6B. While FIGURE 6B, for illustrative purposes, is in 2D, it may be apparent to those skilled in the art, that a beam can be 3D, where a beam can be transmitted to or received from any direction in space.

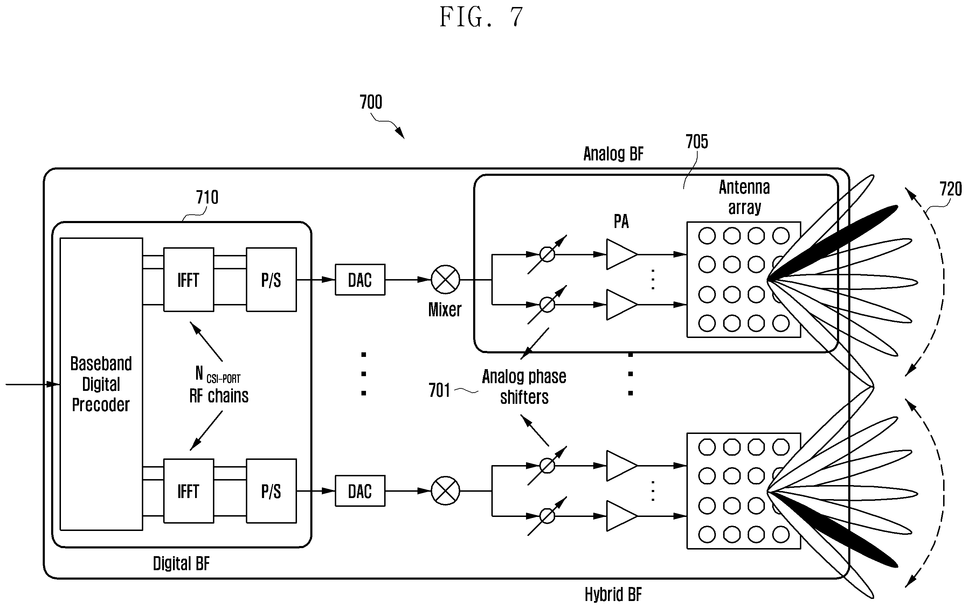

Rel. 14 LTE and Rel.15 NR support up to 32 CSI-RS antenna ports which enable an eNB to be equipped with a large number of antenna elements (such as 64 or 128). In this case, a plurality of antenna elements is mapped onto one CSI-RS port. For mmWave bands, although the number of antenna elements can be larger for a given form factor, the number of CSI-RS ports -which can correspond to the number of digitally precoded ports - tends to be limited due to hardware constraints (such as the feasibility to install a large number of ADCs/DACs at mmWave frequencies) as illustrated in FIGURE 7.

FIGURE 7 illustrates an example antenna structure 700 according to embodiments of the present disclosure. An embodiment of the antenna structure 700 shown in FIGURE 7 is for illustration only.

In this case, one CSI-RS port is mapped onto a large number of antenna elements which can be controlled by a bank of analog phase shifters 701. One CSI-RS port can then correspond to one sub-array which produces a narrow analog beam through analog beamforming 705. This analog beam can be configured to sweep across a wider range of angles 720 by varying the phase shifter bank across symbols or subframes. The number of sub-arrays (equal to the number of RF chains) is the same as the number of CSI-RS ports $N_{CSI-PORT}$. A digital beamforming unit 710 performs a linear combination across $N_{CSI-PORT}$ analog beams to further increase precoding gain. While analog beams are wideband (hence not frequency-selective), digital precoding can be varied across frequency sub-bands or resource blocks. Receiver operation can be conceived analogously.

Since the aforementioned system utilizes multiple analog beams for transmission and reception (wherein one or a small number of analog beams are selected out of a large number, for instance, after a training duration - to be performed from time to time), the term "multi-beam operation" is used to refer to the overall system aspect. This includes, for the purpose of illustration, indicating the assigned DL or UL TX beam (also termed "beam indication"), measuring at least one reference signal for calculating and performing beam reporting (also termed "beam measurement" and "beam reporting," respectively), and receiving a DL or UL transmission via a selection of a corresponding RX beam.

The aforementioned system is also applicable to higher frequency bands such as >52.6GHz. In this case, the system can employ only analog beams. Due to the O2 absorption loss around 60GHz frequency (~10dB additional loss @100m distance), larger number of and sharper analog beams (hence larger number of radiators in the array) may be needed to compensate for the additional path loss.

In a wireless communications system, a radio link failure (RLF) could occur if a significant/sudden link quality drop is observed at the UE side. If a RLF occurs, fast RLF recovery mechanisms, therefore, become essential to promptly re-establish the communication link(s) and avoid severe service interruption. At higher frequencies, e.g., millimeter-wave (mmWave) frequencies or FR2 in the 3GPP NR, both the transmitter and receiver could use directional (analog) beams to transmit and receive various RSs/channels such as SSBs, CSI-RSs, PDCCHs or PDSCHs. Hence, prior to declaring a full RLF, the UE could first detect and recover a potential beam failure if the signal qualities/strengths of certain beam pair links (BPLs) are below a certain threshold for a certain period of time.

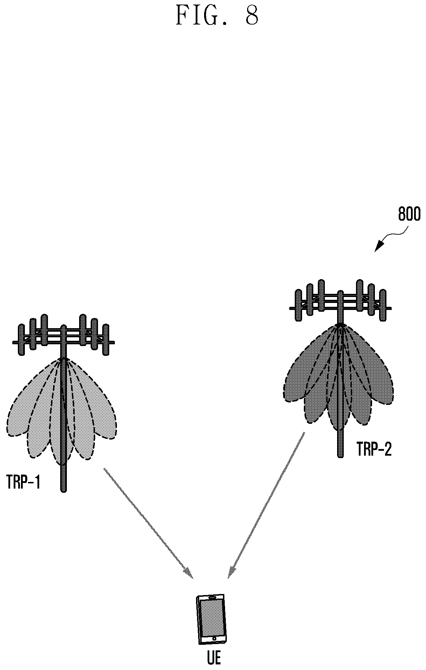

FIGURE 8 illustrates an example of multiple TRP (multi-TRP) system 8000 according to embodiments of the present disclosure. An embodiment of the multi-TRP system 8000 shown in FIGURE 8 is for illustration only.

In a multiple TRP system depicted in FIGURE 8, the UE could simultaneously receive from multiple physically non-co-located TRPs various channels/RSs such as PDCCHs and/or PDSCHs using either a single receive (RX) panel or multiple RX panels. In this disclosure, a RX panel could correspond to a set of RX antenna elements/ports at the UE, a set of measurement RS resources such as SRS resources, a spatial domain RX filter or etc. Further, a TRP in the multi-TRP system can represent a collection of measurement antenna ports, measurement RS resources and/or control resource sets (CORESETs).

For example, a TRP could be associated with one or more of: (1) a plurality of CSI-RS resources; (2) a plurality of CRIs (CSI-RS resource indices/indicators); (3) a measurement RS resource set, for example, a CSI-RS resource set along with its indicator; (4) a plurality of CORESETs associated with a CORESETPoolIndex; and (5) a plurality of CORESETs associated with a TRP-specific index/indicator/identity.

A cell/TRP could be a non-serving cell/TRP. In this disclosure, the non-serving cell(s) or the non-serving cell TRP(s) could have/broadcast different physical cell IDs (PCIs) and/or other higher layer signaling index values from that of the serving cell or the serving cell TRP (i.e., the serving cell PCI). In one example, the serving cell or the serving cell TRP could be associated with the serving cell ID (SCI) and/or the serving cell PCI. That is, for the inter-cell operation considered in the present disclosure, different cells/TRPs could broadcast different PCIs and/or one or more cells/TRPs (referred to/defined as non-serving cells/TRPs in the present disclosure) could broadcast different PCIs from that of the serving cell/TRP (i.e., the serving cell PCI) and/or one or more cells/TRPs are not associated with valid SCI (e.g., provided by the higher layer parameter ServCellIndex). In the present disclosure, a non-serving cell PCI can also be referred to as an additional PCI, another PCI or a different PCI (with respect to the serving cell PCI).

The UE could be configured by the network one or more transmission configuration information (TCI) states, which indicate the QCL information/assumptions for one or more RSs/channels such as PDCCHs and/or PDSCHs. The TCI state update/indication for PDCCH and/or PDSCH can also be referred to as beam indication. For instance, for data transmissions on the shared channel (such as the physical downlink shared channel in NR, i.e., PDSCH), the corresponding beam indication procedure under the 3GPP Rel. 15/16 TCI framework can be summarized as follows: a UE can be first higher layer configured by the network (e.g., via high layer RRC signaling) a set/pool of TCI states; the UE could then receive from the network a MAC CE command activating one or more TCI states from the set/pool of RRC configured TCI states; the UE could be indicated by the network via dynamic DCI signaling that one or more of the MAC CE activated TCI states are active for the reception of the PDSCH(s).

The present disclosure provides various design aspects/enhancements for SRS resource configuration and power control in a multi-TRP system or an inter-cell system wherein at least a PCI different from the serving cell PCI is deployed under the Rel. 17 unified TCI framework.

As described in the U.S. Patent Application 17/584, 239, a unified TCI framework could indicate/include N≥1 DL TCI states and/or M≥1 UL TCI states, wherein the indicated TCI state could be at least one of: (1) a DL TCI state and/or its corresponding/associated TCI state ID; (2) an UL TCI state and/or its corresponding/associated TCI state ID; (3) a joint DL and UL TCI state and/or its corresponding/associated TCI state ID; and(4) separate DL TCI state and UL TCI state and/or their corresponding/associated TCI state ID(s).

There could be various design options/channels to indicate to the UE a beam (i.e., a TCI state) for the transmission/reception of a PDCCH or a PDSCH. As described in the U.S. Patent Application 17/584, 239, following examples can be provided.

In one example, a MAC CE could be used to indicate to the UE a beam (i.e., a TCI state and/or a TCI state ID) for the transmission/reception of a PDCCH or a PDSCH.

In another example, a DCI could be used to indicate to the UE a beam (i.e., a TCI state and/or a TCI state ID) for the transmission/reception of a PDCCH or a PDSCH.

For example, a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment.

For another example, an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant.

Yet for another example, a custom/purpose designed DCI format could be used to indicate to the UE a beam (i.e., a TCI state and/or a TCI state ID) for the transmission/reception of a PDCCH or a PDSCH.

Rel-17 introduced the unified TCI framework, where a unified or master or main TCI state is signaled to the UE. The unified or master or main TCI state can be one of: (1) in case of joint TCI state indication, wherein a same beam is used for DL and UL channels, a joint TCI state that can be used at least for UE-dedicated DL channels and UE-dedicated UL channels; (2) in case of separate TCI state indication, wherein different beams are used for DL and UL channels, a DL TCI state can be used at least for UE-dedicated DL channels; and (3) in case of separate TCI state indication, wherein different beams are used for DL and UL channels, a UL TCI state can be used at least for UE-dedicated UL channels.

The unified (master or main) TCI state is TCI state of UE-dedicated reception on PDSCH/PDCCH or dynamic-grant/configured-grant based PUSCH and all of dedicated PUCCH resources.

Throughout the present disclosure, the term "configuration" or "higher layer configuration" and variations thereof (such as "configured" and so on) could be used to refer to one or more of: a system information signaling such as by a MIB or a SIB (such as SIB1), a common or cell-specific higher layer / RRC signaling, or a dedicated or UE-specific or BWP-specific higher layer / RRC signaling.

The UE can be configured with a list of up to M TCI-State configurations within the higher layer parameter PDSCH-Config to decode PDSCH according to a detected PDCCH with DCI intended for the UE and the given serving cell, where M depends on the UE capability maxNumberConfiguredTCIstatesPerCC. Each TCI-State contains parameters for configuring a quasi co-location relationship between one or two downlink reference signals and the DM-RS ports of the PDSCH, the DM-RS port of PDCCH or the CSI-RS port(s) of a CSI-RS resource. The quasi co-location relationship is configured by the higher layer parameter qcl-Type1 for the first DL RS, and qcl-Type2 for the second DL RS (if configured). For the case of two DL RSs, the QCL types shall not be the same, regardless of whether the references are to the same DL RS or different DL RSs. The quasi co-location types corresponding to each DL RS are given by the higher layer parameter qcl-Type in QCL-Info and may take one of the following values: (1) 'typeA': {Doppler shift, Doppler spread, average delay, delay spread}, (2) 'typeB': {Doppler shift, Doppler spread}, (3) 'typeC': {Doppler shift, average delay}, and (4) 'typeD': {Spatial Rx parameter}.

The UE can be configured with a list of up to 128 DLorJointTCIState configurations, within the higher layer parameter PDSCH-Config for providing a reference signal for the quasi co-location for DM-RS of PDSCH and DM-RS of PDCCH in a CC, for CSI-RS, and to provide a reference, if applicable, for determining UL TX spatial filter for dynamic-grant and configured-grant based PUSCH and PUCCH resource in a CC, and SRS.

If the DLorJointTCIState or UL-TCIState configurations are absent in a BWP of the CC, the UE can apply the DLorJointTCIState or UL-TCIState configurations from a reference BWP of a reference CC. The UE is not expected to be configured with TCI-State, SpatialRelationInfo or PUCCH-SpatialRelationInfo, except SpatialRelationInfoPos in a CC in a band, if the UE is configured with DLorJointTCIState or UL-TCIState in any CC in the same band. The UE can assume that when the UE is configured with TCI-State in any CC in the CC list configured by simultaneousTCI-UpdateList1-r16, simultaneousTCI-UpdateList2-r16, simultaneous Spatial-UpdatedList1-r16, or simultaneousSpatial-UpdatedList2-r16, the UE is not configured with DLorJointTCIState or UL-TCIState in any CC within the same band in the CC list.

The UE receives an activation command, as described in clause 6.1.3.14 of [10, TS 38.321] or 6.1.3.x of [10, TS 38.321], used to map up to 8 TCI states and/or pairs of TCI states, with one TCI state for DL channels/signals and one TCI state for UL channels/signals to the codepoints of the DCI field 'Transmission Configuration Indication' for one or for a set of CCs/DL BWPs, and if applicable, for one or for a set of CCs/UL BWPs. When a set of TCI state IDs are activated for a set of CCs/DL BWPs and if applicable, for a set of CCs/UL BWPs, where the applicable list of CCs is determined by the indicated CC in the activation command, the same set of TCI state IDs are applied for all DL and/or UL BWPs in the indicated CCs.

The Unified TCI States Activation/Deactivation MAC CE is identified by a MAC subheader with eLCID as specified in Table 6.2.1-1b in TS 38.321. It has a variable size consisting of one or more of the following fields: (1) serving Cell ID: This field indicates the identity of the Serving Cell for which the MAC CE applies. The length of the field is 5 bits. If the indicated Serving Cell is configured as part of a simultaneousU-TCI-UpdateList1, simultaneousU-TCI-UpdateList2, simultaneousU-TCI-UpdateList3 or simultaneousU-TCI-UpdateList4 as specified in TS 38.331, this MAC CE applies to all the Serving Cells in the set simultaneousU-TCI-UpdateList1, simultaneousU-TCI-UpdateList2, simultaneousU-TCI-UpdateList3 or simultaneousU-TCI-UpdateList4, respectively; (2) DL BWP ID: This field indicates a DL BWP for which the MAC CE applies as the codepoint of the DCI bandwidth part indicator field as specified in TS 38.212. The length of the BWP ID field is 2 bits; (3) UL BWP ID: This field indicates a UL BWP for which the MAC CE applies as the codepoint of the DCI bandwidth part indicator field as specified in TS 38.212. The length of the BWP ID field is 2 bits; (4) $P_i$: This field indicates

whether each TCI codepoint has multiple TCI states or single TCI state. If $P_i$ field set to 1, it indicates that $i^{th}$ TCI codepoint includes the DL TCI state and the UL TCI state. If $P_i$ field set to 0, it indicates that $i^{th}$ TCI codepoint includes only the DL TCI state or the UL TCI state; (5) D/U: This field indicate whether the TCI state ID in the same octet is for joint/downlink or uplink TCI state. If this field is set to 1, the TCI state ID in the same octet is for joint/downlink. If this field is set to 0, the TCI state ID in the same octet is for uplink; (6) TCI state ID: This field indicates the TCI state identified by TCI-StateId as specified in TS 38.331. If D/U is set to 1, 7-bits length TCI state ID i.e. TCI-StateId as specified in TS 38.331 is used. If D/U is set to 0, the most significant bit of TCI state ID is considered as the reserved bit and remainder 6 bits indicate the UL-TCIState-Id as specified in TS 38.331. The maximum number of activated TCI states is 16; (7) R: Reserved bit, set to 0.

The CellGroupConfig IE specified in the TS 38.331 is used to configure a master cell group (MCG) or secondary cell group (SCG). A cell group comprises of one MAC entity, a set of logical channels with associated RLC entities and of a primary cell (SpCell) and one or more secondary cells (SCells).

simultaneousTCI-UpdateList1, simultaneousTCI-UpdateList2 are list of serving cells which can be updated simultaneously for TCI relation with a MAC CE. The simultaneousTCI-UpdateList1 and simultaneousTCI-UpdateList2 shall not contain same serving cells. Network should not configure serving cells that are configured with a BWP with two different values for the coresetPoolIndex in these lists.

simultaneousU-TCI-UpdateList1, simultaneousU-TCI-UpdateList2, simultaneousU-TCI-UpdateList3, simultaneousU-TCI-UpdateList4 are list of serving cells for which the Unified TCI States Activation/Deactivation MAC CE applies simultaneously, as specified in [TS 38.321 v17.1.0 clause 6.1.3.47]. The different lists shall not contain same serving cells. Network only configures in these lists serving cells that are configured with unifiedtci-StateType.

When the bwp-id or cell for QCL-TypeA/D source RS in a QCL-Info of the TCI state configured with DLorJointTCIState is not configured, the UE assumes that QCL-TypeA/D source RS is configured in the CC/DL BWP where TCI state applies.

When tci-PresentInDCI is set as 'enabled' or tci-PresentDCI-1-2 is configured for the CORESET, the UE with activated DLorJointTCIState or UL-TCIState receives DCI format 1_1/1_2 providing indicated DLorJointTCIState or UL-TCIState for a CC or all CCs in the same CC list configured by simultaneousTCI-UpdateList1-r17, simultaneousTCI-UpdateList2-r17, simultaneousTCI-UpdateList3-r17, simultaneousTCI-UpdateList4-r17. The DCI format 1_1/1_2 can be with or without, if applicable, DL assignment. If the DCI format 1_1/1_2/ is without DL assignment, the UE can assume the following: (1) CS-RNTI is used to scramble the CRC for the DCI, (2) the values of the following DCI fields are set as follows: RV = all '1's, MCS = all '1's, NDI = 0, and set to all '0's for FDRA Type 0, or all '1's for FDRA Type 1, or all '0's for dynamicSwitch (same as in Table 10.2-4 of [6, TS 38.213]). After a UE receives an initial higher layer configuration of more than one DLorJoint-TCIState and before application of an indicated TCI state from the configured TCI states: the UE assumes that DM-RS of PDSCH and DM-RS of PDCCH and the CSI-RS applying the indicated TCI state are quasi co-located with the SS/PBCH block the UE identified during the initial access procedure.

After a UE receives an initial higher layer configuration of more than one DLorJoint-TCIState or UL-TCIState and before application of an indicated TCI state from the configured TCI states: the UE assumes that the UL TX spatial filter, if applicable, for dynamic-grant and configured-grant based PUSCH and PUCCH, and for SRS applying the indicated TCI state, is the same as that for a PUSCH transmission scheduled by a RAR UL grant during the initial access procedure.

After a UE receives a higher layer configuration of more than one DLorJoint-TCIState as part of a Reconfiguration with sync procedure as described in [12, TS 38.331] and before applying an indicated TCI state from the configured TCI states: the UE assumes that DM-RS of PDSCH and DM-RS of PDCCH, and the CSI-RS applying the indicated TCI state are quasi co-located with the SS/PBCH block or the CSI-RS resource the UE identified during the random access procedure initiated by the Reconfiguration with sync procedure as described in [12, TS 38.331].

After a UE receives a higher layer configuration of more than one DLorJoint-TCIState or UL-TCIState as part of a Reconfiguration with sync procedure as described in [12, TS 38.331] and before applying an indicated TCI state from the configured TCI states: the UE assumes that the UL TX spatial filter, if applicable, for dynamic-grant and configured-grant based PUSCH and PUCCH, and for SRS applying the indicated TCI state, is the same as that for a PUSCH transmission scheduled by a RAR UL grant during random access procedure initiated by the Reconfiguration with sync procedure as described in [12, TS 38.331].

If a UE receives a higher layer configuration of a single DLorJoint-TCIState, that can be used as an indicated TCI state, the UE obtains the QCL assumptions from the configured TCI state for DM-RS of PDSCH and DM-RS of PDCCH, and the CSI -RS applying the indicated TCI state.

If a UE receives a higher layer configuration of a single DLorJoint-TCIState or UL-TCIState, that can be used as an indicated TCI state, the UE determines an UL TX spatial filter, if applicable, from the configured TCI state for dynamic-grant and configured-grant based PUSCH and PUCCH, and SRS applying the indicated TCI state.

When the UE would transmit the last symbol of a PUCCH with HARQ-ACK information corresponding to the DCI carrying the TCI State indication and without DL assignment, or corresponding to the PDSCH scheduling by the DCI carrying the TCI State indication, and if the indicated TCI State is different from the previously indicated one, the indicated DLorJointTCIState or UL-TCIstate should be applied starting from the first slot that is at least BeamAppTime_r17 symbols after the last symbol of the PUCCH. The first slot and the BeamAppTime_r17 symbols are both determined on the carrier with the smallest SCS among the carrier(s) applying the beam indication.

If a UE is configured with pdsch-TimeDomainAllocationListForMultiPDSCH-r17 in which one or more rows contain multiple SLIVs for PDSCH on a DL BWP of a serving cell, and the UE is receiving a DCI carrying the TCI-State indication and without DL assignment, the UE does not expect that the number of indicated SLIVs in the row of the pdsch-TimeDomainAllocationListForMultiPDSCH-r17 by the DCI is more than one.

If the UE is configured with NumberOfAdditionalPCI and with PDCCH-Config that contains two different values of coresetPoolIndex in ControlResourceSet, the UE receives an activation command for CORESET associated with each coresetPoolIndex, as described in clause 6.1.3.14 of [10, TS 38.321], used to map up to 8 TCI states to the codepoints of the DCI field 'Transmission Configuration Indication' in one CC/DL BWP. When a set of TCI state IDs are activated for a coresetPoolIndex, the activated TCI states corresponding to one coresetPoolIndex can be associated with one physical cell ID and activated TCI states corresponding to another coresetPoolIndex can be associated with another physical cell ID.

When a UE supports two TCI states in a codepoint of the DCI field 'Transmission Configuration Indication' the UE may receive an activation command, as described in clause 6.1.3.24 of [10, TS 38.321], the activation command is used to map up to 8 combinations of one or two TCI states to the codepoints of the DCI field 'Transmission Configuration Indication'. The UE is not expected to receive more than 8 TCI states in the activation command. When the DCI field 'Transmission Configuration Indication' is present in DCI format 1_2 and when the number of codepoints S in the DCI field 'Transmission Configuration Indication' of DCI format 1_2 is smaller than the number of TCI codepoints that are activated by the activation command, as described in clause 6.1.3.14 and 6.1.3.24 of [10, TS38.321], only the first S activated codepoints are applied for DCI format 1_2.

When the UE would transmit a PUCCH with HARQ-ACK information in slot n corresponding to the PDSCH carrying the activation command, the indicated mapping between TCI states and codepoints of the DCI field 'Transmission Configuration Indication' should be applied starting from the first slot that is after slot

$$n + 3 N_{slot}^{subframe,\mu} + \frac{2^{\mu}}{2^{\mu_{k_{mac}}}} \cdot k_{mac}$$

where m is the SCS configuration for the PUCCH and $\mu_{k_{mac}}$ is the subcarrier spacing configuration for $k_{mac}$ with a value of 0 for frequency range 1, and $k_{mac}$ is provided by K-Mac or $k_{mac}$=0 if K-Mac is not provided. If tci-PresentInDCI is set to 'enabled' or tci-PresentDCI-1-2 is configured for the CORESET scheduling the PDSCH, and the time offset between the reception of the DL DCI and the corresponding PDSCH is equal to or greater than timeDurationForQCL if applicable, after a UE receives an initial higher layer configuration of TCI states and before reception of the activation command, the UE may assume that the DM-RS ports of PDSCH of a serving cell are quasi co-located with the SS/PBCH block determined in the initial access procedure with respect to qcl-Type set to 'typeA', and when applicable, also with respect to qcl-Type set to 'typeD'. If a UE is configured with the higher layer parameter tci-PresentInDCI that is set as 'enabled' for the CORESET scheduling a PDSCH, the UE assumes that the TCI field is present in the DCI format 1_1 of the PDCCH transmitted on the CORESET. If a UE is configured with the higher layer parameter tci-PresentDCI-1-2 for the CORESET scheduling the PDSCH, the UE assumes that the TCI field with a DCI field size indicated by tci-PresentDCI-1-2 is present in the DCI format 1_2 of the PDCCH transmitted on the CORESET. If the PDSCH is scheduled by a DCI format not having the TCI field present, and the time offset between the reception of the DL DCI and the corresponding PDSCH of a serving cell is equal to or greater than a threshold timeDurationForQCL if applicable, where the threshold is based on reported UE capability [13, TS 38.306], for determining PDSCH antenna port quasi co-location, the UE assumes that the TCI state or the QCL assumption for the PDSCH is identical to the TCI state or QCL assumption whichever is applied for the CORESET used for the PDCCH transmission within the active BWP of the serving cell.

When a UE is configured with both sfnSchemePdcch and sfnSchemePdsch scheduled by DCI format 1_0 or by DCI format 1_1/1_2, if the time offset between the reception of the DL DCI and the corresponding PDSCH of a serving cell is equal to or greater than a threshold timeDurationForQCL if applicable: if the UE supports DCI scheduling without TCI field, the UE assumes that the TCI state(s) or the QCL assumption(s) for the PDSCH is identical to the TCI state(s) or QCL assumption(s) whichever is applied for the CORESET used for the reception of the DL DCI within the active BWP of the serving cell regardless of the number of active TCI states of the CORESET. If the UE does not support dynamic switching between SFN PDSCH and non-SFN PDSCH, the UE should be activated with the CORESET with two TCI states; else if the UE does not support DCI scheduling without TCI field, the UE shall expect TCI field present when scheduled by DCI format 1_1/1_2.

When a UE is configured with sfnSchemePdsch and sfnSchemePdcch is not configured, when scheduled by DCI format 1_1/1_2, if the time offset between the reception of the DL DCI and the corresponding PDSCH of a serving cell is equal to or greater than a threshold timeDurationForQCL if applicable, the UE shall expect TCI field present. For PDSCH scheduled by DCI format 1_0, 1_1, 1_2, when a UE is configured with sfnSchemePdcch set to 'sfnSchemeA' and sfnSchemePdsch is not configured, and there is no TCI codepoint with two TCI states in the activation command, and if the time offset between the reception of the DL DCI and the corresponding PDSCH is equal or larger than the threshold timeDurationForQCL if applicable and the CORESET which schedules the PDSCH is indicated with two TCI states, the UE assumes that the TCI state or the QCL assumption for the PDSCH is identical to the first TCI state or QCL assumption which is applied for the CORESET used for the PDCCH transmission within the active BWP of the serving cell.

If a PDSCH is scheduled by a DCI format having the TCI field present, the TCI field in DCI in the scheduling component carrier points to the activated TCI states in the scheduled component carrier or DL BWP, the UE shall use the TCI-State according to the value of the 'Transmission Configuration Indication' field in the detected PDCCH with DCI for determining PDSCH antenna port quasi co-location. The UE may assume that the DM-RS ports of PDSCH of a serving cell are quasi co-located with the RS(s) in the TCI state with respect to the QCL type parameter(s) given by the indicated TCI state if the time offset between the reception of the DL DCI and the corresponding PDSCH is equal to or greater than a threshold timeDurationForQCL, where the threshold is based on reported UE capability [13, TS 38.306]. For a single slot PDSCH, the indicated TCI state(s) should be based on the activated TCI states in the slot with the scheduled PDSCH. For a multi-slot PDSCH or the UE is configured with higher layer parameter pdsch-TimeDomainAllocationListForMultiPDSCH-r17, the indicated TCI state(s) should be based on the activated TCI states in the first slot with the scheduled PDSCH(s), and UE shall expect the activated TCI states are the same across the slots with the scheduled PDSCH(s). When the UE is configured with CORESET associated with a search space set for cross-carrier scheduling and the UE is not configured with enableDefaultBeamForCCS, the UE expects tci-PresentInDCI is set as 'enabled' or tci-PresentDCI-1-2 is configured for the CORESET, and if one or more of the TCI states configured for the serving cell scheduled by the search space set contains qcl-Type set to 'typeD', the UE expects the time offset between the reception of the detected PDCCH in the search space set and a corresponding PDSCH is larger than or equal to the threshold timeDurationForQCL. Independent of the configuration of tci-PresentInDCI and tci-PresentDCI-1-2 in RRC connected mode, if the offset between the reception of the DL DCI and the corresponding PDSCH is less than the threshold timeDurationForQCL and at least one configured TCI state for the serving cell of scheduled PDSCH contains qcl-Type set to 'typeD', the UE may assume that the DM-RS ports of PDSCH(s) of a serving cell are quasi co-located with the RS(s) with respect to the QCL parameter(s) used for PDCCH quasi co-location indication of the CORESET associated with a monitored search space with the lowest controlResourceSetId in the latest slot in which one or more CORESETs within the active BWP of the serving cell are monitored by the UE. In this case, if the qcl-Type is set to 'typeD' of the PDSCH DM-RS is different from that of the PDCCH DM-RS with which they overlap in at least one symbol, the UE is expected to prioritize the reception of PDCCH associated with that CORESET. This also applies to the intra-band CA case (when PDSCH and the CORESET are in different component carriers).

Independent of the configuration of tci-PresentInDCI and tci-PresentDCI-1-2 in RRC connected mode, if the offset between the reception of the DL DCI and the corresponding PDSCH is less than the threshold timeDurationForQCL and at least one configured TCI state for the serving cell of scheduled PDSCH contains qcl-Type set to 'typeD', If a UE is configured with enableDefaultTCI-StatePerCoresetPoolIndex and the UE is configured by higher layer parameter PDCCH-Config that contains two different values of coresetPoolIndex in different ControlResourceSets, the UE may assume that the DM-RS ports of PDSCH associated with a value of coresetPoolIndex of a serving cell are quasi co-located with the RS(s) with respect to the QCL parameter(s) used for PDCCH quasi co-location indication of the CORESET associated with a monitored search space with the lowest controlResourceSetId among CORESETs, which are configured with the same value of coresetPoolIndex as the PDCCH scheduling that PDSCH, in the latest slot in which one or more CORESETs associated with the same value of coresetPoolIndex as the PDCCH scheduling that PDSCH within the active BWP of the serving cell are monitored by the UE. In this case, if the 'QCL-TypeD' of the PDSCH DM-RS is different from that of the PDCCH DM-RS with which they overlap in at least one symbol and they are associated with same value of coresetPoolIndex, the UE is expected to prioritize the reception of PDCCH associated with that CORESET. This also applies to the intra-band CA case (when PDSCH and the CORESET are in different component carriers).

Independent of the configuration of tci-PresentInDCI and tci-PresentDCI-1-2 in RRC connected mode, if the offset between the reception of the DL DCI and the corresponding PDSCH is less than the threshold timeDurationForQCL and at least one configured TCI state for the serving cell of scheduled PDSCH contains qcl-Type set to 'typeD', If a UE is configured with enableTwoDefaultTCI-States, and at least one TCI codepoint indicates two TCI states, the UE may assume that the DM-RS ports of PDSCH or PDSCH transmission occasions of a serving cell are quasi co-located with the RS(s) with respect to the QCL parameter(s) associated with the TCI states corresponding to the lowest codepoint among the TCI codepoints containing two different TCI states. When the UE is configured by higher layer parameter repetitionScheme set to 'tdmSchemeA' or is configured with higher layer parameter repetitionNumber, and the offset between the reception of the DL DCI and the first PDSCH transmission occasion is less than the threshold timeDurationForQCL, the mapping of the TCI states to PDSCH transmission occasions is determined according to clause 5.1.2.1 in TS 38.214 by replacing the indicated TCI states with the TCI states corresponding to the lowest codepoint among the TCI codepoints containing two different TCI states based on the activated TCI states in the slot with the first PDSCH transmission occasion. In this case, if the 'QCL-TypeD' in both of the TCI states corresponding to the lowest codepoint among the TCI codepoints containing two different TCI states is different from that of the PDCCH DM-RS with which they overlap in at least one symbol, the UE is expected to prioritize the reception of PDCCH associated with that CORESET. This also applies to the intra-band CA case (when PDSCH and the CORESET are in different component carriers).

Independent of the configuration of tci-PresentInDCI and tci-PresentDCI-1-2 in RRC connected mode, if the offset between the reception of the DL DCI and the corresponding PDSCH is less than the threshold timeDurationForQCL and at least one configured TCI state for the serving cell of scheduled PDSCH contains qcl-Type set to 'typeD', if a UE is not configured with sfnSchemePdsch, and the UE is configured with sfnSchemePdcch set to 'sfnSchemeA' and there is no TCI codepoint witih two TCI states in the activation command and the CORESET with the lowest ID in the latest slot is indicated with two TCI states, the UE may assume that the DM-RS ports of PDSCH of a serving cell are quasi co-located with the RS(s) with respect to the QCL parameter(s) associated with the first TCI state of two TCI states indicated for the CORESET.

Independent of the configuration of tci-PresentInDCI and tci-PresentDCI-1-2 in RRC connected mode, if the offset between the reception of the DL DCI and the corresponding PDSCH is less than the threshold timeDurationForQCL and at least one configured TCI state for the serving cell of scheduled PDSCH contains qcl-Type set to 'typeD', in all cases above, if none of configured TCI states for the serving cell of scheduled PDSCH is configured with qcl-Type set to 'typeD', the UE shall obtain the other QCL assumptions from the indicated TCI state(s) for its scheduled PDSCH irrespective of the time offset between the reception of the DL DCI and the corresponding PDSCH.

If the PDCCH carrying the scheduling DCI is received on one component carrier, and a PDSCH scheduled by that DCI is on another component carrier: (1) the timeDurationForQCL is determined based on the subcarrier spacing of the

$$d\frac{2^{\mu_{PDSCH}}}{2^{\mu_{PDCCH}}}$$

scheduled PDSCH. If $\mu_{PDCCH} < \mu_{PDSCH}$ an additional timing delay is added to the timeDurationForQCL, where d is defined in 5.2.1.5.1a-1 in TS 38.214, otherwise d is zero; or (2) when the UE is configured with enable-DefaultBeamForCCS, if the offset between the reception of the DL DCI and the corresponding PDSCH is less than the threshold timeDurationForQCL, or if the DL DCI does not have the TCI field present, the UE obtains its QCL assumption for the scheduled PDSCH from the activated TCI state with the lowest ID applicable to PDSCH in the active BWP of the scheduled cell.

A UE that has indicated a capability beamCorrespondenceWithoutUL-BeamSweeping set to '1', as described in [18, TS 38.822], can determine a spatial domain filter to be used while performing the applicable channel access procedures described in [16, TS 37.213] to transmit a UL transmission on the channel as follows: (1) if UE is indicated with an SRI corresponding to the UL transmission, the UE may use a spatial domain filter that is same as the spatial domain transmission filter associated with the indicated SRI, or (2) if UE is configured with TCI-State configurations with DLorJointTCIState or UL-TCIState, the UE may use a spatial domain transmit filter that is same as the spatial domain receive filter the UE may use to receive the DL reference signal associated with the indicated TCI state.

When the PDCCH reception includes two PDCCH from two respective search space sets, as described in clause 10.1 of [6, TS 38.213], for the purpose of determining the time offset between the reception of the DL DCI and the corresponding PDSCH, the PDCCH candidate that ends later in time is used. When the PDCCH reception includes two PDCCH candidates from two respective search space sets, as described in clause 10.1 of [6, TS 38.213], for the configuration of tci-PresentInDCI or tci-PresentDCI-1-2, the UE expects the same configuration in the first and second CORESETs associated with the two PDCCH candidates; and if the PDSCH is scheduled by a DCI format not having the TCI field present and if the scheduling offset is equal to or larger than timeDurationForQCL, if applicable, PDSCH QCL assumption is based on the CORESET with lower ID among the first and second CORESETs associated with the two PDCCH candidates.

For a periodic CSI-RS resource in an NZP-CSI-RS-ResourceSet configured with higher layer parameter trs-Info, the UE shall expect that a TCI-State indicates one of the following quasi co-location type(s): (1) 'typeC' with an SS/PBCH block and, when applicable, 'typeD' with the same SS/PBCH block, or (2) 'typeC' with an SS/PBCH block and, when applicable,'typeD' with a CSI-RS resource in an NZP-CSI-RS-ResourceSet configured with higher layer parameter repetition.

For periodic/semi-persistent CSI-RS, the UE can assume that the indicated DLorJointTCIState is not applied.

For an aperiodic CSI-RS resource in an NZP-CSI-RS-ResourceSet configured with higher layer parameter trs-Info, the UE shall expect that a TCI-State indicates qcl-Type set to 'typeA' with a periodic CSI-RS resource in a NZP-CSI-RS-ResourceSet configured with higher layer parameter trs-Info and, when applicable, qcl-Type set to 'typeD' with the same periodic CSI-RS resource.

For a CSI-RS resource in an NZP-CSI-RS-ResourceSet configured without higher layer parameter trs-Info and without the higher layer parameter repetition, the UE shall expect that a TCI-State indicates one of the following quasi co-location type(s): (1) 'typeA' with a CSI-RS resource in a NZP-CSI-RS-ResourceSet configured with higher layer parameter trs-Info and, when applicable, 'typeD' with the same CSI-RS resource, (2) 'typeA' with a CSI-RS resource in a NZP-CSI-RS-ResourceSet configured with higher layer parameter trs-Info and, when applicable, 'typeD' with an SS/PBCH block, (3) 'typeA' with a CSI-RS resource in a NZP-CSI-RS-ResourceSet configured with higher layer parameter trs-Info and, when applicable, 'typeD' with a CSI-RS resource in a NZP-CSI-RS-ResourceSet configured with higher layer parameter repetition, or (4) 'typeB' with a CSI-RS resource in a NZP-CSI-RS-ResourceSet configured with higher layer parameter trs-Info when 'typeD' is not applicable.

For a CSI-RS resource in an NZP-CSI-RS-ResourceSet configured with higher layer parameter repetition, the UE shall expect that a TCI-State indicates one of the following quasi co-location type(s): (1) 'typeA' with a CSI-RS resource in a NZP-CSI-RS-ResourceSet configured with higher layer parameter trs-Info and, when applicable, 'typeD' with the same CSI-RS resource, (2) 'typeA' with a CSI-RS resource in a NZP-CSI-RS-ResourceSet configured with higher layer parameter trs-Info and, when applicable, 'typeD' with a CSI-RS resource in a NZP-CSI-RS-ResourceSet configured with higher layer parameter repetition, (3) 'typeC' with an SS/PBCH block and, when applicable, 'typeD' with the same SS/PBCH block, the reference RS may additionally be an SS/PBCH block having a PCI different from the PCI of the serving cell. The UE can assume center frequency, SCS, SFN offset are the same for SS/PBCH block from the serving cell and SS/PBCH block having a PCI different from the serving cell.

For the DM-RS of PDCCH, the UE shall expect that a TCI-State or DLorJointTCIState except an indicated DLorJointTCIState indicates one of the following quasi co-location type(s): (1) 'typeA' with a CSI-RS resource in a NZP-CSI-RS-ResourceSet configured with higher layer parameter trs-Info and, when applicable, 'typeD' with the same CSI-RS resource, (2) 'typeA' with a CSI-RS resource in a NZP-CSI-RS-ResourceSet configured with higher layer parameter trs-Info and, when applicable, 'typeD' with a CSI-RS resource in an NZP-CSI-RS-ResourceSet configured with higher layer parameter repetition, or (3) 'typeA' with a CSI-RS resource in a NZP-CSI-RS-ResourceSet configured without higher layer parameter trs-Info and without higher layer parameter repetition and, when applicable, 'typeD' with the same CSI-RS resource.

When a UE is configured with sfnSchemePdcch set to 'sfnSchemeA', and CORESET is activated with two TCI states, the UE shall assume that the DM-RS port(s) of the PDCCH in the CORESET is quasi co-located with the DL-RSs of the two TCI states. When a UE is configured with sfnSchemePdcch set to 'sfnSchemeB', and a CORESET is activated with two TCI states, the UE shall assume that the DM-RS port(s) of the PDCCH is quasi co-located with the DL-RSs of the two TCI states except for quasi co-location parameters {Doppler shift, Doppler spread} of the second indicated TCI state.

For the DM-RS of PDSCH, the UE shall expect that a TCI-State or DLorJointTCIState except an indicated DLorJointTCIState indicates one of the following quasi co-location type(s): (1) 'typeA' with a CSI-RS resource in a NZP-CSI-RS-ResourceSet configured with higher layer parameter trs-Info and, when applicable, 'typeD' with the same CSI-RS resource, (2) 'typeA' with a CSI-RS resource in a NZP-CSI-RS-ResourceSet configured with higher layer parameter trs-Info and, when applicable, 'typeD' with a CSI-RS resource in an NZP-CSI-RS-ResourceSet configured with higher layer parameter repetition, or (3) 'typeA' with a CSI-RS resource in a NZP-CSI-RS-ResourceSet configured without higher layer parameter trs-Info and without higher layer parameter repetition and, when applicable, 'typeD' with the same CSI-RS resource.

For the DM-RS of PDCCH, the UE shall expect that an indicated DLorJointTCIState indicates one of the following quasi co-location type(s): (1) 'typeA' with a CSI-RS resource in a NZP-CSI-RS-ResourceSet configured with higher layer parameter trs-Info and, when applicable, 'typeD' with the same CSI-RS resource, or (2) 'typeA' with a CSI-RS resource in a NZP-CSI-RS-ResourceSet configured with higher layer parameter trs-Info and, when applicable, 'typeD' with a CSI-RS resource in an NZP-CSI-RS-ResourceSet configured with higher layer parameter repetition. For the DM-RS of PDSCH, the UE shall expect that an indicated DLorJointTCIState indicates one of the following quasi co-location type(s) if the UE is configured TCI-State(s) with tci-StateId_r17: (1) 'typeA' with a CSI-RS resource in a NZP-CSI-RS-ResourceSet configured with higher layer parameter trs-Info and, when applicable, 'typeD' with the same CSI-RS resource, or (2) 'typeA' with a CSI-RS resource in a NZP-CSI-RS-ResourceSet configured with higher layer parameter trs-Info and, when applicable, 'typeD' with a CSI-RS resource in an NZP-CSI-RS-ResourceSet configured with higher layer parameter repetition.

When a UE is configured with sfnSchemePdsch set to 'sfnSchemeA', and the UE is indicated with two TCI states in a codepoint of the DCI field 'Transmission Configuration Indication' in a DCI scheduling a PDSCH, the UE shall assume that the DM-RS port(s) of the PDSCH is quasi co-located with the DL-RSs of the two TCI states. When a UE is configured with sfnSchemePdsch set to 'sfnSchemeB', and the UE is indicated with two TCI states in a codepoint of the DCI field 'Transmission Configuration Indication' in a DCI scheduling a PDSCH, the UE shall assume that the DM-RS port(s) of the PDSCH is quasi co-located with the DL-RSs of the two TCI states except for quasi co-location parameters {Doppler shift, Doppler spread} of the second indicated TCI state.

Throughout the present disclosure, the joint (e.g., provided by DLorJoint-TCIState), separate DL (e.g., provided by DLorJoint-TCIState) and/or separate UL (e.g., provided by UL-TCIState) TCI states described/discussed herein could also be referred to as unified TCI states, common TCI states, main TCI states and etc.

In the present disclosure, the TCI state/beam indication for the PUSCH(s)/PUCCH(s) repetition in a multi-TRP system is discussed under the Rel. 17 unified TCI framework, wherein one or more DLIUL TCI states could be separately/jointly indicated in various channels such as MAC CE and/or DCI (e.g., DCI format 1_1 or 1_2 with or without DL assignment). The UE could transmit the same PUSCH(s)/PUCCH(s) to different TRPs in the multi-TRP system using different time domain resources and/or different frequency domain resources and/or different spatial domain filters.

Under the Rel. 17 unified TCI framework, wherein a UE could be provided by the network one or more separate/joint DL or UL TCI state for various DL or UL channels/signals, various design aspects related to sounding reference signal (SRS) configuration and power control, especially in a multi-TRP system or an inter-cell system composed of at least a PCI different from the serving cell PCI, need to be specified.

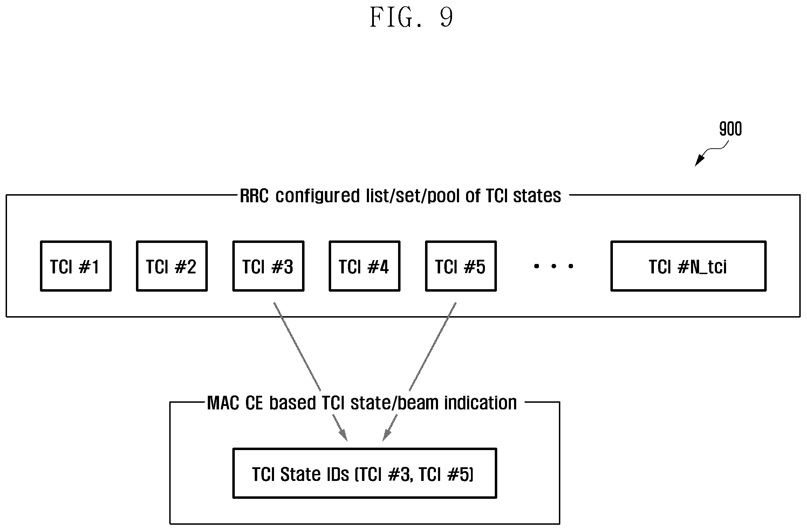

FIGURE 9 illustrates an example of MAC CE based TCI state/beam indication for a multi-TRP operation 900 according to embodiments of the present disclosure. An embodiment of the MAC CE based TCI state/beam indication for a multi-TRP operation 900 shown in FIGURE 9 is for illustration only.

In FIGURE 9, an example of MAC CE based Rel. 17 unified TCI state/beam indication for the multi-TRP operation is presented. As illustrated in FIGURE 9, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more MAC CE commands to indicate one or more beam(s) (i.e., the Rel. 17 unified TCI state(s)) for UE-dedicated reception on PDSCH/PDCCH or dynamic-grant/configured-grant based PUSCH and all of dedicated PUCCH resources associated with one or more TRPs in a multi-TRP system. For instance, the UE could receive from the network a single MAC CE command for beam indication to indicate M>1 Rel. 17 unified TCI states/beams (e.g., M>1 joint DL and UL TCI states or M>1 separate UL TCI states) for the same PUSCH(s)/PUCCH(s) transmitted to/associated with different TRPs in the multi-TRP system.

The MAC CE for beam indication could include at least a Rel. 17 unified TCI state ID. As discussed above, the Rel.17 unified TCI state corresponding to the TCI state ID could be at least one of: (1) a DL TCI state; (2) an UL TCI state; (3) a joint DL and UL TCI state; and (4) separate DL TCI state and UL TCI state.

The association/mapping between the TCI state(s)/beam(s) indicated in the MAC CE command(s) and the TRPs in the multi-TRP system needs to be specified. There could be various means to associate/map the TCI state(s)/beam(s) indicated in the MAC CE command(s) for beam indication and the TRPs in the multi-TRP system.

For N>1 TCI states/beams indication in a single MAC CE command for beam indication, following examples can be provided.

In one example, the UE could be explicitly indicated by the network, e.g., via higher layer RRC signaling and/or MAC CE command and/or dynamic DCI signaling, the exact association/mapping between the TCI states/beams indicated in the MAC CE command for beam indication and the TRPs in the multi-TRP system. For example, the UE could be first higher layer configured by the network a list/set/pool of TRP-specific ID/index values such as PCIs. The first TCI state and/or the TCI state with the lowest TCI state ID value indicated in the MAC CE command for beam indication could correspond to the first entry/TRP in the list/set/pool of TRP-specific ID/index values, the second TCI state and/or the TCI state with the second lowest TCI state ID value indicated in the MAC CE command for beam indication could correspond to the second entry/TRP in the list/set/pool of TRP-specific ID/index values, and so on, and the last TCI state and/or the TCI state with the highest TCI state ID value indicated in the MAC CE command for beam indication could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/- bitmaps to activate one or more TRP-specific ID/index values from the higher layer configured list/set/pool of TRP-specific ID/index values. The first TCI state and/or the TCI state with the lowest TCI state ID value indicated in the MAC CE command for beam indication could correspond to the first MAC CE(s)/bitmap(s) activated TRP-specific ID/index value, the second TCI state and/or the TCI state with the second lowest TCI state ID value indicated in the MAC CE command for beam indication could correspond to the second MAC CE(s)/bitmap(s) activated TRP-specific ID/index value, and so on, and the last TCI state and/or the TCI state with the highest TCI state ID value indicated in the MAC CE command for beam indication could correspond to the last MAC CE(s)/bitmap(s) activated TRP-specific ID/index value.

Other exact association/mapping relationships between the TCI states/beams indicated in the MAC CE command for beam indication and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the TCI states/beams indicated in the MAC CE command for beam indication and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the first TCI state and/or the TCI state with the lowest TCI state ID value indicated in the MAC CE command for beam indication could correspond to the TRP with the lowest/lowest MAC CE activated TRP-specific ID/index value such as the lowest PCI value and/or the first TRP (e.g., TRP #1), the second TCI state and/or the TCI state with the second lowest TCI state ID value indicated in the MAC CE command for beam indication could correspond to the TRP with the second lowest/second lowest MAC CE activated TRP-specific ID/index value such as the second lowest PCI value and/or the second TRP (e.g., TRP

**EP 4 597 875 A2**

#2), and so on, and the last TCI state and/or the TCI state with the highest TCI state ID value indicated in the MAC CE command for beam indication could correspond to the TRP with the highest/highest MAC CE activated TRP-specific ID/index value such as the highest PCI value and/or the last TRP (e.g., TRP #N).

For another example, the first TCI state and/or the TCI state with the lowest TCI state ID value indicated in the MAC CE command for beam indication could correspond to the TRP with the highest/highest MAC CE activated TRP-specific ID/index value such as the highest PCI value and/or the last TRP (e.g., TRP #N), the second TCI state and/or the TCI state with the second lowest TCI state ID value indicated in the MAC CE command for beam indication could correspond to the TRP with the second highest/second highest MAC CE activated TRP-specific ID/index value such as the second highest PCI value and/or the second last TRP (e.g., TRP #N-1), and so on, and the last TCI state and/or the TCI state with the highest TCI state ID value indicated in the MAC CE command for beam indication could correspond to the TRP with the lowest/lowest MAC CE activated TRP-specific ID/index value such as the lowest PCI value and/or the first TRP (e.g., TRP #1). Other implicit indication methods of the association/mapping between the N>1 TCI states/beams indicated in the MAC CE command for beam indication and the TRPs in the multi-TRP system are also possible.

In yet another example, the UE could be explicitly indicated by the network, e.g., via higher layer RRC signaling and/or MAC CE command and/or dynamic DCI signaling, the exact association/mapping between the TCI states/beams indicated in the MAC CE command for beam indication and the CORESETPoolIndex values.

For example, the UE could be first higher layer configured by the network a list/set/pool of CORESETPoolIndex values - e.g., a set of two CORESETPoolIndex values 0 and 1. The first TCI state and/or the TCI state with the lowest TCI state ID value indicated in the MAC CE command for beam indication could correspond to the first entry/CORESETPoolIndex value in the list/set/pool of CORESETPoolIndex values, the second TCI state and/or the TCI state with the second lowest TCI state ID value indicated in the MAC CE command for beam indication could correspond to the second entry/CORESETPoolIndex value in the list/set/pool of CORESETPoolIndex values, and so on, and the last TCI state and/or the TCI state with the highest TCI state ID value indicated in the MAC CE command for beam indication could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first TCI state and/or the TCI state with the lowest TCI state ID value indicated in the MAC CE command for beam indication could correspond to the first MAC CE(s)/bitmap(s) activated CORESETPoolIndex value, the second TCI state and/or the TCI state with the second lowest TCI state ID value indicated in the MAC CE command for beam indication could correspond to the second MAC CE(s)/bitmap(s) activated CORESETPoolIndex value, and so on, and the last TCI state and/or the TCI state with the highest TCI state ID value indicated in the MAC CE command for beam indication could correspond to the last MAC CE(s)/bitmap(s) activated CORESETPoolIndex value.

Other exact association/mapping relationships between the TCI states/beams indicated in the MAC CE command for beam indication and the CORESETPoolIndex values and/or the corresponding indication method(s), e.g., via higher layer RRC signaling and/or MAC CE command and/or dynamic DCI signaling, are also possible.

In yet another example, the UE could be implicitly indicated by the network the association/mapping between the TCI states/beams indicated in the MAC CE command for beam indication and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values.

For example, the first TCI state and/or the TCI state with the lowest TCI state ID value indicated in the MAC CE command for beam indication could correspond to the lowest/lowest MAC CE activated CORESETPoolIndex value such as "0," the second TCI state and/or the TCI state with the second lowest TCI state ID value indicated in the MAC CE command for beam indication could correspond to the second lowest/second lowest MAC CE activated CORESETPoolIndex value such as "1," and so on, and the last TCI state and/or the TCI state with the highest TCI state ID value indicated in the MAC CE command for beam indication could correspond to the highest/highest MAC CE activated CORESETPoolIndex value such as "N-1." For another example, the first TCI state and/or the TCI state with the lowest TCI state ID value indicated in the MAC CE command for beam indication could correspond to the highest/highest MAC CE activated CORESETPoolIndex value such as "N-1," the second TCI state and/or the TCI state with the second lowest TCI state ID value indicated in the MAC CE command for beam indication could correspond to the second highest/second highest MAC CE activated CORESETPoolIndex value such as "N-2," and so on, and the last TCI state and/or the TCI state with the highest TCI state ID value indicated in the MAC CE command for beam indication could correspond to the lowest/lowest MAC CE activated CORESETPoolIndex value such as "0." Other implicit indication methods of the association/mapping between the N>1 TCI states/beams indicated in the MAC CE command for beam indication and the CORESETPoolIndex values are also possible.

In yet another example, a TCI state, e.g., the higher layer parameter TCI-State, indicated in the MAC CE command for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

In yet another example, the MAC CE command for Rel. 17 unified TCI state/beam indication could include/comprise/incorporate at least one (e.g., N>1 or M>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n-th or m-th TCI state (e.g., the n-th or m-th joint DL and UL TCI state or separate DL TCI state or separate UL TCI state) among/within the indicated N>1 or M>1 Rel. 17 unified TCI states could be associated with the n-th or m-th entity ID/index indicated in the same MAC CE command for Rel. 17 unified TCI state/beam indication, where n∈{1,..., N} or m∈{1,..., M}.

For instance, the first TCI state in the indicated N=2 or M=2 Rel. 17 unified TCI states could be associated with the first entity ID/index such as the first PCI, CORESETPoolIndex value 0 or CORESETGroupIndex value 0 indicated in the same MAC CE command for Rel. 17 unified TCI state/beam indication, and the second TCI state in the indicated N=2 or M=2 Rel. 17 unified TCI states could be associated with the second entity ID/index such as the second PCI, CORESETPoolIndex value 1 or CORESETGroupIndex value 1 indicated in the same MAC CE command for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

For a list/set/pool of N>1 MAC CE commands for beam indication with each MAC CE command indicating a single TCI state/beam; a unique entity ID/index could be included/incorporated in each MAC CE command for beam indication.

In one example, the UE could be explicitly indicated by the network, e.g., via higher layer RRC signaling and/or MAC CE command and/or dynamic DCI signaling, the exact association/mapping between the MAC CE commands for beam indication (and therefore, the TCI states/beams indicated therein) and the TRPs in the multi-TRP system. For example, the UE could be first higher layer configured by the network a list/set/pool of TRP-specific ID/index values such as PCIs. The first MAC CE command for beam indication in the list/set/pool of N>1 MAC CE commands for beam indication and/or the MAC CE command for beam indication indicating the lowest entity ID/index value and/or the MAC CE command for beam indication indicating the TCI state with the lowest TCI state ID value could correspond to the first entry/TRP in the list/set/pool of TRP-specific ID/index values, the second MAC CE command for beam indication in the list/set/pool of N>1 MAC CE commands for beam indication and/or the MAC CE command for beam indication indicating the second lowest entity ID/index value and/or the MAC CE command for beam indication indicating the TCI state with the second lowest TCI state ID value could correspond to the second entry/TRP in the list/set/pool of TRP-specific ID/index values, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/bitmaps to activate one or more TRP-specific ID/index values from the higher layer configured list/set/pool of TRP-specific ID/index values. The first MAC CE command for beam indication in the list/set/pool of N>1 MAC CE commands for beam indication and/or the MAC CE command indicating the lowest entity ID/index value and/or the MAC CE command for beam indication indicating the TCI state with the lowest TCI state ID value could correspond to the first MAC CE(s)/bitmap(s) activated TRP-specific ID/index values, the second MAC CE command for beam indication in the list/set/pool of N>1 MAC CE commands for beam indication and/or the MAC CE command for beam indication indicting the second lowest entity ID/index value and/or the MAC CE command for beam indication indicating the TCI state with the second lowest TCI state ID value could correspond to the second MAC CE(s)/bitmap(s) activated TRP-specific ID/index values, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last MAC CE(s)/bitmap(s) activated TRP-specific ID/index values. Other exact association/mapping relationships between the MAC CE commands for beam indication (and therefore, the TCI states/beams indicated therein) and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the MAC CE commands for beam indication (and therefore, the TCI states/beams indicated therein) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values.

For example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the TRP with the lowest/lowest MAC CE activated TRP-specific ID/index value such as the lowest PCI value and/or the first TRP (e.g., TRP #1), the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the TRP with the second lowest/second lowest MAC CE activated TRP-specific ID/index value such as the second lowest PCI value and/or the second TRP (e.g., TRP #2), and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value could correspond to the TRP with the highest/highest MAC CE activated TRP-specific ID/index value such as the highest PCI value and/or the last TRP (e.g., TRP #N). For another example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the TRP with the highest/highest MAC CE activated TRP-specific ID/index value such as the highest PCI value and/or the last TRP (e.g., TRP #N), the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the TRP with the second highest/second highest MAC CE activated TRP-specific ID/index value such as the second highest PCI value and/or the second last TRP (e.g., TRP #N-1), and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value indicated could correspond to the TRP with the lowest/lowest MAC CE activated TRP-specific ID/index value such as the lowest PCI value and/or the first TRP (e.g., TRP #1).

Other implicit indication methods of the association/mapping between the N>1 MAC CE commands for beam indication (and therefore, the TCI states/beams indicated therein) and the TRPs in the multi-TRP system are also possible.

In yet another example, the UE could be explicitly indicated by the network, e.g., via higher layer RRC signaling and/or MAC CE command and/or dynamic DCI signaling, the exact association/mapping between the MAC CE commands for beam indication (and therefore, the TCI states/beams indicated therein) and the TRPs in the multi-TRP system.

For example, the UE could be first higher layer configured by the network a list/set/pool of CORESETPoolIndex values - e.g., a set of two CORESETPoolIndex values 0 and 1. The first MAC CE command for beam indication in the list/set/pool of N>1 MAC CE commands for beam indication and/or the MAC CE command for beam indication indicating the lowest entity ID/index value and/or the MAC CE command for beam indication indicating the TCI state with the lowest TCI state ID value could correspond to the first entry/CORESETPoolIndex value in the list/set/pool of CORESETPoolIndex values, the second MAC CE command for beam indication in the list/set/pool of N>1 MAC CE commands for beam indication and/or the MAC CE command for beam indication indicating the second lowest entity ID/index value and/or the MAC CE command for beam indication indicating the TCI state with the second lowest TCI state ID value could correspond to the second entry/CORESETPoolIndex value in the list/set/pool of CORESETPoolIndex values, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first MAC CE command for beam indication in the list/set/pool of N>1 MAC CE commands for beam indication and/or the MAC CE command for beam indication indicating the lowest entity ID/index value and/or the MAC CE command for beam indication indicating the TCI state with the lowest TCI state ID value could correspond to the first MAC CE(s)/bitmap(s) activated CORESETPoolIndex value, the second MAC CE command for beam indication in the list/set/pool of N>1 MAC CE commands for beam indication and/or the MAC CE command for beam indication indicating the second lowest entity ID/index value and/or the MAC CE command for beam indication indicating the TCI state with the second lowest TCI state ID value could correspond to the second MAC CE(s)/bitmap(s) activated CORESETPoolIndex value, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last MAC CE(s)/bitmap(s) activated CORESETPoolIndex value. Other exact association/mapping relationships between the MAC CE commands for beam indication (and therefore, the TCI states/beams indicated therein) and the CORESETPoolIndex values and/or the corresponding indication method(s), e.g., via higher layer RRC signaling and/or MAC CE command and/or dynamic DCI signaling, are also possible.

In yet another example, the UE could be implicitly indicated by the network the association/mapping between the MAC CE commands for beam indication (and therefore, the TCI states/beams indicated therein) and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values.

For example, the first MAC CE command for beam indication in the list/set/pool of N>1 MAC CE commands for beam indication and/or the MAC CE command for beam indication indicating the lowest entity ID/index value

and/or the MAC CE command for beam indication indicating the lowest TCI state ID value could correspond to the lowest/lowest MAC CE activated CORESETPoolIndex value, the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the second lowest/second lowest MAC CE activated CORESETPoolIndex value, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value could correspond to the highest/highest MAC CE activated CORESETPoolIndex value.

For another example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the highest/highest MAC CE activated CORESETPoolIndex value, the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the second highest/second highest MAC CE activated CORESETPoolIndex value, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value indicated could correspond to the lowest/lowest MAC CE activated CORESETPoolIndex value.

Other implicit indication methods of the association/mapping between the N>1 MAC CE commands for beam indication (and therefore, the TCI states/beams indicated therein) and the CORESETPoolIndex values are also possible.

In yet another example, a MAC CE command for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps.

For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value. The MAC CE command for beam indication may indicate/update the corresponding TCI state(s) for the TRP(s) associated with the same ID/index value, e.g., the CORESETPoolIndex value, as that indicated in the MAC CE command for beam indication.

In yet another example, a MAC CE command for Rel. 17 unified TCI state/beam indication could include/comprise/incorporate at least one (e.g., N>1 or M>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n-th or m-th TCI state (e.g., the n-th or m-th joint DL and UL TCI state or separate DL TCI state or separate UL TCI state) among/within the indicated N>1 or M>1 Rel. 17 unified TCI states could be associated with the n-th or m-th entity ID/index indicated in the same MAC CE command for Rel. 17 unified TCI state/beam indication, where $n \in \{1,...,N\}$ or $m \in \{1,...,M\}$. For instance, the first TCI state in the indicated N=2 or M=2 Rel. 17 unified TCI states could be associated with the first entity ID/index such as the first PCI, CORESETPoolIndex value 0 or CORESETGroupIndex value 0 indicated in the same MAC CE command for Rel. 17 unified TCI state/beam indication, and the second TCI state in the indicated N=2 or M=2 Rel. 17 unified TCI states could be associated with the second entity ID/index such as the second PCI, CORESETPoolIndex value 1 or CORESETGroup- pIndex value 1 indicated in the same MAC CE command for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroup- pIndex value (e.g., either 0 or 1) in the parameter, e.g., the higher layer parameter ControlResourceSet, configuring the CORESET.

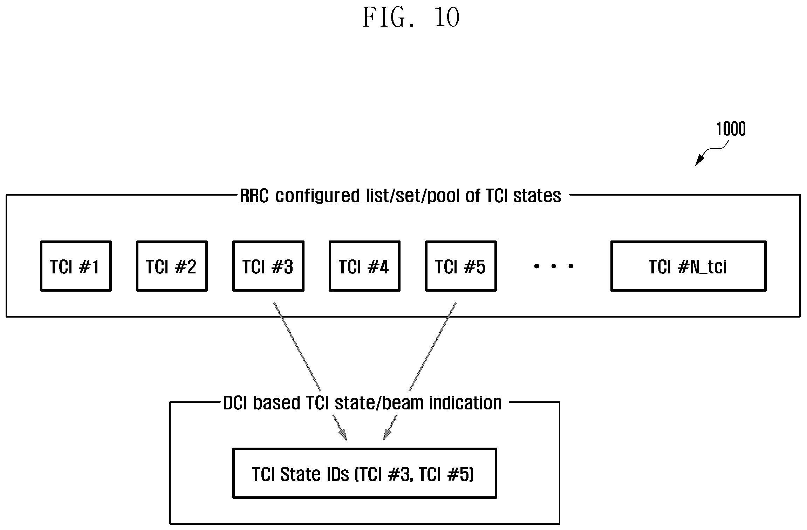

FIGURE 10 illustrates an example of DCI based TCI state/beam indication for a multi-TRP operation 1000 according to embodiments of the present disclosure. An embodiment of the DCI based TCI state/beam indication for a multi-TRP operation 1000 shown in FIGURE 10 is for illustration only.

In FIGURE 10, an example of DCI based Rel. 17 unified TCI state/beam indication for the multi-TRP operation is presented. As illustrated in FIGURE 10, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more DCIs (e.g., DCI format 1_1 or 1_2 with or without DL assignment) to indicate one or more beam(s) (i.e., the Rel. 17 unified TCI state(s)) for UE-dedicated reception on PDSCH/PDCCH or dynamic-grant/configured-grant based PUSCH and all of dedicated PUCCH resources associated with one or more TRPs in a multi-TRP system.

For instance, the UE could receive from the network a single DCI (e.g., DCI format 1_1 or 1_2 with or without DL assignment) to indicate M>1 Rel. 17 unified TCI states/beams (e.g., M>1 joint DL and UL TCI states or M>1 separate UL TCI states) for the same PUSCH(s)/PUCCH(s) transmitted to/associated with different TRPs in the multi-TRP system.

As described above, a DCI used to indicate to the UE a beam (i.e., a TCI state and/or a TCI state ID) for the transmission/reception of a PDCCH or a PDSCH could be at least one of the following examples.

In one example, a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment.

In another example, an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant.

Yet in another example, a custom/purpose designed DCI format could be used to indicate to the UE a beam (i.e., a TCI state and/or a TCI state ID) for the transmission/reception of a PDCCH or a PDSCH.

Furthermore, the Rel. 17 unified TCI state indicated in the DCI for beam indication could be at least one of: (1) a DL TCI state; (2) an UL TCI state; (3) a joint DL and UL TCI state; and (4) separate DL TCI state and UL TCI state.

The association/mapping between the TCI state(s)/beam(s) indicated in the DCI(s) and the TRPs in the multi-TRP system needs to be specified. There could be various means to associate/map the TCI state(s)/beam(s) indicated in the DCI(s) and the TRPs in the multi-TRP system.

For N>1 TCI states/beams indication in a single DCI, following examples can be provided.

In one example, the UE could be explicitly indicated by the network, e.g., via higher layer RRC signaling and/or MAC CE command and/or dynamic DCI signaling, the exact association/mapping between the TCI states/beams indicated in the DCI and the TRPs in the multi-TRP system. For example, the UE could be first higher layer configured by the network a list/set/pool of TRP-specific ID/index values such as PCIs. The first TCI state and/or the TCI state with the lowest TCI state ID value indicated in the DCI for beam indication could correspond to the first entry/TRP in the list/set/pool of TRP-specific ID/index values, the second TCI state and/or the TCI state with the second lowest TCI state ID value indicated in the DCI for beam indication could correspond to the second entry/TRP in the list/set/pool of TRP-specific ID/index values, and so on, and the last TCI state and/or the TCI state with the highest TCI state ID value indicated in the DCI for beam indication could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/- bitmaps to activate one or more TRP-specific ID/index values from the higher layer configured list/set/pool of TRP-specific ID/index values. The first TCI state and/or the TCI state with the lowest TCI state ID value indicated in the DCI for beam indication could correspond to the first MAC CE(s)/bitmap(s) activated TRP-specific ID/index value, the second TCI state and/or the TCI state with the second lowest TCI state ID value indicated in the DCI for beam indication could correspond to the second MAC CE(s)/bitmap(s) activated TRP-specific ID/index value, and so on, and the last TCI state and/or the TCI state with the highest TCI state ID value indicated in the DCI for beam indication could correspond to the last MAC CE(s)/bitmap(s) activated TRP-specific ID/index value. Other exact association/mapping relationships between the TCI states/beams indicated in the DCI for beam indication and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the TCI states/beams indicated in the DCI for beam indication and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values.

For example, the first TCI state and/or the TCI state with the lowest TCI state ID value indicated in the DCI for beam indication could correspond to the TRP with the lowest/lowest MAC CE activated TRP-specific ID/index value such as the lowest PCI value and/or the first TRP (e.g., TRP #1), the second TCI state and/or the TCI state with the second lowest TCI state ID value indicated in the DCI for beam indication could correspond to the TRP with the second lowest/second lowest MAC CE activated TRP-specific ID/index value such as the second lowest PCI value and/or the second TRP (e.g., TRP #2), and so on, and the last TCI state and/or the TCI state with the highest TCI state ID value indicated in the DCI for beam indication could correspond to the TRP with the highest/highest MAC CE activated TRP-specific ID/index value such as the highest PCI value and/or the last TRP (e.g., TRP #N).

For another example, the first TCI state and/or the TCI state with the lowest TCI state ID value indicated in the DCI for beam indication could correspond to the TRP with the highest/highest MAC CE activated TRP-specific ID/index value such as PCI value, the second TCI state and/or the TCI state with the second lowest TCI state ID value indicated in the DCI for beam indication could correspond to the TRP with the second highest/second highest MAC CE activated TRP-specific ID/index value such as PCI value, and so on, and the last TCI state and/or the TCI state with the highest TCI state ID value indicated in the DCI for beam indication could correspond to the TRP with the lowest/lowest MAC CE activated TRP-specific ID/index value such as PCI value. Other implicit indication methods of the association/mapping between the N>1 TCI states/beams indicated in the DCI and the TRPs in the multi-TRP system are also possible.

In yet another example, the UE could be explicitly indicated by the network, e.g., via higher layer RRC signaling and/or MAC CE command and/or dynamic DCI signaling, the exact association/mapping between the TCI states/beams indicated in the DCI for beam indication and the CORESETPoolIndex values.

For example, the UE could be first higher layer configured by the network a list/set/pool of CORESETPoolIndex values - e.g., a set of two CORESETPoolIndex values 0 and 1. The first TCI state and/or the TCI state with the lowest TCI state ID value indicated in the DCI for beam indication could correspond to the first entry/CORESETPoolIndex value in the list/set/pool of CORESETPoolIndex values, the second TCI state and/or the TCI state with the second lowest TCI state ID value indicated in the DCI for beam indication could correspond to the second entry/CORESETPoolIndex value in the list/set/pool of CORESETPoolIndex values, and so on, and the last TCI state and/or the TCI state with the highest TCI state ID value indicated in the DCI for beam indication could correspond to the last entry/CORESETPoolIndex value in the list/set/pool of CORESETPoolIndex values. For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first TCI state and/or the TCI state with the lowest TCI state ID value indicated in the DCI for beam indication could correspond to the first MAC CE(s)/bitmap(s) activated CORESETPoolIndex value, the second TCI state and/or the TCI state with the second lowest TCI state ID value indicated in the DCI for beam indication could correspond to the second MAC CE(s)/bitmap(s) activated CORESETPoolIndex value, and so on, and the last TCI state and/or the TCI state with the highest TCI state ID value indicated in the DCI for beam indication could correspond to the last MAC CE(s)/bitmap(s) activated CORESETPoolIndex value.

Other exact association/mapping relationships between the TCI states/beams indicated in the DCI for beam indication and the CORESETPoolIndex values and/or the corresponding indication method(s), e.g., via higher layer RRC signaling and/or MAC CE command and/or dynamic DCI signaling, are also possible.

In yet another example, the UE could be implicitly indicated by the network the association/mapping between the TCI states/beams indicated in the DCI for beam indication and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values.

For example, the first TCI state and/or the TCI state with the lowest TCI state ID value indicated in the DCI for beam indication could correspond to the lowest/lowest MAC CE activated CORESETPoolIndex value such as "0," the second TCI state and/or the TCI state with the second lowest TCI state ID value indicated in the DCI for beam indication could correspond to the second lowest/second lowest MAC CE activated CORESETPoolIndex value such as "1," and so on, and the last TCI state and/or the TCI state with the highest TCI state ID value indicated in the DCI for beam indication could correspond to the highest/highest MAC CE activated CORESETPoolIndex value such as "N-1."

For another example, the first TCI state and/or the TCI state with the lowest TCI state ID value indicated in the DCI for beam indication could correspond to the highest/highest MAC CE activated CORESETPoolIndex value, the second TCI state and/or the TCI state with the second lowest TCI state ID value indicated in the DCI for beam indication could correspond to the second highest/second highest MAC CE activated CORESETPoolIndex value, and so on, and the last TCI state and/or the TCI state with the highest TCI state ID value indicated in the DCI for beam indication could correspond to the lowest/lowest MAC CE activated CORESETPoolIndex value. Other implicit indication methods of the association/mapping between the N>1 TCI states/beams indicated in the DCI for beam indication and the CORESETPoolIndex values are also possible.

In yet another example, a TCI state, e.g., the higher layer parameter TCI-State, indicated in the DCI for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps.

For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

In yet another example, the DCI (e.g., DCI format 1_1 or 1_2 with or without DL assignment) for Rel. 17 unified TCI state/beam indication could include/comprise/incorporate at least one (e.g., N>1 or M>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc.

For this case, the n-th or m-th TCI state (e.g., the n-th or m-th joint DL and UL TCI state or separate DL TCI state or separate UL TCI state) among/within the indicated N>1 or M>1 Rel. 17 unified TCI states could be associated with the n-th or m-th entity ID/index indicated in the same DCI (e.g., DCI format 1_1 or 1_2 with or without DL assignment) for Rel. 17 unified TCI state/beam indication, where $n \in \{1,..., N\}$ or $m \in \{1,..., M\}$. For instance, the first TCI state in the indicated N=2 or M=2 Rel. 17 unified TCI states could be associated with the first entity ID/index such as the first PCI, CORESETPoolIndex value 0 or CORESETGroupIndex value 0 indicated in the same DCI (e.g., DCI format 1_1 or 1_2 with or without DL assignment) for Rel. 17 unified TCI state/beam indication, and the second TCI state in the indicated N=2 or M=2 Rel. 17 unified TCI states could be associated with the second entity ID/index such as the second PCI, CORESETPoolIndex value 1 or CORESETGroupIndex value 1 indicated in the same DCI (e.g., DCI format 1_1 or 1_2 with or without DL assignment) for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

For N>1 DCIs with each DCI indicating a single TCI state/beam, following examples can be provided.

In one example, the UE could be explicitly indicated by the network, e.g., via higher layer RRC signaling and/or MAC CE command and/or dynamic DCI signaling, the exact association/mapping between the DCIs for beam indication (and therefore, the TCI states/beams indicated therein) and the TRPs in the multi-TRP system. For example, the UE could be first higher layer configured by the network a list/set/pool of TRP-specific ID/index values such as PCIs.

The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first entry/TRP in the list/set/pool of TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second entry/TRP in the list/set/pool of TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/bitmaps to activate one or more TRP-specific ID/index values from the higher layer configured list/set/pool of TRP-specific ID/index values. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first MAC CE(s)/bitmap(s) activated TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second MAC CE(s)/bitmap(s) activated TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last MAC CE(s)/bitmap(s) activated TRP-specific ID/index values. Other exact association/mapping relationships between the DCIs for beam indication (and therefore, the TCI states/beams indicated therein) and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the DCIs for beam indication (and therefore, the TCI states/beams indicated therein) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values.

For example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the lowest/lowest MAC CE activated TRP-specific ID/index value such as the lowest PCI value and/or the first TRP (e.g., TRP #1), the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second lowest/second lowest MAC CE activated TRP-specific ID/index value such as the second lowest PCI value and/or the second TRP (e.g., TRP #2), and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the highest/highest MAC CE activated TRP-specific ID/index value such as the highest PCI value and/or the last TRP (e.g., TRP #N).

For another example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the highest/highest MAC CE activated TRP-specific ID/index value such as PCI value, the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second highest/second highest MAC CE activated TRP-specific ID/index value such as PCI value, and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the lowest/lowest MAC CE activated TRP-specific ID/index value such as PCI value.

Other implicit indication methods of the association/mapping between the N>1 DCIs for beam indication (and therefore, the TCI states/beams indicated therein) and the TRPs in the multi-TRP system are also possible.

In yet another example, a DCI for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps.

For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value. The DCI for beam indication may indicate/update the corresponding TCI state(s) for the TRP(s) associated with the same ID/index value, e.g., the CORESETPoolIndex value, as that indicated in the DCI for beam indication.

In yet another example, a DCI (e.g., DCI format 1_1 or 1_2 with or without DL assignment) for Rel. 17 unified TCI state/beam indication could include/comprise/incorporate at least one (e.g., N>1 or M>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc.

For this case, the n-th or m-th TCI state (e.g., the n-th or m-th joint DL and UL TCI state or separate DL TCI state or separate UL TCI state) among/within the indicated N>1 or M>1 Rel. 17 unified TCI states could be associated with the n-th or m-th entity ID/index indicated in the same DCI (e.g., DCI format 1_1 or 1_2 with or without DL assignment) for Rel. 17 unified TCI state/beam indication, where $n \in \{1,..., N\}$ or $m \in \{1,..., M\}$. For instance, the first TCI state in the indicated N=2 or M=2 Rel. 17 unified TCI states could be associated with the first entity ID/index such as the first PCI, CORESETPoolIndex value 0 or CORESETGroupIndex value 0 indicated in the same DCI (e.g., DCI format 1_1 or 1_2 with or without DL assignment) for Rel. 17 unified TCI state/beam indication, and the second TCI state in the indicated N=2 or M=2 Rel. 17 unified TCI states could be associated with the second entity ID/index such as the second PCI, CORESETPoolIndex value 1 or CORESETGroupIndex value 1 indicated in the same DCI (e.g., DCI format 1_1 or 1_2 with or without DL assignment) for Rel. 17 unified TCI state/beam indication.

In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

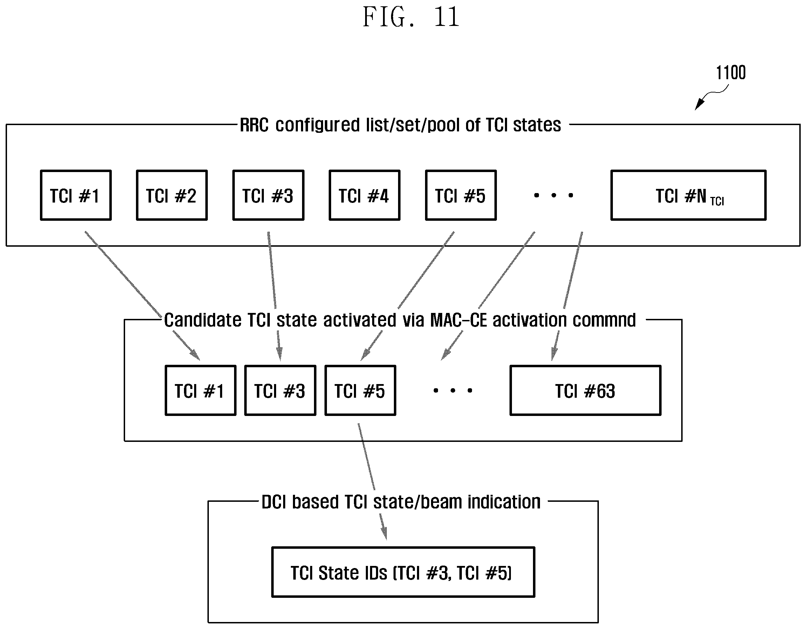

FIGURE 11 illustrates an example of DCI based TCI state/beam indication (with MAC CE activated TCI states/codepoints) for a multi-TRP operation 1100 according to embodiments of the present disclosure. An embodiment of the DCI based TCI state/beam indication (with MAC CE activated TCI states/codepoints) for a multi-TRP operation 1100 shown in FIGURE 11 is for illustration only.

In FIGURE 11, an example of Rel. 17 DCI based TCI state/beam indication (with MAC CE activated TCI states) for the multi-TRP operation is presented. As illustrated in FIGURE 11, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more MAC CE activation commands activating one or more TCI states from the higher layer configured list/pool of TCI states, e.g., up to eight TCI states could be activated by a MAC CE activation command.

The UE could receive from the network one or more DCIs to indicate one or more beam(s) (i.e., the Rel. 17 unified TCI state(s)) from the MAC CE activated TCI state(s)/beam(s) for UE-dedicated reception on PDSCH/PDCCH or dynamic-grant/configured-grant based PUSCH and all of dedicated PUCCH resources associated with one or more TRPs in a multi-TRP system. For instance, the UE could receive from the network a single DCI to indicate M'>1 Rel. 17 unified TCI states/beams (e.g., M'>1 joint DL and UL TCI states or M'>1 separate UL TCI states) from the MAC CE activated TCI states/beams for the same PUSCH(s)/PUCCH(s) transmitted to/associated with different TRPs in the multi-TRP system.

As described herein, a DCI used to indicate to the UE a beam (i.e., a TCI state and/or a TCI state ID) for the transmission/reception of a PDCCH or a PDSCH could be at least one of the following examples.

In one example, a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment.

In another example, an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant.

Yet in another example, a custom/purpose designed DCI format could be used to indicate to the UE a beam (i.e., a TCI state and/or a TCI state ID) for the transmission/reception of a PDCCH or a PDSCH.

Furthermore, the Rel. 17 unified TCI state indicated in the DCI for beam indication could be at least one of: (1) a DL TCI state; (2) an UL TCI state; (3) a joint DL and UL TCI state; and (4) separate DL TCI state and UL TCI state.

The association/mapping between the DCI(s) indicated TCI state(s)/beam(s) - from the MAC CE activated TCI state(s)/beam(s) - and the TRPs in the multi-TRP system needs to be specified. There could be various means to associate/map the DCI(s) indicated TCI state(s)/beam(s) - from the MAC CE activated TCI state(s)/beam(s) - and the TRPs in the multi-TRP system.

For N'>1 TCI states/beams indication in a single DCI, following examples can be provided.

In one example, the UE could be explicitly indicated by the network, e.g., via higher layer RRC signaling and/or MAC CE command and/or dynamic DCI signaling, the exact association/mapping between the DCI indicated TCI states/beams (selected from the MAC CE activated TCI states/beams) and the TRPs in the multi-TRP system. For example, the UE could be first higher layer configured by the network a list/set/pool of TRP-specific ID/index values such as PCIs. The first TCI state and/or the TCI state with the lowest TCI state ID value indicated in the DCI for beam indication could correspond to the first entry/TRP in the list/set/pool of TRP-specific ID/index values, the second TCI state and/or the TCI state with the second lowest TCI state ID value indicated in the DCI for beam indication could correspond to the second entry/TRP in the list/set/pool of TRP-specific ID/index values, and so on, and the last TCI state and/or the TCI state with the highest TCI state ID value indicated in the DCI for beam indication could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/bitmaps to activate one or more TRP-specific ID/index values from the higher layer configured list/set/pool of TRP-specific ID/index values. The first TCI state and/or the TCI state with the lowest TCI state ID value indicated in the DCI for beam indication could correspond to the first MAC CE(s)/bitmap(s) activated TRP-specific ID/index value, the second TCI state and/or the TCI state with the second lowest TCI state ID value indicated in the DCI for beam indication could correspond to the second MAC CE(s)/bitmap(s) activated TRP-specific ID/index value, and so on, and the last TCI state and/or the TCI state with the highest TCI state ID value indicated in the DCI for beam indication could correspond to the last MAC CE(s)/bitmap(s) activated TRP-specific ID/index value.

Other exact association/mapping relationships between the DCI indicated TCI states/beams (selected from the MAC CE activated TCI states/beams) and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the DCI indicated TCI states/beams (selected from the MAC CE activated TCI states/beams) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values.

For example, the first TCI state and/or the TCI state with the lowest TCI state ID value indicated in the DCI for beam indication could correspond to the TRP with the lowest/lowest MAC CE activated TRP-specific ID/index value such as the lowest PCI value and/or the first TRP (e.g., TRP #1), the second TCI state and/or the TCI state with the second lowest TCI state ID value indicated in the DCI for beam indication could correspond to the TRP with the second lowest/second lowest MAC CE activated TRP-specific ID/index value such as the second lowest PCI value and/or the second TRP (e.g., TRP #2), and so on, and the last TCI state and/or the TCI state with the highest TCI state ID value indicated in the DCI for beam indication could correspond to the TRP with the highest/highest MAC CE activated TRP-specific ID/index value such as the highest PCI value and/or the last TRP (e.g., TRP #N').

For another example, the first TCI state and/or the TCI state with the lowest TCI state ID value indicated in the DCI for beam indication could correspond to the TRP with the highest/highest MAC CE activated TRP-specific ID/index value such as the highest PCI value and/or the last TRP (e.g., TRP #N'), the second TCI state and/or the TCI state with the second lowest TCI state ID value indicated in the DCI for beam indication could correspond to the TRP with the second highest/second highest MAC CE activated TRP-specific ID/index value such as the second highest PCI value and/or the second last TRP (e.g., TRP #N'-1), and so on, and the last TCI state and/or the TCI state with the highest TCI state ID value indicated in the DCI for beam indication could correspond to the TRP with the lowest/lowest MAC CE activated TRP-specific ID/index value such as the lowest PCI value and/or the first TRP (e.g., TRP #1). Other implicit indication methods of the association/mapping between the N'>1 DCI indicated TCI states/beams (selected from the MAC CE activated TCI states/beams) and the TRPs in the multi-TRP system are also possible.

In yet another example, the UE could be explicitly indicated by the network, e.g., via higher layer RRC signaling and/or MAC CE command and/or dynamic DCI signaling, the exact association/mapping between the DCI indicated TCI states/beams (selected from the MAC CE activated TCI states/beams) and the CORESETPoolIndex values. For example, the UE could be first higher layer configured by the network a list/set/pool of CORESETPoolIndex values - e.g., a set of two CORESETPoolIndex values 0 and 1. The first TCI state and/or the TCI state with the lowest TCI state ID value indicated in the DCI for beam indication could correspond to the first entry/CORESETPoolIndex value in the list/set/pool of CORESETPoolIndex values, the second TCI state and/or the TCI state with the second lowest TCI state ID value indicated in the DCI for beam indication could correspond to the second entry/CORESETPoolIndex value in the list/set/pool of CORESETPoolIndex values, and so on, and the last TCI state and/or the TCI state with the highest TCI state ID value indicated in the DCI for beam indication could correspond to the last entry/CORESETPoolIndex value in the list/set/pool of CORESETPoolIndex values. For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first TCI state and/or the TCI state with the lowest TCI state ID value indicated in the DCI for beam indication could correspond to the first MAC CE(s)/bitmap(s) activated CORESETPoolIndex value, the second TCI state and/or the TCI state with the second lowest TCI state ID value indicated in the DCI for beam indication could correspond to the second MAC CE(s)/bitmap(s) activated CORESETPoolIndex value, and so on, and the last TCI state and/or the TCI state with the highest TCI state ID value indicated in the DCI for beam indication could correspond to the last MAC CE(s)/bitmap(s) activated CORESETPoolIndex value.

Other exact association/mapping relationships between the DCI indicated TCI states/beams (selected from the MAC CE activated TCI states/beams) and the CORESETPoolIndex values and/or the corresponding indication method(s), e.g., via higher layer RRC signaling and/or MAC CE command and/or dynamic DCI signaling, are also possible.

In yet another example, the UE could be implicitly indicated by the network the association/mapping between the DCI indicated TCI states/beams (selected from the MAC CE activated TCI states/beams) and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values.

For example, the first TCI state and/or the TCI state with the lowest TCI state ID value indicated in the DCI for beam indication could correspond to the lowest/lowest MAC CE activated CORESETPoolIndex value such as "0," the second TCI state and/or the TCI state with the second lowest TCI state ID value indicated in the DCI for beam indication could correspond to the second lowest/second lowest MAC CE activated CORESETPoolIndex value such as "1," and so on, and the last TCI state and/or the TCI state with the highest TCI state ID value indicated in the DCI for beam indication could correspond to the highest/highest MAC CE activated CORESETPoolIndex value such as "N-1."

For another example, the first TCI state and/or the TCI state with the lowest TCI state ID value indicated in the DCI for beam indication could correspond to the highest/highest MAC CE activated CORESETPoolIndex value, the second TCI state and/or the TCI state with the second lowest TCI state ID value indicated in the DCI for beam indication could correspond to the second highest/second highest MAC CE activated CORESETPoolIndex value, and so on, and the last TCI state and/or the TCI state with the highest TCI state ID value indicated in the DCI for beam indication could correspond to the lowest/lowest MAC CE activated CORESETPoolIndex value. Other implicit indication methods of the association/mapping between the N'>1 DCI indicated TCI states/beams (selected from the MAC CE activated TCI states/beams) and the CORESETPoolIndex values are also possible.

In yet another example, a TCI state (selected from the MAC CE activated TCI states/beams), e.g., the higher layer parameter TCI-State, indicated in the DCI for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

In yet another example, the DCI (e.g., DCI format 1_1 or 1_2 with or without DL assignment) for Rel. 17 unified TCI state/beam indication could include/comprise/incorporate at least one (e.g., N'>1 or M'>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc.

For this case, the n'-th or m'-th TCI state (e.g., the n'-th or m'-th joint DL and UL TCI state or separate DL TCI state or separate UL TCI state) among/within the indicated N'>1 or M'>1 Rel. 17 unified TCI states (selected from the MAC CE activated TCI states/beams) could be associated with the n'-th or m'-th entity ID/index indicated in the same DCI (e.g., DCI format 1_1 or 1_2 with or without DL assignment) for Rel. 17 unified TCI state/beam indication, where $n' \in \{1,..., N'\}$ or $m' \in \{1,..., M'\}$.

For instance, the first TCI state in the indicated N'=2 or M'=2 Rel. 17 unified TCI states selected from the MAC CE activated TCI states could be associated with the first entity ID/index such as the first PCI, CORESETPoolIndex value 0 or CORESETGroupIndex value 0 indicated in the same DCI (e.g., DCI format 1_1 or 1_2 with or without DL assignment) for Rel. 17 unified TCI state/beam indication, and the second TCI state in the indicated N'=2 or M'=2 Rel. 17 unified TCI states selected from the MAC CE activated TCI states could be associated with the second entity ID/index such as the second PCI, CORESETPoolIndex value 1 or CORESETGroupIndex value 1 indicated in the same DCI (e.g., DCI format 1_1 or 1_2 with or without DL assignment) for Rel. 17 unified TCI state/beam indication. In the present disclosure, the UE could be provided by PDCCH-Config multiple (e.g., two) CORESETGroupIndex values (e.g., 0 and 1).

The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

For N'>1 DCIs with each DCI indicating a single TCI state/beam, following examples can be provided.

In one example, the UE could be explicitly indicated by the network, e.g., via higher layer RRC signaling and/or MAC CE command and/or dynamic DCI signaling, the exact association/mapping between the DCIs for beam indication (and therefore, the TCI states/beams indicated therein - selected from the MAC CE activated TCI states/beams) and the TRPs in the multi-TRP system.

For example, the UE could be first higher layer configured by the network a list/set/pool of TRP-specific ID/index values such as PCIs. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first entry/TRP in the list/set/pool of TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second entry/TRP in the list/set/pool of TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first MAC CE(s)/bitmap(s) activated TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second MAC CE(s)/bitmap(s) activated TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last MAC CE(s)/bitmap(s) activated TRP-specific ID/index values.

Other exact association/mapping relationships between the DCIs for beam indication (and therefore, the TCI states/beams indicated therein - selected from the MAC CE activated TCI states/beams) and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the DCIs for beam indication (and therefore, the TCI states/beams indicated therein - selected from the MAC CE activated TCI states/beams) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values.

For example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the lowest/lowest MAC CE activated TRP-specific ID/index value such as the lowest PCI value and/or the first TRP (e.g., TRP #1), the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second lowest/second lowest MAC CE activated TRP-specific ID/index value such as the second lowest PCI value and/or the second TRP (e.g., TRP #2), and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the highest/highest MAC CE activated TRP-specific ID/index value such as the highest PCI value and/or the last TRP (e.g., TRP #N').

For another example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the highest/highest MAC CE activated TRP-specific ID/index value such as the highest PCI value and/or the last TRP (e.g., TRP #N'), the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second highest/second highest MAC CE activated TRP-specific ID/index value such as the second highest PCI value and/or the second last TRP (e.g., TRP #N'-1), and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the lowest/lowest MAC CE activated TRP-specific ID/index value such as the lowest PCI value and/or the first TRP (e.g., TRP #1).

Other implicit indication methods of the association/mapping between the N'>1 DCIs for beam indication (and therefore, the TCI states/beams indicated therein - selected from the MAC CE activated TCI states/beams) and the TRPs in the multi-TRP system are also possible.

In yet another example, a DCI for beam indication (indicating the TCI state(s)/beam(s) selected from the MAC CE activated TCI states/beams) could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value. The DCI for beam indication (indicating the TCI state(s)/beam(s) selected from the MAC CE activated TCI states/beams) may indicate/update the corresponding TCI state(s) for the TRP(s) associated with the same ID/index value, e.g., the CORESETPoolIndex value, as that indicated in the DCI for beam indication (indicating the TCI state(s)/beam(s) selected from the MAC CE activated TCI states/beams).

In yet another example, a DCI (e.g., DCI format 1_1 or 1_2 with or without DL assignment) for Rel. 17 unified TCI state/beam indication could include/comprise/incorporate at least one (e.g., N'>1 or M'>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc.

For this case, the n'-th or m'-th TCI state (e.g., the n'-th or m'-th joint DL and UL TCI state or separate DL TCI state or separate UL TCI state) among/within the indicated N'>1 or M'>1 Rel. 17 unified TCI states (selected from the MAC CE activated TCI states/beams) could be associated with the n'-th or m'-th entity ID/index indicated in the same DCI (e.g., DCI format 1_1 or 1_2 with or without DL assignment) for Rel. 17 unified TCI state/beam indication, where $n' \in \{1,..., N'\}$ or $m' \in \{1,..., M'\}$.

For instance, the first TCI state in the indicated N'=2 or M'=2 Rel. 17 unified TCI states selected from the MAC CE activated TCI states could be associated with the first entity ID/index such as the first PCI, CORESETPoolIndex value 0 or CORESETGroupIndex value 0 indicated in the same DCI (e.g., DCI format 1_1 or 1_2 with or without DL assignment) for Rel. 17 unified TCI state/beam indication, and the second TCI state in the indicated N'=2 or M'=2 Rel. 17 unified TCI states selected from the MAC CE activated TCI states could be associated with the second entity ID/index such as the second PCI, CORESETPoolIndex value 1 or CORESETGroupIndex value 1 indicated in the same DCI (e.g., DCI format 1_1 or 1_2 with or without DL assignment) for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

In one example, the UE could be provided/configured by the network a SRS resource set, e.g., provided by the higher layer parameter SRS-ResourceSet for uplink channel sounding, including one or more SRS resources associated with one or more PCIs or one or more PCI indexes corresponding/pointing to one or more PCIs in a list/set/pool of PCIs higher layer configured to the UE or one or more CORESETPoolIndex values or one or more CORESETGroupIndex values. In the present disclosure, the CORESETGroupIndex values are configured for single-DCI (sDCI) based multi-TRP system.

For sDCI based multi-TRP operation, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET. In the present disclosure, one or more SRS resources configured in an SRS resource set could be associated with one or more PCIs/PCI indexes/CORESETPoolIndex values/CORESETGroupIndex values.

In one example, a set of at least one (e.g., M>1) entity IDs could be included/indicated/configured in an SRS resource set including/indicating/configuring a set of at least one (e.g., M>1) SRS resources; the SRS resource set could be provided by the higher layer parameter SRS-ResourceSet. In the present disclosure, an entity ID could correspond to a PCI value (corresponding to either a serving cell PCI or a non-serving cell PCI), an index to an entry in a list of PCIs configured to the UE, a CORESETPoolIndex value, a CORESETGroupIndex value, a TRP-specific index/ID value, a TRP-specific higher layer signaling index/ID value, a TRP-specific RS set index/ID value, a one-bit flag/indicator indicating either the serving cell PCI or a non-serving cell PCI or a multi-bit indicator with each state of the multi-bit indicator corresponding to a different PCI.

Each entity ID in the set of M entity IDs included/indicated/configured in an SRS resource set (provided by SRS-ResourceSet) could correspond to one or more SRS resources configured/indicated/included in the same SRS resource set. For example, a set of M>1 PCI values could be included/indicated/configured in an SRS resource set (e.g., provided by the higher layer parameter SRS-ResourceSet) including/indicating/configuring a set of M SRS resources. Each of the M>1 indicated PCIs could correspond to a different SRS resource included/indicated/configured in the same SRS resource set.

For instance, in an SRS resource set provided by SRS-ResourceSet, the m-th PCI or the m-th lowest (or the m-th highest) PCI value in the set of M>1 PCIs could correspond to the m-th SRS resource in the set of M>1 SRS resources, where m = 1,2,..., M. For another example, a set of M>1 indexes each pointing to an entry in a first list/set/pool of PCIs could be included/indicated/configured in an SRS resource set (e.g., provided by the higher layer parameter SRS-ResourceSet) including/indicating/configuring a set of M SRS resources. Each of the M>1 indicated indexes, and therefore, the corresponding entry/PCI in the first list/set/pool of PCIs could correspond to a different SRS resource included/indicated/configured in the same SRS resource set.

For instance, in an SRS resource set provided by SRS-ResourceSet, the m-th index in the set of M>1 indexes, and therefore, the corresponding entry/PCI in the first list/set/pool of PCIs, could correspond to the m-th SRS resource in the set of M>1 SRS resources, where m = 1,2,..., M.

Furthermore, the first list/set/pool of PCIs could be determined/configured according to: (1) the UE could be higher layer configured by the network (e.g., via higher layer RRC signaling) the first list/set/pool of PCIs (e.g., including both the serving cell PCI and non-serving cell PCIs); and (2) the UE could be first higher layer configured by the network (e.g., via higher layer RRC signaling) a second list/set/pool of PCIs (e.g., including both the serving cell PCI and non-serving cell PCIs); the UE could then receive from the network a MAC CE activation command/bitmap to activate/indicate one or more entries from the higher layer RRC configured second list/set/pool of PCIs as the first list/set/pool of PCIs.

In another example, a set of at least one (e.g., M1>1) entity IDs could be included/indicated/configured in an SRS resource set including/indicating/configuring a set of at least one (e.g., M>1) SRS resource, the SRS resource set could be provided by the higher layer parameter SRS-ResourceSet. In the present disclosure, an entity ID could correspond to a PCI value (corresponding to either a serving cell PCI or a non-serving cell PCI), an index to an entry in a list of PCIs configured to the UE, a CORESETPoolIndex value, a CORESETGroupIndex value, a TRP-specific index/ID value, a TRP-specific higher layer signaling index/ID value, a TRP-specific RS set index/ID value, a one-bit flag/indicator indicating either the serving cell PCI or a non-serving cell PCI or a multi-bit indicator with each state of the multi-bit indicator corresponding to a different PCI.

Each entity ID in the set of M1 entity IDs included/indicated/configured in an SRS resource set (provided by SRS-ResourceSet) could correspond to one or more SRS resources configured/indicated/included in the same SRS resource set. For example, a set of M1>1 PCI values could be included/indicated/configured in an SRS resource set (e.g., provided by the higher layer parameter SRS-ResourceSet) including/indicating/configuring a first set of M SRS resources. Each of the M1>1 indicated PCIs could be associated with/linked to a second set of SRS resources out of the first set of M SRS resources included/indicated/configured in the same SRS resource set.

For instance, the UE could be provided by the network in an SRS resource set provided by SRS-ResourceSet, one or more (e.g., M1) PCI-SRS association parameters each indicating a PCI value and a second set of SRS resources out of the first set of M SRS resources included/configured/indicated in the same SRS resource set. The second set of SRS resources and the PCI value indicated in the same PCI-SRS association parameter are associated, i.e., the second set of SRS resources are configured for the PCI if they are indicated in the same PCI-SRS association parameter. For another example, a set of M1>1 indexes pointing to M1>1 entries in a first list/set/pool of PCIs could be included/indicated/configured in an SRS resource set (e.g., provided by the higher layer parameter SRS-ResourceSet) including/indicating/configuring a set of M SRS resources.

Each of the M1>1 indicated indexes, and therefore, the corresponding entry/PCI in the first list/set/pool of PCIs could be associated with/linked to a second set of SRS resources out of the first set of M SRS resources included/indicated/configured in the same SRS resource set. For instance, the UE could be provided by the network in an SRS resource provided by SRS-ResourceSet, one or more (e.g., M1) PCIidx-SRS association parameters each indicating an index pointing to an entry/PCI in the first set/list/pool of PCIs and a second set of SRS resources out of the first set of M SRS resources included/configured/indicated in the same SRS resource set. The second set of SRS resources and the index, and therefore the corresponding entry/PCI in the first set/pool/list of PCIs indicated in the same PCIidx-SRS association parameter are associated, i.e., the second set of SRS resources are configured for the index, and therefore the corresponding entry/PCI in the first set/pool/list of PCIs if they are indicated in the same PCIidx-SRS parameter.

Furthermore, the first list/set/pool of PCIs could be determined/configured according to: (1) the UE could be higher layer configured by the network (e.g., via higher layer RRC signaling) the first list/set/pool of PCIs (e.g., including both the serving cell PCI and non-serving cell PCIs); and (2) the UE could be first higher layer configured by the network (e.g., via higher layer RRC signaling) a second list/set/pool of PCIs (e.g., including both the serving cell PCI and non-serving cell PCIs); the UE could then receive from the network a MAC CE activation command/bitmap to activate/indicate one or more entries from the higher layer RRC configured second list/set/pool of PCIs as the first list/set/pool of PCIs.

In yet another example, a set of at least one (e.g., M1>1) entity IDs could be included/indicated/configured in an SRS resource set including/indicating/configuring a set of at least one (e.g., M>1) SRS resources; the SRS resource set could be provided by the higher layer parameter SRS-ResourceSet. In the present disclosure, an entity ID could correspond to a PCI value (corresponding to either a serving cell PCI or a non-serving cell PCI), an index to an entry in a list of PCIs configured to the UE, a CORESETPoolIndex value, a CORESETGroupIndex value, a TRP-specific index/ID value, a TRP-specific higher layer signaling index/ID value, a TRP-specific RS set index/ID value, a one-bit flag/indicator indicating either the serving cell PCI or a non-serving cell PCI or a multi-bit indicator with each state of the multi-bit indicator corresponding to a different PCI.

Each entity ID in the set of M1 entity IDs included/indicated/configured in an SRS resource set (provided by SRS-ResourceSet) could correspond to one or more SRS resources configured/indicated/included in the same SRS resource set. The set of M SRS resources could be partitioned/divided into M1 groups of SRS resources each including/indicating/configuring one or more SRS resources. Here, a group of SRS resources could be referred to as an SRS resource group provided by a higher layer parameter SRS-ResourceGroup. For instance, the r-th SRS resource group among the M1 SRS resource groups (r = 1, ..., M1) could comprise/include $k_r$ SRS resources out of the total M SRS resources; hence,

$$M= \sum_{r=1}^{M1} k_r$$

.

In this case, each entity ID in the set of M1 entity IDs included/indicated/configured in an SRS resource set could correspond to one or more SRS resource groups included/indicated/configured in the same SRS resource set. For example, a set of M1>1 PCI values could be included/indicated/configured in an SRS resource set (e.g., provided by the higher layer parameter SRS-ResourceSet) including/indicating/configuring a set of M SRS resources, which are further divided/partitioned into M1 SRS resource groups as discussed above.

Each of the M1>1 indicated PCIs could correspond to a different SRS resource group including/indicating/configuring one or more SRS resources included/indicated/configured in the same SRS resource set. For instance, in a SRS resource set provided by SRS-ResourceSet, the r-th PCI or the r-th lowest (or the r-th highest) PCI value in the set of M1>1 PCIs could correspond to the r-th SRS resource group including/indicating/configuring one or more SRS resources among the M1 SRS resource groups partitioned/divided from the set of M>1 SRS resources; that is, the r-th SRS resource group, and therefore the corresponding SRS resources configured therein, is configured for the r-th PCI, where r = 1,2,..., M1.

Optionally, the serving cell PCI could correspond to the s-th SRS resource group including/indicating/configuring one or more SRS resources among the M1 SRS resource groups partitioned/divided from the set of M>1 SRS resources; that is, the s-th SRS resource group, and therefore the corresponding SRS resources configured therein, is configured for the serving cell PCI, where s could be determined according to: (1) fixed in the system specifications or deterministic per RRC configuration, e.g., 1 (i.e., the 1st SRS resource group), (2) configured/indicated by the network, or (3) autonomously determined by the UE. For another example, a set of M1>1 indexes pointing to M1>1 entries in a first list/set/pool of PCIs could be included/indicated/configured in an SRS resource set (e.g., provided by the higher layer parameter SRS-ResourceSet) including/indicating/configuring a set of M SRS resources, which are further partitioned/divided into M1 SRS resource groups as discussed above.

Each of the M1>1 indicated indexes, and therefore, the corresponding entry/PCI in the first list/set/pool of PCIs could correspond to a different SRS resource group including/indicating/configuring one or more SRS resources. For instance, in a SRS resource set provided by SRS-ResourceSet, the r-th index in the set of M1>1 indexes, and therefore, the corresponding entry/PCI in the first list/set/pool of PCIs, could correspond to the r-th SRS resource group including/indicating/configuring one or more SRS resources among the M1 SRS resource groups partitioned/divided from the set of M>1 SRS resources; that is, the r-th SRS resource group, and therefore the corresponding SRS resources configured therein, is configured for the r-th index, and therefore the corresponding entry/PCI in the first set/list/pool of PCIs, where r = 1,2,..., M1.

Optionally, the index corresponding to the serving cell PCI in the first set/list/pool of PCIs could correspond to the s-th SRS resource group including/indicating/configuring one or more SRS resources among the M1 SRS resource groups partitioned/divided from the set of M>1 SRS resources; that is, the s-th SRS resource group, and therefore the corresponding SRS resources configured therein, is configured for the index pointing to the serving cell PCI in the first set/list/pool of PCIs, and therefore the serving cell PCI, where s could be determined according to: (1) fixed in the system specifications or deterministic per RRC configuration, e.g., 1 (i.e., the 1st SRS resource group), (2) configured/indicated by the network, or (3) autonomously determined by the UE.

Furthermore, the first list/set/pool of PCIs could be determined/configured according to: (1) the UE could be higher layer configured by the network (e.g., via higher layer RRC signaling) the first list/set/pool of PCIs (e.g., including both the serving cell PCI and non-serving cell PCIs); and (2) the UE could be first higher layer configured by the network (e.g., via higher layer RRC signaling) a second list/set/pool of PCIs (e.g., including both the serving cell PCI and non-serving cell PCIs); the UE could then receive from the network a MAC CE activation command/bitmap to activate/indicate one or more entries from the higher layer RRC configured second list/set/pool of PCIs as the first list/set/pool of PCIs.

In yet another example, a set of at least one (e.g., M1>1) entity IDs could be included/indicated/configured in an SRS resource set including/indicating/configuring a set of at least one (e.g., M>1) SRS resources; the SRS resource set could be provided by the higher layer parameter SRS-ResourceSet. In the present disclosure, an entity ID could correspond to a PCI value (corresponding to either a serving cell PCI or a non-serving cell PCI), an index to an entry in a list of PCIs configured to the UE, a CORESETPoolIndex value, a CORESETGroupIndex value, a TRP-specific index/ID value, a TRP-specific higher layer signaling index/ID value, a TRP-specific RS set index/ID value, a one-bit flag/indicator indicating either the serving cell PCI or a non-serving cell PCI or a multi-bit indicator with each state of the multi-bit indicator corresponding to a different PCI. Each entity ID in the set of M1 entity IDs included/indicated/configured in an SRS resource set (provided by SRS-ResourceSet) could correspond to one or more SSB resources configured/indicated/included in the same SRS resource set.

The UE could be provided by the network in an SRS resource set provided by SRS-ResourceSet, M1 groups of SRS resources each including/indicating/configuring one or more SRS resources obtained/configured from the set of M SRS resources. Here, a group of SRS resources could be referred to as an SRS resource group provided by a higher layer parameter SRS-ResourceGroup.

For instance, the r-th configured SRS resource group among the M1 configured SRS resource groups could comprise/include $k_r$ SRS resources out of the total M SRS resources; hence, $M = \sum_{r=1}^{M1} k_r$. Each configured SRS resource group, e.g., provided by the corresponding higher layer parameter SRS-ResourceGroup, could include/indicate/configure an entity ID (e.g., one of M1 entity IDs).

For example, each configured SRS resource group, e.g., provided by the corresponding higher layer parameter SRS-ResourceGroup, could include/indicate/configure a PCI value. The SRS resources in an SRS resource group (provided by SRS-ResourceGroup) are configured for the PCI indicated in the same SRS resource group. Optionally, the s-th configured SRS resource group among the M1 configured SRS resource groups could include/indicate/configure the serving cell PCI; that is, the SRS resources in the s-th SRS resource group are configured for the serving cell PCI, where s could be determined according to: (1) fixed in the system specifications or deterministic per RRC configuration, e.g., 1 (i.e., the 1st SRS resource group), (2) configured/indicated by the network, or (3) autonomously determined by the UE.

For another example, each configured SRS resource group, e.g., provided by the corresponding higher layer parameter SRS-ResourceGroup, could include/indicate/configure an index pointing to an entry/PCI in a first set/list/pool of PCIs. The SRS resources in an SRS resource group (provided by SRS-ResourceGroup) are configured for the index indicated in the same SRS resource group, and therefore the corresponding entry/PCI in the first list/set/pool of PCIs.

Optionally, the s-th configured SRS resource group among the M1 configured SRS resource groups could include/indicate/configure the index corresponding to the serving cell PCI in the first set/list/pool of PCIs; that is, the SRS resources in the s-th SRS resource group are configured for the index pointing to the serving cell PCI in the first set/list/pool of PCIs, and therefore, the serving cell PCI, where s could be determined according to: (1) fixed in the system specifications or deterministic per RRC configuration, e.g., 1 (i.e., the 1st SRS resource group), (2) configured/indicated by the network, or (3) autonomously determined by the UE.

Furthermore, the first list/set/pool of PCIs could be determined/configured according to: (1) the UE could be higher layer configured by the network (e.g., via higher layer RRC signaling) the first list/set/pool of PCIs (e.g., including both the serving cell PCI and non-serving cell PCIs); and (2) the UE could be first higher layer configured by the network (e.g., via higher layer RRC signaling) a second list/set/pool of PCIs (e.g., including both the serving cell PCI and non-serving cell PCIs); the UE could then receive from the network a MAC CE activation command/bitmap to activate/indicate one or more entries from the higher layer RRC configured second list/set/pool of PCIs as the first list/set/pool of PCIs.

In yet another example, the parameter configuring an SRS resource, e.g., the higher layer parameter SRS-Resource, could include/indicate a PCI value, e.g., corresponding to either a serving cell PCI or a non-serving cell PCI. The SRS resource provided by the higher layer parameter SRS-Resource is for or associated with the PCI indicated/configured in the same SRS-Resource. If the higher layer parameter, e.g., SRS-Resource, configuring the SRS resource does not indicate/include any PCI value(s) or the PCI is absent in the higher layer parameter, e.g., SRS-Resource, configuring the SRS resource, the UE could expect that the SRS resource provided by the higher layer parameter SRS-Resource is for or associated with the serving cell PCI.

In yet another example, the parameter configuring an SRS resource, e.g., the higher layer parameter SRS-Resource could include/indicate a one-bit indicator/flag indicating either the serving cell PCI or a non-serving cell PCI. For instance, the SRS resource provided by the higher layer parameter SRS-Resource with the one-bit indicator/flag set to "1"/"ON"/"enabled" could be for or associated with the serving cell PCI (or the non-serving cell PCI), and the SRS resource provided by the higher layer parameter SRS-Resource with the one-bit indicator/flag set to "0"/"OFF"/"disabled" could be for or associated with the non-serving cell PCI (or the serving cell PCI). If the higher layer parameter SRS-Resource configuring the SRS resource does not indicate/include the one-bit flag/indicator or the one-bit flag/indication is absent in the higher layer parameter SRS-Resource configuring the SRS resource, the UE could expect that the SRS resource provided by the higher layer parameter SRS-Resource is for or associated with the serving cell PCI.

In yet another example, the parameter configuring an SRS resource, e.g., the higher layer parameter SRS-Resource could include/indicate a multi-bit indicator with each state of the multi-bit indicator corresponding to a PCI (e.g., either a serving cell PCI or a non-serving cell PCI). The SRS resource provided by the higher layer parameter SRS-Resource is for or associated with the PCI associated with/corresponding to the multi-bit indicator indicated/configured in the same SRS-Resource. If the higher layer parameter SRS-Resource configuring the SRS resource does not indicate/include the multi-bit indicator or the multi-bit indicator is absent in the higher layer parameter SRS-Resource configuring the SRS resource, the UE could expect that the SRS resource provided by the higher layer parameter SRS-Resource is for or associated with the serving cell PCI.

In yet another example, the parameter configuring an SRS resource, e.g., the higher layer parameter SRS-Resource could include/indicate an index pointing to an entry in a first set/list/pool of PCIs (e.g., including both the serving cell PCI and non-serving cell PCIs configured to the UE). The SRS resource provided by the higher layer parameter SRS-Resource is for or associated with the index, and therefore the corresponding entry/PCI in the first set/list/pool of PCIs, indicated in the same SRS-Resource. If the higher layer parameter SRS-Resource configuring the SRS resource does not indicate/include any index to an entry in the first set/list/pool of PCIs or the index to an entry in the first set/list/pool of PCIs is absent in the higher layer parameter SRS-Resource configuring the SRS resource, the UE could expect that the SRS resource provided by the higher layer parameter SRS-Resource is for or associated with the serving cell PCI.

Furthermore, the first list/set/pool of PCIs could be determined/configured according to: (1) the UE could be higher layer configured by the network (e.g., via higher layer RRC signaling) the first list/set/pool of PCIs (e.g., including both the serving cell PCI and non-serving cell PCIs); and (2) the UE could be first higher layer configured by the network (e.g., via higher layer RRC signaling) a second list/set/pool of PCIs (e.g., including both the serving cell PCI and non-serving cell PCIs); the UE could then receive from the network a MAC CE activation command/bitmap to activate/indicate one or more entries from the higher layer RRC configured second list/set/pool of PCIs as the first list/set/pool of PCIs.

In yet another example, the parameter configuring an SRS resource, e.g., the higher layer parameter SRS-Resource could include/indicate an index/ID of another higher layer RRC parameter, wherein one or more PCIs or PCI information could be indicated/included. The SRS resource provided by the higher layer parameter SRS-Resource is for or associated with the RRC parameter (and therefore, the corresponding PCI(s) or PCI information indicated/included therein) indicated in the same SRS-Resource. If the higher layer parameter SRS-Resource configuring the SRS resource does not indicate/include any index/ID of any other RRC parameters indicating/including one or more PCIs or PCI information or the index/ID of another higher layer RRC parameter indicating/including one or more PCIs or PCI information is absent in the higher layer parameter SRS-Resource configuring the SRS resource, the UE could expect that the SRS resource provided by the higher layer parameter SRS-Resource is for or associated with the serving cell PCI.

In yet another example, the parameter configuring an SRS resource, e.g., the higher layer parameter SRS-Resource could include/indicate an entity ID. In the present disclosure, an entity ID could correspond to a PCI value, a CORESETPoolIndex value, a CORESETGroupIndex value, a TRP-specific index/ID value, a TRP-specific higher layer signaling index/ID value or a TRP-specific RS set index/ID value. The SRS resource provided by the higher layer parameter SRS-Resource is for or associated with the entity ID (and therefore, the corresponding PCI value, CORESETPoolIndex value, CORESETGroupIndex value, TRP-specific index/ID value, TRP-specific higher layer signaling index/ID value or TRP-specific RS set index/ID value) indicated in the same SRS-Resource. If the higher layer parameter SRS-Resource configuring the SRS resource does not indicate/include any entity ID or the entity ID is absent in the higher layer parameter SRS-Resource configuring the SRS resource, the UE could expect that the SRS resource provided by the higher layer parameter SRS-Resource is for or associated with the serving cell PCI. Furthermore, under the Rel. 17 unified TCI framework, there could be various means to configured/indicate spatial relation(s) for the SRS resources in the SRS resource set (provided by SRS-ResourceSet). When a UE is provided by the network, e.g., via the higher layer parameter TCI-State_r17, M>1 joint DL and UL Rel. 17 unified TCI states or M>1 separate UL Rel. 17 unified TCI states or a first combination of M>1 joint DL and UL Rel. 17 unified TCI states and separate UL Rel. 17 unified TCI states or N>1 separate DL Rel. 17 unified TCI states or a second combination of N>1 joint DL and UL Rel. 17 unified TCI states and separate DL Rel. 17 unified TCI states or a third combination of N>1 joint DL and UL Rel. 17 unified TCI states, separate DL Rel. 17 unified TCI states and separate UL Rel. 17 unified TCI states via MAC CE or DCI (e.g., DCI format 1_1 or 1_2 with or without DL assignment) based signaling, for example, the SRS resource set provided by the higher layer parameter SRS-ResourceSet could be configured with "useIndicatedr17TCIState."

In this case, the m-th (or the n-th) SRS resource or the SRS resource with the m-th lowest or highest (or the n-th lowest or highest) SRS-ResourceId value could be associated with the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID, where m=1,..., M and n=1,..., N. Specifically, for N=2 or M=2, the first SRS resource or the SRS resource with the lowest or highest SRS-ResourceId value could be associated with the first joint DL and UL TCI state or the first separate UL TCI state or the first separate DL TCI state or the first TCI state in the first combination of TCI states or the first TCI state in the second combination of TCI states or the first TCI state in the third combination of TCI states or the joint DL and UL TCI state with the lowest or highest TCI state ID or the separate UL TCI state with the lowest or highest TCI state ID or the separate DL TCI state with the lowest or highest TCI state ID or the TCI state in the first combination of TCI states with the lowest or highest TCI state ID or the TCI state in the second combination of TCI states with the lowest or highest TCI state ID or the TCI state in the third combination of TCI states with the lowest or highest TCI state ID, and the second SRS resource or the SRS resource with the highest or lowest NZP-SRS-ResourceId value could be associated with the second joint DL and UL TCI state or the second separate UL TCI state or the second separate DL TCI state or the second TCI state in the first combination of TCI states or the second TCI state in the second combination of TCI states or the second TCI state in the third combination of TCI states or the joint DL and UL TCI state with the highest or lowest TCI state ID or the separate UL TCI state with the highest or lowest TCI state ID or the separate DL TCI state with the highest or lowest TCI state ID or the TCI state in the first combination of TCI states with the highest or lowest TCI state ID or the TCI state in the second combination of TCI states with the highest or lowest TCI state ID or the TCI state in the third combination of TCI states with the highest or lowest TCI state ID. If an SRS resource is associated with a Rel. 17 unified TCI state, the UE could assume the spatial relation configuration of quasi co-location RS resource(s) and quasi co-location type(s) from the indicated Rel. 17 unified TCI state for the SRS resource.

For another example, the SRS resource set provided by the higher layer parameter SRS-ResourceSet could be configured with "useIndicatedr17TCIState." In this case, an SRS resource in the SRS resource set could be associated with an indicated joint DL and UL TCI state or separate UL TCI state or separate DL TCI state or TCI state in the first combination of TCI states or TCI state in the second combination of TCI states or TCI state in the third combination of TCI states if they are associated with the same PCI/PCI index/CORESETPoolIndex/CORESETGroupIndex value. The association between a Rel. 17 unified TCI state and PCI/PCI index/CORESETPoolIndex value/CORESETGroupIndex value could follow those specified in the above discussed design examples.

The association between an SRS resource and PCI/PCI index/CORESETPoolIndex value/CORESETGroupIndex value could follow those specified in the above discussed design examples. If an SRS resource is associated with a Rel. 17 unified TCI state, the UE could assume the spatial relation configuration of quasi co-location RS resource(s) and quasi co-location type(s) from the indicated Rel. 17 unified TCI state for the SRS resource.

Yet for another example, one or more SRS resources provided by SRS-Resource in the SRS resource set could be configured with "useIndicatedr17TCIState." In this case, the m-th (or the n-th) SRS resource or the SRS resource configuration with the m-th lowest or highest (or the n-th lowest or highest) SRS-ResourceId value among/within the SRS resources configured with "useIndicatedr17TCIState" in the SRS resource set could be associated with the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID, where m=1,..., M and n=1,..., N.

Specifically, for N=2 or M=2, the first SRS resource or the SRS resource with the lowest or highest SRS-ResourceId value among/within the SRS resources configured with "useIndicatedTCIState" in the SRS resource set could be associated with the first joint DL and UL TCI state or the first separate UL TCI state or the first separate DL TCI state or the first TCI state in the first combination of TCI states or the first TCI state in the second combination of TCI states or the first TCI state in the third combination of TCI states or the joint DL and UL TCI state with the lowest or highest TCI state ID or the separate UL TCI state with the lowest or highest TCI state ID or the separate DL TCI state with the lowest or highest TCI state ID or the TCI state in the first combination of TCI states with the lowest or highest TCI state ID or the TCI state in the second combination of TCI states with the lowest or highest TCI state ID or the TCI state in the third combination of TCI states with the lowest or highest TCI state ID, and the second SRS resource or the SRS resource with the highest or lowest SRS-ResourceId value among/within the SRS resources configured with "useIndicatedr17TCIState" in the SRS resource set could be associated with the second joint DL and UL TCI state or the second separate UL TCI state or the second separate DL TCI state or the second TCI state in the first combination of TCI states or the second TCI state in the second combination of TCI states or the second TCI state in the third combination of TCI states or the joint DL and UL TCI state with the highest or lowest TCI state ID or the separate UL TCI state with the highest or lowest TCI state ID or the separate DL TCI state with the highest or lowest TCI state ID or the TCI state in the first combination of TCI states with the highest or lowest TCI state ID or the TCI state in the second combination of TCI states with the highest or lowest TCI state ID or the TCI state in the third combination of TCI states with the highest or lowest TCI state ID. If an SRS resource is associated with a Rel. 17 unified TCI state, the UE could assume the spatial relation configuration of quasi co-location RS resource(s) and quasi co-location type(s) from the indicated Rel. 17 unified TCI state for the SRS resource.

Yet for another example, one or more SRS resources provided by SRS-Resource in the SRS resource set could be configured with "useIndicatedr17TCIState." In this case, an SRS resource configured with "useIndicatedr17TCIState" in the SRS resource set could be associated with an indicated joint DL and UL TCI state or separate UL TCI state or separate DL TCI state or TCI state in the first combination of TCI states or TCI state in the second combination of TCI states or TCI state in the third combination of TCI states if they are associated with the same PCI/PCI index/CORESETPoolIndex/CORESETGroupIndex value.

The association between a Rel. 17 unified TCI state and PCI/PCI index/CORESETPoolIndex value/CORESETGroupIndex value could follow those specified in the above discussed design examples. The association between an SRS resource and PCI/PCI index/CORESETPoolIndex value/CORESETGroupIndex value could follow those specified in the above discussed design examples. If an SRS resource is associated with a Rel. 17 unified TCI state, the UE could assume the spatial relation configuration of quasi co-location RS resource(s) and quasi co-location type(s) from the indicated Rel. 17 unified TCI state for the SRS resource.

Yet for another example, one or more SRS resources provided by SRS-Resource in the SRS resource set could be configured with a TCI state ID value corresponding/pointing to an indicated Rel. 17 unified TCI state. In this case, the m-th (or the n-th) SRS resource or the SRS resource with the m-th lowest or highest (or the n-th lowest or highest) SRS-ResourceId value among/within the SRS resources configured with a same TCI state ID value corresponding/pointing to an indicated Rel. 17 unified TCI state in the SRS resource set could be associated with the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID, where m=1,..., M and n=1,..., N. Specifically, for N=2 or M=2, the first SRS resource or the SRS resource with the lowest or highest SRS-ResourceId value among/within the SRS resources configured with a same TCI state ID value corresponding/pointing to an indicated Rel. 17 unified TCI state in the SRS resource set could be associated with the first joint DL and UL TCI state or the first separate UL TCI state or the first separate DL TCI state or the first TCI state in the first combination of TCI states or the first TCI state in the second combination of TCI states or the first TCI state in the third combination of TCI states or the joint DL and UL TCI state with the lowest or highest TCI state ID or the separate UL TCI state with the lowest or highest TCI state ID or the separate DL TCI state with the lowest or highest TCI state ID or the TCI state in the first combination of TCI states with the lowest or highest TCI state ID or the TCI state in the second combination of TCI states with the lowest or highest TCI state ID or the TCI state in the third combination of TCI states with the lowest or highest TCI state ID, and the second SRS resource or the SRS resource with the highest or lowest SRS-ResourceId value among/within the SRS resources configured with a same TCI state ID value corresponding/pointing to an indicated Rel. 17 unified TCI state in the SRS resource set could be associated with the second joint DL and UL TCI state or the second separate UL TCI state or the second separate DL TCI state or the second TCI state in the first combination of TCI states or the second TCI state in the second combination of TCI states or the second TCI state in the third combination of TCI states or the joint DL and UL TCI state with the highest or lowest TCI state ID or the separate UL TCI state with the highest or lowest TCI state ID or the separate DL TCI state with the highest or lowest TCI state ID or the TCI state in the first combination of TCI states with the highest or lowest TCI state ID or the TCI state in the second combination of TCI states with the highest or lowest TCI state ID or the TCI state in the third combination of TCI states with the highest or lowest TCI state ID. If an SRS resource is associated with a Rel. 17 unified TCI state, the UE could assume the spatial relation configuration of quasi co-location RS resource(s) and quasi co-location type(s) from the indicated Rel. 17 unified TCI state for the SRS resource.

Yet for another example, one or more SRS resources provided by SRS-Resource in the SRS resource set could be configured with a same TCI state ID value corresponding/pointing to an indicated Rel. 17 unified TCI state. In this case, a SRS resource configured with a TCI state ID value corresponding/pointing to an indicated Rel. 17 unified TCI state in the SRS resource set could be associated with an indicated joint DL and UL TCI state or separate UL TCI state or separate DL TCI state or TCI state in the first combination of TCI states or TCI state in the second combination of TCI states or TCI state in the third combination of TCI states if they are associated with the same PCI/PCI index/CORESETPoolIndex/CORESETGroupIndex value. The association between a Rel. 17 unified TCI state and PCI/PCI index/CORESETPoolIndex value/CORE SET GroupIndex value could follow those specified in the above discussed design examples. The association between an SRS resource and PCI/PCI index/CORESETPoolIndex value/CORESETGroupIndex value could follow those specified in the above discussed design examples. If an SRS is associated with a Rel. 17 unified TCI state, the UE could assume the spatial relation configuration of quasi co-location RS resource(s) and quasi co-location type(s) from the indicated Rel. 17 unified TCI state for the SRS resource.

Yet for another example, an SRS resource provided by SRS-Resource in the SRS resource set could be configured with an index corresponding/pointing to a TCI state among/within the indicated M>1 or N>1 Rel. 17 unified TCI states. If a SRS resource provided by SRS-Resource in the SRS resource set is configured with a TCI state index m (m∈{1,..., M}) or n (n∈{1,..., N}), the SRS resource could be associated with the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID.

For example, one or more TCI state indexes each corresponding/pointing to a TCI state among/within the indicated M>1 or N>1 Rel. 17 unified TCI states could be included/indicated in the parameter configuring the SRS resource set, e.g., in the higher layer parameter SRS-ResourceSet, and each indicated TCI state index could be associated with an SRS resource configured in the same SRS resource set. For instance, for a SRS resource set composed of K SRS resources, K TCI state indexes each corresponding/pointing to a TCI state among/within the indicated M>1 or N>1 Rel. 17 unified TCI states could be indicated/included in the corresponding higher layer parameter SRS-ResourceSet.

For this case, the k-th TCI state index, and therefore the corresponding TCI state among/within the indicated M>1 or N>1 Rel. 17 unified TCI states, could correspond to the k-th SRS resource in the SRS resource set. For another example, a TCI state index corresponding/pointing to a TCI state among/within the indicated M>1 or N>1 Rel. 17 unified TCI states could be included/indicated in the parameter configuring the SRS resource, e.g., in the higher layer parameter SRS-Resource.

In another example, the UE could be provided/configured by the network at least two (e.g., N>1 or M>1) SRS resource sets for uplink channel sounding. Each configured SRS resource set including one or more SRS resources could be associated with one or more PCIs or one or more PCI indexes corresponding/pointing to one or more PCIs in a list/set/pool of PCIs higher layer configured to the UE or one or more CORESETPoolIndex values or one or more CORESETGroupIndex values. In the present disclosure, one or more SRS resource sets could be associated with one or more PCIs/PCI indexes/CORESETPoolIndex values/CORESETGroupIndex values.

In one example, an SRS resource set, and therefore the corresponding higher layer parameter SRS-ResourceSet, could include/indicate a PCI value, e.g., corresponding to either a serving cell PCI or a non-serving cell PCI. An SRS resource configured/indicated in the SRS resource set (and therefore, in the corresponding higher layer parameter SRS-ResourceSet) is for or associated with the PCI indicated/configured therein. For this case, if the configured SRS resource set (and therefore, the corresponding higher layer parameter SRS-ResourceSet) does not indicate/include any PCI value(s) or the PCI is absent in the SRS resource set (and therefore, in the corresponding higher layer parameter SRS-ResourceSet), the UE could expect that a SRS resource configured/indicated in the SRS resource set (and therefore, in the corresponding higher layer parameter SRS-ResourceSet) is for or associated with the serving cell PCI.

In another example, an SRS resource set, and therefore, the corresponding higher layer parameter SRS-ResourceSet, could include/indicate a one-bit indicator/flag indicating either the serving cell PCI or a non-serving cell PCI. For instance, a SRS resource configured/indicated in the SRS resource set (and therefore, in the corresponding higher layer parameter SRS-ResourceSet) with the one-bit indicator/flag set to "1 "/" ON"/" enabled" could be for or associated with the serving cell PCI (or the non-serving cell PCI), and an SRS resource configured/indicated in the SRS resource set (and therefore, in the corresponding higher layer parameter SRS-ResourceSet) with the one-bit indicator/flag set to "0"/" OFF"/"disabled" could be for or associated with the non-serving cell PCI (or the serving cell PCI). If the configured SRS resource set (and therefore, the corresponding higher layer parameter SRS-ResourceSet) does not indicate/include the one-bit flag/indicator or the one-bit flag/indication is absent in the SRS resource set (and therefore, in the corresponding higher layer parameter SRS-ResourceSet), the UE could expect that a SRS resource configured/indicated in the SRS resource set (and therefore, in the corresponding higher layer parameter SRS-ResourceSet) is for or associated with the serving cell PCI.

In yet another example, an SRS resource set, and therefore, the corresponding higher layer parameter SRS-ResourceSet, could include/indicate a multi-bit indicator with each state of the multi-bit indicator corresponding to a PCI (e.g., either a serving cell PCI or a non-serving cell PCI). An SRS resource configured/indicated in the SRS resource set (and therefore, in the corresponding higher layer parameter SRS-ResourceSet) is for or associated with the PCI associated with/corresponding to the multi-bit indicator indicated/configured therein. If the configured SRS resource set (and therefore, the corresponding higher layer parameter SRS-ResourceSet) does not indicate/include the multi-bit indicator or the multi-bit indicator is absent in the SRS resource set (and therefore, in the corresponding higher layer parameter SRS-ResourceSet), the UE could expect that a SRS resource configured/indicated in the SRS resource set (and therefore, in the corresponding higher layer parameter SRS-ResourceSet) is for or associated with the serving cell PCI.

In yet another example, an SRS resource set, and therefore, the corresponding higher layer parameter SRS-ResourceSet, could include/indicate an index to an entry in a set/list/pool of PCIs (e.g., including both the serving cell PCI and non-serving cell PCIs higher layer configured to the UE). An SRS resource configured/indicated in the SRS resource set (and therefore, the corresponding higher layer parameter SRS-ResourceSet) is for or associated with the indicated entry (and therefore, the corresponding PCI) in the set/list/pool of PCIs. If the configured SRS resource set (and therefore, the corresponding higher layer parameter SRS-ResourceSet) does not indicate/include any index to an entry in the set/list/pool of PCIs or the index to an entry in the set/list/pool of PCIs is absent in the SRS resource set (and therefore, in the corresponding higher layer parameter SRS-ResourceSet), the UE could expect that a SRS resource configured/indicated in the SRS resource set (and therefore, in the corresponding higher layer parameter SRS-ResourceSet) is for or associated with the serving cell PCI.

In yet another example, an SRS resource set, and therefore, the corresponding higher layer parameter SRS-ResourceSet, could include/indicate an index/ID of another higher layer RRC parameter, wherein one or more PCIs or PCI information could be indicated/included. An SRS resource configured/indicated in the SRS resource set (and therefore, in the corresponding higher layer parameter SRS-ResourceSet) is for or associated with the indicated RRC parameter (and therefore, the corresponding PCI(s) or PCI information indicated/included therein).

If the configured SRS resource set (and therefore, the corresponding higher layer parameter SRS-ResourceSet) does not indicate/include any index/ID of any other RRC parameters indicating/including one or more PCIs or PCI information or the index/ID of another higher layer RRC parameter indicating/including one or more PCIs or PCI information is absent in the SRS resource set (and therefore, in the corresponding higher layer parameter SRS-ResourceSet), the UE could expect that a SRS resource configured/indicated in the SRS resource set (and therefore, in the corresponding higher layer parameter SRS-ResourceSet) is for or associated with the serving cell PCI.

In yet another example, an SRS resource set, and therefore, the corresponding higher layer parameter SRS-ResourceSet, could include/indicate an entity ID. In the present disclosure, an entity ID could correspond to a PCI value, a CORESETPoolIndex value, a CORESETGroupIndex value, a TRP-specific index/ID value, a TRP-specific higher layer signaling index/ID value or a TRP-specific RS set index/ID value. An SRS resource configured/indicated in the SRS resource set (and therefore, in the corresponding higher layer parameter SRS-ResourceSet) is for or associated with the indicated entity ID (and therefore, the corresponding PCI value, CORESETPoolIndex value, CORESETGroupIndex value, TRP-specific index/ID value, TRP-specific higher layer signaling index/ID value or TRP-specific RS set index/ID value).

If the configured SRS resource set (and therefore, the corresponding higher layer parameter SRS-ResourceSet) does not indicate/include any entity ID or the entity ID is absent in the SRS resource set (and therefore, in the corresponding higher layer parameter SRS-ResourceSet), the UE could expect that an SRS resource configured/indicated in the SRS resource set (and therefore, in the corresponding higher layer parameter SRS-ResourceSet) is for or associated with the serving cell PCI.

In yet another example, M>1 or N>1 SRS resource sets could be included/indicated/configured in an SRS resource setting/configuration (e.g., in the corresponding higher layer parameter SRS-Config), wherein an SRS resource set could be provided by the higher layer parameter SRS-ResourceSet. Furthermore, one or more entity IDs could be included/indicated/configured in an SRS resource setting/configuration (e.g., in the corresponding higher layer parameter SRS-Config), each corresponding to/associated with one or more SRS resource sets configured/indicated/included in the same SRS resource setting/configuration. In the present disclosure, an entity ID could correspond to a PCI value (corresponding to either a serving cell PCI or a non-serving cell PCI), an index to an entry in a list of PCIs configured to the UE, a CORESETPoolIndex value, a CORESETGroupIndex value, a TRP-specific index/ID value, a TRP-specific higher layer signaling index/ID value, a TRP-specific RS set index/ID value, a one-bit flag/indicator indicating either the serving cell PCI or a non-serving cell PCI or a multi-bit indicator with each state of the multi-bit indicator corresponding to a different PCI. For example, a set of N>1 or M>1 PCI values could be included/indicated/configured in an SRS resource setting/configuration (e.g., in the higher layer parameter SRS-Config) including/indicating/configuring N>1 or M>1 SRS resource sets (provided by SRS-ResourceSet).

Each of the N>1 or M>1 PCIs could correspond to a different SRS resource set, and therefore, the SRS resources configured therein. For instance, the n-th or m-th PCI or the n-th or m-th lowest (or the n-th or m-th highest) PCI value in the set of N>1 or M>1 PCIs could correspond to the n-th or m-th SRS resource set or the SRS resource set with the n-th or m-th lowest (or the n-th or m-th highest) resource set ID among the N>1 or M>1 SRS resource sets, where n=1,..., N and m=1,..., M.

For another example, a set of N>1 or M>1 indexes each corresponding/pointing to an entry/PCI in a first set/list/pool of PCIs could be included/indicated/configured in an SRS resource setting/configuration (e.g., in the higher layer parameter SRS-Config) including/indicating/configuring N>1 or M>1 SRS resource sets (provided by SRS-ResourceSet). Each of the N>1 or M>1 indexes, and therefore the corresponding entry/PCI in the first set/list/pool of PCIs, could correspond to a different SRS resource set, and therefore, the SRS resources configured therein. For instance, the n-th or m-th index in the set of N>1 or M>1 indexes, and therefore the corresponding entry/PCI in the first set/list/pool of PCIs could correspond to the n-th or m-th SRS resource set or the SRS resource set with the n-th or m-th lowest (or the n-th or m-th highest) resource set ID among the N>1 or M>1 SRS resource sets, where n=1,..., N and m=1,..., M.

Furthermore, the first list/set/pool of PCIs could be determined/configured according to: (1) the UE could be higher layer configured by the network (e.g., via higher layer RRC signaling) the first list/set/pool of PCIs (e.g., including both the serving cell PCI and non-serving cell PCIs); and (2) the UE could be first higher layer configured by the network (e.g., via higher layer RRC signaling) a second list/set/pool of PCIs (e.g., including both the serving cell PCI and non-serving cell PCIs); the UE could then receive from the network a MAC CE activation command/bitmap to activate/indicate one or more entries from the higher layer RRC configured second list/set/pool of PCIs as the first list/set/pool of PCIs.

Furthermore, under the Rel. 17 unified TCI framework, there could be various means to configured/indicate spatial relations for the SRS resources in the SRS resource sets (provided by SRS-ResourceSet). When a UE is provided by the network, e.g., via the higher layer parameter TCI-State_r17, M>1 joint DL and UL Rel. 17 unified TCI states or M>1 separate UL Rel. 17 unified TCI states or a first combination of M>1 joint DL and UL Rel. 17 unified TCI states and separate UL Rel. 17 unified TCI states or N>1 separate DL Rel. 17 unified TCI states or a second combination of N>1 joint DL and UL Rel. 17 unified TCI states and separate DL Rel. 17 unified TCI states or a third combination of N>1 joint DL and UL Rel. 17 unified TCI states, separate DL Rel. 17 unified TCI states and separate UL Rel. 17 unified TCI states via MAC CE or DCI (e.g., DCI format 1_1 or 1_2 with or without DL assignment) based signaling, for example, one or more SRS resource sets provided by the higher layer parameter SRS-ResourceSet could be configured with "useIndicatedr17TCIState."

In this case, one or more SRS resources configured in the m-th (or the n-th) SRS resource set or the SRS resource set with the m-th lowest or highest (or the n-th lowest or highest) SRS-ResourceSetId value among/within the SRS resource sets configured with "useIndicatedr17TCIState" could be associated with the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID, where m=1,..., M and n=1,..., N.

Specifically, for N=2 or M=2, one or more SRS resources configured in the first SRS resource set or the SRS resource set with the lowest or highest SRS-ResourceSetId value among/within the SRS resource sets configured with "useIndicatedr17TCIState" could be associated with the first joint DL and UL TCI state or the first separate UL TCI state or the first separate DL TCI state or the first TCI state in the first combination of TCI states or the first TCI state in the second combination of TCI states or the first TCI state in the third combination of TCI states or the joint DL and UL TCI state with the lowest or highest TCI state ID or the separate UL TCI state with the lowest or highest TCI state ID or the separate DL TCI state with the lowest or highest TCI state ID or the TCI state in the first combination of TCI states with the lowest or highest TCI state ID or the TCI state in the second combination of TCI states with the lowest or highest TCI state ID or the TCI state in the third combination of TCI states with the lowest or highest TCI state ID, and one or more SRS resources configured in the second SRS resource set or the SRS resource set with the highest or lowest SRS-ResourceSetId value among/within the SRS resource sets configured with "useIndicatedr17TCIState" could be associated with the second joint DL and UL TCI state or the second separate UL TCI state or the second separate DL TCI state or the second TCI state in the first combination of TCI states or the second TCI state in the second combination of TCI states or the second TCI state in the third combination of TCI states or the joint DL and UL TCI state with the highest or lowest TCI state ID or the separate UL TCI state with the highest or lowest TCI state ID or the separate DL TCI state with the highest or lowest TCI state ID or the TCI state in the first combination of TCI states with the highest or lowest TCI state ID or the TCI state in the second combination of TCI states with the highest or lowest TCI state ID or the TCI state in the third combination of TCI states with the highest or lowest TCI state ID.

If an SRS resource is associated with a Rel. 17 unified TCI state, the UE could assume the spatial relation configuration of quasi co-location RS resource(s) and quasi co-location type(s) from the indicated Rel. 17 unified TCI state for the SRS resource.

For another example, one or more SRS resource sets provided by the higher layer parameter SRS-ResourceSet could be configured with "useIndicatedr17TCIState." In this case, one or more SRS resources configured in a SRS resource set configured with "useIndicatedr17TCIState" could be associated with an indicated joint DL and UL TCI state or separate UL TCI state or separate DL TCI state or TCI state in the first combination of TCI states or TCI state in the second combination of TCI states or TCI state in the third combination of TCI states if the SRS resource set configured with "useIndicatedr17TCIState" and the indicated Rel. 17 unified TCI state are associated with the same PCI/PCI index/CORESETPoolIndex/CORESETGroupIndex value. The association between a Rel. 17 unified TCI state and PCI/PCI index/CORESETPoolIndex value/CORESETGroupIndex value could follow those specified in the above discussed design examples.

The association between an SRS resource set and PCI/PCI index/CORESETPoolIndex/CORESETPGroupIndex values could follow those specified in the above discussed design examples. If an SRS resource is associated with a Rel. 17 unified TCI state, the UE could assume the spatial relation configuration of quasi co-location RS resource(s) and quasi co-location type(s) from the indicated Rel. 17 unified TCI state for the SRS resource.

Yet for another example, one or more SRS resource sets provided by the higher layer parameter SRS-ResourceSet could be configured with a TCI state ID corresponding/pointing to an indicated Rel. 17 unified TCI state. In this case, one or more SRS resources configured in the m-th (or the n-th) SRS resource set or the SRS resource set with the m-th lowest or highest (or the n-th lowest or highest) SRS-ResourceSetId value among/within the SRS resource sets configured with a same TCI state ID corresponding/pointing to an indicated Rel. 17 unified TCI state could be associated with the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID, where m=1,..., M and n=1,..., N.

Specifically, for N=2 or M=2, one or more SRS resources configured in the first SRS resource set or the SRS resource set with the lowest or highest SRS-ResourceSetId value among/within the SRS resource sets configured with a same TCI state ID corresponding/pointing to an indicated Rel. 17 unified TCI state could be associated with the first joint DL and UL TCI state or the first separate UL TCI state or the first separate DL TCI state or the first TCI state in the first combination of TCI states or the first TCI state in the second combination of TCI states or the first TCI state in the third combination of TCI states or the joint DL and UL TCI state with the lowest or highest TCI state ID or the separate UL TCI state with the lowest or highest TCI state ID or the separate DL TCI state with the lowest or highest TCI state ID or the TCI state in the first combination of TCI states with the lowest or highest TCI state ID or the TCI state in the second combination of TCI states with the lowest or highest TCI state ID or the TCI state in the third combination of TCI states with the lowest or highest TCI state ID, and one or more SRS resources configured in the second SRS resource set or the SRS resource set with the highest or lowest SRS-ResourceSetId value among/within the SRS resource sets configured with a same TCI state ID corresponding/pointing to an indicated Rel. 17 unified TCI state could be associated with the second joint DL and UL TCI state or the second separate UL TCI state or the second separate DL TCI state or the second TCI state in the first combination of TCI states or the second TCI state in the second combination of TCI states or the second TCI state in the third combination of TCI states or the joint DL and UL TCI state with the highest or lowest TCI state ID or the separate UL TCI state with the highest or lowest TCI state ID or the separate DL TCI state with the highest or lowest TCI state ID or the TCI state in the first combination of TCI states with the highest or lowest TCI state ID or the TCI state in the second combination of TCI states with the highest or lowest TCI state ID or the TCI state in the third combination of TCI states with the highest or lowest TCI state ID.

If an SRS resource is associated with a Rel. 17 unified TCI state, the UE could assume the spatial relation configuration of quasi co-location RS resource(s) and quasi co-location type(s) from the indicated Rel. 17 unified TCI state for the SRS resource.

Yet for another example, one or more SRS resource sets provided by the higher layer parameter SRS-ResourceSet could be configured with "useIndicatedr17TCIState." In this case, one or more SRS resources configured in a SRS resource set configured with a TCI state ID corresponding/pointing to an indicated Rel. 17 unified TCI state could be associated with an indicated joint DL and UL TCI state or separate UL TCI state or separate DL TCI state or TCI state in the first combination of TCI states or TCI state in the second combination of TCI states or TCI state in the third combination of TCI states if the SRS resource set configured with a TCI state ID corresponding/pointing to an indicated Rel. 17 unified TCI state and the indicated Rel. 17 unified TCI state are associated with the same PCI/PCI index/CORESETPoolIndex value/CORESETGroupIndex value.

The association between a Rel. 17 unified TCI state and PCI/PCI index/CORESETPoolIndex value/CORESETGroupIndex value could follow those specified in the above discussed design examples. The association between an SRS resource set and PCI/PCI index/CORESETPoolIndex value/CORESETGroupIndex value could follow those specified in the above discussed design examples. If an SRS resource is associated with a Rel. 17 unified TCI state, the UE could assume the spatial relation configuration of quasi co-location RS resource(s) and quasi co-location type(s) from the indicated Rel. 17 unified TCI state for the SRS resource.

Yet for another example, one or more SRS resources configured in an SRS resource set could be configured with "useIndicatedr17TCIState." The association between the one or more SRS resources configured with "useIndicatedr17TCIState" in an SRS resource set and an indicated Rel. 17 unified TCI state could be according to the association between the SRS resource set, wherein the one or more SRS resources configured with "useIndicatedr17TCIState" are configured, and the indicated Rel. 17 unified TCI state following those specified in the above discussed design examples.

Yet for another example, one or more SRS resources configured in an SRS resource set could be configured with a TCI state ID corresponding/pointing to a Rel. 17 unified TCI state. The association between the one or more SRS resources configured with a TCI state ID corresponding/pointing to a Rel. 17 unified TCI state in a SRS resource set and an indicated Rel. 17 unified TCI state could be according to the association between the SRS resource set, wherein the one or more SRS resources configured with a TCI state ID corresponding/pointing to a Rel. 17 unified TCI state are configured, and the indicated Rel. 17 unified TCI state following those specified in the above discussed design examples.

Yet for another example, an SRS resource set provided by SRS-ResourceSet could be configured with an index corresponding/pointing to a TCI state among/within the indicated M>1 or N>1 Rel. 17 unified TCI states. If a SRS resource set provided by SRS-ResourceSet is configured with a TCI state index m ($m \in \{1,...,M\}$) or n ($n \in \{1,...,N\}$), the SRS resource set could be associated with the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID.

For example, one or more TCI state indexes each corresponding/pointing to a TCI state among/within the indicated M>1 or N>1 Rel. 17 unified TCI states could be included/indicated in the parameter configuring the SRS resource sets, e.g., in the higher layer parameter SRS-Config, and each indicated TCI state index could be associated with an SRS resource set configured in the same SRS resource setting/configuration.

For instance, for an SRS resource setting/configuration composed of K SRS resource sets, K TCI state indexes each corresponding/pointing to a TCI state among/within the indicated M>1 or N>1 Rel. 17 unified TCI states could be indicated/included in the corresponding higher layer parameter SRS-Config. For this case, the k-th TCI state index, and therefore the corresponding TCI state among/within the indicated M>1 or N>1 Rel. 17 unified TCI states, could correspond to the k-th SRS resource set in the SRS resource setting/configuration. For another example, a TCI state index corresponding/pointing to a TCI state among/within the indicated M>1 or N>1 Rel. 17 unified TCI states could be included/indicated in the parameter configuring the SRS resource set, e.g., in the higher layer parameter SRS-ResourceSet.

If a UE transmits an SRS based on a configuration by SRS-ResourceSet on active UL BWP b of carrier f of serving cell c using SRS power control adjustment state with index 1, the UE determines the PUSCH transmission power $P_{SRS,b,f,c}$ $(i,q_s,l)$ in SRS transmission occasion i as:

$$P_{SRS,b,f,c}(i,q_s,l) =$$

$$= \min \left\{ \begin{array}{c} P_{CMAX,f,c}(i), \\ P_{O\_SRS,b,f,c}(q_s) + 10\log_{10}\left(2^\mu \cdot M_{SRS,b,f,c}(i)\right) + \alpha_{SRS,b,f,c}(q_s) \cdot PL_{b,f,c}(q_d) + h_{b,f,c}(i,l) \end{array} \right\}$$

[dBm] where: (1) $P_{CMAX,f,c}(i)$ is the UE configured maximum output power defined in the 3GPP TS 38.101 for carrier f of serving cell c in SRS transmission occasion i and (2) $P_{O\_SRS,b,f,c}(q_s)$ is provided by $p_O$ for active UL BWP b of carrier f of serving cell c and SRS resource set $q_s$ provided by SRS-ResourceSet and SRS-ResourceSetId.

When a UE is provided by the network, e.g., via the higher layer parameter TCI-State_r17, M>1 joint DL and UL Rel. 17 unified TCI states or M>1 separate UL Rel. 17 unified TCI states or a first combination of M>1 joint DL and UL Rel. 17 unified TCI states and separate UL Rel. 17 unified TCI states or N>1 separate DL Rel. 17 unified TCI states or a second combination of N>1 joint DL and UL Rel. 17 unified TCI states and separate DL Rel. 17 unified TCI states or a third combination of N>1 joint DL and UL Rel. 17 unified TCI states, separate UL Rel. 17 unified TCI states and separate DL Rel. 17 unified TCI states via MAC CE or DCI (e.g., DCI format 1_1 or 1_2 with or without DL assignment) based signaling.

In one example, if configured by the network, first $P_{O\_SRS,b,f,c}(q_s)$ value is provided by $p_O$ indicated in first SRS resource set or first p0-Alpha-CLID-SRS-set associated with the indicated first joint DL and UL TCI state or first separate UL TCI state or first TCI state in the first combination of TCI states or first separate DL TCI state or first TCI state in the second combination of TCI states or first TCI state in the third combination of TCI states.

In another example, if configured by the network, second $P_{O\_SRS,b,f,c}(q_s)$ value is provided by $p_O$ indicated in second SRS resource set or second p0-Alpha-CLID-SRS-set associated with the indicated second joint DL and UL TCI state or second separate UL TCI state or second TCI state in the first combination of TCI states or second separate DL TCI state or second TCI state in the second combination of TCI states or second TCI state in the third combination of TCI states.

In yet another example, if configured by the network, first and second $P_{O\_SRS,b,f,c}(q_s)$ values are respectively provided by $p_O$ indicated in first SRS resource set or first p0-Alpha-CLID-SRS-set associated with the indicated first joint DL and UL TCI state or first separate UL TCI state or first TCI state in the first combination of TCI states or first separate DL TCI state or first TCI state in the second combination of TCI states or first TCI state in the third combination of TCI states, and by $p_O$ indicated in second SRS resource set or second p0-Alpha-CLID-SRS-set associated with the indicated second joint DL and UL TCI state or second separate UL TCI state or second TCI state in the first combination of TCI states or second separate DL TCI state or second TCI state in the second combination of TCI states or second TCI state in the third combination of TCI states.

The association between one or more SRS resource sets and one or more indicated Rel. 17 unified TCI states could follow those specified in the above discussed design examples. $\alpha_{SRS,b,f,c}(q_s)$ is provided by alpha for active UL

BWP b of carrier f of serving cell c and SRS resource set $q_s$ provided by SRS-ResourceSet and SRS-ResourceSetId.

When a UE is provided by the network, e.g., via the higher layer parameter TCI-State_r17, M>1 joint DL and UL Rel. 17 unified TCI states or M>1 separate UL Rel. 17 unified TCI states or a first combination of M>1 joint DL and UL Rel. 17 unified TCI states and separate UL Rel. 17 unified TCI states or N>1 separate DL Rel. 17 unified TCI states or a second combination of N>1 joint DL and UL Rel. 17 unified TCI states and separate DL Rel. 17 unified TCI states or a third combination of N>1 joint DL and UL Rel. 17 unified TCI states, separate UL Rel. 17 unified TCI states and separate DL Rel. 17 unified TCI states via MAC CE or DCI (e.g., DCI format 1_1 or 1_2 with or without DL assignment) based signaling.

In one example, if configured by the network, first $\alpha_{SRS,b,f,c}(q_s)$ value is provided by alpha indicated in first SRS resource set or first p0-Alpha-CLID-SRS-set associated with the indicated first joint DL and UL TCI state or first separate UL TCI state or first TCI state in the first combination of TCI states or first separate DL TCI state or first TCI state in the second combination of TCI states or first TCI state in the third combination of TCI states.

In another example, if configured by the network, second $\alpha_{SRS,b,f,c}(q_s)$ value is provided by alpha indicated in second SRS resource set or second p0-Alpha-CLID-SRS-set associated with the indicated second joint DL and UL TCI state or second separate UL TCI state or second TCI state in the first combination of TCI states or second separate DL TCI state or second TCI state in the second combination of TCI states or second TCI state in the third combination of TCI states.

In yet another example, if configured by the network, first and second $\alpha_{SRS,b,f,c}(q_s)$ values are respectively provided by alpha indicated in first SRS resource set or first p0-Alpha-CLID-SRS-set associated with the indicated first joint DL and UL TCI state or first separate UL TCI state or first TCI state in the first combination of TCI states or first separate DL TCI state or first TCI state in the second combination of TCI states or first TCI state in the third combination of TCI states, and by alpha indicated in second SRS resource set or second p0-Alpha-CLID-SRS-set associated with the indicated second joint DL and UL TCI state or second separate UL TCI state or second TCI state in the first combination of TCI states or second separate DL TCI state or second TCI state in the second combination of TCI states or second TCI state in the third combination of TCI states.

The association between one or more SRS resource sets and one or more indicated Rel. 17 unified TCI states could follow those specified in the above discussed design examples.

For a DL pathloss estimate $PL_{b,f,c}(q_d)$ in dB calculated by the UE using RS index $q_d$ for the active DL BWP of carrier f of the primary cell c, when a UE is provided by the network, e.g., via the higher layer parameter TCI-State_r17, M>1 joint DL and UL Rel. 17 unified TCI states or M>1 separate UL Rel. 17 unified TCI states or a first combination of M>1 joint DL and UL Rel. 17 unified TCI states and separate UL Rel. 17 unified TCI states or N>1 separate DL Rel. 17 unified TCI states or a second combination of N>1 joint DL and UL Rel. 17 unified TCI states and separate DL Rel. 17 unified TCI states or a third combination of N>1 joint DL and UL Rel. 17 unified TCI states, separate UL Rel. 17 unified TCI states and separate DL Rel. 17 unified TCI states via MAC CE or DCI (e.g., DCI format 1_1 or 1_2 with or without DL assignment) based signaling, the UE could determine first RS resource index $q_d$ providing a periodic RS resource configured with qcl-Type set to "typeD" in first joint DL and UL TCI state or first separate UL TCI state or first TCI state in the first combination of TCI states or first separate DL TCI state or first TCI state in the second combination of TCI states or first TCI state in the third combination of

TCI states, and second RS resource index $q_d$ providing a periodic RS resource configured with qcl-Type set to "typeD" in second joint DL and UL TCI state or second separate UL TCI state or second TCI state in the first combination of TCI states or second separate DL TCI state or second TCI state in the second combination of TCI states or second TCI state in the third combination of TCI states.

For the SRS power control adjustment state $h_{b,f,c}(i,l)$: if srs-PowerControlAdjustmentStates in the corresponding higher layer parameter SRS-ResourceSet indicates a same power control adjustment state for SRS transmissions and PUSCH transmissions, $h_{b,f,c}(i,l)=f_{b,f,c}(i,l)$ where $f_{b,f,c}(i,l)$ is the current PUSCH power control adjustment state defined in the 3GPP TS 38.213 for active BWP b of carrier f of serving cell c in PUSCH transmission occasion i.

When a UE is provided by the network, e.g., via the higher layer parameter TCI-State_r17, M>1 joint DL and UL Rel. 17 unified TCI states or M>1 separate UL Rel. 17 unified TCI states or a first combination of M>1 joint DL and UL Rel. 17 unified TCI states and separate UL Rel. 17 unified TCI states or N>1 separate DL Rel. 17 unified TCI states or a second combination of N>1 joint DL and UL Rel. 17 unified TCI states and separate DL Rel. 17 unified TCI states or a third combination of N>1 joint DL and UL Rel. 17 unified TCI states, separate UL Rel. 17 unified TCI states and separate DL Rel. 17 unified TCI states via MAC CE or DCI (e.g., DCI format 1_1 or 1_2 with or without DL assignment) based signaling.

In one example, if configured by the network, first 1 value is provided by powerControlLoopToUse or closedLoopIndex indicated in first p0-Alpha-CLID-PUSCH-set or first p0-Alpha-CLID-SRS-set associated with the indicated first joint DL and UL TCI state or first separate UL TCI state or first TCI state in the first combination of TCI states or first separate DL TCI state or first TCI state in the second combination of TCI states or first TCI state in the third combination of TCI states.

In another example, if configured by the network, second 1 value is provided by powerControlLoopToUse or closedLoopIndex indicated in second p0-Alpha-CLID-PUSCH-set or second p0-Alpha-CLID-SRS-set associated with the indicated second joint DL and UL TCI state or second separate UL TCI state or second TCI state in the first combination of TCI states or second separate DL TCI state or second TCI state in the second combination of TCI states or second TCI state in the third combination of TCI states.

In yet another example, if configured by the network, first and second 1 values are respectively provided by powerControlLoopToUse or closedLoopIndex indicated in first p0-Alpha-CLID-PUSCH-set or first p0-Alpha-CLID-SRS-set associated with the indicated first joint DL and UL TCI state or first separate UL TCI state or first TCI state in the first combination of TCI states or first separate DL TCI state or first TCI state in the second combination of TCI states or first TCI state in the third combination of TCI states, and by powerControlLoopToUse or closedLoopIndex indicated in second p0-Alpha-CLID-PUSCH-set or second p0-Alpha-CLID-SRS-set associated with the indicated second joint DL and UL TCI state or second separate UL TCI state or second TCI state in the first combination of TCI states or second separate DL TCI state or second TCI state in the second combination of TCI states or second TCI state in the third combination of TCI states.

Else, the value $l \in \{0, 1\}$ is provided by powerControlLoopToUse or closedLoopIndex indicated in p0-Alpha-CLID-PUSCH-set or p0-Alpha-CLID-SRS-set.

If the UE transmits a SRS associated with the first RS resource index $q_d$, the UE applies the first $P_{O\_SRS,b,f,c}(q_s)$ value, the first $\alpha_{SRS,b,f,c}(q_s)$ value, and $h_{b,f,c}(i,l)$ with the first 1 value for determining $P_{SRS,b,f,c}(i,q_s,l)$. If the UE transmits a SRS associated with the second RS resource index $q_d$, the UE applies the second $P_{O\_SRS,b,f,c}(q_s)$ value, the second $\alpha_{SRS,b,f,c}(q_s)$ value, and $h_{b,f,c}(i,l)$ with the second 1 value for determining $P_{SRS,b,f,c}(i,q_s,l)$.

In the present disclosure, the first joint DL and UL TCI state could correspond to the joint DL and UL TCI state with the lowest (or the highest) TCI state ID, the first separate UL TCI state could correspond to the separate UL TCI state with the lowest (or the highest) TCI state ID, the first TCI state in the first combination of TCI states could correspond to the TCI state in the first combination of TCI states with the lowest (or the highest) TCI state ID, the first separate DL TCI state could correspond to the separate DL TCI state with the lowest (or the highest) TCI state ID, the first TCI state in the second combination of TCI states could correspond to the TCI state in the second combination of TCI states with the lowest (or the highest) TCI state ID, or the first TCI state in the third combination of TCI states could correspond to the TCI state in the third combination of TCI states with the lowest (or the highest) TCI state ID.

Furthermore, the second joint DL and UL TCI state could correspond to the joint DL and UL TCI state with the highest (or the lowest) TCI state ID, the second separate UL TCI state could correspond to the separate UL TCI state with the highest (or the lowest) TCI state ID, the second TCI state in the first combination of TCI states could correspond to the TCI state in the first combination of TCI states with the highest (or the lowest) TCI state ID, the second separate DL TCI state could correspond to the separate DL TCI state with the highest (or the lowest) TCI state ID, the second TCI state in the second combination of TCI states could correspond to the TCI state in the second combination of TCI states with the highest (or the lowest) TCI state ID, or the second TCI state in the third combination of TCI states could correspond to the TCI state in the third combination of TCI states with the highest (or the lowest) TCI state ID.

In a multiple TRP system depicted in FIGURE 8, the UE could simultaneously receive from multiple physically non-co-located TRPs various channels/RSs such as PDCCHs and/or PDSCHs using either a single receive (RX) panel or multiple RX panels. In this disclosure, a RX panel could correspond to a set of RX antenna elements/ports at the UE, a set of measurement RS resources such as SRS resources, a spatial domain RX filter or etc. Further, a TRP in the multi-TRP system can represent a collection of measurement antenna ports, measurement RS resources and/or control resource sets (CORESETs).

For example, a TRP could be associated with one or more of: (1) a plurality of CSI-RS resources; (2) a plurality of CRIs (CSI-RS resource indices/indicators); (3) a measurement RS resource set, for example, a CSI-RS resource set along with its indicator; (4) a plurality of CORESETs associated with a CORESETPoolIndex; and (5) a plurality of CORESETs associated with a TRP-specific index/indicator/identity.

A cell/TRP could be a non-serving cell/TRP. In this disclosure, the non-serving cell(s) or the non-serving cell TRP(s) could have/broadcast different physical cell IDs (PCIs) and/or other higher layer signaling index values from that of the serving cell or the serving cell TRP (i.e., the serving cell PCI). In one example, the serving cell or the serving cell TRP could be associated with the serving cell ID (SCI) and/or the serving cell PCI. That is, for the inter-cell operation considered in the present disclosure, different cells/TRPs could broadcast different PCIs and/or one or more cells/TRPs (referred to/defined as non-serving cells/TRPs in the present disclosure) could broadcast different PCIs from that of the serving cell/TRP (i.e., the serving cell PCI) and/or one or more cells/TRPs are not associated with valid SCI (e.g., provided by the higher layer parameter ServCellIndex). In the present disclosure, a non-serving cell PCI can also be referred to as an additional PCI, another PCI or a different PCI (with respect to the serving cell PCI).

The UE could be configured by the network one or more transmission configuration information (TCI) states, which indicate the QCL information/assumptions for one or more RSs/channels such as PDCCHs and/or PDSCHs. The TCI state update/indication for PDCCH and/or PDSCH can also be referred to as beam indication. For instance, for data transmissions on the shared channel (such as the physical downlink shared channel in NR, i.e. PDSCH), the corresponding beam indication procedure under the 3GPP Rel. 15/16 TCI framework can be summarized as follows: a UE can be first higher layer configured by the network (e.g., via high layer RRC signaling) a set/pool of TCI states; the UE could then receive from the network a MAC CE command activating one or more TCI states from the set/pool of RRC configured TCI states; the UE could be indicated by the network via dynamic DCI signaling that one or more of the MAC CE activated TCI states are active for the reception of the PDSCH(s).

Under the Rel. 17 unified TCI framework, wherein a UE could be provided by the network one or more separate/joint DL or UL TCI state for various DL or UL channels/signals, various design aspects related to configurations of downlink and uplink channels/signals such as PDCCH/PDSCH/PUCCH/PUSCH in a single-DCI or multi-DCI based multi-TRP system or an inter-cell system composed of at least a PCI different from the serving cell PCI, need to be specified.

The present disclosure considers various design aspects related to configuring DL and UL channels/signals for the Rel. 17 unified TCI framework. In the present disclosure, (i) both single-DCI and multi-DCI based multi-TRP operations, and (ii) an inter-cell system comprising at least a PCI different from the serving cell PCI are considered. As described in the U.S. Patent Application 17/584,239, a unified TCI framework could indicate/include N≥1 DL TCI states and/or M≥1 UL TCI states, wherein the indicated TCI state could be at least one of: (1) a DL TCI state and/or its corresponding/associated TCI state ID; (2) an UL TCI state and/or its corresponding/associated TCI state ID; (3) a joint DL and UL TCI state and/or its corresponding/associated TCI state ID; and (4) separate DL TCI state and UL TCI state and/or their corresponding/associated TCI state ID(s)

There could be various design options/channels to indicate to the UE a beam (i.e., a TCI state) for the transmission/reception of a PDCCH or a PDSCH. As described in the U.S. Patent Application 17/584,239, in one example, a MAC CE could be used to indicate to the UE a beam (i.e., a TCI state and/or a TCI state ID) for the transmission/reception of a PDCCH or a PDSCH. In another example, a DCI could be used to indicate to the UE a beam (i.e., a TCI state and/or a TCI state ID) for the transmission/reception of a PDCCH or a PDSCH. In such examples: (1) a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment; (2) an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant; and (3) a custom/purpose designed DCI format could be used to indicate to the UE a beam (i.e., a TCI state and/or a TCI state ID) for the transmission/reception of a PDCCH or a PDSCH.

Rel-17 introduced the unified TCI framework, where a unified or master or main TCI state is signaled to the UE. The unified or master or main TCI state can be one of: (1) in case of joint TCI state indication, wherein a same beam is used for DL and UL channels, a joint TCI state that can be used at least for UE-dedicated DL channels and UE-dedicated UL channels; (2) in case of separate TCI state indication, wherein different beams are used for DL and UL channels, a DL TCI state can be used at least for UE-dedicated DL channels; and (3) in case of separate TCI state indication, wherein different beams are used for DL and UL channels, a UL TCI state can be used at least for UE-dedicated UL channels.

The unified (master or main) TCI state is TCI state of UE-dedicated reception on PDSCH/PDCCH or dynamic-grant/configured-grant based PUSCH and all of dedicated PUCCH resources.

In the present disclosure, the TCI state/beam indication for the PDCCH(s)/PDSCH(s)/PUSCH(s)/PUCCH(s) repetition in a multi-TRP system is discussed under the Rel. 17 unified TCI framework, wherein one or more DL/UL TCI states could be separately/jointly indicated in various channels such as MAC CE and/or DCI (e.g., DCI format 1_1 or 1_2 with or without DL assignment). The UE could transmit the same PDCCH(s)/PDSCH(s)/PUSCH(s)/PUCCH(s) to different TRPs in the multi-TRP system using different time domain resources and/or different frequency domain resources and/or different spatial domain filters.

As illustrated in FIGURE 9, an example of MAC CE based Rel. 17 unified TCI state/beam indication for the multi-TRP operation is presented. As illustrated in FIGURE 9, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more MAC CE commands to indicate one or more beam(s) (i.e., the Rel. 17 unified TCI state(s)) for UE-dedicated reception on PDSCH/PDCCH or dynamic-grant/configured-grant based PUSCH and all of dedicated PUCCH resources associated with one or more TRPs in a multi-TRP system. For instance, the UE could receive from the network a single MAC CE command for beam indication to indicate M>1 Rel. 17 unified TCI states/beams (e.g., M>1 joint DL and UL TCI states or M>1 separate UL TCI states) for the same PUSCH(s)/PUCCH(s) transmitted to/associated with different TRPs in the multi-TRP system.

The MAC CE for beam indication could include at least a Rel. 17 unified TCI state ID. As discussed above, the Rel.17 unified TCI state corresponding to the TCI state ID could be at least one of: (1) a DL TCI state; (2) an UL TCI state; (3) a joint DL and UL TCI state; and (4) separate DL TCI state and UL TCI state.

The association/mapping between the TCI state(s)/beam(s) indicated in the MAC CE command(s) and the TRPs in the multi-TRP system needs to be specified. There could be various means to associate/map the TCI state(s)/beam(s) indicated in the MAC CE command(s) for beam indication and the TRPs in the multi-TRP system.

For N>1 TCI states/beams indication in a single MAC CE command for beam indication, following examples can be provided.

In one example, the UE could be explicitly indicated by the network, e.g., via higher layer RRC signaling and/or MAC CE command and/or dynamic DCI signaling, the exact association/mapping between the TCI states/beams indicated in the MAC CE command for beam indication and the TRPs in the multi-TRP system. For example, the UE could be first higher layer configured by the network a list/set/pool of TRP-specific ID/index values such as PCIs. The first TCI state and/or the TCI state with the lowest TCI state ID value indicated in the MAC CE command for beam indication could correspond to the first entry/TRP in the list/set/pool of TRP-specific ID/index values, the second TCI state and/or the TCI state with the second lowest TCI state ID value indicated in the MAC CE command for beam indication could correspond to the second entry/TRP in the list/set/pool of TRP-specific ID/index values, and so on, and the last TCI state and/or the TCI state with the highest TCI state ID value indicated in the MAC CE command for beam indication could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The first TCI state and/or the TCI state with the lowest TCI state ID value indicated in the MAC CE command for beam indication could correspond to the first MAC CE(s)/bitmap(s) activated TRP-specific ID/index value, the second TCI state and/or the TCI state with the second lowest TCI state ID value indicated in the MAC CE command for beam indication could correspond to the second MAC CE(s)/bitmap(s) activated TRP-specific ID/index value, and so on, and the last TCI state and/or the TCI state with the highest TCI state ID value indicated in the MAC CE command for beam indication could correspond to the last MAC CE(s)/bitmap(s) activated TRP-specific ID/index value. Other exact association/mapping relationships between the TCI states/beams indicated in the MAC CE command for beam indication and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the TCI states/beams indicated in the MAC CE command for beam indication and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the first TCI state and/or the TCI state with the lowest TCI state ID value indicated in the MAC CE command for beam indication could correspond to the TRP with the lowest/lowest MAC CE activated TRP-specific ID/index value such as the lowest PCI value and/or the first TRP (e.g., TRP #1), the second TCI state and/or the TCI state with the second lowest TCI state ID value indicated in the MAC CE command for beam indication could correspond to the TRP with the second lowest/second lowest MAC CE activated TRP-specific ID/index value such as the second lowest PCI value and/or the second TRP (e.g., TRP #2), and so on, and the last TCI state and/or the TCI state with the highest TCI state ID value indicated in the MAC CE command for beam indication could correspond to the TRP with the highest/highest MAC CE activated TRP-specific ID/index value such as the highest PCI value and/or the last TRP (e.g., TRP #N).

For another example, the first TCI state and/or the TCI state with the lowest TCI state ID value indicated in the MAC CE command for beam indication could correspond to the TRP with the highest/highest MAC CE activated TRP-specific ID/index value such as the highest PCI value and/or the last TRP (e.g., TRP #N), the second TCI state and/or the TCI state with the second lowest TCI state ID value indicated in the MAC CE command for beam indication could correspond to the TRP with the second highest/second highest MAC CE activated TRP-specific ID/index value such as the second highest PCI value and/or the second last TRP (e.g., TRP #N-1), and so on, and the last TCI state and/or the TCI state with the highest TCI state ID value indicated in the MAC CE command for beam indication could correspond to the TRP with the lowest/lowest MAC CE activated TRP-specific ID/index value such as the lowest PCI value and/or the first TRP (e.g., TRP #1). Other implicit indication methods of the association/mapping between the N>1 TCI states/beams indicated in the MAC CE command for beam indication and the TRPs in the multi-TRP system are also possible.

In yet another example, the UE could be explicitly indicated by the network, e.g., via higher layer RRC signaling and/or MAC CE command and/or dynamic DCI signaling, the exact association/mapping between the TCI states/beams indicated in the MAC CE command for beam indication and the CORESETPoolIndex values. For example, the UE could be first higher layer configured by the network a list/set/pool of CORESETPoolIndex values - e.g., a set of two CORESETPoolIndex values 0 and 1. The first TCI state and/or the TCI state with the lowest TCI state ID value indicated in the MAC CE command for beam indication could correspond to the first entry/CORESETPoolIndex value in the list/set/pool of CORESETPoolIndex values, the second TCI state and/or the TCI state with the second lowest TCI state ID value indicated in the MAC CE command for beam indication could correspond to the second entry/CORESETPoolIndex value in the list/set/pool of CORESETPoolIndex values, and so on, and the last TCI state and/or the TCI state with the highest TCI state ID value indicated in the MAC CE command for beam indication could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first TCI state and/or the TCI state with the lowest TCI state ID value indicated in the MAC CE command for beam indication could correspond to the first MAC CE(s)/bitmap(s) activated CORESETPoolIndex value, the second TCI state and/or the TCI state with the second lowest TCI state ID value indicated in the MAC CE command for beam indication could correspond to the second MAC CE(s)/bitmap(s) activated CORESETPoolIndex value, and so on, and the last TCI state and/or the TCI state with the highest TCI state ID value indicated in the MAC CE command for beam indication could correspond to the last MAC CE(s)/bitmap(s) activated CORESETPoolIndex value. Other exact association/mapping relationships between the TCI states/beams indicated in the MAC CE command for beam indication and the CORESETPoolIndex values and/or the corresponding indication method(s), e.g., via higher layer RRC signaling and/or MAC CE command and/or dynamic DCI signaling, are also possible.

In yet another example, the UE could be implicitly indicated by the network the association/mapping between the TCI states/beams indicated in the MAC CE command for beam indication and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values. For example, the first TCI state and/or the TCI state with the lowest TCI state ID value indicated in the MAC CE command for beam indication could correspond to the lowest/lowest MAC CE activated CORESETPoolIndex value such as "0," the second TCI state and/or the TCI state with the second lowest TCI state ID value indicated in the MAC CE command for beam indication could correspond to the second lowest/second lowest MAC CE activated CORESETPoolIndex value such as "1," and so on, and the last TCI state and/or the TCI state with the highest TCI state ID value indicated in the MAC CE command for beam indication could correspond to the highest/highest MAC CE activated CORESETPoolIndex value such as "N-1." For another example, the first TCI state and/or the TCI state with the lowest TCI state ID value indicated in the MAC CE command for beam indication could correspond to the highest/highest MAC CE activated CORESETPoolIndex value such as "N-1," the second TCI state and/or the TCI state with the second lowest TCI state ID value indicated in the MAC CE command for beam indication could correspond to the second highest/second highest MAC CE activated CORESETPoolIndex value such as "N-2," and so on, and the last TCI state and/or the TCI state with the highest TCI state ID value indicated in the MAC CE command for beam indication could correspond to the lowest/lowest MAC CE activated CORESETPoolIndex value such as "0." Other implicit indication methods of the association/mapping between the N>1 TCI states/beams indicated in the MAC CE command for beam indication and the CORESETPoolIndex values are also possible.

In yet another example, a TCI state, e.g., the higher layer parameter TCI-State, indicated in the MAC CE command for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

In yet another example, the MAC CE command for Rel. 17 unified TCI state/beam indication could include/-comprise/incorporate at least one (e.g., N>1 or M>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n-th or m-th TCI state (e.g., the n-th or m-th joint DL and UL TCI state or separate DL TCI state or separate UL TCI state) among/within the indicated N>1 or M>1 Rel. 17 unified TCI states could be associated with the n-th or m-th entity ID/index indicated in the same MAC CE command for Rel. 17 unified TCI state/beam indication, where n∈{1,..., N} or m∈{1,..., M}.

For instance, the first TCI state in the indicated N=2 or M=2 Rel. 17 unified TCI states could be associated with the first entity ID/index such as the first PCI, CORESETPoolIndex value 0 or CORESETGroupIndex value 0 indicated in the same MAC CE command for Rel. 17 unified TCI state/beam indication, and the second TCI state in the indicated N=2 or M=2 Rel. 17 unified TCI states could be associated with the second entity ID/index such as the second PCI, CORESETPoolIndex value 1 or CORESETGroupIndex value 1 indicated in the same MAC CE command for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

For a list/set/pool of N>1 MAC CE commands for beam indication with each MAC CE command indicating a single TCI state/beam; a unique entity ID/index could be included/incorporated in each MAC CE command for beam indication.

In one example, the UE could be explicitly indicated by the network, e.g., via higher layer RRC signaling and/or MAC CE command and/or dynamic DCI signaling, the exact association/mapping between the MAC CE commands for beam indication (and therefore, the TCI states/beams indicated therein) and the TRPs in the multi-TRP system. For example, the UE could be first higher layer configured by the network a list/set/pool of TRP-specific ID/index values such as PCIs. The first MAC CE command for beam indication in the list/set/pool of N>1 MAC CE commands for beam indication and/or the MAC CE command for beam indication indicating the lowest entity ID/index value and/or the MAC CE command

46

for beam indication indicating the TCI state with the lowest TCI state ID value could correspond to the first entry/TRP in the list/set/pool of TRP-specific ID/index values, the second MAC CE command for beam indication in the list/set/pool of N>1 MAC CE commands for beam indication and/or the MAC CE command for beam indication indicating the second lowest entity ID/index value and/or the MAC CE command for beam indication indicating the TCI state with the second lowest TCI state ID value could correspond to the second entry/TRP in the list/set/pool of TRP-specific ID/index values, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The first MAC CE command for beam indication in the list/set/pool of N>1 MAC CE commands for beam indication and/or the MAC CE command indicating the lowest entity ID/index value and/or the MAC CE command for beam indication indicating the TCI state with the lowest TCI state ID value could correspond to the first MAC CE(s)/bitmap(s) activated TRP-specific ID/index values, the second MAC CE command for beam indication in the list/set/pool of N>1 MAC CE commands for beam indication and/or the MAC CE command for beam indication indicting the second lowest entity ID/index value and/or the MAC CE command for beam indication indicating the TCI state with the second lowest TCI state ID value could correspond to the second MAC CE(s)/bitmap(s) activated TRP-specific ID/index values, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last MAC CE(s)/bitmap(s) activated TRP-specific ID/index values. Other exact association/mapping relationships between the MAC CE commands for beam indication (and therefore, the TCI states/beams indicated therein) and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the MAC CE commands for beam indication (and therefore, the TCI states/beams indicated therein) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the TRP with the lowest/lowest MAC CE activated TRP-specific ID/index value such as the lowest PCI value and/or the first TRP (e.g., TRP #1), the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the TRP with the second lowest/second lowest MAC CE activated TRP-specific ID/index value such as the second lowest PCI value and/or the second TRP (e.g., TRP #2), and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value could correspond to the TRP with the highest/highest MAC CE activated TRP-specific ID/index value such as the highest PCI value and/or the last TRP (e.g., TRP #N).

For another example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the TRP with the highest/highest MAC CE activated TRP-specific ID/index value such as the highest PCI value and/or the last TRP (e.g., TRP #N), the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the TRP with the second highest/second highest MAC CE activated TRP-specific ID/index value such as the second highest PCI value and/or the second last TRP (e.g., TRP #N-1), and so on, and the last MAC CE command for beam indication in the list/set/pool of N>1 MAC CE commands for beam

indication and/or the MAC CE command for beam indication indicating the highest entity ID/index value and/or the MAC CE command for beam indication indicating the highest TCI state ID value indicated could correspond to the TRP with the lowest/lowest MAC CE activated TRP-specific ID/index value such as the lowest PCI value and/or the first TRP (e.g., TRP #1). Other implicit indication methods of the association/mapping between the N>1 MAC CE commands for beam indication (and therefore, the TCI states/beams indicated therein) and the TRPs in the multi-TRP system are also possible.

In yet another example, the UE could be explicitly indicated by the network, e.g., via higher layer RRC signaling and/or MAC CE command and/or dynamic DCI signaling, the exact association/mapping between the MAC CE commands for beam indication (and therefore, the TCI states/beams indicated therein) and the TRPs in the multi-TRP system. For example, the UE could be first higher layer configured by the network a list/set/pool of CORESETPoolIndex values - e.g., a set of two CORESETPoolIndex values 0 and 1. The first MAC CE command for beam indication in the list/set/pool of N>1 MAC CE commands for beam indication and/or the MAC CE command for beam indication indicating the lowest entity ID/index value and/or the MAC CE command for beam indication indicating the TCI state with the lowest TCI state ID value could correspond to the first entry/CORESETPoolIndex value in the list/set/pool of CORESETPoolIndex values, the second MAC CE command for beam indication in the list/set/pool of N>1 MAC CE commands for beam indication and/or the MAC CE command for beam indication indicating the second lowest entity ID/index value and/or the MAC CE command for beam indication indicating the TCI state with the second lowest TCI state ID value could correspond to the second entry/CORESETPoolIndex value in the list/set/pool of CORESETPoolIndex values, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first MAC CE command for beam indication in the list/set/pool of N>1 MAC CE commands for beam indication and/or the MAC CE command for beam indication indicating the lowest entity ID/index value and/or the MAC CE command for beam indication indicating the TCI state with the lowest TCI state ID value could correspond to the first MAC CE(s)/bitmap(s) activated CORESETPoolIndex value, the second MAC CE command for beam indication in the list/set/pool of N>1 MAC CE commands for beam indication and/or the MAC CE command for beam indication indicating the second lowest entity ID/index value and/or the MAC CE command for beam indication indicating the TCI state with the second lowest TCI state ID value could correspond to the second MAC CE(s)/bitmap(s) activated CORESETPoolIndex value, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last MAC CE(s)/bitmap(s) activated CORESETPoolIndex value. Other exact association/mapping relationships between the MAC CE commands for beam indication (and therefore, the TCI states/beams indicated therein) and the CORESETPoolIndex values and/or the corresponding indication method(s), e.g., via higher layer RRC signaling and/or MAC CE command and/or dynamic DCI signaling, are also possible.

In yet another example, the UE could be implicitly indicated by the network the association/mapping between the MAC CE commands for beam indication (and therefore, the TCI states/beams indicated therein) and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values. For example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the lowest/lowest MAC CE activated CORESETPoolIndex value, the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the second lowest/second lowest MAC CE activated CORESETPoolIndex value, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value could correspond to the highest/highest MAC CE activated CORESETPoolIndex value.

For another example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the highest/highest MAC CE activated CORESETPoolIndex value, the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the second highest/second highest MAC CE activated CORESETPoolIndex value, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value indicated could correspond to the lowest/lowest MAC CE activated CORESETPoolIndex value. Other implicit indication methods of the association/mapping between the N>1 MAC CE commands for beam indication (and therefore, the TCI states/beams indicated therein) and the CORESETPoolIndex values are also possible.

In yet another example, a MAC CE command for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value. The MAC CE command for beam indication may indicate/update the corresponding TCI state(s) for the TRP(s) associated with the same ID/index value, e.g., the CORESETPoolIndex value, as that indicated in the MAC CE command for beam indication.

In yet another example, a MAC CE command for Rel. 17 unified TCI state/beam indication could include/comprise/incorporate at least one (e.g., N>1 or M>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n-th or m-th TCI state (e.g., the n-th or m-th joint DL and UL TCI state or separate DL TCI state or separate UL TCI state) among/within the indicated N>1 or M>1 Rel. 17 unified TCI states could be associated with the n-th or m-th entity ID/index indicated in the same MAC CE command for Rel. 17 unified TCI state/beam indication, where $n \in \{1,..., N\}$ or $m \in \{1,..., M\}$.

For instance, the first TCI state in the indicated N=2 or M=2 Rel. 17 unified TCI states could be associated with the first entity ID/index such as the first PCI, CORESETPoolIndex value 0 or CORESETGroupIndex value 0 indicated in the same MAC CE command for Rel. 17 unified TCI state/beam indication, and the second TCI state in the indicated N=2 or M=2 Rel. 17 unified TCI states could be associated with the second entity ID/index such as the second PCI, CORESETPoolIndex value 1 or CORESETGroupIndex value 1 indicated in the same MAC CE command for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

In FIGURE 10, an example of DCI based Rel. 17 unified TCI state/beam indication for the multi-TRP operation is presented. As illustrated in FIGURE 10, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more DCIs (e.g., DCI format 1_1 or 1_2 with or without DL assignment) to indicate one or more beam(s) (i.e., the Rel. 17 unified TCI state(s)) for UE-dedicated reception on PDSCH/PDCCH or dynamic-grant/configured-grant based PUSCH and all of dedicated PUCCH resources associated with one or more TRPs in a multi-TRP system. For instance, the UE could receive from the network a single DCI (e.g., DCI format 1_1 or 1_2 with or without DL assignment) to indicate M>1 Rel. 17 unified TCI states/beams (e.g., M>1 joint DL and UL TCI states or M>1 separate UL TCI states) for the same PUSCH(s)/PUCCH(s) transmitted to/associated with different TRPs in the multi-TRP system. As described above, a DCI used to indicate to the UE a beam (i.e., a TCI state and/or a TCI state ID) for the transmission/reception of a PDCCH or a PDSCH could be at least one of the following examples.

In one example, a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment.

In another example, an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant.

In yet another example, a custom/purpose designed DCI format could be used to indicate to the UE a beam (i.e., a TCI state and/or a TCI state ID) for the transmission/reception of a PDCCH or a PDSCH.

Furthermore, the Rel. 17 unified TCI state indicated in the DCI for beam indication could be at least one of: (1) a DL TCI state; (2) an UL TCI state; (3) a joint DL and UL TCI state; and (4) separate DL TCI state and UL TCI state.

The association/mapping between the TCI state(s)/beam(s) indicated in the DCI(s) and the TRPs in the multi-TRP system needs to be specified. There could be various means to associate/map the TCI state(s)/beam(s) indicated in the DCI(s) and the TRPs in the multi-TRP system.

For N>1 TCI states/beams indication in a single DCI, following examples can be provided.

In one example, the UE could be explicitly indicated by the network, e.g., via higher layer RRC signaling and/or MAC CE command and/or dynamic DCI signaling, the exact association/mapping between the TCI states/beams indicated in the DCI and the TRPs in the multi-TRP system. For example, the UE could be first higher layer configured by the network a list/set/pool of TRP-specific ID/index values such as PCIs. The first TCI state and/or the TCI state with the lowest TCI state ID value indicated in the DCI for beam indication could correspond to the first entry/TRP in the list/set/pool of TRP-specific ID/index values, the second TCI state and/or the TCI state with the second lowest TCI state ID value indicated in the DCI for beam indication could correspond to the second entry/TRP in the list/set/pool of TRP-specific ID/index values, and so on, and the last TCI state and/or the TCI state with the highest TCI state ID value indicated in the DCI for beam indication could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The first TCI state and/or the TCI state with the lowest TCI state ID value indicated in the DCI for beam indication could correspond to the first MAC CE(s)/bitmap(s) activated TRP-specific ID/index value, the second TCI state and/or the TCI state with the second lowest TCI state ID value indicated in the DCI for beam indication could correspond to the second MAC CE(s)/bitmap(s) activated TRP-specific ID/index value, and so on, and the last TCI state and/or the TCI state with the highest TCI state ID value indicated in the DCI for beam indication could correspond to the last MAC CE(s)/bitmap(s) activated TRP-specific ID/index value. Other exact association/mapping relationships between the TCI states/beams indicated in the DCI for beam indication and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the TCI states/beams indicated in the DCI for beam indication and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the first TCI state and/or the TCI state with the lowest TCI state ID value indicated in the DCI for beam indication could correspond to the TRP with the lowest/lowest MAC CE activated TRP-specific ID/index value such as the lowest PCI value and/or the first TRP (e.g., TRP #1), the second TCI state and/or the TCI state with the second lowest TCI state ID value indicated in the DCI for beam indication could correspond to the TRP with the second lowest/second lowest MAC CE activated TRP-specific ID/index value such as the second lowest PCI value and/or the second TRP (e.g., TRP #2), and so on, and the last TCI state and/or the TCI state with the highest TCI state ID value indicated in the DCI for beam indication could correspond to the TRP with the highest/highest MAC CE activated TRP-specific ID/index value such as the highest PCI value and/or the last TRP (e.g., TRP #N).

For another example, the first TCI state and/or the TCI state with the lowest TCI state ID value indicated in the DCI for beam indication could correspond to the TRP with the highest/highest MAC CE activated TRP-specific ID/index value such as PCI value, the second TCI state and/or the TCI state with the second lowest TCI state ID value indicated in the DCI for beam indication could correspond to the TRP with the second highest/second highest MAC CE activated TRP-specific ID/index value such as PCI value, and so on, and the last TCI state and/or the TCI state with the highest TCI state ID value indicated in the DCI for beam indication could correspond to the TRP with the lowest/lowest MAC CE activated TRP-specific ID/index value such as PCI value. Other implicit indication methods of the association/mapping between the N>1 TCI states/beams indicated in the DCI and the TRPs in the multi-TRP system are also possible.

In yet another example, the UE could be explicitly indicated by the network, e.g., via higher layer RRC signaling and/or MAC CE command and/or dynamic DCI signaling, the exact association/mapping between the TCI states/beams indicated in the DCI for beam indication and the CORESETPoolIndex values. For example, the UE could be first higher layer configured by the network a list/set/pool of CORESETPoolIndex values - e.g., a set of two CORESETPoolIndex values 0 and 1. The first TCI state and/or the TCI state with the lowest TCI state ID value indicated in the DCI for beam indication could correspond to the first entry/CORESETPoolIndex value in the list/set/pool of CORESETPoolIndex values, the second TCI state and/or the TCI state with the second lowest TCI state ID value indicated in the DCI for beam indication could correspond to the second entry/CORESETPoolIndex value in the list/set/pool of CORESETPoolIndex values, and so on, and the last TCI state and/or the TCI state with the highest TCI state ID value indicated in the DCI for beam indication could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first TCI state and/or the TCI state with the lowest TCI state ID value indicated in the DCI for beam indication could correspond to the first MAC CE(s)/bitmap(s) activated CORESETPoolIndex value, the second TCI state and/or the TCI state with the second lowest TCI state ID value indicated in the DCI for beam indication could correspond to the second MAC CE(s)/bitmap(s) activated CORESETPoolIndex value, and so on, and the last TCI state and/or the TCI state with the highest TCI state ID value indicated in the DCI for beam indication could correspond to the last MAC CE(s)/bitmap(s) activated CORESETPoolIndex value. Other exact association/mapping relationships between the TCI states/beams indicated in the DCI for beam indication and the CORESETPoolIndex values and/or the corresponding indication method(s), e.g., via higher layer RRC signaling and/or MAC CE command and/or dynamic DCI signaling, are also possible.

In yet another example, the UE could be implicitly indicated by the network the association/mapping between the TCI states/beams indicated in the DCI for beam indication and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values. For example, the first TCI state and/or the TCI state with the lowest TCI state ID value indicated in the DCI for beam indication could correspond to the lowest/lowest MAC CE activated CORESETPoolIndex value such as "0," the second TCI state and/or the TCI state with the second lowest TCI state ID value indicated in the DCI for beam indication could correspond to the second lowest/second lowest MAC CE activated CORESETPoolIndex value such as "1," and so on, and the last TCI state and/or the TCI state with the highest TCI state ID value indicated in the DCI for beam indication could correspond to the highest/highest MAC CE activated CORESETPoolIndex value such as "N-1."

For another example, the first TCI state and/or the TCI state with the lowest TCI state ID value indicated in the DCI for beam indication could correspond to the highest/highest MAC CE activated CORESETPoolIndex value, the second TCI state and/or the TCI state with the second lowest TCI state ID value indicated in the DCI for beam indication could correspond to the second highest/second highest MAC CE activated CORESETPoolIndex value, and so on, and the last TCI state and/or the TCI state with the highest TCI state ID value indicated in the DCI for beam indication could correspond to the lowest/lowest MAC CE activated CORESETPoolIndex value. Other implicit indication methods of the association/mapping between the N>1 TCI states/beams indicated in the DCI for beam indication and the CORESETPoolIndex values are also possible.

In yet another example, a TCI state, e.g., the higher layer parameter TCI-State, indicated in the DCI for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

In yet another example, the DCI (e.g., DCI format 1_1 or 1_2 with or without DL assignment) for Rel. 17 unified TCI state/beam indication could include/comprise/incorporate at least one (e.g., N>1 or M>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n-th or m-th TCI state (e.g., the n-th or m-th joint DL and UL TCI state or separate DL TCI state or separate UL TCI state) among/within the indicated N>1 or M>1 Rel. 17 unified TCI states could be associated with the n-th or m-th entity ID/index indicated in the same DCI (e.g., DCI format 1_1 or 1_2 with or without DL assignment) for Rel. 17 unified TCI state/beam indication, where n∈{1,..., N} or m∈{1,..., M}. For instance, the first TCI state in the indicated N=2 or M=2 Rel. 17 unified TCI states could be associated with the first entity ID/index such as the first PCI, CORESETPoolIndex value 0 or CORESETGroupIndex value 0 indicated in the same DCI (e.g., DCI format 1_1 or 1_2 with or without DL assignment) for Rel. 17 unified TCI state/beam indication, and the second TCI state in the indicated N=2 or M=2 Rel. 17 unified TCI states could be associated with the second entity ID/index such as the second PCI, CORESETPoolIndex value 1 or CORESETGroupIndex value 1 indicated in the same DCI (e.g., DCI format 1_1 or 1_2 with or without DL assignment) for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

For N>1 DCIs with each DCI indicating a single TCI state/beam, following examples can be provided.

In one example, the UE could be explicitly indicated by the network, e.g., via higher layer RRC signaling and/or MAC CE command and/or dynamic DCI signaling, the exact association/mapping between the DCIs for beam indication (and therefore, the TCI states/beams indicated therein) and the TRPs in the multi-TRP system. For example, the UE could be first higher layer configured by the network a list/set/pool of TRP-specific ID/index values such as PCIs. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first entry/TRP in the list/set/pool of TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second entry/TRP in the list/set/pool of TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first MAC CE(s)/bitmap(s) activated TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second MAC CE(s)/bitmap(s) activated TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last MAC CE(s)/bitmap(s) activated TRP-specific ID/index values. Other exact association/mapping relationships between the DCIs for beam indication (and therefore, the TCI states/beams indicated therein) and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the DCIs for beam indication (and therefore, the TCI states/beams indicated therein) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the lowest/lowest MAC CE activated TRP-specific ID/index value such as the lowest PCI value and/or the first TRP (e.g., TRP #1), the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second lowest/second lowest MAC CE activated TRP-specific ID/index value such as the second lowest PCI value and/or the second TRP (e.g., TRP #2), and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the highest/highest MAC CE activated TRP-specific ID/index value such as the highest PCI value and/or the last TRP (e.g., TRP #N).

For another example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the highest/highest MAC CE activated TRP-specific ID/index value such as PCI value, the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second highest/second highest MAC CE activated TRP-specific ID/index value such as PCI value, and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the lowest/lowest MAC CE activated TRP-specific ID/index value such as PCI value. Other implicit indication methods of the association/mapping between the N>1 DCIs for beam indication (and therefore, the TCI states/beams indicated therein) and the TRPs in the multi-TRP system are also possible.

In yet another example, a DCI for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value. The DCI for beam indication may indicate/update the corresponding TCI state(s) for the TRP(s) associated with the same ID/index value, e.g., the CORESETPoolIndex value, as that indicated in the DCI for beam indication.

In yet another example, a DCI (e.g., DCI format 1_1 or 1_2 with or without DL assignment) for Rel. 17 unified TCI state/beam indication could include/comprise/incorporate at least one (e.g., N>1 or M>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n-th or m-th TCI state (e.g., the n-th or m-th joint DL and UL TCI state or separate DL TCI state or separate UL TCI state) among/within the indicated N>1 or M>1 Rel. 17 unified TCI states could be associated with the n-th or m-th entity ID/index indicated in the same DCI (e.g., DCI format 1_1 or 1_2 with or without DL assignment) for Rel. 17 unified TCI state/beam indication, where n∈{1,..., N} or m∈{1,..., M}. For instance, the first TCI state in the indicated N=2 or M=2 Rel. 17 unified TCI states could be associated with the first entity ID/index such as the first PCI, CORESETPoolIndex value 0 or CORESETGroupIndex value 0 indicated in the same DCI (e.g., DCI format 1_1 or 1_2 with or without DL assignment) for Rel. 17 unified TCI state/beam indication, and the second TCI state in the indicated N=2 or M=2 Rel. 17 unified TCI states could be associated with the second entity ID/index such as the second PCI, CORESETPoolIndex value 1 or CORESETGroupIndex value 1 indicated in the same DCI (e.g., DCI format 1_1 or 1_2 with or without DL assignment) for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

In FIGURE 11, an example of Rel. 17 DCI based TCI state/beam indication (with MAC CE activated TCI states) for the multi-TRP operation is presented. As illustrated in FIGURE 11, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more MAC CE activation commands activating one or more TCI states from the higher layer configured list/pool of TCI states, e.g., up to eight TCI states could be activated by a MAC CE activation command. The UE could receive from the network one or more DCIs to indicate one or more beam(s) (i.e., the Rel. 17 unified TCI state(s)) from the MAC CE activated TCI state(s)/beam(s) for UE-dedicated reception on PDSCH/PDCCH or dynamic-grant/configured-grant based PUSCH and all of dedicated PUCCH resources associated with one or more TRPs in a multi-TRP system. For instance, the UE could receive from the network a single DCI to indicate M'>1 Rel. 17 unified TCI states/beams (e.g., M'>1 joint DL and UL TCI states or M'>1 separate UL TCI states) from the MAC CE activated TCI states/beams for the same PUSCH(s)/PUCCH(s) transmitted to/associated with different TRPs in the multi-TRP system.

As described above, a DCI used to indicate to the UE a beam (i.e., a TCI state and/or a TCI state ID) for the transmission/reception of a PDCCH or a PDSCH could be at least one of the following examples.

In one example, a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment.

In another example, an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant.

In yet another example, a custom/purpose designed DCI format could be used to indicate to the UE a beam (i.e., a TCI state and/or a TCI state ID) for the transmission/reception of a PDCCH or a PDSCH.

Furthermore, the Rel. 17 unified TCI state indicated in the DCI for beam indication could be at least one of: (1) a DL TCI state; (2) an UL TCI state; (3) A joint DL and UL TCI state; and 4) separate DL TCI state and UL TCI state.

The association/mapping between the DCI(s) indicated TCI state(s)/beam(s) - from the MAC CE activated TCI state(s)/beam(s) - and the TRPs in the multi-TRP system needs to be specified. There could be various means to associate/map the DCI(s) indicated TCI state(s)/beam(s) - from the MAC CE activated TCI state(s)/beam(s) - and the TRPs in the multi-TRP system.

For N'>1 TCI states/beams indication in a single DCI, following examples can be provided.

In one example, the UE could be explicitly indicated by the network, e.g., via higher layer RRC signaling and/or MAC CE command and/or dynamic DCI signaling, the exact association/mapping between the DCI indicated TCI states/beams (selected from the MAC CE activated TCI states/beams) and the TRPs in the multi-TRP system. For example, the UE could be first higher layer configured by the network a list/set/pool of TRP-specific ID/index values such as PCIs. The first TCI state and/or the TCI state with the lowest TCI state ID value indicated in the DCI for beam indication could correspond to the first entry/TRP in the list/set/pool of TRP-specific ID/index values, the second TCI state and/or the TCI state with the second lowest TCI state ID value indicated in the DCI for beam indication could correspond to the second entry/TRP in the list/set/pool of TRP-specific ID/index values, and so on, and the last TCI state and/or the TCI state with the highest TCI state ID value indicated in the DCI for beam indication could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The first TCI state and/or the TCI state with the lowest TCI state ID value indicated in the DCI for beam indication could correspond to the first MAC CE(s)/bitmap(s) activated TRP-specific ID/index value, the second TCI state and/or the TCI state with the second lowest TCI state ID value indicated in the DCI for beam indication could correspond to the second MAC CE(s)/bitmap(s) activated TRP-specific ID/index value, and so on, and the last TCI state and/or the TCI state with the highest TCI state ID value indicated in the DCI for beam indication could correspond to the last MAC CE(s)/bitmap(s) activated TRP-specific ID/index value. Other exact association/mapping relationships between the DCI indicated TCI states/beams (selected from the MAC CE activated TCI states/beams) and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the DCI indicated TCI states/beams (selected from the MAC CE activated TCI states/beams) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the first TCI state and/or the TCI state with the lowest TCI state ID value indicated in the DCI for beam indication could correspond to the TRP with the lowest/lowest MAC CE activated TRP-specific ID/index value such as the lowest PCI value and/or the first TRP (e.g., TRP #1), the second TCI state and/or the TCI state with the second lowest TCI state ID value indicated in the DCI for beam indication could correspond to the TRP with the second lowest/second lowest MAC CE activated TRP-specific ID/index value such as the second lowest PCI value and/or the second TRP (e.g., TRP #2), and so on, and the last TCI state and/or the TCI state with the highest TCI state ID value indicated in the DCI for beam indication could correspond to the TRP with the highest/highest MAC CE activated TRP-specific ID/index value such as the highest PCI value and/or the last TRP (e.g., TRP #N').

For another example, the first TCI state and/or the TCI state with the lowest TCI state ID value indicated in the DCI for beam indication could correspond to the TRP with the highest/highest MAC CE activated TRP-specific ID/index value such as the highest PCI value and/or the last TRP (e.g., TRP #N'), the second TCI state and/or the TCI state with the second lowest TCI state ID value indicated in the DCI for beam indication could correspond to the TRP with the second highest/second highest MAC CE activated TRP-specific ID/index value such as the second highest PCI value and/or the second last TRP (e.g., TRP #N'-1), and so on, and the last TCI state and/or the TCI state with the highest TCI state ID value indicated in the DCI for beam indication could correspond to the TRP with the lowest/lowest MAC CE activated TRP-specific ID/index value such as the lowest PCI value and/or the first TRP (e.g., TRP #1). Other implicit indication methods of the association/mapping between the N'>1 DCI indicated TCI states/beams (selected from the MAC CE activated TCI states/beams) and the TRPs in the multi-TRP system are also possible.

In yet another example, the UE could be explicitly indicated by the network, e.g., via higher layer RRC signaling and/or MAC CE command and/or dynamic DCI signaling, the exact association/mapping between the DCI indicated TCI states/beams (selected from the MAC CE activated TCI states/beams) and the CORESETPoolIndex values. For example, the UE could be first higher layer configured by the network a list/set/pool of CORESETPoolIndex values - e.g., a set of two CORESETPoolIndex values 0 and 1. The first TCI state and/or the TCI state with the lowest TCI state ID value indicated in the DCI for beam indication could correspond to the first entry/CORESETPoolIndex value in the list/set/pool of CORESETPoolIndex values, the second TCI state and/or the TCI state with the second lowest TCI state ID value indicated in the DCI for beam indication could correspond to the second entry/CORESETPoolIndex value in the list/set/pool of CORESETPoolIndex values, and so on, and the last TCI state and/or the TCI state with the highest TCI state ID value indicated in the DCI for beam indication could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first TCI state and/or the TCI state with the lowest TCI state ID value indicated in the DCI for beam indication could correspond to the first MAC CE(s)/bitmap(s) activated CORESETPoolIndex value, the second TCI state and/or the TCI state with the second lowest TCI state ID value indicated in the DCI for beam indication could correspond to the second MAC CE(s)/bitmap(s) activated CORESETPoolIndex value, and so on, and the last TCI state and/or the TCI state with the highest TCI state ID value indicated in the DCI for beam indication could correspond to the last MAC CE(s)/bitmap(s) activated CORESETPoolIndex value. Other exact association/mapping relationships between the DCI indicated TCI states/beams (selected from the MAC CE activated TCI states/beams) and the CORESETPoolIndex values and/or the corresponding indication method(s), e.g., via higher layer RRC signaling and/or MAC CE command and/or dynamic DCI signaling, are also possible.

In yet another example, the UE could be implicitly indicated by the network the association/mapping between the DCI indicated TCI states/beams (selected from the MAC CE activated TCI states/beams) and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values. For example, the first TCI state and/or the TCI state with the lowest TCI state ID value indicated in the DCI for beam indication could correspond to the lowest/lowest MAC CE activated CORESETPoolIndex value such as "0," the second TCI state and/or the TCI state with the second lowest TCI state ID value indicated in the DCI for beam indication could correspond to the second lowest/second lowest MAC CE activated CORESETPoolIndex value such as "1," and so on, and the last TCI state and/or the TCI state with the highest TCI state ID value indicated in the DCI for beam indication could correspond to the highest/highest MAC CE activated CORESETPoolIndex value such as "N-1."

For another example, the first TCI state and/or the TCI state with the lowest TCI state ID value indicated in the DCI for beam indication could correspond to the highest/highest MAC CE activated CORESETPoolIndex value, the second TCI state and/or the TCI state with the second lowest TCI state ID value indicated in the DCI for beam indication could correspond to the second highest/second highest MAC CE activated CORESETPoolIndex value, and so on, and the last TCI state and/or the TCI state with the highest TCI state ID value indicated in the DCI for beam indication could correspond to the lowest/lowest MAC CE activated CORESETPoolIndex value. Other implicit indication methods of the association/mapping between the N'>1 DCI indicated TCI states/beams (selected from the MAC CE activated TCI states/beams) and the CORESETPoolIndex values are also possible.

In yet another example, a TCI state (selected from the MAC CE activated TCI states/beams), e.g., the higher layer parameter TCI-State, indicated in the DCI for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

In yet another example, the DCI (e.g., DCI format 1_1 or 1_2 with or without DL assignment) for Rel. 17 unified TCI state/beam indication could include/comprise/incorporate at least one (e.g., N'>1 or M'>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n'-th or m'-th TCI state (e.g., the n'-th or m'-th joint DL and UL TCI state or separate DL TCI state or separate UL TCI state) among/within the indicated N'>1 or M'>1 Rel. 17 unified TCI states (selected from the MAC CE activated TCI states/beams) could be associated with the n'-th or m'-th entity ID/index indicated in the same DCI (e.g., DCI format 1_1 or 1_2 with or without DL assignment) for Rel. 17 unified TCI state/beam indication, where $n' \in \{1,..., N'\}$ or $m' \in \{1,..., M'\}$.

For instance, the first TCI state in the indicated N'=2 or M'=2 Rel. 17 unified TCI states selected from the MAC CE activated TCI states could be associated with the first entity ID/index such as the first PCI, CORESETPoolIndex value 0 or CORESETGroupIndex value 0 indicated in the same DCI (e.g., DCI format 1_1 or 1_2 with or without DL assignment) for Rel. 17 unified TCI state/beam indication, and the second TCI state in the indicated N'=2 or M'=2 Rel. 17 unified TCI states selected from the MAC CE activated TCI states could be associated with the second entity ID/index such as the second PCI, CORESETPoolIndex value 1 or CORESETGroupIndex value 1 indicated in the same DCI (e.g., DCI format 1_1 or 1_2 with or without DL assignment) for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

For N'>1 DCIs with each DCI indicating a single TCI state/beam, following examples can be provided.

In one example, the UE could be explicitly indicated by the network, e.g., via higher layer RRC signaling and/or MAC CE command and/or dynamic DCI signaling, the exact association/mapping between the DCIs for beam indication (and therefore, the TCI states/beams indicated therein - selected from the MAC CE activated TCI states/beams) and the TRPs in the multi-TRP system. For example, the UE could be first higher layer configured by the network a list/set/pool of TRP-specific ID/index values such as PCIs. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first entry/TRP in the list/set/pool of TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second entry/TRP in the list/set/pool of TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first MAC CE(s)/bitmap(s) activated TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second MAC CE(s)/bitmap(s) activated TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last MAC CE(s)/bitmap(s) activated TRP-specific ID/index values. Other exact association/mapping relationships between the DCIs for beam indication (and therefore, the TCI states/beams indicated therein - selected from the MAC CE activated TCI states/beams) and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the DCIs for beam indication (and therefore, the TCI states/beams indicated therein - selected from the MAC CE activated TCI states/beams) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the lowest/lowest MAC CE activated TRP-specific ID/index value such as the lowest PCI value and/or the first TRP (e.g., TRP #1), the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second lowest/second lowest MAC CE activated TRP-specific ID/index value such as the second lowest PCI value and/or the second TRP (e.g., TRP #2), and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the highest/highest MAC CE activated TRP-specific ID/index value such as the highest PCI value and/or the last TRP (e.g., TRP #N').

For another example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the highest/highest MAC CE activated TRP-specific ID/index value such as the highest PCI value and/or the last TRP (e.g., TRP #N'), the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second highest/second highest MAC CE activated TRP-specific ID/index value such as the second highest PCI value and/or the second last TRP (e.g., TRP #N'-1), and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the lowest/lowest MAC CE activated TRP-specific ID/index value such as the lowest PCI value and/or the first TRP (e.g., TRP #1). Other implicit indication methods of the association/mapping between the N'>1 DCIs for beam indication (and therefore, the TCI states/beams indicated therein - selected from the MAC CE activated TCI states/beams) and the TRPs in the multi-TRP system are also possible.

In yet another example, a DCI for beam indication (indicating the TCI state(s)/beam(s) selected from the MAC CE activated TCI states/beams) could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value. The DCI for beam indication (indicating the TCI state(s)/beam(s) selected from the MAC CE activated TCI states/beams) may indicate/update the corresponding TCI state(s) for the TRP(s) associated with the same ID/index value, e.g., the CORESETPoolIndex value, as that indicated in the DCI for beam indication (indicating the TCI state(s)/beam(s) selected from the MAC CE activated TCI states/beams).

In yet another example, a DCI (e.g., DCI format 1_1 or 1_2 with or without DL assignment) for Rel. 17 unified TCI state/beam indication could include/comprise/incorporate at least one (e.g., N'>1 or M'>1) entity ID/index. In the present disclosure, an entity ID/index could correspond to a PCI value, a PCI index corresponding/pointing to a PCI in a list/set/pool of PCIs higher layer configured to the UE, a CORESETPoolIndex value, a CORESETGroupIndex value, a TRP-specific ID/index, a TRP-specific higher layer signaling index/ID, a one-bit flag indicating either the serving cell PCI or a PCI different from the serving cell PCI, a multi-bit indicator with each state of the indicator indicating a PCI, or etc. For this case, the n'-th or m'-th TCI state (e.g., the n'-th or m'-th joint DL and UL TCI state or separate DL TCI state or separate UL TCI state) among/within the indicated N'>1 or M'>1 Rel. 17 unified TCI states (selected from the MAC CE activated TCI states/beams) could be associated with the n'-th or m'-th entity ID/index indicated in the same DCI (e.g., DCI format 1_1 or 1_2 with or without DL assignment) for Rel. 17 unified TCI state/beam indication, where $n' \in \{1,..., N'\}$ or $m' \in \{1,..., M'\}$.

For instance, the first TCI state in the indicated N'=2 or M'=2 Rel. 17 unified TCI states selected from the MAC CE activated TCI states could be associated with the first entity ID/index such as the first PCI, CORESETPoolIndex value 0 or CORESETGroupIndex value 0 indicated in the same DCI (e.g., DCI format 1_1 or 1_2 with or without DL assignment) for Rel. 17 unified TCI state/beam indication, and the second TCI state in the indicated N'=2 or M'=2 Rel. 17 unified TCI states selected from the MAC CE activated TCI states could be associated with the second entity ID/index such as the second PCI, CORESETPoolIndex value 1 or CORESETGroupIndex value 1 indicated in the same DCI (e.g., DCI format 1_1 or 1_2 with or without DL assignment) for Rel. 17 unified TCI state/beam indication. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

As discussed above, a UE could receive from the network a DCI format (e.g., DCI format 1_1 or 1_2 with or without DL assignment) indicating one or more Rel. 17 unified TCI states for various DL/UL channels and/or signals such as UE-dedicated reception on PDSCH/PDCCH or dynamic-grant/configured-grant based PUSCH and all of dedicated PUCCH resources. For instance, the DCI format could include one or more "Transmission Configuration Indication" fields. A "Transmission Configuration Indication" field could carry a codepoint from the codepoints activated by MAC CE, and the codepoint could indicate at least one of: M>1 joint DL and UL Rel. 17 unified TCI states or M>1 separate UL Rel. 17 unified TCI states or a first combination of M>1 joint DL and UL Rel. 17 unified TCI states and separate UL Rel. 17 unified TCI states or N>1 separate DL Rel. 17 unified TCI states or a second combination of N>1 joint DL and UL Rel. 17 unified TCI states and separate DL Rel. 17 unified TCI states or a third combination of N>1 joint DL and UL Rel. 17 unified TCI states, separate DL Rel. 17 unified TCI states and separate UL Rel. 17 unified TCI states.

In a single-DCI based multi-TRP system, one or more CORESETs could be configured with a same group index, denoted by CORESETGroupIndex. The CORESETs configured with the same CORESETGroupIndex value could be associated with the same TRP in a multi-TRP system. In the present disclosure, the UE could be provided by PDCCH-Config multiple (e.g., two) CORESETGroupIndex values (e.g., 0 and 1). The association of a CORESET and a CORESETGroupIndex value could be via indicating the explicit CORESETGroupIndex value (e.g., either 0 or 1) in the parameter, e.g., the higher layer parameter ControlResourceSet, configuring the CORESET.

Furthermore, DM-RS antenna ports for PDCCH receptions in one or more CORESETs (associated with a CORESETGroupIndex value if configured/applicable) may or may not be quasi co-located with the reference signal provided in the corresponding indicated Rel. 17 unified TCI state - e.g., one out of the indicated M>1 joint DL and UL TCI states or M>1 separate UL TCI states or N>1 separate DL TCI states - associated with the same CORESETGroupIndex value if configured/applicable. In the present disclosure, the control resource set(s) - associated with a CORESETGroupIndex value if configured/applicable - whose QCL assumption(s) follow that provided in the corresponding indicated Rel. 17 unified TCI state or sharing the corresponding indicated Rel. 17 unified TCI state associated with the same CORESETGroupIndex value is referred to as Type-1 CORESET(s), while the control resource set(s) - associated with a CORESETGroupIndex value if configured/applicable - whose QCL assumption(s) does not follow that provided in the corresponding indicated Rel. 17 unified TCI state or not sharing the corresponding indicated Rel. 17 unified TCI state associated with the same CORESETGroupIndex value is referred to as Type-2 CORESET(s).

Furthermore, a Type-1 CORESET or a Type-2 CORESET could correspond to one or more of: (1) "CORESET A": a CORESET other than CORESET with index 0 (or CORESET #0) associated with only UE-dedicated PDCCH reception(s) in a CC, comprising, e.g., CORESET(s) associated with USS set(s) or Type3-PDCCH CSS set(s); (2) "CORESET B": a CORESET other than CORESET #0 associated with only non-UE-dedicated PDCCH reception(s) in a CC, comprising, e.g., CORESET(s) associated with all types of CSS sets such as Type0/0A/1/2/3-PDCCH CSS sets or CSS sets other than Type3-PDCCH CSS set(s) such as Type0/0A/1/2-PDCCH CSS sets; (3) "CORESET C": a CORESET other than CORESET #0 associated with both UE-dedicated and non-UE-dedicated PDCCH receptions in a CC; and (4) CORESET #0, i.e., CORESET with index 0.

The UE could be provided/configured with "useIndicatedR17TCIState" for one or more of the Type-1 CORESETs. For instance, the UE could be provided/configured with "useIndicatedR17TCIstate" set to "enabled" in the parameter, e.g., the higher layer parameter ControlResourceSet, that configures the corresponding Type-1 CORESET(s).

In the present disclosure, in the single-DCI based multi-TRP system, the indicated Rel. 17 unified TCI state n or m ($n \in \{1,..., N\}$ and $m \in \{1,..., M\}$) could correspond to the n-th joint DL and UL TCI state or the m-th separate UL TCI state or the n-th separate DL TCI state or the m-th TCI state in the first combination of TCI states or the n-th TCI state in the second combination of TCI states or the n-th TCI state in the third combination of TCI states or the joint DL and UL TCI state with the n-th lowest or highest TCI state ID or the separate UL TCI state with the m-th lowest or highest TCI state ID or the separate DL TCI state with the n-th lowest or highest TCI state ID or the TCI state in the first combination of TCI states with the m-th lowest or highest TCI state ID or the TCI state in the second combination of TCI states with the n-th lowest or highest TCI state ID or the TCI state in the third combination of TCI states with the n-th lowest or highest TCI state ID, among the N>1 or M>1 Rel. 17 unified TCI states, indicated via the MAC CE or DCI (e.g., DCI format 1_1 or 1_2 with or without DL assignment) based signaling.

In one embodiment, various TCI state/beam indication methods for various PDCCH, PDSCH, PUCCH and/or PUSCH repetition schemes under the Rel. 17 unified TCI framework are discussed.

For the indicated Rel. 17 unified TCI state n (or m), wherein $n \in \{1,..., N\}$ and $m \in \{1,..., M\}$, following examples can be provided.

For PDCCH repetition wherein a PDCCH reception includes N>1 (or M>1) PDCCH candidates from N>1 (or M>1) linked search space sets configured with a higher layer parameter searchSpaceLinking, or for PDCCH non-repetition based transmission scheme(s), following examples can be provided.

In one example, DM-RS ports for receiving PDCCH candidate n (or m) or the n-th (m-th) PDCCH candidate - among/from the N>1 (or M>1) PDCCH candidates associated with search space sets configured with searchSpaceLinking - in a CORESET (e.g., a n-th or m-th CORESET or the CORESET with the n-th or m-th lowest/highest ID) could be quasi co-located with the reference signal provided in the corresponding indicated Rel. 17 unified TCI state n (or m) - e.g., among/from the indicated M>1 joint DL and UL TCI states or M>1 separate UL TCI states or N>1 separate DL TCI states. For N=2 or M=2, DM-RS ports for receiving the first PDCCH candidate - within/from the two PDCCH candidates associated with the two search space sets configured with searchSpaceLinking - in a first CORESET or the CORESET with lower (or higher) ID could be quasi co-located with the reference signal provided in the first indicated Rel. 17 unified TCI state - e.g., within/from the indicated

M=2 joint DL and UL TCI states or M=2 separate UL TCI states or N=2 separate DL TCI states, and DM-RS ports for receiving the second PDCCH candidate - within/from the two PDCCH candidates associated with the two search space sets configured with searchSpaceLinking - in a second CORESET or the CORESET with higher (or lower) ID could be quasi co-located with the reference signal provided in the second indicated Rel. 17 unified TCI state - e.g., within/from the indicated M=2 joint DL and UL TCI states or M=2 separate UL TCI states or N=2 separate DL TCI states.

In another example, DM-RS ports for receiving PDCCH candidate n (or m) or the n-th (m-th) PDCCH candidate - among/from the N>1 (or M>1) PDCCH candidates associated with search space sets configured with searchSpaceLinking - in a Type-1 CORESET (e.g., a n-th or m-th Type-1 CORESET or the Type-1 CORESET with the n-th or m-th lowest/highest ID) could be quasi co-located with the reference signal provided in the corresponding indicated Rel. 17 unified TCI state n (or m) - e.g., among/from the indicated M>1 joint DL and UL TCI states or M>1 separate UL TCI states or N>1 separate DL TCI states. For N=2 or M=2, DM-RS ports for receiving the first PDCCH candidate - within/from the two PDCCH candidates associated with the two search space sets configured with searchSpaceLinking - in a first Type-1 CORESET or the Type-1 CORESET with lower (or higher) ID could be quasi co-located with the reference signal provided in the first indicated Rel. 17 unified TCI state - e.g., within/from the indicated M=2 joint DL and UL TCI states or M=2 separate UL TCI states or N=2 separate DL TCI states, and DM-RS ports for receiving the second PDCCH candidate - within/from the two PDCCH candidates associated with the two search space sets configured with searchSpaceLinking - in a second Type-1 CORESET or the Type-1 CORESET with higher (or lower) ID could be quasi co-located with the reference signal provided in the second indicated Rel. 17 unified TCI state - e.g., within/from the indicated M=2 joint DL and UL TCI states or M=2 separate UL TCI states or N=2 separate DL TCI states.

In yet another example, if one or more CORESETGroupIndex values are configured, DM-RS ports for receiving PDCCH candidate n (or m) or the n-th (m-th) PDCCH candidate - among/from the N>1 (or M>1) PDCCH candidates associated with search space sets configured with searchSpaceLinking - in a CORESET (e.g., a n-th or m-th CORESET or the CORESET with the n-th or m-th lowest/highest ID) associated with CORESETGroupIndex value n - 1 (or m - 1) could be quasi co-located with the reference signal provided in the corresponding indicated Rel. 17 unified TCI state n (or m) - e.g., among/from the indicated M>1 joint DL and UL TCI states or M>1 separate UL TCI states or N>1 separate DL TCI states - associated with CORESETGroupIndex value n - 1 (or m - 1). For N=2 or M=2, DM-RS ports for receiving the first PDCCH candidate - within/from the two PDCCH candidates associated with the two search space sets configured with search-SpaceLinking - in a first CORESET or the CORESET with lower (or higher) ID associated with CORESETGroupIndex value 0 (or 1) could be quasi co-located with the reference signal provided in the first indicated Rel. 17 unified TCI state - e.g., within/from the indicated M=2 joint DL and UL TCI states or M=2 separate UL TCI states or N=2 separate DL TCI states - associated with CORESETGroupIndex value 0 (or 1), and DM-RS ports for receiving the second PDCCH candidate - within/from the two PDCCH candidates associated with the two search space sets configured with searchSpaceLinking - in a second CORESET or the CORESET with higher (or lower) ID associated with CORESETGroupIndex value 1 (or 0) could be quasi co-located with the reference signal provided in the second indicated Rel. 17 unified TCI state - e.g., within/from the indicated M=2 joint DL and UL TCI states or M=2 separate UL TCI states or N=2 separate DL TCI states - associated with CORESETGroupIndex value 1 (or 0). Or equivalently, if the UE is provided two values of CORESETGroupIndex (i.e., 0 and 1) - e.g., in PDCCH-Config, DM-RS ports for receiving a PDCCH (candidate) in a CORESET associated/configured with value 0 (or 1) of CORESETGroupIndex could be quasi co-located with the reference signal provided in the first indicated TCI state/pair of TCI states - e.g., among the M=2 (or N=2) TCI states/pairs of TCI states indicated by one or more TCI state codepoints in DCI format 1_1 or 1_2 with or without DL assignment, and DM-RS ports for receiving a PDCCH (candidate) in a CORESET associated/configured with value 1 (or 0) of CORESETGroupIndex could be quasi co-located with the reference signal provided in the second indicated TCI state/pair of TCI states - e.g., among the M=2 (or N=2) TCI states/pairs of TCI states indicated by one or more TCI state codepoints in DCI format 1_1 or 1_2 with or without DL assignment. As discussed before in the present disclosure, a value of CORESETGroupIndex could be indicated in the higher layer parameter ControlResourceSet that configures a CORESET.

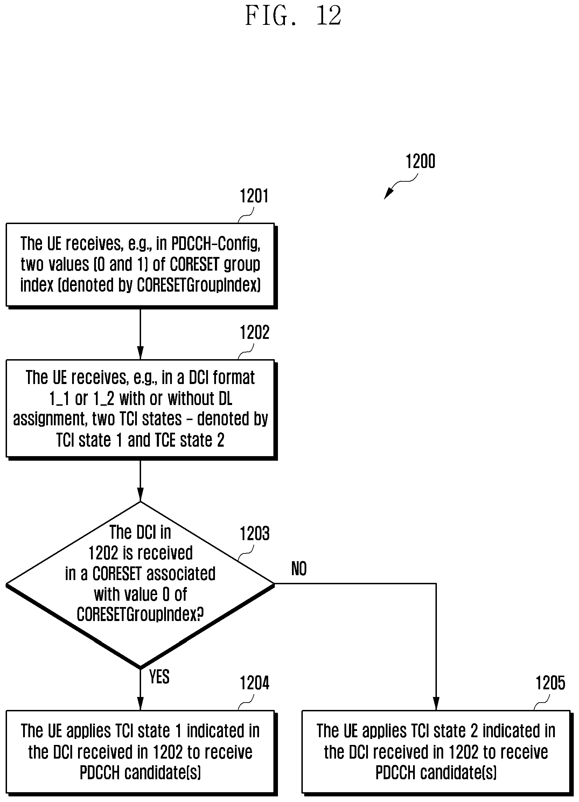

FIGURE 12 illustrates a flowchart of a method 1200 for TCI state(s) indication and association to PDCCH candidate(s) according to embodiments of the present disclosure. The method 1200 as may be performed by a UE (e.g., 111-116 as illustrated in FIGURE 1). An embodiment of the method 1200 shown in FIGURE 12 is for illustration only. One or more of the components illustrated in FIGURE 12 can be implemented in specialized circuitry configured to perform the noted functions or one or more of the components can be implemented by one or more processors executing instructions to perform the noted functions.

In FIGURE 12, an example of the above described signaling flow is provided. In 1201, the UE first receives in PDCCH-Config two values (0 and 1) of CORESETPoolIndex. In 1202, the UE is indicated two TCI states - denoted by TCI state 1 and TCI state 2 - by one or more TCI state codepoints in a DCI format (e.g., DCI format 1_1 or 1_2 with or without DL assignment). In 1203, the UE determines whether the DCI format in 1202 is received in a CORESET associated/configured with value 0 or 1 of CORESETGroupIndex. If the DCI format in 1202 is received in a CORESET associated with value 0 of CORESETGroupIndex, the signaling flow proceeds to 1204, wherein the UE may apply TCI state 1 to receive one or more PDCCH candidates. Otherwise, if the DCI format in 1202 is received in a CORESET associated value 1 of CORESETGroupIndex, the signaling flow goes to 1205, wherein the UE may apply TCI state 2 to receive one or more PDCCH candidates.

In yet another example, if one or more CORESETGroupIndex values are configured, DM-RS ports for receiving PDCCH candidate n (or m) or the n-th (m-th) PDCCH candidate - among/from the N>1 (or M>1) PDCCH candidates associated with search space sets configured with searchSpaceLinking - in a Type-1 CORESET (e.g., a n-th or m-th Type-1 CORESET or the Type-1 CORESET with the n-th or m-th lowest/highest ID) associated with CORESETGroupIndex value n - 1 (or m - 1) could be quasi co-located with the reference signal provided in the corresponding indicated Rel. 17 unified TCI state n (or m) - e.g., among/from the indicated M>1 joint DL and UL TCI states or M>1 separate UL TCI states or N>1 separate DL TCI states - associated with CORESETGroupIndex value n - 1 (or m - 1). For N=2 or M=2, DM-RS ports for receiving the first PDCCH candidate - within/from the two PDCCH candidates associated with the two search space sets configured with searchSpaceLinking - in a first Type-1 CORESET or the Type-1 CORESET with lower (or higher) ID associated with CORESETGroupIndex value 0 (or 1) could be quasi co-located with the reference signal provided in the first indicated Rel. 17 unified TCI state - e.g., within/from the indicated M=2 joint DL and UL TCI states or M=2 separate UL TCI states or N=2 separate DL TCI states - associated with CORESETGroupIndex value 0 (or 1), and DM-RS ports for receiving the second PDCCH candidate - within/from the two PDCCH candidates associated with the two search space sets configured with searchSpaceLinking - in a second Type-1 CORESET or the Type-1 CORESET with higher (or lower) ID associated with CORESETGroupIndex value 1 (or 0) could be quasi co-located with the reference signal provided in the second indicated Rel. 17 unified TCI state - e.g., within/from the indicated M=2 joint DL and UL TCI states or M=2 separate UL TCI states or N=2 separate DL TCI states - associated with CORESETGroupIndex value 1 (or 0). Or equivalently, if the UE is provided two values of CORESETGroupIndex (i.e., 0 and 1) - e.g., in PDCCH-Config, DM-RS ports for receiving a PDCCH (candidate) in a Type-1 CORESET associated/configured with value 0 (or 1) of CORESETGroupIndex could be quasi co-located with the reference signal provided in the first indicated TCI state/pair of TCI states - e.g., among the M=2 (or N=2) TCI states/pairs of TCI states indicated by one or more TCI state codepoints in DCI format 1_1 or 1_2 with or without DL assignment, and DM-RS ports for receiving a PDCCH (candidate) in a Type-1 CORESET associated/configured with value 1 (or 0) of CORESETGroupIndex could be quasi co-located with the reference signal provided in the second indicated TCI state/pair of TCI states - e.g., among the M=2 (or N=2) TCI states/pairs of TCI states indicated by one or more TCI state codepoints in DCI format 1_1 or 1_2 with or without DL assignment. As discussed before in the present disclosure, a value of CORESETPoolIndex could be indicated in the higher layer parameter ControlResourceSet that configures a (Type-1) CORESET.

In the present disclosure, PDCCH candidate n (or m) or the n-th (or m-th) PDCCH candidate ends later in time than PDCCH candidate n - 1 (or m - 1) or the (n - 1)-th (or (m - 1)-th) PDCCH candidate. For N=2 or M=2, the first PDCCH candidate ends later in time than the first PDCCH candidate.

For PDSCH repetition wherein a UE could be configured/provided by the network higher layer parameter repetitionScheme set to one of "fdmSchemeA," "fdmSchemeB," and "tdmSchemeA" or higher layer parameter repetitionNumber in PDSCH-TimeDomainResourceAllocation, or for PDSCH non-repetition based transmission scheme(s), following examples can be provided.

When a UE is configured/provided by the network the higher layer parameter repetitionScheme set to "fdmSchemeA" and N>1 (or M>1) Rel. 17 unified TCI states in a "Transmission Configuration Indication" field indicated by a DCI format (e.g., DCI format 1_1 or 1_2 with or without DL assignment) or MAC CE, the UE may receive a single PDSCH transmission occasion of the transport block (TB) with each indicated Rel. 17 unified TCI state associated to a non-overlapping frequency domain resource allocation. A UE may assume that precoding granularity is $P_{BWP}$ resource blocks in the frequency domain, where $P_{BWP}$ can be equal to one of the values among {2, 4, wideband}. For N=2 or M=2, following example can be provided.

In one example, if $P_{BWP}$ is configured/determined as "wideband," the first $\lceil n_{PRB}/2 \rceil$ PRBs are assigned to the first indicated Rel. 17 unified TCI state, and the remaining $\lfloor n_{PRB}/2 \rfloor$ PRBs are assigned to the second indicated Rel. 17 unified TCI state, where $n_{PRB}$ is the total number of allocated PRBs for the UE. If $P_{BWP}$ is configured/determined as one of the values among {2, 4}, even precoding resource block groups (PRGs) within the allocated frequency domain resources are assigned to the first indicated Rel. 17 unified TCI state, and odd PRGs within the allocated frequency domain resources are assigned to the second indicated Rel. 17 unified TCI state, wherein the PRGs are numbered continuously in increasing order with the first PRG index equal to 0.

*489In another example, if $P_{BWP}$ is configured/determined as "wideband," the first $\lceil n_{PRB}/2 \rceil$ PRBs associated with/scheduled by PDCCH(s) in Type-1 CORESET(s) are assigned to the first indicated Rel. 17 unified TCI state, and the remaining $\lfloor n_{PRB}/2 \rfloor$ PRBs associated with/scheduled by PDCCH(s) in Type-1

CORESET(s) are assigned to the second indicated Rel. 17 unified TCI state, where $n_{PRB}$ is the total number of allocated PRBs for the UE. If $P_{BWP}$ is configured/determined as one of the values among {2, 4}, even precoding resource block groups (PRGs) associated with/scheduled by PDCCH(s) in Type-1 CORESET(s) within the allocated frequency domain resources are assigned to the first indicated Rel. 17 unified TCI state, and odd PRGs associated with/scheduled by PDCCH(s) in Type-1 CORESET(s) within the allocated frequency domain resources are assigned to the second indicated Rel. 17 unified TCI state, wherein the PRGs are numbered continuously in increasing order with the first PRG index equal to 0.

In yet another example, if one or more CORESETGroupIndex values are configured, if $P_{BWP}$ is configured/determined as "wideband," the first $\lceil n_{PRB}/2 \rceil$ PRBs associated with/scheduled by PDCCH(s) in CORESET(s) associated with CORESETGroupIndex value 0 (or 1) are assigned to the first indicated Rel. 17 unified TCI state associated with CORESETGroupIndex value 0 (or 1), and the remaining $\lfloor n_{PRB}/2 \rfloor$ PRBs associated with/scheduled by PDCCH(s) in CORESET(s) associated with CORESETGroupIndex value 1 (or 0) are assigned to the second indicated Rel. 17 unified TCI state associated with CORESETGroupIndex value 1 (or 0), where $n_{PRB}$ is the total number of allocated PRBs for the UE. If $P_{BWP}$ is configured/determined as one of the values among {2, 4}, even precoding resource block groups (PRGs) associated with/scheduled by PDCCH(s) in CORESET(s) associated with CORESETGroupIndex value 0 (or 1) within the allocated frequency domain resources are assigned to the first indicated Rel. 17 unified TCI state associated with CORESETGroupIndex value 0 (or 1), and odd PRGs associated with/scheduled by PDCCH(s) in CORESET(s) associated with CORESETGroupIndex value 1 (or 0) within the allocated frequency domain resources are assigned to the second indicated Rel. 17 unified TCI state associated with CORESETGroupIndex value 1 (or 0), wherein the PRGs are numbered continuously in increasing order with the first PRG index equal to 0.

In yet another example, if one or more CORESETGroupIndex values are configured, if $P_{BWP}$ is configured/determined as "wideband," the first $\lfloor n_{PRB}/2 \rfloor$ PRBs associated with/scheduled by PDCCH(s) in Type-1 CORESET(s) associated with CORESETGroupIndex value 0 (or 1) are assigned to the first indicated Rel. 17 unified TCI state associated with CORESETGroupIndex value 0 (or 1), and the remaining $\lceil n_{PRB}/2 \rceil$ PRBs associated with/scheduled by PDCCH(s) in Type-1 CORESET(s) associated with CORESETGroupIndex value 1 (or 0) are assigned to the second indicated Rel. 17 unified TCI state associated with CORESETGroupIndex value 1 (or 0), where $n_{PRB}$ is the total number of allocated PRBs for the UE. If $P_{BWP}$ is configured/determined as one of the values among {2, 4}, even precoding resource block groups (PRGs) associated with/scheduled by PDCCH(s) in Type-1 CORESET(s) associated with CORESETGroupIndex value 0 (or 1) within the allocated frequency domain resources are assigned to the first indicated Rel. 17 unified TCI state associated with CORESETGroupIndex value 0 (or 1), and odd PRGs associated with/scheduled by PDCCH(s) in Type-1 CORESET(s) associated with CORESETGroupIndex value 1 (or 0) within the allocated frequency domain resources are assigned to the second indicated Rel. 17 unified TCI state associated with CORESETGroupIndex value 1 (or 0), wherein the PRGs are numbered continuously in increasing order with the first PRG index equal to 0.

When a UE is configured/provided by the network the higher layer parameter repetitionScheme set to "fdmSchemeB" and N>1 (or M>1) Rel. 17 unified TCI states in a "Transmission Configuration Indication" field indicated by a DCI format (e.g., DCI format 1_1 or 1_2 with or without DL assignment) or MAC CE, the UE may receive two PDSCH transmission occasions of the same TB with each indicated Rel. 17 unified TCI state associated to a PDSCH transmission occasion which has non-overlapping frequency domain resource allocation with respect to the other PDSCH transmission occasion. A UE may assume that precoding granularity is $P_{BWP}$ resource blocks in the frequency domain, where $P_{BWP}$ can be equal to one of the values among {2, 4, wideband}. For N=2 or M=2, following examples can be provided.

In one example, if $P_{BWP}$ is configured/determined as "wideband," the first $\lfloor n_{PRB}/2 \rfloor$ PRBs are assigned to the first indicated Rel. 17 unified TCI state, and the remaining $\lceil n_{PRB}/2 \rceil$ PRBs are assigned to the second indicated Rel. 17 unified TCI state, where $n_{PRB}$ is the total number of allocated PRBs for the UE. If $P_{BWP}$ is configured/determined as one of the values among {2, 4}, even precoding resource block groups (PRGs) within the allocated frequency domain resources are assigned to the first indicated Rel. 17 unified TCI state, and odd PRGs within the allocated frequency domain resources are assigned to the second indicated Rel. 17 unified TCI state, wherein the PRGs are numbered continuously in increasing order with the first PRG index equal to 0.

*494In another example, if $P_{BWP}$ is configured/determined as "wideband," the first $\lfloor n_{PRB}/2 \rfloor$ PRBs associated with/scheduled by PDCCH(s) in Type-1 CORESET(s) are assigned to the first indicated Rel. 17 unified TCI state, and the remaining $\lceil n_{PRB}/2 \rceil$ PRBs associated with/scheduled by PDCCH(s) in Type-1 CORESET(s) are assigned to the second indicated Rel. 17 unified TCI state, where $n_{PRB}$ is the total number of allocated PRBs for the UE. If $P_{BWP}$ is configured/determined as one of the values among {2, 4}, even precoding resource block groups (PRGs) associated with/scheduled by PDCCH(s) in Type-1 CORESET(s) within the allocated frequency domain resources are assigned to the first indicated Rel. 17 unified TCI state, and odd PRGs associated with/scheduled by PDCCH(s) in Type-1 CORESET(s) within the allocated frequency domain resources are assigned to the second indicated Rel. 17 unified TCI state, wherein the PRGs are numbered continuously in increasing order with the first PRG index equal to 0.

In yet another example, if one or more CORESETGroupIndex values are configured, if $P_{BWP}$ is configured/determined as "wideband," the first $\lfloor n_{PRB}/2 \rfloor$ PRBs associated with/scheduled by PDCCH(s) in CORESET(s) associated with CORESETGroupIndex value 0 (or 1) are assigned to the first indicated Rel. 17 unified TCI state associated with CORESETGroupIndex value 0 (or 1), and the remaining $\lceil n_{PRB}/2 \rceil$ PRBs associated with/scheduled by PDCCH(s) in CORESET(s) associated with CORESETGroupIndex value 1 (or 0) are assigned to the second indicated Rel. 17 unified TCI state associated with CORESETGroupIndex value 1 (or 0), where $n_{PRB}$ is the total number of allocated PRBs for the UE. If $P_{BWP}$ is configured/determined as one of the values among {2, 4}, even precoding resource block groups (PRGs) associated with/scheduled by PDCCH(s) in CORESET(s) associated with CORESETGroupIndex value 0 (or 1) within the allocated frequency domain resources are assigned to the first indicated Rel. 17 unified TCI state associated with CORESETGroupIndex value 0 (or 1), and odd PRGs associated with/scheduled by PDCCH(s) in CORESET(s) associated with CORESETGroupIndex value 1 (or 0) within the allocated frequency domain resources are assigned to the second indicated Rel. 17 unified TCI state associated with CORESETGroupIndex value 1 (or 0), wherein the PRGs are numbered continuously in increasing order with the first PRG index equal to 0.

In yet another example, if one or more CORESETGroupIndex values are configured, if $P_{BWP}$ is configured/determined as "wideband," the first $\left\lfloor n_{PRB}/2 \right\rfloor$ PRBs associated with/scheduled by PDCCH(s) in Type-1 CORESET(s) associated with CORESETGroupIndex value 0 (or 1) are assigned to the first indicated Rel. 17 unified TCI state associated with CORESETGroupIndex value 0 (or 1), and the remaining $\left\lceil n_{PRB}/2 \right\rceil$ PRBs associated with/scheduled by PDCCH(s) in Type-1 CORESET(s) associated with CORESETGroupIndex value 1 (or 0) are assigned to the second indicated Rel. 17 unified TCI state associated with CORESETGroupIndex value 1 (or 0), where $n_{PRB}$ is the total number of allocated PRBs for the UE. If $P_{BWP}$ is configured/determined as one of the values among {2, 4}, even precoding resource block groups (PRGs) associated with/scheduled by PDCCH(s) in Type-1 CORESET(s) associated with CORESETGroupIndex value 0 (or 1) within the allocated frequency domain resources are assigned to the first indicated Rel. 17 unified TCI state associated with CORESETGroupIndex value 0 (or 1), and odd PRGs associated with/scheduled by PDCCH(s) in Type-1 CORESET(s) associated with CORESETGroupIndex value 1 (or 0) within the allocated frequency domain resources are assigned to the second indicated Rel. 17 unified TCI state associated with CORESETGroupIndex value 1 (or 0), wherein the PRGs are numbered continuously in increasing order with the first PRG index equal to 0.

When a UE is configured/provided by the network the higher layer parameter repetitionScheme set to "tdmSchemeA" and N>1 (or M>1) Rel. 17 unified TCI states in a "Transmission Configuration Indication" field indicated by a DCI format (e.g., DCI format 1_1 or 1_2 with or without DL assignment) or MAC CE, the UE may receive two PDSCH transmission occasions of the transport block (TB) with each indicated Rel. 17 unified TCI state associated to a PDSCH transmission occasion which has non-overlapping time domain resource allocation with respect to the other PDSCH transmission occasion and both PDSCH transmission occasions may be received within a given slot. For N=2 or M=2, following examples can be provided.

In one example, the first indicated Rel. 17 unified TCI state is applied to the first PDSCH transmission occasion and resource allocation in time domain for the first PDSCH transmission occasion follows those described in the 3GPP TS 38.214. The second indicated Rel. 17 unified TCI state is applied to the second PDSCH transmission occasion, and the second PDSCH transmission occasion may have the same number of symbols as the first PDSCH transmission occasion. If the UE receives from the network, e.g., via MAC CE or DCI (e.g., DCI format 1_1 or 1_2 with or without DL assignment) based signaling through TCI-State_r17, an update for the first Rel. 17 unified TCI state - referred to as the updated first indicated Rel. 17 unified TCI state, the UE could determine the beam applied to the first PDSCH transmission occasion according to one or more of the following examples.

In one example, the first indicated Rel. 17 unified TCI state is applied to the first PDSCH transmission occasion.

In another example, the updated first indicated Rel. 17 unified TCI state is applied to the first PDSCH transmission occasion.

*501 In yet another example, the first indicated Rel. 17 unified TCI state is applied to the first PDSCH transmission occasion if the first PDSCH transmission occasion starts before the updated first indicated Rel. 17 unified TCI state becomes effective in time - e.g., the first symbol or slot of the first PDSCH transmission occasion starts before the updated first indicated Rel. 17 unified TCI state becomes effective in time.

In yet another example, the updated first indicated Rel. 17 unified TCI state is applied to the first PDSCH transmission occasion if the first PDSCH transmission occasion starts at or after the updated first indicated Rel. 17 unified TCI state becomes effective in time - e.g., the first symbol or slot of the first PDSCH transmission occasion starts at or after the updated first indicated Rel. 17 unified TCI state becomes effective in time.

If the UE receives from the network, e.g., via MAC CE or DCI (e.g., DCI format 1_1 or 1_2 with or without DL assignment) based signaling through TCI-State_r17, an update for the second Rel. 17 unified TCI state - referred to as the updated second indicated Rel. 17 unified TCI state, the UE could determine the beam applied to the second PDSCH transmission occasion according to one or more of the following examples.

In one example, the second indicated Rel. 17 unified TCI state is applied to the second PDSCH transmission occasion.

In another example, the updated second indicated Rel. 17 unified TCI state is applied to the second PDSCH transmission occasion.

In yet another example, the second indicated Rel. 17 unified TCI state is applied to the second PDSCH transmission occasion if the second PDSCH transmission occasion starts before the updated second indicated Rel. 17 unified TCI state becomes effective in time - e.g., the first symbol or slot of the second PDSCH transmission occasion starts before the updated second indicated Rel. 17 unified TCI state becomes effective in time.

In yet another example, the updated second indicated Rel. 17 unified TCI state is applied to the second PDSCH transmission occasion if the second PDSCH transmission occasion starts at or after the updated second indicated Rel. 17 unified TCI state becomes effective in time - e.g., the first symbol or slot of the second PDSCH transmission occasion starts at or after the updated second indicated Rel. 17 unified TCI state becomes effective in time.

In another example, the first indicated Rel. 17 unified TCI state is applied to the first PDSCH transmission occasion associated with/scheduled by PDCCH(s) in Type-1 CORESET(s) and resource allocation in time domain for the first PDSCH transmission occasion associated with/scheduled by PDCCH(s) in Type-1 CORESET(s) follows those described in the 3GPP TS 38.214. The second indicated Rel. 17 unified TCI state is applied to the second PDSCH transmission occasion associated with/scheduled by PDCCH(s) in Type-1 CORESET(s), and the second PDSCH transmission occasion associated with/scheduled by PDCCH(s) in Type-1 CORESET(s) may have the same number of symbols as the first PDSCH transmission occasion associated with/scheduled by PDCCH(s) in Type-1 CORESET(s). If the UE receives from the network, e.g., via MAC CE or DCI (e.g., DCI format 1_1 or 1_2 with or without DL assignment) based signaling through TCI-State_r17, an update for the first Rel. 17 unified TCI state - referred to as the updated first indicated Rel. 17 unified TCI state, the UE could determine the beam applied to the first PDSCH transmission occasion associated with/scheduled by PDCCH(s) in Type-1 CORESET(s) according to one or more of the following examples.

In one example, the first indicated Rel. 17 unified TCI state is applied to the first PDSCH transmission occasion associated with/scheduled by PDCCH(s) in Type-1 CORESET(s).

In another example, the updated first indicated Rel. 17 unified TCI state is applied to the first PDSCH transmission occasion associated with/scheduled by PDCCH(s) in Type-1 CORESET(s).

In yet another example, the first indicated Rel. 17 unified TCI state is applied to the first PDSCH transmission occasion associated with/scheduled by PDCCH(s) in Type-1 CORESET(s) if the first PDSCH transmission occasion associated with/scheduled by PDCCH(s) in Type-1 CORESET(s) starts before the updated first indicated Rel. 17 unified TCI state becomes effective in time - e.g., the first symbol or slot of the first PDSCH transmission occasion associated with/scheduled by PDCCH(s) in Type-1 CORESET(s) starts before the updated first indicated Rel. 17 unified TCI state becomes effective in time.

In yet another example, the updated first indicated Rel. 17 unified TCI state is applied to the first PDSCH transmission occasion associated with/scheduled by PDCCH(s) in Type-1 CORESET(s) if the first PDSCH transmission occasion associated with/scheduled by PDCCH(s) in Type-1 CORESET(s) starts at or after the updated first indicated Rel. 17 unified TCI state becomes effective in time - e.g., the first symbol or slot of the first PDSCH transmission occasion associated with/scheduled by PDCCH(s) in Type-1 CORESET(s) starts at or after the updated first indicated Rel. 17 unified TCI state becomes effective in time.

If the UE receives from the network, e.g., via MAC CE or DCI (e.g., DCI format 1_1 or 1_2 with or without DL assignment) based signaling through TCI-State_r17, an update for the second Rel. 17 unified TCI state - referred to as the updated second indicated Rel. 17 unified TCI state, the UE could determine the beam applied to the second PDSCH transmission occasion associated with/scheduled by PDCCH(s) in Type-1 CORESET(s) according to one or more of the following examples.

In one example, the second indicated Rel. 17 unified TCI state is applied to the second PDSCH transmission occasion associated with/scheduled by PDCCH(s) in Type-1 CORESET(s).

In another example, the updated second indicated Rel. 17 unified TCI state is applied to the second PDSCH transmission occasion associated with/scheduled by PDCCH(s) in Type-1 CORESET(s).

In yet another example, the second indicated Rel. 17 unified TCI state is applied to the second PDSCH transmission occasion associated with/scheduled by PDCCH(s) in Type-1 CORESET(s) if the second PDSCH transmission occasion associated with/scheduled by PDCCH(s) in Type-1 CORESET(s) starts before the updated second indicated Rel. 17 unified TCI state becomes effective in time - e.g., the first symbol or slot of the second PDSCH transmission occasion associated with/scheduled by PDCCH(s) in Type-1 CORESET(s) starts before the updated second indicated Rel. 17 unified TCI state becomes effective in time.

In yet another example, the updated second indicated Rel. 17 unified TCI state is applied to the second PDSCH transmission occasion associated with/scheduled by PDCCH(s) in Type-1 CORESET(s) if the second PDSCH transmission occasion associated with/scheduled by PDCCH(s) in Type-1 CORESET(s) starts at or after the updated second indicated Rel. 17 unified TCI state becomes effective in time - e.g., the first symbol or slot of the second PDSCH transmission occasion associated with/scheduled by PDCCH(s) in Type-1 CORESET(s) starts at or after the updated second indicated Rel. 17 unified TCI state becomes effective in time.

In yet another example, if one or more CORESETGroupIndex values are configured, the first indicated Rel. 17 unified TCI state associated with CORESETGroupIndex value 0 (or 1) is applied to the first PDSCH transmission occasion associated with/scheduled by PDCCH(s) in CORESET(s) associated with CORESETGroupIndex value 0 (or 1) and resource allocation in time domain for the first PDSCH transmission occasion associated with/scheduled by PDCCH(s) in CORESET(s) associated with CORESETGroupIndex value 0 (or 1) follows those described in the 3GPP TS 38.214. The second indicated Rel. 17 unified TCI state associated with CORESETGroupIndex value 1 (or 0) is applied to the second PDSCH transmission occasion associated with/scheduled by PDCCH(s) in CORESET(s) associated with CORESETGroupIndex value 1 (or 0), and the second PDSCH transmission occasion associated with/scheduled by PDCCH(s) in CORESET(s) associated with CORESETGroupIndex value 1 (or 0) may have the same number of symbols as the first PDSCH transmission occasion associated with/scheduled by PDCCH(s) in CORESET(s) associated with CORESETGroupIndex value 0 (or 1). If the UE receives from the network, e.g., via MAC CE or DCI (e.g., DCI format 1_1 or 1_2 with or without DL assignment) based signaling through TCI-State_r17, an update for the first Rel. 17 unified TCI state associated with CORESETGroupIndex value 0 (or 1) - referred to as the updated first indicated Rel. 17 unified TCI state associated with CORESETGroupIndex value 0 (or 1), the UE could determine the beam applied to the first PDSCH transmission occasion associated with/scheduled by PDCCH(s) in CORESET(s) associated with CORESETGroupIndex value 0 (or 1) according to one or more of the following examples.

In one example, the first indicated Rel. 17 unified TCI state associated with CORESETGroupIndex value 0 (or 1) is applied to the first PDSCH transmission occasion associated with/scheduled by PDCCH(s) in CORESET(s) associated with CORESETGroupIndex value 0 (or 1).

In another example, the updated first indicated Rel. 17 unified TCI state associated with CORESETGroupIndex value 0 (or 1) is applied to the first PDSCH transmission occasion associated with/scheduled by PDCCH(s) in CORESET(s) associated with CORESETGroupIndex value 0 (or 1).

In yet another example, the first indicated Rel. 17 unified TCI state associated with CORESETGroupIndex value 0 (or 1) is applied to the first PDSCH transmission occasion associated with/scheduled by PDCCH(s) in CORESET(s) associated with CORESETGroupIndex value 0 (or 1) if the first PDSCH transmission occasion associated with/scheduled by PDCCH(s) in CORESET(s) associated with CORESETGroupIndex value 0 (or 1) starts before the updated first indicated Rel. 17 unified TCI state associated with CORESETGroupIndex value 0 (or 1) becomes effective in time - e.g., the first symbol or slot of the first PDSCH transmission occasion associated with/scheduled by PDCCH(s) in CORESET(s) associated with CORESETGroupIndex value 0 (or 1) starts before the updated first indicated Rel. 17 unified TCI state associated with CORESETGroupIndex value 0 (or 1) becomes effective in time.

In yet another example, the updated first indicated Rel. 17 unified TCI state associated with CORESETGroupIndex value 0 (or 1) is applied to the first PDSCH transmission occasion associated with/scheduled by PDCCH(s) in CORESET(s) associated with CORESETGroupIndex value 0 (or 1) if the first PDSCH transmission occasion associated with/scheduled by PDCCH(s) in CORESET(s) associated with CORESETGroupIndex value 0 (or 1) starts at or after the updated first indicated Rel. 17 unified TCI state associated with CORESETGroupIndex value 0 (or 1) becomes effective in time - e.g., the first symbol or slot of the first PDSCH transmission occasion associated with/scheduled by PDCCH(s) in CORESET(s) associated with CORESETGroupIndex value 0 (or 1) starts at or after the updated first indicated Rel. 17 unified TCI state associated with CORESETGroupIndex value 0 (or 1) becomes effective in time.

If the UE receives from the network, e.g., via MAC CE or DCI (e.g., DCI format 1_1 or 1_2 with or without DL assignment) based signaling through TCI-State_r17, an update for the second Rel. 17 unified TCI state associated with CORESETGroupIndex value 1 (or 0) - referred to as the updated second indicated Rel. 17 unified TCI state associated with CORESETGroupIndex value 1 (or 0), the UE could determine the beam applied to the second PDSCH transmission occasion associated with/scheduled by PDCCH(s) in CORESET(s) associated with CORESETGroupIndex value 1 (or 0) according to one or more of the following examples.

In one example, the second indicated Rel. 17 unified TCI state associated with CORESETGroupIndex value 1 (or 0) is applied to the second PDSCH transmission occasion associated with/scheduled by PDCCH(s) in CORESET(s) associated with CORESETGroupIndex value 1 (or 0).

In another example, the updated second indicated Rel. 17 unified TCI state associated with CORESETGroupIndex value 1 (or 0) is applied to the second PDSCH transmission occasion associated with/scheduled by PDCCH(s) in CORESET(s) associated with CORESETGroupIndex value 1 (or 0).

In yet another example, the second indicated Rel. 17 unified TCI state associated with CORESETGroupIndex value 1 (or 0) is applied to the second PDSCH transmission occasion associated with/scheduled by PDCCH(s) in CORESET(s) associated with CORESETGroupIndex value 1 (or 0) if the second PDSCH transmission occasion associated with/scheduled by PDCCH(s) in CORESET(s) associated with CORESETGroupIndex value 1 (or 0) starts before the updated second indicated Rel. 17 unified TCI state associated with CORESETGroupIndex value 1 (or 0) becomes effective in time - e.g., the first symbol or slot of the second PDSCH transmission occasion associated with/scheduled by PDCCH(s) in CORESET(s) associated with CORESETGroupIndex value 1 (or 0) starts before the updated second indicated Rel. 17 unified TCI state associated with CORESETGroupIndex value 1 (or 0) becomes effective in time.

In yet another example, the updated second indicated Rel. 17 unified TCI state associated with CORESETGroupIndex value 1 (or 0) is applied to the second PDSCH transmission occasion associated with/scheduled by PDCCH(s) in CORESET(s) associated with CORESETGroupIndex value 1 (or 0) if the second PDSCH transmission occasion associated with/scheduled by PDCCH(s) in CORESET(s) associated with CORESETGroupIndex value 1 (or 0) starts at or after the updated second indicated Rel. 17 unified TCI state associated with CORESETGroupIndex value 1 (or 0) becomes effective in time - e.g., the first symbol or slot of the second PDSCH transmission occasion associated with/scheduled by PDCCH(s) in CORESET(s) associated with CORESETGroupIndex value 1 (or 0) starts at or after the updated second indicated Rel. 17 unified TCI state associated with CORESETGroupIndex value 1 (or 0) becomes effective in time.

In yet another example, if one or more CORESETGroupIndex values are configured, the first indicated Rel. 17 unified TCI state associated with CORESETGroupIndex value 0 (or 1) is applied to the first PDSCH transmission occasion associated with/scheduled by PDCCH(s) in Type-1 CORESET(s) associated with CORESETGroupIndex value 0 (or 1) and resource allocation in time domain for the first PDSCH transmission occasion associated with/scheduled by PDCCH(s) in Type-1 CORESET(s) associated with CORESETGroupIndex value 0 (or 1) follows those described in the 3GPP TS 38.214. The second indicated Rel. 17 unified TCI state associated with CORESETGroupIndex value 1 (or 0) is applied to the second PDSCH transmission occasion associated with/scheduled by PDCCH(s) in Type-1 CORESET(s) associated with CORESETGroupIndex value 1 (or 0), and the second PDSCH transmission occasion associated with/scheduled by PDCCH(s) in Type-1 CORESET(s) associated with CORESETGroupIndex value 1 (or 0) may have the same number of symbols as the first PDSCH transmission occasion associated with/scheduled by PDCCH(s) in Type-1 CORESET(s) associated with CORESETGroupIndex value 0 (or 1). If the UE receives from the network, e.g., via MAC CE or DCI (e.g., DCI format 1_1 or 1_2 with or without DL assignment) based signaling through TCI-State_r17, an update for the first Rel. 17 unified TCI state associated with CORESETGroupIndex value 0 (or 1) - referred to as the updated first indicated Rel. 17 unified TCI state associated with CORESETGroupIndex value 0 (or 1), the UE could determine the beam applied to the first PDSCH transmission occasion associated with/scheduled by PDCCH(s) in Type-1 CORESET(s) associated with CORESETGroupIndex value 0 (or 1) according to one or more of the following examples.

In one example, the first indicated Rel. 17 unified TCI state associated with CORESETGroupIndex value 0 (or 1) is applied to the first PDSCH transmission occasion associated with/scheduled by PDCCH(s) in Type-1 CORESET(s) associated with CORESETGroupIndex value 0 (or 1).

In another example, the updated first indicated Rel. 17 unified TCI state associated with CORESETGroupIndex value 0 (or 1) is applied to the first PDSCH transmission occasion associated with/scheduled by PDCCH(s) in Type-1 CORESET(s) associated with CORESETGroupIndex value 0 (or 1).

In yet another example, the first indicated Rel. 17 unified TCI state associated with CORESETGroupIndex value 0 (or 1) is applied to the first PDSCH transmission occasion associated with/scheduled by PDCCH(s) in Type-1 CORESET(s) associated with CORESETGroupIndex value 0 (or 1) if the first PDSCH transmission occasion associated with/scheduled by PDCCH(s) in Type-1 CORESET(s) associated with CORESETGroupIndex value 0 (or 1) starts before the updated first indicated Rel. 17 unified TCI state associated with CORESETGroupIndex value 0 (or 1) becomes effective in time - e.g., the first symbol or slot of the first PDSCH transmission occasion associated with/scheduled by PDCCH(s) in Type-1 CORESET(s) associated with CORESETGroupIndex value 0 (or 1) starts before the updated first indicated Rel. 17 unified TCI state associated with CORESETGroupIndex value 0 (or 1) becomes effective in time.

In yet another example, the updated first indicated Rel. 17 unified TCI state associated with CORESETGroupIndex value 0 (or 1) is applied to the first PDSCH transmission occasion associated with/scheduled by PDCCH(s) in Type-1 CORESET(s) associated with CORESETGroupIndex value 0 (or 1) if the first PDSCH transmission occasion associated with/scheduled by PDCCH(s) in Type-1 CORESET(s) associated with CORESETGroupIndex value 0 (or 1) starts at or after the updated first indicated Rel. 17 unified TCI state associated with CORESETGroupIndex value 0 (or 1) becomes effective in time - e.g., the first symbol or slot of the first PDSCH transmission occasion associated with/scheduled by PDCCH(s) in Type-1 CORESET(s) associated with CORESETGroupIndex value 0 (or 1) starts at or after the updated first indicated Rel. 17 unified TCI state associated with CORESETGroupIndex value 0 (or 1) becomes effective in time.

If the UE receives from the network, e.g., via MAC CE or DCI (e.g., DCI format 1_1 or 1_2 with or without DL assignment) based signaling through TCI-State_r17, an update for the second Rel. 17 unified TCI state associated with CORESETGroupIndex value 1 (or 0) - referred to as the updated second indicated Rel. 17 unified TCI state associated with CORESETGroupIndex value 1 (or 0), the UE could determine the beam applied to the second PDSCH transmission occasion associated with/scheduled by PDCCH(s) in Type-1 CORESET(s) associated with CORESETGroupIndex value 1 (or 0) according to one or more of the following examples.

In one example, the second indicated Rel. 17 unified TCI state associated with CORESETGroupIndex value 1 (or 0) is applied to the second PDSCH transmission occasion associated with/scheduled by PDCCH(s) in Type-1 CORESET(s) associated with CORESETGroupIndex value 1 (or 0).

In another example, the updated second indicated Rel. 17 unified TCI state associated with CORESETGroupIndex value 1 (or 0) is applied to the second PDSCH transmission occasion associated with/scheduled by PDCCH(s) in Type-1 CORESET(s) associated with CORESETGroupIndex value 1 (or 0).

In yet another example, the second indicated Rel. 17 unified TCI state associated with CORESETGroupIndex value 1 (or 0) is applied to the second PDSCH transmission occasion associated with/scheduled by PDCCH(s) in Type-1 CORESET(s) associated with CORESETGroupIndex value 1 (or 0) if the second PDSCH transmission occasion associated with/scheduled by PDCCH(s) in Type-1 CORESET(s) associated with CORESETGroupIndex value 1 (or 0) starts before the updated second indicated Rel. 17 unified TCI state associated with CORESETGroupIndex value 1 (or 0) becomes effective in time - e.g., the first symbol or slot of the second PDSCH transmission occasion associated with/scheduled by PDCCH(s) in Type-1 CORESET(s) associated with CORESETGroupIndex value 1 (or 0) starts before the updated second indicated Rel. 17 unified TCI state associated with CORESETGroupIndex value 1 (or 0) becomes effective in time.

In yet another example, the updated second indicated Rel. 17 unified TCI state associated with CORESETGroupIndex value 1 (or 0) is applied to the second PDSCH transmission occasion associated with/scheduled by PDCCH(s) in Type-1 CORESET(s) associated with CORESETGroupIndex value 1 (or 0) if the second PDSCH transmission occasion associated with/scheduled by PDCCH(s) in Type-1 CORESET(s) associated with CORESETGroupIndex value 1 (or 0) starts at or after the updated second indicated Rel. 17 unified TCI state associated with CORESETGroupIndex value 1 (or 0) becomes effective in time - e.g., the first symbol or slot of the second PDSCH transmission occasion associated with/scheduled by PDCCH(s) in Type-1 CORESET(s) associated with CORESETGroupIndex value 1 (or 0) starts at or after the updated second indicated Rel. 17 unified TCI state associated with CORESETGroupIndex value 1 (or 0) becomes effective in time.

In the present disclosure, the time when an indicated Rel. 17 unified TCI state becomes effective could be determined according to beam application time (BAT), which could be one of the following examples.

In one example, the BAT is the time from a PDCCH (start or end of the PDCCH) containing a DCI format that includes the "Transmission Configuration Indication" (beam indication) field to the first symbol (or slot) at which the new beam corresponding to the "Transmission Configuration Indication" is applied.

In one example, the BAT is the time from a channel (start or end of the channel) containing the HARQ-ACK feedback that indicates reception of a DCI format that includes the "Transmission Configuration Indication" (beam indication) field to the first symbol (or slot) at which the new beam corresponding to the "Transmission Configuration Indication" is applied. For example, the BAT could be from the end of UL channel containing HARQ-ACK feedback that indicates reception of a DCI format that includes the "Transmission Configuration Indication" (beam indication) field.

When a UE is configured/provided by the network the higher layer parameter repetitionNumber in PDSCH-TimeDomainResourceAllocation, and N>1 (or M>1) Rel. 17 unified TCI states in a "Transmission Configuration Indication" field indicated by a DCI format (e.g., DCI format 1_1 or 1_2 with or without DL assignment) or MAC CE, the UE may expect to receive multiple slot level PDSCH transmission occasions of the same TB with the indicated N>1 (M>1) Rel. 17 unified TCI states used across multiple PDSCH transmission occasions in the repetitionNumber consecutive slots. For N=2 or M=2, following examples can be provided.

In one example, when the value indicated by repetitionNumber in PDSCH-TimeDomainResourceAllocation equals to two, the first indicated Rel. 17 unified TCI state is applied to the first PDSCH transmission occasion and resource allocation in time domain for the first PDSCH transmission occasion follows those described in the 3GPP TS 38.214; the second indicated Rel. 17 unified TCI state is applied to the second PDSCH transmission occasion. For this case (repetitionNumber=2), if the UE receives from the network, e.g., via MAC CE or DCI (e.g., DCI format 1_1 or 1_2 with or without DL assignment) based signaling through TCI-State_r17, an update for the first or second Rel. 17 unified TCI states - referred to as the updated first or second indicated Rel. 17 unified TCI states, the UE could determine the beam(s) applied to the first or second PDSCH transmission occasions according to examples in the present disclosure. When the value of repetitionNumber in PDSCH-TimeDomainResourceAllocation is larger than two, the UE may be further configured to enable cyclicMapping or sequentialMapping.

When cyclicMapping is enabled, the first indicated Rel. 17 unified TCI state and the second indicated Rel. 17 unified TCI state are applied to the first PDSCH transmission occasion and the second PDSCH transmission occasion, respectively, and the same TCI mapping pattern continues to the remaining PDSCH transmission occasions. For this case (repetitionNumber>2 with cyclicMapping enabled), if the UE receives from the network, e.g., via MAC CE or DCI (e.g., DCI format 1_1 or 1_2 with or without DL assignment) based signaling through TCI-State_r17, an update for the first or second Rel. 17 unified TCI states - referred to as the updated first or second indicated Rel. 17 unified TCI states, the UE could determine the beam(s) applied to the first or second PDSCH transmission occasions according to those specified example in the present disclosure, the same TCI mapping pattern continues to the remaining PDSCH transmission occasions until the UE receives from the network another update for the first or second Rel. 17 unified TCI states and repeats the same procedures as discussed above for determining beam(s) applied to the PDSCH transmission occasions.

When sequentialMapping is enabled, the first indicated Rel. 17 unified TCI state is applied to the first and second PDSCH transmission occasions, and the second indicated Rel. 17 unified TCI state is applied to the third and fourth PDSCH transmission occasions, and the same TCI mapping pattern continues to the remaining PDSCH transmission occasions. For this case (repetitionNumber>2 with sequentialMapping enabled), if the UE receives from the network, e.g., via MAC CE or DCI (e.g., DCI format 1_1 or 1_2 with or without DL assignment) based signaling through TCI-State_r17, an update for the first Rel. 17 unified TCI state - referred to as the updated first indicated Rel. 17 unified TCI state, the UE could determine the beams applied to the first and second PDSCH transmission occasions according to one or more of the following examples.

In one example, the first indicated Rel. 17 unified TCI state is applied to the first and second PDSCH transmission occasions.

In another example, the updated first indicated Rel. 17 unified TCI state is applied to the first and second PDSCH transmission occasions.

In yet another example, the first indicated Rel. 17 unified TCI state is applied to the first and second PDSCH transmission occasions if the first and/or second PDSCH transmission occasions start before the updated first indicated Rel. 17 unified TCI state becomes effective in time - e.g., the first symbol or slot of the first and/or second PDSCH transmission occasions start before the updated first indicated Rel. 17 unified TCI state becomes effective in time.

In yet another example, the updated first indicated Rel. 17 unified TCI state is applied to the first and second PDSCH transmission occasions if the first and/or second PDSCH transmission occasions start at or after the updated first indicated Rel. 17 unified TCI state becomes effective in time - e.g., the first symbol or slot of the first and/or second PDSCH transmission occasions start at or after the updated first indicated Rel. 17 unified TCI state becomes effective in time.

Furthermore, if the UE receives from the network, e.g., via MAC CE or DCI (e.g., DCI format 1_1 or 1_2 with or without DL assignment) based signaling through TCI-State_r17, an update for the second Rel. 17 unified TCI state - referred to as the updated second indicated Rel. 17 unified TCI state, the UE could determine the beams applied to the third and fourth PDSCH transmission occasions according to one or more of the following examples.

In one example, the second indicated Rel. 17 unified TCI state is applied to the third and fourth PDSCH transmission occasions.

In another example, the updated second indicated Rel. 17 unified TCI state is applied to the third and fourth PDSCH transmission occasions.

In yet another example, the second indicated Rel. 17 unified TCI state is applied to the third and fourth PDSCH transmission occasions if the third and/or fourth PDSCH transmission occasions start before the updated second indicated Rel. 17 unified TCI state becomes effective in time - e.g., the first symbol or slot of the third and/or fourth PDSCH transmission occasions start before the updated second indicated Rel. 17 unified TCI state becomes effective in time.

In yet another example, the updated second indicated Rel. 17 unified TCI state is applied to the third and fourth PDSCH transmission occasions if the third and/or fourth PDSCH transmission occasions start at or after the updated second indicated Rel. 17 unified TCI state becomes effective in time - e.g., the first symbol or slot of the third and/or fourth PDSCH transmission occasions start at or after the updated second indicated Rel. 17 unified TCI state becomes effective in time.

The same TCI mapping pattern continues to the remaining PDSCH transmission occasions until the UE receives from the network another update for the first or second Rel. 17 unified TCI states and repeats the same procedures as discussed above for determining beam(s) applied to the PDSCH transmission occasions.

In another example, when the value indicated by repetitionNumber in PDSCH-TimeDomainResourceAllocation equals to two, the first indicated Rel. 17 unified TCI state is applied to the first PDSCH transmission occasion associated with/scheduled by PDCCH(s) in Type-1 CORESET(s) and resource allocation in time domain for the first PDSCH transmission occasion associated with/scheduled by PDCCH(s) in Type-1 CORESET(s) follows those described in 3GPP TS 38.214; the second indicated Rel. 17 unified TCI state is applied to the second PDSCH transmission occasion associated with/scheduled by PDCCH(s) in Type-1 CORESET(s). For this case (repetitionNumber=2), if the UE receives from the network, e.g., via MAC CE or DCI (e.g., DCI format 1_1 or 1_2 with or without DL assignment) based signaling through TCI-State_r17, an update for the first or second Rel. 17 unified TCI states - referred to as the updated first or second indicated Rel. 17 unified TCI states, the UE could determine the beam(s) applied to the first or second PDSCH transmission occasions associated with/scheduled by PDCCH(s) in Type-1 CORESET(s) according to examples in the present disclosure.

When the value of repetitionNumber in PDSCH-TimeDomainResourceAllocation is larger than two, the UE may be further configured to enable cyclicMapping or sequentialMapping. When cyclicMapping is enabled, the first indicated Rel. 17 unified TCI state and the second indicated Rel. 17 unified TCI state are applied to the first and second PDSCH transmission occasions associated with/scheduled by PDCCH(s) in Type-1 CORESET(s), respectively, and the same TCI mapping pattern continues to the remaining PDSCH transmission occasions associated with/scheduled by PDCCH(s) in Type-1 CORESET(s). For this case (repetitionNumber>2 with cyclicMapping enabled), if the UE receives from the network, e.g., via MAC CE or DCI (e.g., DCI format 1_1 or 1_2 with or without DL assignment) based signaling through TCI-State_r17, an update for the first or second Rel. 17 unified TCI states - referred to as the updated first or second indicated Rel. 17 unified TCI states, the UE could determine the beam(s) applied to the first or second PDSCH transmission occasions associated with/scheduled by PDCCH(s) in Type-1 CORESET(s) according to those examples in the present disclosure, the same TCI mapping pattern continues to the remaining PDSCH transmission occasions associated with/scheduled by PDCCH(s) in Type-1 CORESET(s) until the UE receives from the network another update for the first or second Rel. 17 unified TCI states and repeats the same procedures as discussed above for determining beam(s) applied to the PDSCH transmission occasions associated with/scheduled by PDCCH(s) in Type-1 CORESET(s).

When sequentialMapping is enabled, the first indicated Rel. 17 unified TCI state is applied to the first and second PDSCH transmission occasions associated with/scheduled by PDCCH(s) in Type-1 CORESET(s), and the second indicated Rel. 17 unified TCI state is applied to the third and fourth PDSCH transmission occasions associated with/-scheduled by PDCCH(s) in Type-1 CORESET(s), and the same TCI mapping pattern continues to the remaining PDSCH transmission occasions associated with/scheduled by PDCCH(s) in Type-1 CORESET(s). For this case (repetitionNumber>2 with sequentialMapping enabled), if the UE receives from the network, e.g., via MAC CE or DCI (e.g., DCI format 1_1 or 1_2 with or without DL assignment) based signaling through TCI-

State_r17, an update for the first Rel. 17 unified TCI state - referred to as the updated first indicated Rel. 17 unified TCI state, the UE could determine the beams applied to the first and second PDSCH transmission occasions associated with/scheduled by PDCCH(s) in Type-1 CORESET(s) according to one or more of the following:

In one example, the first indicated Rel. 17 unified TCI state is applied to the first and second PDSCH transmission occasions associated with/scheduled by PDCCH(s) in Type-1 CORESET(s).

In another example, the updated first indicated Rel. 17 unified TCI state is applied to the first and second PDSCH transmission occasions associated with/scheduled by PDCCH(s) in Type-1 CORESET(s).

In yet another example, the first indicated Rel. 17 unified TCI state is applied to the first and second PDSCH transmission occasions associated with/scheduled by PDCCH(s) in Type-1 CORESET(s) if the first and/or second PDSCH transmission occasions associated with/scheduled by PDCCH(s) in Type-1 CORESET(s) start before the updated first indicated Rel. 17 unified TCI state becomes effective in time - e.g., the first symbol or slot of the first and/or second PDSCH transmission occasions associated with/scheduled by PDCCH(s) in Type-1 CORESET(s) start before the updated first indicated Rel. 17 unified TCI state becomes effective in time.

In yet another example, the updated first indicated Rel. 17 unified TCI state is applied to the first and second

PDSCH transmission occasions associated with/scheduled by PDCCH(s) in Type-1 CORESET(s) if the first and/or second PDSCH transmission occasions associated with/scheduled by PDCCH(s) in Type-1 CORESET(s) start at or after the updated first indicated Rel. 17 unified TCI state becomes effective in time - e.g., the first symbol or slot of the first and/or second PDSCH transmission occasions associated with/scheduled by PDCCH(s) in Type-1 CORESET(s) start at or after the updated first indicated Rel. 17 unified TCI state becomes effective in time. Furthermore, if the UE receives from the network, e.g., via MAC CE or DCI (e.g., DCI format 1_1 or 1_2 with or without DL assignment) based signaling through TCI-State_r17, an update for the second Rel. 17 unified TCI state - referred to as the updated second indicated Rel. 17 unified TCI state, the UE could determine the beams applied to the third and fourth PDSCH transmission occasions associated with/scheduled by PDCCH(s) in Type-1 CORESET(s) according to one or more of the following examples.

In one example, the second indicated Rel. 17 unified TCI state is applied to the third and fourth PDSCH transmission occasions associated with/scheduled by PDCCH(s) in Type-1 CORESET(s).

In another example, the updated second indicated Rel. 17 unified TCI state is applied to the third and fourth PDSCH transmission occasions associated with/scheduled by PDCCH(s) in Type-1 CORESET(s).

In yet another example, the second indicated Rel. 17 unified TCI state is applied to the third and fourth PDSCH transmission occasions associated with/scheduled by PDCCH(s) in Type-1 CORESET(s) if the third and/or fourth PDSCH transmission occasions associated with/scheduled by PDCCH(s) in Type-1 CORESET(s) start before the updated second indicated Rel. 17 unified TCI state becomes effective in time - e.g., the first symbol or slot of the third and/or fourth PDSCH transmission occasions associated with/scheduled by PDCCH(s) in Type-1 CORESET(s) start before the updated second indicated Rel. 17 unified TCI state becomes effective in time.

In yet another example, the updated second indicated Rel. 17 unified TCI state is applied to the third and fourth PDSCH transmission occasions associated with/scheduled by PDCCH(s) in Type-1 CORESET(s) if the third and/or fourth PDSCH transmission occasions associated with/scheduled by PDCCH(s) in Type-1 CORESET(s) start at or after the updated second indicated Rel. 17 unified TCI state becomes effective in time - e.g., the first symbol or slot of the third and/or fourth PDSCH transmission occasions associated with/scheduled by PDCCH(s) in Type-1 CORESET(s) start at or after the updated second indicated Rel. 17 unified TCI state becomes effective in time.

The same TCI mapping pattern continues to the remaining PDSCH transmission occasions associated with/-scheduled by PDCCH(s) in Type-1 CORESET(s) until the UE receives from the network another update for the first or second Rel. 17 unified TCI states and repeats the same procedures as discussed above for determining beam(s) applied to the PDSCH transmission occasions associated with/scheduled by PDCCH(s) in Type-1 CORESET(s).

In yet another example, if one or more CORESETGroupIndex values are configured, when the value indicated by repetitionNumber in PDSCH-TimeDomainResourceAllocation equals to two, the first indicated Rel. 17 unified TCI state associated with CORESETGroupIndex value 0 (or 1) is applied to the first PDSCH transmission occasion associated with/scheduled by PDCCH(s) in CORESET(s) associated with CORESETGroupIndex value 0 (or 1) and resource allocation in time domain for the first PDSCH transmission occasion associated with/scheduled by PDCCH(s) in CORESET(s) associated with CORESETGroupIndex value 0 (or 1) follows those described in the 3GPP TS 38.214; the second indicated Rel. 17 unified TCI state associated with CORESETGroupIndex value 1 (or 0) is applied to the second PDSCH transmission occasion associated with/scheduled by PDCCH(s) in CORESET(s) associated with CORESETGroupIndex value 1 (or 0). For this case (repetitionNumber=2), if the UE receives from the network, e.g., via MAC CE or DCI (e.g., DCI format 1_1 or 1_2 with or without DL assignment) based signaling through TCI-State_r17, an update for the first or second Rel. 17 unified TCI states associated with CORESETGroupIndex values 0 or 1 - referred to as the updated first or second indicated Rel. 17 unified TCI states associated with CORESETGroupIndex values 0 or 1, the UE could determine the beam(s) applied to the first or second PDSCH transmission occasions associated with/scheduled by PDCCH(s) in CORESET(s) associated with CORESETGroupIndex values 0 or 1 according to those examples in the present disclosure.

When the value of repetitionNumber in PDSCH-TimeDomainResourceAllocation is larger than two, the UE may be further configured to enable cyclicMapping or sequentialMapping. When cyclicMapping is enabled, the first indicated Rel. 17 unified TCI state associated with CORESETGroupIndex value 0 (or 1) and the second indicated Rel. 17 unified TCI state associated with CORESETGroupIndex value 1 (or 0) are applied to the first PDSCH transmission occasion associated with/scheduled by PDCCH(s) in CORESET(s) associated with CORESETGroupIndex value 0 (or 1) and the second PDSCH transmission occasion associated with/scheduled by PDCCH(s) in CORESET(s) associated with CORESETGroupIndex value 1 (or 0), respectively, and the same TCI mapping pattern continues to the remaining PDSCH transmission occasions associated with/scheduled by PDCCH(s) in CORESET(s) associated with CORESETGroupIndex values 0 and/or 1.

For this case (repetitionNumber>2 with cyclicMapping enabled), if the UE receives from the network, e.g., via MAC CE or DCI (e.g., DCI format 1_1 or 1_2 with or without DL assignment) based signaling through TCI-State_r17, an update for the first or second Rel. 17 unified TCI states associated with CORESETGroupIndex values 0 or 1 - referred to as the updated first or second indicated Rel. 17 unified TCI states associated with CORESETGroupIndex values 0 or 1, the UE could determine the beam(s) applied to the first or second PDSCH transmission occasions associated with/scheduled by PDCCH(s) in CORESET(s) associated with CORESETGroupIndex values 0 or 1 according to those examples in the present disclosure, the same TCI mapping pattern continues to the remaining PDSCH transmission occasions associated with/scheduled by PDCCH(s) in CORESET(s) associated with CORESETGroupIndex values 0 or 1 until the UE receives from the network another update for the first or second Rel. 17 unified TCI states associated with CORESETGroupIndex values 0 or 1 and repeats the same procedures as discussed above for determining beam(s) applied to the PDSCH transmission occasions associated with/scheduled by PDCCH(s) in CORESET(s) associated with CORESETGroupIndex values 0 or 1.

When sequentialMapping is enabled, the first indicated Rel. 17 unified TCI state associated with CORESETGroupIndex value 0 (or 1) is applied to the first and second PDSCH transmission occasions associated with/scheduled by PDCCH(s) in CORESET(s) associated with CORESETGroupIndex value 0 (or 1), and the second indicated Rel. 17 unified TCI state associated with CORESETGroupIndex value 1 (or 0) is applied to the third and fourth PDSCH transmission occasions associated with/scheduled by PDCCH(s) in CORESET(s) associated with CORESETGroupIndex value 1 (or 0), and the same TCI mapping pattern continues to the remaining PDSCH transmission occasions associated with/-scheduled by PDCCH(s) in CORESET(s) associated with CORESETGroupIndex values 0 and/or 1. For this case (repetitionNumber>2 with sequentialMapping enabled), if the UE receives from the network, e.g., via MAC CE or DCI (e.g., DCI format 1_1 or 1_2 with or without DL assignment) based signaling through TCI-State_r17, an update for the first Rel. 17 unified TCI state associated with CORESETGroupIndex value 0 (or 1) - referred to as the updated first indicated Rel. 17 unified TCI state associated with CORESETGroupIndex value 0 (or 1), the UE could determine the beams applied to the first and second PDSCH transmission occasions associated with/scheduled by PDCCH(s) in CORESET(s) associated with CORESETGroupIndex value 0 (or 1) according to one or more of the following examples.

In one example, the first indicated Rel. 17 unified TCI state associated with CORESETGroupIndex value 0 (or 1) is applied to the first and second PDSCH transmission occasions associated with/scheduled by PDCCH(s) in CORESET(s) associated with CORESETGroupIndex value 0 (or 1).

In another example, the updated first indicated Rel. 17 unified TCI state associated with CORESETGroupIndex value 0 (or 1) is applied to the first and second PDSCH transmission occasions associated with/scheduled by PDCCH(s) in CORESET(s) associated with CORESETGroupIndex value 0 (or 1).

In yet another example, the first indicated Rel. 17 unified TCI state associated with CORESETGroupIndex value 0 (or 1) is applied to the first and second PDSCH transmission occasions associated with/scheduled by PDCCH(s) in CORESET(s) associated with CORESETGroupIndex value 0 (or 1) if the first and/or second PDSCH transmission occasions associated with/scheduled by PDCCH(s) in CORESET(s) associated with CORESETGroupIndex value 0 (or 1) start before the updated first indicated Rel. 17 unified TCI state associated with CORESETGroupIndex value 0 (or 1) becomes effective in time - e.g., the first symbol or slot of the first and/or second PDSCH transmission occasions associated with/scheduled by PDCCH(s) in CORESET(s) associated with CORESETGroupIndex value 0 (or 1) start before the updated first indicated Rel. 17 unified TCI state associated with CORESETGroupIndex value 0 (or 1) becomes effective in time.

In yet another example, the updated first indicated Rel. 17 unified TCI state associated with CORESETGroupIndex value 0 (or 1) is applied to the first and second PDSCH transmission occasions associated with/scheduled by PDCCH(s) in CORESET(s) associated with CORESETGroupIndex value 0 (or 1) if the first and/or second PDSCH transmission occasions associated with/scheduled by PDCCH(s) in CORESET(s) associated with CORESETGroupIndex value 0 (or 1) start at or after the updated first indicated Rel. 17 unified TCI state associated with CORESETGroupIndex value 0 (or 1) becomes effective in time - e.g., the first symbol or slot of the first and/or second PDSCH transmission occasions associated with/scheduled by PDCCH(s) in CORESET(s) associated with CORESETGroupIndex value 0 (or 1) start at or after the updated first indicated Rel. 17 unified TCI state associated with CORESETGroupIndex value 0 (or 1) becomes effective in time.

Furthermore, if the UE receives from the network, e.g., via MAC CE or DCI (e.g., DCI format 1_1 or 1_2 with or without DL assignment) based signaling through TCI-State_r17, an update for the second Rel. 17 unified TCI state associated with CORESETGroupIndex value 1 (or 0) - referred to as the updated second indicated Rel. 17 unified TCI state associated with CORESETGroupIndex value 1 (or 0), the UE could determine the beams applied to the third and fourth PDSCH transmission occasions associated with/scheduled by PDCCH(s) in CORESET(s) associated with CORESETGroupIndex value 1 (or 0) according to one or more of the following examples.

In one example, the second indicated Rel. 17 unified TCI state associated with CORESETGroupIndex value 1 (or 0) is applied to the third and fourth PDSCH transmission occasions associated with/scheduled by PDCCH(s) in CORESET(s) associated with CORESETGroupIndex value 1 (or 0).

In another example, the updated second indicated Rel. 17 unified TCI state associated with CORESETGroupIndex value 1 (or 0) is applied to the third and fourth PDSCH transmission occasions associated with/scheduled by PDCCH(s) in CORESET(s) associated with CORESETGroupIndex value 1 (or 0).

In yet another example, the second indicated Rel. 17 unified TCI state associated with CORESETGroupIndex value 1 (or 0) is applied to the third and fourth PDSCH transmission occasions associated with/scheduled by PDCCH(s) in CORESET(s) associated with CORESETGroupIndex value 1 (or 0) if the third and/or fourth PDSCH transmission occasions associated with/scheduled by PDCCH(s) in CORESET(s) associated with CORESETGroupIndex value 1 (or 0) start before the updated second indicated Rel. 17 unified TCI state associated with CORESETGroupIndex value 1 (or 0) becomes effective in time - e.g., the first symbol or slot of the third and/or fourth PDSCH transmission occasions associated with/scheduled by PDCCH(s) in CORESET(s) associated with CORESETGroupIndex value 1 (or 0) start before the updated second indicated Rel. 17 unified TCI state associated with CORESETGroupIndex value 1 (or 0) becomes effective in time.

In yet another example, the updated second indicated Rel. 17 unified TCI state associated with CORESETGroupIndex value 1 (or 0) is applied to the third and fourth PDSCH transmission occasions associated with/scheduled by PDCCH(s) in CORESET(s) associated with CORESETGroupIndex value 1 (or 0) if the third and/or fourth PDSCH transmission occasions associated with/scheduled by PDCCH(s) in CORESET(s) associated with CORESETGroupIndex value 1 (or 0) start at or after the updated second indicated Rel. 17 unified TCI state associated with CORESETGroupIndex value 1 (or 0) becomes effective in time - e.g., the first symbol or slot of the third and/or fourth PDSCH transmission occasions associated with/scheduled by PDCCH(s) in CORESET(s) associated with CORESETGroupIndex value 1 (or 0) start at or after the updated second indicated Rel. 17 unified TCI state associated with CORESETGroupIndex value 1 (or 0) becomes effective in time.

The same TCI mapping pattern continues to the remaining PDSCH transmission occasions associated with/-scheduled by PDCCH(s) in CORESET(s) associated with CORESETGroupIndex values 0 or 1 until the UE receives from the network another update for the first or second Rel. 17 unified TCI states associated with CORESETGroupIndex values 0 (or 1) and repeats the same procedures as discussed above for determining beam(s) applied to the PDSCH transmission occasions associated with/scheduled by PDCCH(s) in CORESET(s) associated with CORESETGroupIndex values 0 or 1.

In yet another example, if one or more CORESETGroupIndex values are configured, when the value indicated by repetitionNumber in PDSCH-TimeDomainResourceAllocation equals to two, the first indicated Rel. 17 unified TCI state associated with CORESETGroupIndex value 0 (or 1) is applied to the first PDSCH transmission occasion associated with/scheduled by PDCCH(s) in Type-1 CORESET(s) associated with CORESETGroupIndex value 0 (or 1) and resource allocation in time domain for the first PDSCH transmission occasion associated with/scheduled by PDCCH(s) in Type-1 CORESET(s) associated with CORESETGroupIndex value 0 (or 1) follows those described in the 3GPP TS 38.214; the second indicated Rel. 17 unified TCI state associated with CORESETGroupIndex value 1 (or 0) is applied to the second PDSCH transmission occasion associated with/scheduled by PDCCH(s) in Type-1 CORESET(s) associated with CORESETGroupIndex value 1 (or 0).

For this case (repetitionNumber=2), if the UE receives from the network, e.g., via MAC CE or DCI (e.g., DCI format 1_1 or 1_2 with or without DL assignment) based signaling through TCI-State_r17, an update for the first or second Rel. 17 unified TCI states associated with CORESETGroupIndex values 0 or 1 - referred to as the updated first or second indicated Rel. 17 unified TCI states associated with CORESETGroupIndex values 0 or 1, the UE could determine the beam(s) applied to the first or second PDSCH transmission occasions associated with/scheduled by PDCCH(s) in Type-1 CORESET(s) associated with CORESETGroupIndex values 0 or 1 according to those specified in the example in the present disclosure. When the value of repetitionNumber in PDSCH-TimeDomainResourceAllocation is larger than two, the UE may be further configured to enable cyclicMapping or sequentialMapping.

When cyclicMapping is enabled, the first indicated Rel. 17 unified TCI state associated with CORESETGroupIndex value 0 (or 1) and the second indicated Rel. 17 unified TCI state associated with CORESETGroupIndex value 1 (or 0) are applied to the first PDSCH transmission occasion associated with/scheduled by PDCCH(s) in Type-1 CORESET(s) associated with CORESETGroupIndex value 0 (or 1) and the second PDSCH transmission occasion associated with/-scheduled by PDCCH(s) in Type-1 CORESET(s) associated with CORESETGroupIndex value 1 (or 0), respectively, and the same TCI mapping pattern continues to the remaining PDSCH transmission occasions associated with/scheduled by PDCCH(s) in Type-1 CORESET(s) associated with CORESETGroupIndex values 0 and/or 1. For this case (repetition-Number>2 with cyclicMapping enabled), if the UE receives from the network, e.g., via MAC CE or DCI (e.g., DCI format 1_1 or 1_2 with or without DL assignment) based signaling through TCIState_r17, an update for the first or second Rel. 17 unified TCI states associated with CORESETGroupIndex values 0 or 1 - referred to as the updated first or second indicated Rel. 17 unified TCI states associated with CORESETGroupIndex values 0 or 1, the UE could determine the beam(s) applied to the first or second PDSCH transmission occasions associated with/scheduled by PDCCH(s) in Type-1 CORESET(s) associated with CORESETGroupIndex values 0 or 1 according to those specified example in the present disclosure, the same TCI mapping pattern continues to the remaining PDSCH transmission occasions associated with/scheduled by PDCCH(s) in Type-1 CORESET(s) associated with CORESETGroupIndex values 0 or 1 until the UE receives from the network another update for the first or second Rel. 17 unified TCI states associated with CORESETGroupIndex values 0 or 1 and repeats the same procedures as discussed above for determining beam(s) applied to the PDSCH transmission occasions associated with/scheduled by PDCCH(s) in Type-1 CORESET(s) associated with CORESETGroupIndex values 0 or 1.

When sequentialMapping is enabled, the first indicated Rel. 17 unified TCI state associated with CORESETGroupIndex value 0 (or 1) is applied to the first and second PDSCH transmission occasions associated with/scheduled by PDCCH(s) in Type-1 CORESET(s) associated with CORESETGroupIndex value 0 (or 1), and the second indicated Rel. 17 unified TCI state associated with CORESETGroupIndex value 1 (or 0) is applied to the third and fourth PDSCH transmission occasions associated with/scheduled by PDCCH(s) in Type-1 CORESET(s) associated with CORESETGroupIndex value 1 (or 0), and the same TCI mapping pattern continues to the remaining PDSCH transmission occasions associated with/scheduled by PDCCH(s) in Type-1 CORESET(s) associated with CORESETGroupIndex values 0 and/or 1. For this case (repetitionNumber>2 with sequentialMapping enabled), if the UE receives from the network, e.g., via MAC CE or DCI (e.g., DCI format 1_1 or 1_2 with or without DL assignment) based signaling through TCI-State_r17, an update for the first Rel. 17 unified TCI state associated with CORESETGroupIndex value 0 (or 1) - referred to as the updated first indicated Rel. 17 unified TCI state associated with CORESETGroupIndex value 0 (or 1), the UE could determine the beams applied to the first and second PDSCH transmission occasions associated with/scheduled by PDCCH(s) in Type-1 CORESET(s) associated with CORESETGroupIndex value 0 (or 1) according to one or more of the following examples.

In one example, the first indicated Rel. 17 unified TCI state associated with CORESETGroupIndex value 0 (or 1) is applied to the first and second PDSCH transmission occasions associated with/scheduled by PDCCH(s) in Type-1 CORESET(s) associated with CORESETGroupIndex value 0 (or 1).

In another example, the updated first indicated Rel. 17 unified TCI state associated with CORESETGroupIndex value 0 (or 1) is applied to the first and second PDSCH transmission occasions associated with/scheduled by PDCCH(s) in Type-1 CORESET(s) associated with CORESETGroupIndex value 0 (or 1).

In yet another example, the first indicated Rel. 17 unified TCI state associated with CORESETGroupIndex value 0 (or 1) is applied to the first and second PDSCH transmission occasions associated with/scheduled by PDCCH(s) in Type-1 CORESET(s) associated with CORESETGroupIndex value 0 (or 1) if the first and/or second PDSCH transmission occasions associated with/scheduled by PDCCH(s) in Type-1 CORESET(s) associated with CORESETGroupIndex value 0 (or 1) start before the updated first indicated Rel. 17 unified TCI state associated with CORESETGroupIndex value 0 (or 1) becomes effective in time - e.g., the first symbol or slot of the first and/or second PDSCH transmission occasions associated with/scheduled by PDCCH(s) in Type-1 CORESET(s) associated with CORESETGroupIndex value 0 (or 1) start before the updated first indicated Rel. 17 unified TCI state associated with CORESETGroupIndex value 0 (or 1) becomes effective in time.

In yet another example, the updated first indicated Rel. 17 unified TCI state associated with CORESETGroupIndex value 0 (or 1) is applied to the first and second PDSCH transmission occasions associated with/scheduled by PDCCH(s) in Type-1 CORESET(s) associated with CORESETGroupIndex value 0 (or 1) if the first and/or second PDSCH transmission occasions associated with/scheduled by PDCCH(s) in Type-1 CORESET(s) associated with CORESETGroupIndex value 0 (or 1) start at or after the updated first indicated Rel. 17 unified TCI state associated with CORESETGroupIndex value 0 (or 1) becomes effective in time - e.g., the first symbol or slot of the first and/or second PDSCH transmission occasions associated with/scheduled by PDCCH(s) in Type-1 CORESET(s) associated with CORESETGroupIndex value 0 (or 1) start at or after the updated first indicated Rel. 17 unified TCI state associated with CORESETGroupIndex value 0 (or 1) becomes effective in time.

Furthermore, if the UE receives from the network, e.g., via MAC CE or DCI (e.g., DCI format 1_1 or 1_2 with or without DL assignment) based signaling through TCI-State_r17, an update for the second Rel. 17 unified TCI state associated with CORESETGroupIndex value 1 (or 0) - referred to as the updated second indicated Rel. 17 unified TCI state associated with CORESETGroupIndex value 1 (or 0), the UE could determine the beams applied to the third and fourth PDSCH transmission occasions associated with/scheduled by PDCCH(s) in Type-1 CORESET(s) associated with CORESETGroupIndex value 1 (or 0) according to one or more of the following examples.

In one example, the second indicated Rel. 17 unified TCI state associated with CORESETGroupIndex value 1 (or 0) is applied to the third and fourth PDSCH transmission occasions associated with/scheduled by PDCCH(s) in Type-1 CORESET(s) associated with CORESETGroupIndex value 1 (or 0).

In another example, the updated second indicated Rel. 17 unified TCI state associated with CORESETGroupIndex value 1 (or 0) is applied to the third and fourth PDSCH transmission occasions associated with/scheduled by PDCCH(s) in Type-1 CORESET(s) associated with CORESETGroupIndex value 1 (or 0).

In yet another example, the second indicated Rel. 17 unified TCI state associated with CORESETGroupIndex value 1 (or 0) is applied to the third and fourth PDSCH transmission occasions associated with/scheduled by PDCCH(s) in Type-1 CORESET(s) associated with CORESETGroupIndex value 1 (or 0) if the third and/or fourth PDSCH transmission occasions associated with/scheduled by PDCCH(s) in Type-1 CORESET(s) associated with CORESETGroupIndex value 1 (or 0) start before the updated second indicated Rel. 17 unified TCI state associated with CORESETGroupIndex value 1 (or 0) becomes effective in time - e.g., the first symbol or slot of the third and/or fourth PDSCH transmission occasions associated with/scheduled by PDCCH(s) in Type-1 CORESET(s) associated with CORESETGroupIndex value 1 (or 0) start before the updated second indicated Rel. 17 unified TCI state associated with CORESETGroupIndex value 1 (or 0) becomes effective in time.

In yet another example, the updated second indicated Rel. 17 unified TCI state associated with CORESETGroupIndex value 1 (or 0) is applied to the third and fourth PDSCH transmission occasions associated with/scheduled by PDCCH(s) in Type-1 CORESET(s) associated with CORESETGroupIndex value 1 (or 0) if the third and/or fourth PDSCH transmission occasions associated with/scheduled by PDCCH(s) in Type-1 CORESET(s) associated with CORESETGroupIndex value 1 (or 0) start at or after the updated second indicated Rel. 17 unified TCI state associated with CORESETGroupIndex value 1 (or 0) becomes effective in time - e.g., the first symbol or slot of the third and/or fourth PDSCH transmission occasions associated with/scheduled by PDCCH(s) in Type-1 CORESET(s) associated with CORESETGroupIndex value 1 (or 0) start at or after the updated second indicated Rel. 17 unified TCI state associated with CORESETGroupIndex value 1 (or 0) becomes effective in time.

The same TCI mapping pattern continues to the remaining PDSCH transmission occasions associated with/-scheduled by PDCCH(s) in Type-1 CORESET(s) associated with CORESETGroupIndex values 0 or 1 until the UE receives from the network another update for the first or second Rel. 17 unified TCI states associated with CORESETGroupIndex values 0 (or 1) and repeats the same procedures as discussed above for determining beam(s) applied to the PDSCH transmission occasions associated with/scheduled by PDCCH(s) in Type-1 CORESET(s) associated with CORESETGroupIndex values 0 or 1.

According to the design examples specified herein in the present disclosure, a first and a second PDSCHs could be repetitions (i.e., of the same TB) across/over the repetitionNumber consecutive slots. For example, when cyclicmapping is enabled/configured, the first PDSCH maps to the first slot (or corresponds to the first PDSCH transmission occasion), the second PDSCH maps to the second slot (or corresponds to the second PDSCH transmission occasion), and so on - i.e., the same mapping pattern of the first/second PDSCHs applies to the remaining slots of the repetition-Number consecutive slots. For another example, when sequentialmapping is enabled/configured, the first PDSCH maps to the first and second slots (or corresponds to the first and second PDSCH transmission occasions), the second PDSCH maps to the third and fourth slots (or corresponds to the third and fourth PDSCH transmission occasions), and so on - i.e., the same mapping pattern of the first/second PDSCHs applies to the remaining slots of the repetitionNumber consecutive slots.

In one embodiment, the UE could use/apply the first indicated (DL or joint) TCI state - among the N>1 (or M>1) TCI states, e.g., indicated by one or more TCI codepoints of one or more TCI fields in a beam indication DCI or unified TCI states activation MAC CE - to receive the first PDSCH in its/their corresponding slot(s) - as specified herein in the present disclosure - among the repetitionNumber consecutive slots, and the second indicated (DL or joint) TCI state - among the N>1 (or M>1) TCI states, e.g., indicated by one or more TCI codepoints of one or more TCI fields in a beam indication DCI or unified TCI states activation MAC CE - to receive the second PDSCH in its/their corresponding slot(s) - as specified herein in the present disclosure - among the repetitionNumber consecutive slots, wherein the N>1 (or M>1) TCI states or the beam indication DCI/MAC CE indicating the N>1 (or M>1) TCI states could be indicated/activated/received in the first slot - e.g., among the repetitionNumber consecutive slots - with the scheduled PDSCH(s) or the N>1 (or M>1) TCI states could become effective/applicable in the first slot - e.g., among the repetitionNumber consecutive slots - with the scheduled PDSCH(s).

In one embodiment, in a slot among the repetitionNumber consecutive slots, the UE could be indicated/provided/configured/activated by the network, e.g., via beam indication DCI (e.g., DCI format 1_1/1_2 with or without DL assignment) and/or unified TCI states activation MAC CE, an update for the TCI state associated to the first PDSCH (or reception of the first PDSCH) - referred to as updated first TCI state. For this case, the UE could use/apply the updated first (DL or joint) TCI state - e.g., after a beam application time or when the updated first TCI state becomes available/applicable - to receive the first PDSCH in the slot in which the updated first TCI state or the beam indication DCI/MAC CE indicating the updated first TCI state is received (if applicable), and/or in its/their corresponding slot(s) in which the first PDSCH is transmitted/received - as specified herein in the present disclosure - in the remaining slot(s) among the repetitionNumber consecutive slots. Furthermore, in a slot among the repetitionNumber consecutive slots, the UE could be indicated/provided/configured/activated by the network, e.g., via beam indication DCI (e.g., DCI format 1_1/1_2 with or without DL assignment) and/or unified TCI states activation MAC CE, an update for the TCI state associated to the second PDSCH (or reception of the second PDSCH) - referred to as updated second TCI state. For this case, the UE could use/apply the updated second (DL or joint) TCI state - e.g., after a beam application time or when the updated second TCI state becomes available/applicable - to receive the second PDSCH in the slot in which the updated second TCI state or the beam indication DCI/MAC CE indicating the updated second TCI state is received (if applicable), and/or in its/their corresponding slot(s) in which the second PDSCH is transmitted/received - as specified herein in the present disclosure - in the remaining slot(s) among the repetitionNumber consecutive slots. Furthermore, the UE could use/apply the updated first/second (DL or joint) TCI state(s) as specified herein in the present disclosure to transmit/receive channels/signals other than the first and second PDSCHs transmitted/received in the slot in which the updated first/second TCI state(s) or the beam indication DCI(s)/MAC CE(s) indicating the updated first/second TCI state(s) is received (if applicable), and in slot(s) thereafter.

In the present disclosure, the time when an indicated Rel. 17 unified TCI state becomes effective could be determined according to beam application time (BAT) as specified herein in the present disclosure.

In one example, the BAT is the time from a PDCCH (start or end of the PDCCH) containing a DCI format that includes the "Transmission Configuration Indication" (beam indication) field to the first symbol (or slot) at which the new beam corresponding to the "Transmission Configuration Indication" is applied.

In one example, the BAT is the time from a channel (start or end of the channel) containing the HARQ-ACK feedback that indicates reception of a DCI format that includes the "Transmission Configuration Indication" (beam indication) field to the first symbol (or slot) at which the new beam corresponding to the "Transmission Configuration Indication" is applied. For example, the BAT could be from the end of UL channel containing HARQ-ACK feedback that indicates reception of a DCI format that includes the "Transmission Configuration Indication" (beam indication) field.

In one example, throughout the present disclosure, when the UE would transmit the last symbol of a PUCCH with HARQ-ACK information corresponding to the DCI carrying the TCI state(s) indication/update and without DL assignment, or corresponding to the PDSCH scheduling by the DCI carrying the TCI state(s) indication/update, and if the indicated TCI state(s) is different from the previously indicated one(s), the indicated DLorJointTCIState or UL-TCIstate should be applied starting from the first slot that is at least BeamAppTime_r17 symbols after the last symbol of the PUCCH. The first slot and the BeamAppTime_r17 symbols are both determined on the carrier with the smallest SCS among the carrier(s) applying the beam indication.

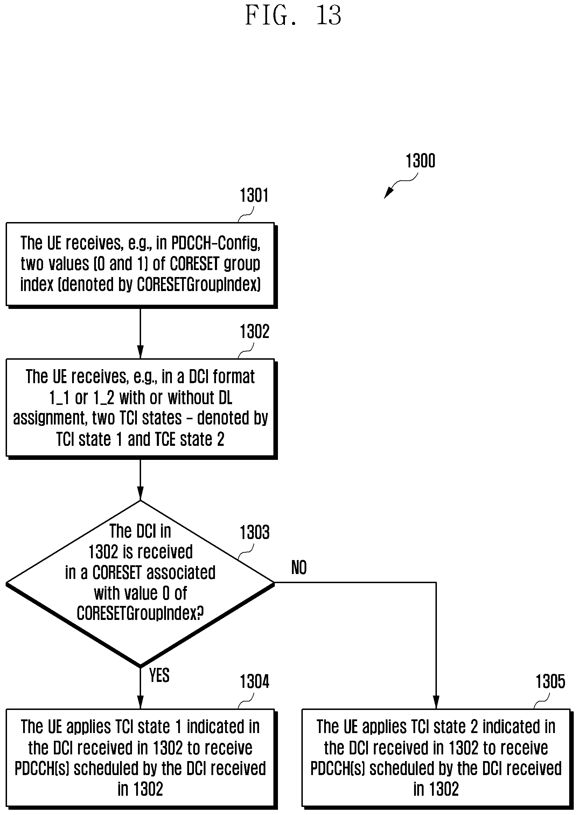

FIGURE 13 illustrates a flowchart of a method 1300 for TCI state(s) indication and association to PDSCH(s) according to embodiments of the present disclosure. The method 1300 as may be performed by a UE (e.g., 111-116 as illustrated in FIGURE 1). An embodiment of the method 1300 shown in FIGURE 13 is for illustration only. One or more of the components illustrated in FIGURE 13 can be implemented in specialized circuitry configured to perform the noted functions or one or more of the components can be implemented by one or more processors executing instructions to perform the noted functions.

When a UE is provided by the network N>1 (or M>1) Rel. 17 unified TCI states by one or more TCI state codepoints in a DCI format (e.g., DCI format 1_1 or 1_2 with or without DL assignment) or MAC CE, the UE could determine the QCL assumption for receiving PDSCH or DM-RS of PDSCH according to at least one of the following (for M=2 or N=2) examples.

In one example, if the UE is provided two values of CORESETGroupIndex (i.e., 0 and 1) - e.g., in PDCCH-Config, DM-RS ports for receiving a PDSCH (or one or more layers of a PDSCH) scheduled by a PDCCH (candidate) received in a CORESET associated/configured with value 0 (or 1) of CORESETGroupIndex could be quasi co-located with the reference signal provided in the first indicated TCI state/pair of TCI states - e.g., among the M=2 (or N=2) TCI states/pairs of TCI states indicated by one or more TCI state codepoints in DCI format 1_1 or 1_2 with or without DL assignment, and DM-RS ports for receiving a PDSCH (or one or more layers of a PDSCH) scheduled by a PDCCH (candidate) received in a CORESET associated/configured with value 1 (or 0) of CORESETGroupIndex could be quasi co-located with the reference signal provided in the second indicated TCI state/pair of TCI states - e.g., among the M=2 (or N=2) TCI states/pairs of TCI states indicated by one or more TCI state codepoints in DCI format 1_1 or 1_2 with or without DL assignment. As discussed before in the present disclosure, a value of CORESETGroupIndex could be indicated in the higher layer parameter ControlResourceSet that configures a CORESET.

In FIGURE 13, an example of the above described signaling flow is provided. In 1301, the UE first receives in PDCCH-Config two values (0 and 1) of CORESETPoolIndex. In 1302, the UE is indicated two TCI states - denoted by TCI state 1 and TCI state 2 - by one or more TCI state codepoints in a DCI format (e.g., DCI format 1_1 or 1_2 with or without DL assignment). In 1303, the UE determines whether the DCI format in 1302 is received in a CORESET associated/configured with value 0 or 1 of CORESETGroupIndex. If the DCI format in 1302 is received in a CORESET associated with value 0 of CORESETGroupIndex, the signaling flow proceeds to 1304, wherein the UE may apply TCI state 1 to receive PDSCH (or one or more layers of PDSCH) scheduled by the DCI (in 1302) received in the CORESET associated with value 0 of CORESETGroupIndex. Otherwise, if the DCI format in 1302 is received in a CORESET associated value 1 of CORESETGroupIndex, the signaling flow goes to 1305, wherein the UE may apply TCI state 2 to receive PDSCH (or one or more layers of PDSCH) scheduled by the DCI (in 1302) received in the CORESET associated with value 1 of CORESETGroupIndex.

In another example, if the UE is provided two values of CORESETGroupIndex (i.e., 0 and 1) - e.g., in PDCCH-Config, DM-RS ports for receiving a PDSCH (or one or more layers of a PDSCH) scheduled by a PDCCH (candidate) received in a Type-1 CORESET associated/configured with value 0 (or 1) of CORESETGroupIndex could be quasi co-located with the reference signal provided in the first indicated TCI state/pair of TCI states - e.g., among the M=2 (or N=2) TCI states/pairs of TCI states indicated by one or more TCI state codepoints in DCI format 1_1 or 1_2 with or without DL assignment, and DM-RS ports for receiving a PDSCH (or one or more layers of a PDSCH) scheduled by a PDCCH (candidate) received in a Type-1 CORESET associated/configured with value 1 (or 0) of CORESETGroupIndex could be quasi co-located with the reference signal provided in the second indicated TCI state/pair of TCI states - e.g., among the M=2 (or N=2) TCI states/pairs of TCI states indicated by one or more TCI state codepoints in DCI format 1_1 or 1_2 with or without DL assignment. As discussed before in the present disclosure, a value of CORESETGroupIndex could be indicated in the higher layer parameter ControlResourceSet that configures a (Type-1) CORESET.

For PUCCH repetition, wherein a UE could be configured with a number of slots, denote by $N_{pucch}$, for repetitions of a PUCCH transmission, or for PUCCH non-repetition based transmission scheme(s),

In one example, the UE uses the reference signal(s) provided in the n-th (or m-th) indicated Rel. 17 unified TCI state to determine transmit filter for the n-th (or m-th) repetition of the PUCCH transmission. For N=2 or M=2, the UE uses the reference signal(s) provided in the first indicated Rel. 17 unified TCI state to determine transmit filter for the first repetition of the PUCCH transmission, and the reference signal(s) provided in the second indicated Rel. 17 unified TCI state to determine transmit filter for the second repetition of the PUCCH transmission. Alternatively, the N>1 or M>1 indicated Rel. 17 unified TCI states could be alternated per $N_{pucch}$ repetitions of the PUCCH transmission, where $N_{pucch}$=1 if mappingPattern = "cyclicMapping"; else, $N_{pucch}$=N (or M). For N=2 or M=2, the first and second indicated Rel. 17 unified TCI states could be alternated per $N_{pucch}$ repetitions of the PUCCH transmission, where $N_{pucch}$=1 if mappingPattern = "cyclicMapping"; else, $N_{pucch}$=2.

In another example, the UE uses the reference signal(s) provided in the n-th (or m-th) indicated Rel. 17 unified TCI state to determine transmit filter for the n-th (or m-th) repetition of the PUCCH transmission associated with PDCCH(s) in Type-1 CORESET(s). For N=2 or M=2, the UE uses the reference signal(s) provided in the first indicated Rel. 17 unified TCI state to determine transmit filter for the first repetition of the PUCCH transmission associated with PDCCH(s) in Type-1 CORESET(s), and the reference signal(s) provided in the second indicated Rel. 17 unified TCI state to determine transmit filter for the second repetition of the PUCCH transmission associated with PDCCH(s) in Type-1 CORESET(s). Alternatively, the N>1 or M>1 indicated Rel. 17 unified TCI states could be alternated per $N_{pucch}$ repetitions of the PUCCH transmission associated with PDCCH(s) in Type-1 CORESET(s), where $N_{pucch}$=1 if mappingPattern = "cyclicMapping"; else, $N_{pucch}$=N (or M). For N=2 or M=2, the first and second indicated Rel. 17 unified TCI states could be alternated per $N_{pucch}$ repetitions of the PUCCH transmission associated with PDCCH(s) in Type-1 CORESET(s), where $N_{pucch}$=1 if mappingPattern = "cyclicMapping"; else, $N_{pucch}$=2.

In yet another example, if one or more CORESETGroupIndex values are configured, the UE uses the reference signal(s) provided in the n-th (or m-th) indicated Rel. 17 unified TCI state associated with CORESETGroupIndex value n - 1 (or m - 1) to determine transmit filter for the n-th (or m-th) repetition of the PUCCH transmission associated with PDCCH(s) in CORESET(s) associated with CORESETGroupIndex value n - 1 (or m - 1). For N=2 or M=2, the UE uses the reference signal(s) provided in the first indicated Rel. 17 unified TCI state associated with CORESETGroupIndex value 0 (or 1) to determine transmit filter for the first repetition of the PUCCH transmission associated with PDCCH(s) in CORESET(s) associated with CORESETGroupIndex value 0 (or 1), and the reference signal(s) provided in the second indicated Rel. 17 unified TCI state associated with CORESETGroupIndex value 1 (or 0) to determine transmit filter for the second repetition of the PUCCH transmission associated with PDCCH(s) in CORESET(s) associated with CORESETGroupIndex value 1 (or 0).

**EP 4 597 875 A2**

Alternatively, the N>1 or M>1 indicated Rel. 17 unified TCI states associated with CORESETGroupIndex values {0, 1, ..., N - 1} or {0, 1, ..., M - 1} could be alternated per $N_{pucch}$ repetitions of the PUCCH transmission associated with PDCCH(s) in CORESET(s) associated with CORESETGroupIndex values {0, 1, ..., N - 1} or {0, 1, .., M - 1}, where $N_{pucch}$=1 if mappingPattern = "cyclicMapping"; else, $N_{pucch}$=N (or M). For N=2 or M=2, the first indicated Rel. 17 unified TCI state associated with CORESETGroupIndex value 0 (or 1) and the second indicated Rel. 17 unified TCI state associated with CORESETGroupIndex value 1 (or 0) could be alternated per $N_{pucch}$ repetitions of the PUCCH transmission associated with PDCCH(s) in CORESET(s) associated with CORESETGroupIndex values 0 and/or 1, where $N_{pucch}$=1 if mapping-Pattern = "cyclicMapping"; else, $N_{pucch}$=2.

Or equivalently, if the UE is provided two values of CORESETGroupIndex (i.e., 0 and 1) - e.g., in PDCCH-Config, (spatial domain) transmit filters for transmitting a PUCCH resource associated with a PDCCH (candidate) received in a CORESET associated/configured with value 0 (or 1) of CORESETGroupIndex could be determined according to (or spatially related to) the reference signal provided in the first indicated TCI state/pair of TCI states - e.g., among the M=2 (or N=2) TCI states/pairs of TCI states indicated by one or more TCI state codepoints in DCI format 1_1 or 1_2 with or without DL assignment, and (spatial domain) transmit filters for transmitting a PUCCH resource associated with a PDCCH (candidate) received in a CORESET associated/configured with value 1 (or 0) of CORESETGroupIndex could be determined according to (or spatially related to) the reference signal provided in the second indicated TCI state/pair of TCI states - e.g., among the M=2 (or N=2) TCI states/pairs of TCI states indicated by one or more TCI state codepoints in DCI format 1_1 or 1_2 with or without DL assignment. As discussed before in the present disclosure, a value of CORESETGroupIndex could be indicated in the higher layer parameter ControlResourceSet that configures a CORESET.

In yet another example, if one or more CORESETGroupIndex values are configured, the UE uses the reference signal(s) provided in the n-th (or m-th) indicated Rel. 17 unified TCI state associated with CORESETGroupIndex value n - 1 (or m - 1) to determine transmit filter for the n-th (or m-th) repetition of the PUCCH transmission associated with PDCCH(s) in Type-1 CORESET(s) associated with CORESETGroupIndex value n - 1 (or m - 1). For N=2 or M=2, the UE uses the reference signal(s) provided in the first indicated Rel. 17 unified TCI state associated with CORESETGroupIndex value 0 (or 1) to determine transmit filter for the first repetition of the PUCCH transmission associated with PDCCH(s) in Type-1 CORESET(s) associated with CORESETGroupIndex value 0 (or 1), and the reference signal(s) provided in the second indicated Rel. 17 unified TCI state associated with CORESETGroupIndex value 1 (or 0) to determine transmit filter for the second repetition of the PUCCH transmission associated with PDCCH(s) in Type-1 CORESET(s) associated with CORESETGroupIndex value 1 (or 0).

Alternatively, the N>1 or M>1 indicated Rel. 17 unified TCI states associated with CORESETGroupIndex values {0, 1, ..., N - 1} or {0, 1, ..., M - 1} could be alternated per $N_{pucch}$ repetitions of the PUCCH transmission associated with PDCCH(s) in Type-1 CORESET(s) associated with CORESETGroupIndex values {0, 1, ..., N - 1} or {0, 1, ..., M - 1}, where $N_{pucch}$=1 if mappingPattern = "cyclicMapping"; else, $N_{pucch}$=N (or M). For N=2 or M=2, the first indicated Rel. 17 unified TCI state associated with CORESETGroupIndex value 0 (or 1) and the second indicated Rel. 17 unified TCI state associated with CORESETGroupIndex value 1 (or 0) could be alternated per $N_{pucch}$ repetitions of the PUCCH transmission associated with PDCCH(s) in Type-1 CORESET(s) associated with CORESETGroupIndex values 0 and/or 1, where $N_{pucch}$=1 if mappingPattern = "cyclicMapping"; else, $N_{pucch}$=2.

Or equivalently, if the UE is provided two values of CORESETGroupIndex (i.e., 0 and 1) - e.g., in PDCCH-Config, (spatial domain) transmit filters for transmitting a PUCCH resource associated with a PDCCH (candidate) received in a Type-1 CORESET associated/configured with value 0 (or 1) of CORESETGroupIndex could be determined according to (or spatially related to) the reference signal provided in the first indicated TCI state/pair of TCI states - e.g., among the M=2 (or N=2) TCI states/pairs of TCI states indicated by one or more TCI state codepoints in DCI format 1_1 or 1_2 with or without DL assignment, and (spatial domain) transmit filters for transmitting a PUCCH resource associated with a PDCCH (candidate) received in a Type-1 CORESET associated/configured with value 1 (or 0) of CORESETGroupIndex could be determined according to (or spatially related to) the reference signal provided in the second indicated TCI state/pair of TCI states - e.g., among the M=2 (or N=2) TCI states/pairs of TCI states indicated by one or more TCI state codepoints in DCI format 1_1 or 1_2 with or without DL assignment. As discussed before in the present disclosure, a value of CORESETGroupIndex could be indicated in the higher layer parameter ControlResourceSet that configures a (Type-1) CORESET.

If the UE receives from the network, e.g., via MAC CE or DCI (e.g., DCI format 1_1 or 1_2 with or without DL assignment) based signaling through TCI-State_r17, one or more Rel. 17 unified TCI state updates during the repetitions of the PUCCH transmission, the UE could determine the beam(s)/transmit filter(s) applied to the repetitions of the PUCCH transmission according to those specified examples in the present disclosure by considering repetitions of PUCCH transmission instead of PDSCH transmission occasions.

For PUSCH repetition when two SRS resource sets are configured in srs-ResourceSetToAddModList or srs-ResourceSetToAddModListDCI-0-2 with higher layer parameter usage in SRS-ResourceSet set to "codebook" or "noncodebook," or for PUSCH non-repetition based transmission scheme(s), following examples can be provided. For PUSCH repetition Type A, in case K>1 consecutive slots, the same symbol allocation is applied across the K consecutive slots and the PUSCH is limited to a single transmission layer. The UE may repeat the TB across the K consecutive slots applying the same symbol allocation in each slot.

In one example, if configured by the network - e.g., if a DCI format 0_1 or DCI format 0_2 indicates codepoint "00" for the SRS resource set indicator, the first indicated Rel. 17 unified TCI state could be applied to/associated with all K consecutive slots. If the UE receives from the network, e.g., via MAC CE or DCI (e.g., DCI format 1_1 or 1_2 with or without DL assignment) based signaling through TCI-State_r17, an update for the first Rel. 17 unified TCI state - referred to as the updated first indicated Rel. 17 unified TCI state - prior to slot $k \in \{1,..., K\}$ in time, the UE could determine the beam applied to slot k according to one or more of the following examples.

In one example, the first indicated Rel. 17 unified TCI state is applied to slot k.

In another example, the updated first indicated Rel. 17 unified TCI state is applied to slot k.

In yet another example, the first indicated Rel. 17 unified TCI state is applied to slot k if the slot k starts before the updated first indicated Rel. 17 unified TCI state becomes effective in time - e.g., the first symbol in slot k starts before the updated first indicated Rel. 17 unified TCI state becomes effective in time.

In yet another example, the updated first indicated Rel. 17 unified TCI state is applied to slot k if slot k starts at or after the updated first indicated Rel. 17 unified TCI state becomes effective in time - e.g., the first symbol in slot k starts at or after the updated first indicated Rel. 17 unified TCI state becomes effective in time.

In another example, if configured by the network - e.g., if a DCI format 0_1 or DCI format 0_2 indicates codepoint "00" for the SRS resource set indicator, the first indicated Rel. 17 unified TCI state could be applied to/associated with all K consecutive slots associated with/scheduled by PDCCH(s) in Type-1 CORESET(s). If the UE receives from the network, e.g., via MAC CE or DCI (e.g., DCI format 1_1 or 1_2 with or without DL assignment) based signaling through TCI-State_r17, an update for the first Rel. 17 unified TCI state - referred to as the updated first indicated Rel. 17 unified TCI state - prior to slot $k \in \{1,..., K\}$ in time, the UE could determine the beam applied to slot k associated with/scheduled by PDCCH(s) in Type-1 CORESET(s) according to one or more of the following examples.

In one example, the first indicated Rel. 17 unified TCI state is applied to slot k associated with/scheduled by PDCCH(s) in Type-1 CORESET(s).

In another example, the updated first indicated Rel. 17 unified TCI state is applied to slot k associated with/scheduled by PDCCH(s) in Type-1 CORESET(s).

In yet another example, the first indicated Rel. 17 unified TCI state is applied to slot k associated with/scheduled by PDCCH(s) in Type-1 CORESET(s) if slot k associated with/scheduled by PDCCH(s) in Type-1 CORESET(s) starts before the updated first indicated Rel. 17 unified TCI state becomes effective in time - e.g., the first symbol in slot k associated with/scheduled by PDCCH(s) in Type-1 CORESET(s) starts before the updated first indicated Rel. 17 unified TCI state becomes effective in time.

In yet another example, the updated first indicated Rel. 17 unified TCI state is applied to slot k associated with/scheduled by PDCCH(s) in Type-1 CORESET(s) if slot k associated with/scheduled by PDCCH(s) in Type-1 CORESET(s) starts at or after the updated first indicated Rel. 17 unified TCI state becomes effective in time - e.g., the first symbol in slot k associated with/scheduled by PDCCH(s) in Type-1 CORESET(s) starts at or after the updated first indicated Rel. 17 unified TCI state becomes effective in time.

In yet another example, if one or more CORESETGroupIndex values are provided, if configured by the network - e.g., if a DCI format 0_1 or DCI format 0_2 indicates codepoint "00" for the SRS resource set indicator, the first indicated Rel. 17 unified TCI state associated with CORESETGroupIndex value 0 (or 1) could be applied to/associated with all K consecutive slots associated with/scheduled by PDCCH(s) in CORESET(s) associated with CORESETGroupIndex value 0 (or 1). If the UE receives from the network, e.g., via MAC CE or DCI (e.g., DCI format 1_1 or 1_2 with or without DL assignment) based signaling through TCI-State_r17, an update for the first Rel. 17 unified TCI state associated with CORESETGroupIndex value 0 (or 1) - referred to as the updated first indicated Rel. 17 unified TCI state associated with CORESETGroupIndex value 0 (or 1) - prior to slot $k \in \{1,..., K\}$ in time, the UE could determine the beam applied to slot k associated with/scheduled by PDCCH(s) in CORESET(s) associated with CORESETGroupIndex value 0 (or 1) according to one or more of the following examples.

In one example, the first indicated Rel. 17 unified TCI state associated with CORESETGroupIndex value 0 (or 1) is applied to slot k associated with/scheduled by PDCCH(s) in CORESET(s) associated with CORESETGroupIndex value 0 (or 1).

In another example, the updated first indicated Rel. 17 unified TCI state associated with CORESETGroupIndex value 0 (or 1) is applied to slot k associated with/scheduled by PDCCH(s) in CORESET(s) associated with CORESETGroupIndex value 0 (or 1).

In yet another example, the first indicated Rel. 17 unified TCI state associated with CORESETGroupIndex value 0 (or 1) is applied to slot k associated with/scheduled by PDCCH(s) in CORESET(s) associated with CORESETGroupIndex value 0 (or 1) if slot k associated with/scheduled by PDCCH(s) in CORESET(s) associated with CORESETGroupIndex value 0 (or 1) starts before the updated first indicated Rel. 17 unified TCI state associated with CORESETGroupIndex value 0 (or 1) becomes effective in time - e.g., the first symbol in slot k associated with/scheduled by PDCCH(s) in CORESET(s) associated with CORESETGroupIndex value 0 (or 1) starts before the updated first indicated Rel. 17 unified TCI state associated with CORESETGroupIndex value 0 (or 1) becomes effective in time.

In yet another example, the updated first indicated Rel. 17 unified TCI state associated with CORESETGroupIndex value 0 (or 1) is applied to slot k associated with/scheduled by PDCCH(s) in CORESET(s) associated with CORESETGroupIndex value 0 (or 1) if slot k associated with/scheduled by PDCCH(s) in CORESET(s) associated with CORESETGroupIndex value 0 (or 1) starts at or after the updated first indicated Rel. 17 unified TCI state associated with CORESETGroupIndex value 0 (or 1) becomes effective in time - e.g., the first symbol in slot k associated with/scheduled by PDCCH(s) in CORESET(s) associated with CORESETGroupIndex value 0 (or 1) starts at or after the updated first indicated Rel. 17 unified TCI state associated with CORESETGroupIndex value 0 (or 1) becomes effective in time.

In yet another example, if one or more CORESETGroupIndex values are provided, if configured by the network - e.g., if a DCI format 0_1 or DCI format 0_2 indicates codepoint "00" for the SRS resource set indicator, the first indicated Rel. 17 unified TCI state associated with CORESETGroupIndex value 0 (or 1) could be applied to/associated with all K consecutive slots associated with/scheduled by PDCCH(s) in Type-1 CORESET(s) associated with CORESETGroupIndex value 0 (or 1). If the UE receives from the network, e.g., via MAC CE or DCI (e.g., DCI format 1_1 or 1_2 with or without DL assignment) based signaling through TCI-State_r17, an update for the first Rel. 17 unified TCI state associated with CORESETGroupIndex value 0 (or 1) - referred to as the updated first indicated Rel. 17 unified TCI state associated with CORESETGroupIndex value 0 (or 1) - prior to slot k∈{1,..., K} in time, the UE could determine the beam applied to slot k associated with/scheduled by PDCCH(s) in Type-1 CORESET(s) associated with CORESETGroupIndex value 0 (or 1) according to one or more of the following:

In one example, the first indicated Rel. 17 unified TCI state associated with CORESETGroupIndex value 0 (or 1) is applied to slot k associated with/scheduled by PDCCH(s) in Type-1 CORESET(s) associated with CORESETGroupIndex value 0 (or 1).

In another example, the updated first indicated Rel. 17 unified TCI state associated with CORESETGroupIndex value 0 (or 1) is applied to slot k associated with/scheduled by PDCCH(s) in Type-1 CORESET(s) associated with CORESETGroupIndex value 0 (or 1).

In yet another example, the first indicated Rel. 17 unified TCI state associated with CORESETGroupIndex value 0 (or 1) is applied to slot k associated with/scheduled by PDCCH(s) in Type-1 CORESET(s) associated with CORESETGroupIndex value 0 (or 1) if slot k associated with/scheduled by PDCCH(s) in Type-1 CORESET(s) associated with CORESETGroupIndex value 0 (or 1) starts before the updated first indicated Rel. 17 unified TCI state associated with CORESETGroupIndex value 0 (or 1) becomes effective in time - e.g., the first symbol in slot k associated with/scheduled by PDCCH(s) in Type-1 CORESET(s) associated with CORESETGroupIndex value 0 (or 1) starts before the updated first indicated Rel. 17 unified TCI state associated with CORESETGroupIndex value 0 (or 1) becomes effective in time.

In yet another example, the updated first indicated Rel. 17 unified TCI state associated with CORESETGroupIndex value 0 (or 1) is applied to slot k associated with/scheduled by PDCCH(s) in Type-1 CORESET(s) associated with CORESETGroupIndex value 0 (or 1) if slot k associated with/scheduled by PDCCH(s) in Type-1 CORESET(s) associated with CORESETGroupIndex value 0 (or 1) starts at or after the updated first indicated Rel. 17 unified TCI state associated with CORESETGroupIndex value 0 (or 1) becomes effective in time - e.g., the first symbol in slot k associated with/scheduled by PDCCH(s) in Type-1 CORESET(s) associated with CORESETGroupIndex value 0 (or 1) starts at or after the updated first indicated Rel. 17 unified TCI state associated with CORESETGroupIndex value 0 (or 1) becomes effective in time.

In yet another example, if configured by the network - e.g., if a DCI format 0_1 or DCI format 0_2 indicates codepoint "01" for the SRS resource set indicator, the second indicated Rel. 17 unified TCI state could be applied to/associated with all K consecutive slots. If the UE receives from the network, e.g., via MAC CE or DCI (e.g., DCI format 1_1 or 1_2 with or without DL assignment) based signaling through TCI-State_r17, an update for the second Rel. 17 unified TCI state - referred to as the updated second indicated Rel. 17 unified TCI state - prior to slot k∈{1,..., K} in time, the UE could determine the beam applied to slot k according to one or more of the following examples.

In one example, the second indicated Rel. 17 unified TCI state is applied to slot k.

In another example, the updated second indicated Rel. 17 unified TCI state is applied to slot k.

In yet another example, the second indicated Rel. 17 unified TCI state is applied to slot k if the slot k starts before the updated second indicated Rel. 17 unified TCI state becomes effective in time - e.g., the first symbol in slot k starts before the updated second indicated Rel. 17 unified TCI state becomes effective in time.

In yet another example, the updated second indicated Rel. 17 unified TCI state is applied to slot k if slot k starts at or after the updated second indicated Rel. 17 unified TCI state becomes effective in time - e.g., the first symbol in slot k starts at or after the updated second indicated Rel. 17 unified TCI state becomes effective in time.

In yet another example, if configured by the network - e.g., if a DCI format 0_1 or DCI format 0_2 indicates codepoint "01" for the SRS resource set indicator, the second indicated Rel. 17 unified TCI state could be applied to/associated with all K consecutive slots associated with/scheduled by PDCCH(s) in Type-1 CORESET(s). If the UE receives from the network, e.g., via MAC CE or DCI (e.g., DCI format 1_1 or 1_2 with or without DL assignment) based signaling through TCI-State_r17, an update for the second Rel. 17 unified TCI state - referred to as the updated second indicated Rel. 17 unified TCI state - prior to slot k∈{1,..., K} in time, the UE could determine the beam applied to slot k associated with/scheduled by PDCCH(s) in Type-1 CORESET(s) according to one or more of the following examples.

In one example, the second indicated Rel. 17 unified TCI state is applied to slot k associated with/scheduled by PDCCH(s) in Type-1 CORESET(s).

In another example, the updated second indicated Rel. 17 unified TCI state is applied to slot k associated with/scheduled by PDCCH(s) in Type-1 CORESET(s).

In yet another example, the second indicated Rel. 17 unified TCI state is applied to slot k associated with/-scheduled by PDCCH(s) in Type-1 CORESET(s) if slot k associated with/scheduled by PDCCH(s) in Type-1 CORESET(s) starts before the updated second indicated Rel. 17 unified TCI state becomes effective in time - e.g., the first symbol in slot k associated with/scheduled by PDCCH(s) in Type-1 CORESET(s) starts before the updated second indicated Rel. 17 unified TCI state becomes effective in time.

In yet another example, the updated second indicated Rel. 17 unified TCI state is applied to slot k associated with/scheduled by PDCCH(s) in Type-1 CORESET(s) if slot k associated with/scheduled by PDCCH(s) in Type-1 CORESET(s) starts at or after the updated second indicated Rel. 17 unified TCI state becomes effective in time - e.g., the first symbol in slot k associated with/scheduled by PDCCH(s) in Type-1 CORESET(s) starts at or after the updated second indicated Rel. 17 unified TCI state becomes effective in time.

In yet another example, if one or more CORESETGroupIndex values are configured, if configured by the network - e.g., if a DCI format 0_1 or DCI format 0_2 indicates codepoint "01" for the SRS resource set indicator, the second indicated Rel. 17 unified TCI state associated with CORESETGroupIndex value 1 (or 0) could be applied to/associated with all K consecutive slots associated with/scheduled by PDCCH(s) in CORESET(s) associated with CORESETGroupIndex value 1 (or 0). If the UE receives from the network, e.g., via MAC CE or DCI (e.g., DCI format 1_1 or 1_2 with or without DL assignment) based signaling through TCI-State_r17, an update for the second Rel. 17 unified TCI state associated with CORESETGroupIndex value 1 (or 0) - referred to as the updated second indicated Rel. 17 unified TCI state associated with CORESETGroupIndex value 1 (or 0) - prior to slot k∈{1,..., K} in time, the UE could determine the beam applied to slot k associated with/scheduled by PDCCH(s) in CORESET(s) associated with CORESETGroupIndex value 1 (or 0) according to one or more of the following examples.

In one example, the second indicated Rel. 17 unified TCI state associated with CORESETGroupIndex value 1 (or 0) is applied to slot k associated with/scheduled by PDCCH(s) in CORESET(s) associated with CORESETGroupIndex value 1 (or 0).

In another example, the updated second indicated Rel. 17 unified TCI state associated with CORESETGroupIndex value 1 (or 0) is applied to slot k associated with/scheduled by PDCCH(s) in CORESET(s) associated with CORESETGroupIndex value 1 (or 0).

In yet another example, the second indicated Rel. 17 unified TCI state associated with CORESETGroupIndex value 1 (or 0) is applied to slot k associated with/scheduled by PDCCH(s) in CORESET(s) associated with CORESETGroupIndex value 1 (or 0) if slot k associated with/scheduled by PDCCH(s) in CORESET(s) associated with CORESETGroupIndex value 1 (or 0) starts before the updated second indicated Rel. 17 unified TCI state associated with CORESETGroupIndex value 1 (or 0) becomes effective in time - e.g., the first symbol in slot k associated with/scheduled by PDCCH(s) in CORESET(s) associated with CORESETGroupIndex value 1 (or 0) starts before the updated second indicated Rel. 17 unified TCI state associated with CORESETGroupIndex value 1 (or 0) becomes effective in time.

In yet another example, the updated second indicated Rel. 17 unified TCI state associated with CORESETGroupIndex value 1 (or 0) is applied to slot k associated with/scheduled by PDCCH(s) in CORESET(s) associated with CORESETGroupIndex value 1 (or 0) if slot k associated with/scheduled by PDCCH(s) in CORESET(s) associated with CORESETGroupIndex value 1 (or 0) starts at or after the updated second indicated Rel. 17 unified TCI state associated with CORESETGroupIndex value 1 (or 0) becomes effective in time - e.g., the first symbol in slot k associated with/scheduled by PDCCH(s) in CORESET(s) associated with CORESETGroupIndex value 1 (or 0) starts at or after the updated second indicated Rel. 17 unified TCI state associated with CORESETGroupIndex value 1 (or 0) becomes effective in time.

In yet another example, if one or more CORESETGroupIndex values are configured, if configured by the network - e.g., if a DCI format 0_1 or DCI format 0_2 indicates codepoint "01" for the SRS resource set indicator, the second indicated Rel. 17 unified TCI state associated with CORESETGroupIndex value 1 (or 0) could be applied to/associated with all K consecutive slots associated with/scheduled by PDCCH(s) in Type-1 CORESET(s) associated with CORESETGroupIndex value 1 (or 0). If the UE receives from the network, e.g., via MAC CE or DCI (e.g., DCI format 1_1 or 1_2 with or without DL assignment) based signaling through TCI-State_r17, an update for the second Rel. 17 unified TCI state associated with CORESETGroupIndex value 1 (or 0) - referred to as the updated second indicated Rel. 17 unified TCI state associated with CORESETGroupIndex value 1 (or 0) - prior to slot k∈{1,..., K} in time, the UE could determine the beam applied to slot k associated with/scheduled by PDCCH(s) in Type-1 CORESET(s) associated with CORESETGroupIndex value 1 (or 0) according to one or more of the following examples.

In one example, the second indicated Rel. 17 unified TCI state associated with CORESETGroupIndex value 1 (or 0) is applied to slot k associated with/scheduled by PDCCH(s) in Type-1 CORESET(s) associated with CORESETGroupIndex value 1 (or 0).

In another example, the updated second indicated Rel. 17 unified TCI state associated with CORESETGroupIndex value 1 (or 0) is applied to slot k associated with/scheduled by PDCCH(s) in Type-1 CORESET(s) associated with CORESETGroupIndex value 1 (or 0).

In yet another example, the second indicated Rel. 17 unified TCI state associated with CORESETGroupIndex value 1 (or 0) is applied to slot k associated with/scheduled by PDCCH(s) in Type-1 CORESET(s) associated with CORESETGroupIndex value 1 (or 0) if slot k associated with/scheduled by PDCCH(s) in Type-1 CORESET(s) associated with CORESETGroupIndex value 1 (or 0) starts before the updated second indicated Rel. 17 unified TCI state associated with CORESETGroupIndex value 1 (or 0) becomes effective in time - e.g., the first symbol in slot k associated with/scheduled by PDCCH(s) in Type-1 CORESET(s) associated with CORESETGroupIndex value 1 (or 0) starts before the updated second indicated Rel. 17 unified TCI state associated with CORESETGroupIndex value 1 (or 0) becomes effective in time.

In yet another example, the updated second indicated Rel. 17 unified TCI state associated with CORESETGroupIndex value 1 (or 0) is applied to slot k associated with/scheduled by PDCCH(s) in Type-1 CORESET(s) associated with CORESETGroupIndex value 1 (or 0) if slot k associated with/scheduled by PDCCH(s) in Type-1 CORESET(s) associated with CORESETGroupIndex value 1 (or 0) starts at or after the updated second indicated Rel. 17 unified TCI state associated with CORESETGroupIndex value 1 (or 0) becomes effective in time - e.g., the first symbol in slot k associated with/scheduled by PDCCH(s) in Type-1 CORESET(s) associated with CORESETGroupIndex value 1 (or 0) starts at or after the updated second indicated Rel. 17 unified TCI state associated with CORESETGroupIndex value 1 (or 0) becomes effective in time.

In yet another example, if configured by the network - e.g., if a DCI format 0_1 or DCI format 0_2 indicates codepoint "10" for the SRS resource set indicator, (1) when K = 2, M=2 or N=2, the first and second indicated Rel. 17 unified TCI states are applied to the first and second slots of 2 consecutive slots, respectively; (2) when K > 2 and cyclicMapping in PUSCH-Config is enabled, the indicated Rel. 17 unified TCI state n (or m) is applied to the n-th (or m-th) slot of K consecutive slots, and the same TCI state mapping pattern continues to the remaining slots of K consecutive slots. For M=2 or N=2, the first and second indicated Rel. 17 unified TCI states are applied to the first and second slots of K consecutive slots, respectively, and the same TCI state mapping pattern continues to the remaining slots of K consecutive slots; (3) when K > 2 and sequentialMapping in PUSCH-Config is enabled, the indicated Rel. 17 unified TCI state n (or m) is applied to the n-th (or m-th) and (n+1)-th (or (m+1)-th) slots of K consecutive slots, and the same TCI state mapping pattern continues to the remaining slots of K consecutive slots. For M=2 or N=2, the first indicated Rel. 17 unified TCI state is applied to the first and second slots of K consecutive slots, and the second indicated Rel. 17 unified TCI state is applied to the third and fourth slots of K consecutive slots, and the same TCI state mapping pattern continues to the remaining slots of K consecutive slots.

In yet another example, if configured by the network - e.g., if a DCI format 0_1 or DCI format 0_2 indicates codepoint "10" for the SRS resource set indicator, (1) when K = 2, M=2 or N=2, the first and second indicated Rel. 17 unified TCI states are applied to the first and second slots of 2 consecutive slots associated with/scheduled by PDCCH(s) in Type-1 CORESET(s), respectively; (2) when K > 2 and cyclicMapping in PUSCH-Config is enabled, the indicated Rel. 17 unified TCI state n (or m) is applied to the n-th (or m-th) slot of K consecutive slots associated with/scheduled by PDCCH(s) in Type-1 CORESET(s), and the same TCI state mapping pattern continues to the remaining slots of K consecutive slots associated with/scheduled by PDCCH(s) in Type-1 CORESET(s).

For M=2 or N=2, the first and second indicated Rel. 17 unified TCI states are applied to the first and second slots of K consecutive slots associated with/scheduled by PDCCH(s) in Type-1 CORESET(s), respectively, and the same TCI state mapping pattern continues to the remaining slots of K consecutive slots associated with/scheduled by PDCCH(s) in Type-1 CORESET(s); (3) when K > 2 and sequentialMapping in PUSCH-Config is enabled, the indicated Rel. 17 unified TCI state n (or m) is applied to the n-th (or m-th) and (n+1)-th (or (m+1)-th) slots of K consecutive slots associated with/scheduled by PDCCH(s) in Type-1 CORESET(s), and the same TCI state mapping pattern continues to the remaining slots of K consecutive slots associated with/scheduled by PDCCH(s) in Type-1 CORESET(s). For M=2 or N=2, the first indicated Rel. 17 unified TCI state is applied to the first and second slots of K consecutive slots associated with/scheduled by PDCCH(s) in Type-1 CORESET(s), and the second indicated Rel. 17 unified TCI state is applied to the third and fourth slots of K consecutive slots associated with/scheduled by PDCCH(s) in Type-1 CORESET(s), and the same TCI state mapping pattern continues to the remaining slots of K consecutive slots associated with/scheduled by PDCCH(s) in Type-1 CORESET(s).

In yet another example, if one or more CORESETGroupIndex values are configured, and if configured by the network - e.g., if a DCI format 0_1 or DCI format 0_2 indicates codepoint "10" for the SRS resource set indicator, (1) when K = 2, M=2 or N=2, the first indicated Rel. 17 unified TCI state associated with CORESETGroupIndex value 0 (or 1) and the second indicated Rel. 17 unified TCI state associated with CORESETGroupIndex value 1 (or 0) are applied to the first slot associated with/scheduled by PDCCH(s) in CORESET(s) associated with CORESETGroupIndex value 0 (or 1) and the second slot associated with/scheduled by PDCCH(s) in CORESET(s) associated with CORESETGroupIndex value 1 (or 0) of 2 consecutive slots associated with/scheduled by PDCCH(s) in CORESET(s) associated with CORESETGroupIndex values 0 and/or 1, respectively; (2) when K > 2 and cyclicMapping in PUSCH-Config is enabled, the indicated Rel. 17 unified TCI state n (or m) is applied to the n-th (or m-th) slot associated with/scheduled by PDCCH(s) in CORESET(s) associated with CORESETGroupIndex value n - 1 (or m - 1) of K consecutive slots associated with/scheduled by PDCCH(s) in CORESET(s) associated with CORESETGroupIndex values {0, 1, ..., N - 1} or {0, 1, ..., M - 1}, and the same TCI state mapping pattern continues to the remaining slots of K consecutive slots associated with/scheduled by PDCCH(s) in CORESET(s) associated with CORESETGroupIndex values {0, 1, ..., N - 1} or {0, 1, ..., M - 1}.

For M=2 or N=2, the first indicated Rel. 17 unified TCI state associated with CORESETGroupIndex value 0 (or 1) and the second indicated Rel. 17 unified TCI state associated with CORESETGroupIndex value 1 (or 0) are applied to the first slot associated with/scheduled by PDCCH(s) in CORESET(s) associated with CORESETGroupIndex value 0 (or 1) and second slot associated with/scheduled by PDCCH(s) in CORESET(s) associated with CORESETGroupIndex value 1 (or 0) of K consecutive slots associated with/scheduled by PDCCH(s) in CORESET(s) associated with CORESETGroupIndex values 0 and/or 1, respectively, and the same TCI state mapping pattern continues to the remaining slots of K consecutive slots associated with/scheduled by PDCCH(s) in CORESET(s) associated with CORESETGroupIndex values 0 and/or 1; (3) when K > 2 and sequentialMapping in PUSCH-Config is enabled, the indicated Rel. 17 unified TCI state n (or m) associated with CORESETGroupIndex value n - 1 (or m - 1) is applied to the n-th (or m-th) slot associated with/scheduled by PDCCH(s) in CORESET(s) associated with CORESETGroupIndex value n - 1 (or m - 1) and the (n+1)-th (or (m+1)-th) slot associated with/scheduled by PDCCH(s) in CORESET(s) associated with CORESETGroupIndex value n - 1 (or m - 1) of K consecutive slots associated with/scheduled by PDCCH(s) in CORESET(s) associated with CORESETGroupIndex values {0, 1, ..., N - 1} or {0, 1, ..., M - 1}, and the same TCI state mapping pattern continues to the remaining slots of K consecutive slots associated with/scheduled by PDCCH(s) in CORESET(s) associated with CORESETGroupIndex values {0, 1, ..., N - 1} or {0, 1, ..., M - 1}.

For M=2 or N=2, the first indicated Rel. 17 unified TCI state associated with CORESETGroupIndex value 0 (or 1) is applied to the first and second slots associated with/scheduled by PDCCH(s) in CORESET(s) associated with CORESETGroupIndex value 0 (or 1) of K consecutive slots associated with/scheduled by PDCCH(s) in CORESET(s) associated with CORESETGroupIndex values 0 and/or 1, and the second indicated Rel. 17 unified TCI state associated with CORESETGroupIndex value 1 (or 0) is applied to the third and fourth slots associated with/scheduled by PDCCH(s) in CORESET(s) associated with CORESETGroupIndex value 1 (or 0) of K consecutive slots associated with/scheduled by PDCCH(s) in CORESET(s) associated with CORESETGroupIndex values 0 and/or 1, and the same TCI state mapping pattern continues to the remaining slots of K consecutive slots associated with/scheduled by PDCCH(s) in Type-1 CORESET(s) CORESETGroupIndex values 0 and/or 1.

In yet another example, if one or more CORESETGroupIndex values are configured, and if configured by the network - e.g., if a DCI format 0_1 or DCI format 0_2 indicates codepoint "10" for the SRS resource set indicator, (1) when K = 2, M=2 or N=2, the first indicated Rel. 17 unified TCI state associated with CORESETGroupIndex value 0 (or 1) and the second indicated Rel. 17 unified TCI state associated with CORESETGroupIndex value 1 (or 0) are applied to the first slot associated with/scheduled by PDCCH(s) in Type-1 CORESET(s) associated with CORESETGroupIndex value 0 (or 1) and the second slot associated with/scheduled by PDCCH(s) in Type-1 CORESET(s) associated with CORESETGroupIndex value 1 (or 0) of 2 consecutive slots associated with/scheduled by PDCCH(s) in Type-1 CORESET(s) associated with CORESETGroupIndex values 0 and/or 1, respectively; (2) when K > 2 and cyclicMapping in PUSCH-Config is enabled, the indicated Rel. 17 unified TCI state n (or m) is applied to the n-th (or m-th) slot associated with/scheduled by PDCCH(s) in CORESET(s) associated with CORESETGroupIndex value n - 1 (or m - 1) of K consecutive slots associated with/scheduled by PDCCH(s) in Type-1 CORESET(s) associated with CORESETGroupIndex values {0, 1, ..., N - 1} or {0, 1, ..., M - 1}, and the same TCI state mapping pattern continues to the remaining slots of K consecutive slots associated with/scheduled by PDCCH(s) in Type-1 CORESET(s) associated with CORESETGroupIndex values {0, 1, ..., N - 1} or {0, 1, ..., M - 1}.

For M=2 or N=2, the first indicated Rel. 17 unified TCI state associated with CORESETGroupIndex value 0 (or 1) and the second indicated Rel. 17 unified TCI state associated with CORESETGroupIndex value 1 (or 0) are applied to the first slot associated with/scheduled by PDCCH(s) in Type-1 CORESET(s) associated with CORESETGroupIndex value 0 (or 1) and second slot associated with/scheduled by PDCCH(s) in Type-1 CORESET(s) associated with CORESETGroupIndex value 1 (or 0) of K consecutive slots associated with/scheduled by PDCCH(s) in Type-1 CORESET(s) associated with/scheduled by PDCCH(s) in Type-1 CORESET(s) associated with CORESETGroupIndex values 0 and/or 1, respectively, and the same TCI state mapping pattern continues to the remaining slots of K consecutive slots associated with/scheduled by PDCCH(s) in Type-1 CORESET(s) associated with CORESETGroupIndex values 0 and/or 1; (3) when K > 2 and sequentialMapping in PUSCH-Config is enabled, the indicated Rel. 17 unified TCI state n (or m) associated with CORESETGroupIndex value n - 1 (or m - 1) is applied to the n-th (or m-th) slot associated with/scheduled by PDCCH(s) in Type-1 CORESET(s) associated with CORESETGroupIndex value n - 1 (or m - 1) and the (n+1)-th (or (m+1)-th) slot associated with/scheduled by PDCCH(s) in Type-1 CORESET(s) associated with CORESETGroupIndex value n - 1 (or m - 1) of K consecutive slots associated with/scheduled by PDCCH(s) in Type-1 CORESET(s) associated with CORESETGroupIndex values {0, 1, ..., N - 1} or {0, 1, .., M - 1}, and the same TCI state mapping pattern continues to the remaining slots of K consecutive slots associated with/scheduled by PDCCH(s) in Type-1 CORESET(s) associated with CORESETGroupIndex values {0, 1, ..., N - 1} or {0, 1, ..., M - 1}.

For M=2 or N=2, the first indicated Rel. 17 unified TCI state associated with CORESETGroupIndex value 0 (or 1) is applied to the first and second slots associated with/scheduled by PDCCH(s) in Type-1 CORESET(s) associated with CORESETGroupIndex value 0 (or 1) of K consecutive slots associated with/scheduled by PDCCH(s) in Type-1 CORESET(s) associated with CORESETGroupIndex values 0 and/or 1, and the second indicated Rel. 17 unified TCI state associated with CORESETGroupIndex value 1 (or 0) is applied to the third and fourth slots associated with/-scheduled by PDCCH(s) in Type-1 CORESET(s) associated with CORESETGroupIndex value 1 (or 0) of K consecutive slots associated with/scheduled by PDCCH(s) in Type-1 CORESET(s) associated with CORESETGroupIndex values 0 and/or 1, and the same TCI state mapping pattern continues to the remaining slots of K consecutive slots associated with/scheduled by PDCCH(s) in Type-1 CORESET(s) CORESETGroupIndex values 0 and/or 1.

In yet another example, if configured by the network - e.g., if a DCI format 0_1 or DCI format 0_2 indicates codepoint "10" for the SRS resource set indicator, (1) when K = 2, M=2 or N=2, the second and first indicated Rel. 17 unified TCI states are applied to the first and second slots of 2 consecutive slots, respectively; (2) when K > 2 and cyclicMapping in PUSCH-Config is enabled, for M=2 or N=2, the second and first indicated Rel. 17 unified TCI states are applied to the first and second slots of K consecutive slots, respectively, and the same TCI state mapping pattern continues to the remaining slots of K consecutive slots; (3) when K > 2 and sequentialMapping in PUSCH-Config is enabled, for M=2 or N=2, the second indicated Rel. 17 unified TCI state is applied to the first and second slots of K consecutive slots, and the first indicated Rel. 17 unified TCI state is applied to the third and fourth slots of K consecutive slots, and the same TCI state mapping pattern continues to the remaining slots of K consecutive slots.

In yet another example, if configured by the network - e.g., if a DCI format 0_1 or DCI format 0_2 indicates codepoint "10" for the SRS resource set indicator, (1) when K = 2, M=2 or N=2, the second and first indicated Rel. 17 unified TCI states are applied to the first and second slots of 2 consecutive slots associated with/scheduled by PDCCH(s) in Type-1 CORESET(s), respectively; (2) when K > 2 and cyclicMapping in PUSCH-Config is enabled, for M=2 or N=2, the second and first indicated Rel. 17 unified TCI states are applied to the first and second slots of K consecutive slots associated with/scheduled by PDCCH(s) in Type-1 CORESET(s), respectively, and the same TCI state mapping pattern continues to the remaining slots of K consecutive slots associated with/scheduled by PDCCH(s) in Type-1 CORESET(s); (3) when K > 2 and sequentialMapping in PUSCH-Config is enabled, for M=2 or N=2, the second indicated Rel. 17 unified TCI state is applied to the first and second slots of K consecutive slots associated with/scheduled by PDCCH(s) in Type-1 CORESET(s), and the first indicated Rel. 17 unified TCI state is applied to the third and fourth slots of K consecutive slots associated with/scheduled by PDCCH(s) in Type-1 CORESET(s), and the same TCI state mapping pattern continues to the remaining slots of K consecutive slots associated with/scheduled by PDCCH(s) in Type-1 CORESET(s).

In yet another example, if one or more CORESETGroupIndex values are configured, and if configured by the network - e.g., if a DCI format 0_1 or DCI format 0_2 indicates codepoint "10" for the SRS resource set indicator, (1) when K = 2, M=2 or N=2, the second indicated Rel. 17 unified TCI state associated with CORESETGroupIndex value 1 (or 0) and the first indicated Rel. 17 unified TCI state associated with CORESETGroupIndex value 0 (or 1) are applied to the first slot associated with/scheduled by PDCCH(s) in CORESET(s) associated with CORESETGroupIndex value 1 (or 0) and the second slot associated with/scheduled by PDCCH(s) in CORESET(s) associated with CORESETGroupIndex value 0 (or 1) of 2 consecutive slots associated with/scheduled by PDCCH(s) in CORESET(s) associated with CORESETGroupIndex values 0 and/or 1, respectively; (2) when K > 2 and cyclicMapping in PUSCH-Config is enabled, for M=2 or N=2, the second indicated Rel. 17 unified TCI state associated with CORESETGroupIndex value 1 (or 0) and the first indicated Rel. 17 unified TCI state associated with CORESETGroupIndex value 0 (or 1) are applied to the first slot associated with/scheduled by PDCCH(s) in CORESET(s) associated with CORESETGroupIndex value 1 (or 0) and second slot associated with/scheduled by PDCCH(s) in CORESET(s) associated with CORESETGroupIndex value 0 (or 1) of K consecutive slots associated with/scheduled by PDCCH(s) in CORESET(s) associated with CORESETGroupIndex values 0 and/or 1, respectively, and the same TCI state mapping pattern continues to the remaining slots of K consecutive slots associated with/scheduled by PDCCH(s) in CORESET(s) associated with CORESETGroupIndex values 0 and/or 1; (3) when K > 2 and sequentialMapping in PUSCH-Config is enabled, for M=2 or N=2, the second indicated Rel. 17 unified TCI state associated with CORESETGroupIndex value 1 (or 0) is applied to the first and second slots associated with/scheduled by PDCCH(s) in CORESET(s) associated with CORESETGroupIndex value 1 (or 0) of K consecutive slots associated with/scheduled by PDCCH(s) in CORESET(s) associated with CORESETGroupIndex values 0 and/or 1, and the first indicated Rel. 17 unified TCI state associated with CORESETGroupIndex value 0 (or 1) is applied to the third and fourth slots associated with/scheduled by PDCCH(s) in CORESET(s) associated with CORESETGroupIndex value 0 (or 1) of K consecutive slots associated with/scheduled by PDCCH(s) in CORESET(s) associated with CORESETGroupIndex values 0 and/or 1, and the same TCI state mapping pattern continues to the remaining slots of K consecutive slots associated with/scheduled by PDCCH(s) in CORESET(s) CORESETGroupIndex values 0 and/or 1.

In yet another example, if one or more CORESETGroupIndex values are configured, and if configured by the network - e.g., if a DCI format 0_1 or DCI format 0_2 indicates codepoint "10" for the SRS resource set indicator, (1) when K = 2, M=2 or N=2, the second indicated Rel. 17 unified TCI state associated with CORESETGroupIndex value 1 (or 0) and the first indicated Rel. 17 unified TCI state associated with CORESETGroupIndex value 0 (or 1) are applied to the first slot associated with/scheduled by PDCCH(s) in Type-1 CORESET(s) associated with CORESETGroupIndex value 1 (or 0) and the second slot associated with/scheduled by PDCCH(s) in Type-1 CORESET(s) associated with CORESETGroupIndex value 0 (or 1) of 2 consecutive slots associated with/scheduled by PDCCH(s) in Type-1 CORESET(s) associated with CORESETGroupIndex values 0 and/or 1, respectively; (2) when K > 2 and cyclicMapping in PUSCH-Config is enabled, for M=2 or N=2, the second indicated Rel. 17 unified TCI state associated with CORESETGroupIndex value 1 (or 0) and the first indicated Rel. 17 unified TCI state associated with CORESETGroupIndex value 0 (or 1) are applied to the first slot associated with/scheduled by PDCCH(s) in Type-1 CORESET(s) associated with CORESETGroupIndex value 1 (or 0) and second slot associated with/scheduled by PDCCH(s) in Type-1 CORESET(s) associated with CORESETGroupIndex value 0 (or 1) of K consecutive slots associated with/scheduled by PDCCH(s) in Type-1 CORESET(s) associated with CORESETGroupIndex values 0 and/or 1, respectively, and the same TCI state mapping pattern continues to the remaining slots of K consecutive slots associated with/scheduled by PDCCH(s) in Type-1 CORESET(s) associated with CORESETGroupIndex values 0 and/or 1; (3) when K > 2 and sequentialMapping in PUSCH-Config is enabled, for M=2 or N=2, the second indicated Rel. 17 unified TCI state associated with CORESETGroupIndex value 1 (or 0) is applied to the first and second slots associated with/scheduled by PDCCH(s) in Type-1 CORESET(s) associated with CORESETGroupIndex value 1 (or 0) of K consecutive slots associated with/scheduled by PDCCH(s) in Type-1 CORESET(s) associated with CORESETGroupIndex values 0 and/or 1, and the first indicated Rel. 17 unified TCI state associated with CORESETGroupIndex value 0 (or 1) is applied to the third and fourth slots associated with/scheduled by PDCCH(s) in Type-1 CORESET(s) associated with CORESETGroupIndex value 0 (or 1) of K consecutive slots associated with/scheduled by PDCCH(s) in Type-1 CORESET(s) associated with CORESETGroupIndex values 0 and/or 1, and the same TCI state mapping pattern continues to the remaining slots of K consecutive slots associated with/scheduled by PDCCH(s) in Type-1 CORESET(s) CORESETGroupIndex values 0 and/or 1.

In one example, when K = 2, M=2 or N=2, if the UE receives from the network, e.g., via MAC CE or DCI (e.g., DCI format 1_1 or 1_2 with or without DL assignment) based signaling through TCI-State_r17, an update for the first or second Rel. 17 unified TCI states - referred to as the updated first or second indicated Rel. 17 unified TCI states, the UE could determine the beam(s) applied to the first or second slots of 2 consecutive slots according to those specified example in the present disclosure by considering slots instead of PDSCH transmission occasions.

In one example, when K > 2 and cyclicMapping in PUSCH-Config is enabled, for M=2 or N=2, if the UE receives from the network, e.g., via MAC CE or DCI (e.g., DCI format 1_1 or 1_2 with or without DL assignment) based signaling through TCI-State_r17, an update for the first or second Rel. 17 unified TCI states - referred to as the updated first or second indicated Rel. 17 unified TCI states, the UE could determine the beam(s) applied to the first or second slots of K consecutive slots according to those specified example in the present disclosure by considering slots instead of PDSCH transmission occasions; the same TCI mapping pattern continues to the remaining slots of K consecutive slots until the UE receives from the network another update for the first or second Rel. 17 unified TCI states and repeats the same procedures as discussed above for determining beam(s) applied to the slots of K consecutive slots.

In one example, when K > 2 and sequentialMapping in PUSCH-Config is enabled, M=2 or N=2, if the UE receives from the network, e.g., via MAC CE or DCI (e.g., DCI format 1_1 or 1_2 with or without DL assignment) based signaling through TCI-State_r17, an update for the first or second Rel. 17 unified TCI states - referred to as the updated first or second indicated Rel. 17 unified TCI states, the UE could determine the beam(s) applied to the first and second slots of K consecutive slots, or the third and fourth slots of K consecutive slots, according to those specified example in the present disclosure by considering slots instead of PDSCH transmission occasions; the same TCI mapping pattern continues to the remaining slots of K consecutive slots until the UE receives from the network another update for the first or second Rel. 17 unified TCI states and repeats the same procedures as discussed above for determining beam(s) applied to the slots of K consecutive slots.

The mentioned design procedures can be extended: (i) by considering K consecutive slots associated with/scheduled by PDCCH(s) in Type-1 CORESET(s), (ii) by considering the indicated Rel. 17 unified TCI states associated with CORESETGroupIndex values 0 or 1 and K consecutive slots associated with/scheduled by PDCCH(s) in CORESET(s) associated with CORESETGroupIndex values 0 or 1, (iii) by considering the indicated Rel. 17 unified TCI states associated with CORESETGroupIndex values 0 or 1 and K consecutive slots associated with/scheduled by PDCCH(s) in Type-1 CORESET(s) associated with CORESETGroupIndex values 0 or 1, (iv) by alternating the (updated) first and second indicated Rel. 17 unified TCI states, (v) by alternating the (updated) first and second indicated Rel. 17 unified TCI states and considering K consecutive slots associated with/scheduled by PDCCH(s) in Type-1 CORESET(s), (vi) by alternating the (updated) first and second indicated Rel. 17 unified TCI states and considering the indicated Rel. 17 unified TCI states associated with CORESETGroupIndex values 0 or 1 and K consecutive slots associated with/scheduled by PDCCH(s) in CORESET(s) associated with CORESETGroupIndex values 0 or 1, and (vii) by alternating the (updated) first and second indicated Rel. 17 unified TCI states and considering the indicated Rel. 17 unified TCI states associated with CORESETGroupIndex values 0 or 1 and K consecutive slots associated with/scheduled by PDCCH(s) in Type-1 CORESET(s) associated with CORESETGroupIndex values 0 or 1.

According to the design examples specified herein in the present disclosure, for PUSCH repetition type A, a first and a second PUSCHs could be repetitions (i.e., of the same TB) across/over the K consecutive slots. For example, when cyclicMapping is enabled/configured in PUSCH-Config, the first PUSCH maps to the first slot (or corresponds to the first PUSCH transmission occasion), the second PUSCH maps to the second slot (or corresponds to the second PUSCH transmission occasion), and so on - i.e., the same mapping pattern of the first/second PUSCHs applies to the remaining slots of the K consecutive slots. For another example, when sequentialMapping is enabled/configured in PUSCH-Config, the first PUSCH maps to the first and second slots (or corresponds to the first and second PUSCH transmission occasions), the second PUSCH maps to the third and fourth slots (or corresponds to the third and fourth PUSCH transmission occasions), and so on - i.e., the same mapping pattern of the first/second PUSCHs applies to the remaining slots of the K consecutive slots.

In one embodiment, for PUSCH repetition type A, the UE could use/apply the first indicated (UL or joint) TCI state - among the N>1 (or M>1) TCI states, e.g., indicated by one or more TCI codepoints of one or more TCI fields in a beam indication DCI or unified TCI states activation MAC CE - to transmit the first PUSCH in its/their corresponding slot(s) - as specified herein in the present disclosure - among the K consecutive slots, and the second indicated (UL or joint) TCI state - among the N>1 (or M>1) TCI states, e.g., indicated by one or more TCI codepoints of one or more TCI fields in a beam indication DCI or unified TCI states activation MAC CE - to transmit the second PUSCH in its/their corresponding slot(s) - as specified herein in the present disclosure - among the K consecutive slots, wherein the N>1 (or M>1) TCI states and/or the beam indication DCI/MAC CE indicating the N>1 (or M>1) TCI states could be indicated/activated/received in the first slot - e.g., among the K consecutive slots - with the scheduled PUSCH(s) or the N>1 (or M>1) TCI states could become effective/applicable in the first slot - e.g., among the K consecutive slots - with the scheduled PUSCH(s).

In one embodiment, for PUSCH repetition type A, in a slot among the K consecutive slots, the UE could be indicated/provided/configured/activated by the network, e.g., via beam indication DCI (e.g., DCI format 1_1/1_2 with or without DL assignment) and/or unified TCI states activation MAC CE, an update for the TCI state associated to the first PUSCH (or transmission of the first PUSCH) - referred to as updated first TCI state. For this case, the UE could use/apply the updated first (UL or joint) TCI state - e.g., after a beam application time or when the updated first TCI state becomes available/applicable - to transmit the first PUSCH in the slot in which the updated first TCI state or the beam indication DCI/MAC CE indicating the updated first TCI state is received (if applicable), and/or in its/their corresponding slot(s) in which the first PUSCH is transmitted/received - as specified herein in the present disclosure - in the remaining slot(s) among the K consecutive slots. Furthermore, in a slot among the K consecutive slots, the UE could be indicated/provided/configured/activated by the network, e.g., via beam indication DCI (e.g., DCI format 1_1/1_2 with or without DL assignment) and/or unified TCI states activation MAC CE, an update for the TCI state associated to the second PUSCH (or transmission of the second PUSCH) - referred to as updated second TCI state. For this case, the UE could use/apply the updated second (UL or joint) TCI state - e.g., after a beam application time or when the updated second TCI state becomes available/applicable - to transmit the second PUSCH in the slot in which the updated second TCI state or the beam indication DCI/MAC CE indicating the updated second TCI state is received (if applicable), and/or in its/their corresponding slot(s) in which the second PUSCH is transmitted/received - as specified herein in the present disclosure - in the remaining slot(s) among the K consecutive slots. Furthermore, the UE could use/apply the updated first/second (UL or joint) TCI state(s) as specified herein in the present disclosure to transmit/receive channels/signals other than the first and second PUSCHs transmitted/received in the slot in which the updated first/second TCI state(s) or the beam indication DCI(s)/MAC CE(s) indicating the updated first/second TCI state(s) is received (if applicable), and in slot(s) thereafter.

In the present disclosure, the time when an indicated Rel. 17 unified TCI state becomes effective/applicable could be determined according to beam application time (BAT) as specified herein in the present disclosure.

In one example, the BAT is the time from a PDCCH (start or end of the PDCCH) containing a DCI format that includes the "Transmission Configuration Indication" (beam indication) field to the first symbol (or slot) at which the new beam corresponding to the "Transmission Configuration Indication" is applied.

*682In one example, the BAT is the time from a channel (start or end of the channel) containing the HARQ-ACK feedback that indicates reception of a DCI format that includes the "Transmission Configuration Indication" (beam indication) field to the first symbol (or slot) at which the new beam corresponding to the "Transmission Configuration Indication" is applied. For example, the BAT could be from the end of UL channel containing HARQ-ACK feedback that indicates reception of a DCI format that includes the "Transmission Configuration Indication" (beam indication) field.

In one example, throughout the present disclosure, when the UE would transmit the last symbol of a PUCCH with HARQ-ACK information corresponding to the DCI carrying the TCI state(s) indication/update and without DL assignment, or corresponding to the PDSCH scheduling by the DCI carrying the TCI state(s) indication/update, and if the indicated TCI state(s) is different from the previously indicated one(s), the indicated DLorJointTCIState or UL-TCIstate should be applied starting from the first slot that is at least BeamAppTime_r17 symbols after the last symbol of the PUCCH. The first slot and the BeamAppTime_r17 symbols are both determined on the carrier with the smallest SCS among the carrier(s) applying the beam indication.

For PUSCH repetition Type B, in case K>1 consecutive slots, the same symbol allocation is applied across the K consecutive slots and the PUSCH is limited to a single transmission layer. The UE may repeat the TB across the K consecutive slots applying the same symbol allocation in each slot. The indicated Rel. 17 unified TCI state (e.g., joint DL and UL TCI state or separate UL TCI state or separate DL TCI state) association to nominal PUSCH repetitions follows the same method as the indicated Rel. 17 unified TCI state (e.g., joint DL and UL TCI state or separate UL TCI state or separate DL TCI state) association to slots in PUSCH Type A repetition as discussed examples by considering nominal repetitions instead of slots.

According to the design examples specified herein in the present disclosure, for PUSCH repetition type B, a first and a second PUSCHs could be repetitions (i.e., of the same TB) across/over the K consecutive nominal PUSCH repetitions. For example, when cyclicMapping is enabled/configured in PUSCH-Config, the first PUSCH maps to the first nominal repetition (or corresponds to the first PUSCH transmission occasion), the second PUSCH maps to the second nominal repetition (or corresponds to the second PUSCH transmission occasion), and so on - i.e., the same mapping pattern of the first/second PUSCHs applies to the remaining nominal repetitions of the K consecutive nominal repetitions. For another example, when sequentialMapping is enabled/configured in PUSCH-Config, the first PUSCH maps to the first and second nominal repetitions (or corresponds to the first and second PUSCH transmission occasions), the second PUSCH maps to the third and fourth nominal repetitions (or corresponds to the third and fourth PUSCH transmission occasions), and so on - i.e., the same mapping pattern of the first/second PUSCHs applies to the remaining nominal repetitions of the K consecutive nominal repetitions.

In one embodiment, for PUSCH repetition type B, the UE could use/apply the first indicated (UL or joint) TCI state - among the N>1 (or M>1) TCI states, e.g., indicated by one or more TCI codepoints of one or more TCI fields in a beam indication DCI or unified TCI states activation MAC CE - to transmit the first PUSCH in its/their corresponding nominal repetition(s) - as specified herein in the present disclosure - among the K consecutive nominal repetitions, and the second indicated (UL or joint) TCI state - among the N>1 (or M>1) TCI states, e.g., indicated by one or more TCI codepoints of one or more TCI fields in a beam indication DCI or unified TCI states activation MAC CE - to transmit the second PUSCH in its/their corresponding nominal repetition(s) - as specified herein in the present disclosure - among the K consecutive nominal repetitions, wherein the N>1 (or M>1) TCI states and/or the beam indication DCI/MAC CE indicating the N>1 (or M>1) TCI states could be indicated/activated/received in the first nominal repetition - e.g., among the K consecutive nominal repetitions - with the scheduled PUSCH(s) or the N>1 (or M>1) TCI states could become effective/applicable in the first nominal repetition - e.g., among the K consecutive nominal repetitions - with the scheduled PUSCH(s).

In one embodiment, for PUSCH repetition type B, in a nominal repetition among the K consecutive nominal repetitions, the UE could be indicated/provided/configured/activated by the network, e.g., via beam indication DCI (e.g., DCI format 1_1/1_2 with or without DL assignment) and/or unified TCI states activation MAC CE, an update for the TCI state associated to the first PUSCH (or transmission of the first PUSCH) - referred to as updated first TCI state. For this case, the UE could use/apply the updated first (UL or joint) TCI state - e.g., after a beam application time or when the updated first TCI state becomes available/applicable - to transmit the first PUSCH in the nominal repetition in which the updated first TCI state or the beam indication DCI/MAC CE indicating the updated first TCI state is received (if applicable), and/or in its/their corresponding nominal repetition(s) in which the first PUSCH is transmitted/received - as specified herein in the present disclosure - in the remaining nominal repetition(s) among the K consecutive nominal repetitions. Furthermore, in a nominal repetition among the K consecutive nominal repetitions, the UE could be indicated/provided/configured/activated by the network, e.g., via beam indication DCI (e.g., DCI format 1_1/1_2 with or without DL assignment) and/or unified TCI states activation MAC CE, an update for the TCI state associated to the second PUSCH (or transmission of the second PUSCH) - referred to as updated second TCI state. For this case, the UE could use/apply the updated second (UL or joint) TCI state - e.g., after a beam application time or when the updated second TCI state becomes available/applicable - to transmit the second PUSCH in the nominal repetition in which the updated second TCI state or the beam indication DCI/MAC CE indicating the updated second TCI state is received (if applicable), and/or in its/their corresponding nominal repetition(s) in which the second PUSCH is transmitted/received - as specified herein in the present disclosure - in the remaining nominal repetition(s) among the K consecutive nominal repetitions. Furthermore, the UE could use/apply the updated first/second (UL or joint) TCI state(s) as specified herein in the present disclosure to transmit/receive channels/signals other than the first and second PUSCHs transmitted/received in the slot (or nominal repetition) in which the updated first/second TCI state(s) or the beam indication DCI(s)/MAC CE(s) indicating the updated first/second TCI state(s) is received (if applicable), and in slot(s) (or nominal repetition(s)) thereafter.

When a UE is provided by the network N>1 (or M>1) Rel. 17 unified TCI states by one or more TCI state codepoints in a DCI format (e.g., DCI format 1_1 or 1_2 with or without DL assignment) or MAC CE, the UE could determine the (spatial domain) transmit filter for transmitting PUSCH or DM-RS of PUSCH according to at least one of the following (for M=2 or N=2) examples.

In one example, if the UE is provided two values of CORESETGroupIndex (i.e., 0 and 1) - e.g., in PDCCH-Config, (spatial domain) transmit filters for transmitting a PUSCH (or one or more layers of a PUSCH) scheduled by a PDCCH (candidate) received in a CORESET associated/configured with value 0 (or 1) of CORESETGroupIndex could be determined according to (or spatially related to) the reference signal provided in the first indicated TCI state/pair of TCI states - e.g., among the M=2 (or N=2) TCI states/pairs of TCI states indicated by one or more TCI state codepoints in DCI format 1_1 or 1_2 with or without DL assignment, and (spatial domain) transmit filters for transmitting a PUSCH (or one or more layers of a PUSCH) scheduled by a PDCCH (candidate) received in a CORESET associated/configured with value 1 (or 0) of CORESETGroupIndex could be determined according to (or spatially related to) the reference signal provided in the second indicated TCI state/pair of TCI states - e.g., among the M=2 (or N=2) TCI states/pairs of TCI states indicated by one or more TCI state codepoints in DCI format 1_1 or 1_2 with or without DL assignment. As discussed before in the present disclosure, a value of CORESETGroupIndex could be indicated in the higher layer parameter ControlResource-Set that configures a CORESET.

In another example, if the UE is provided two values of CORESETGroupIndex (i.e., 0 and 1) - e.g., in PDCCH-Config, (spatial domain) transmit filters for transmitting a PUSCH (or one or more layers of a PUSCH) scheduled by a PDCCH (candidate) received in a Type-1 CORESET associated/configured with value 0 (or 1) of CORESETGroupIndex could be determined according to (or spatially related to) the reference signal provided in the first indicated TCI state/pair of TCI states - e.g., among the M=2 (or N=2) TCI states/pairs of TCI states indicated by one or more TCI state codepoints in DCI format 1_1 or 1_2 with or without DL assignment, and (spatial domain) transmit filters for transmitting a PUSCH (or one or more layers of a PUSCH) scheduled by a PDCCH (candidate) received in a Type-1 CORESET associated/configured with value 1 (or 0) of CORESETGroupIndex could be determined according to (or spatially related to) the reference signal provided in the second indicated TCI state/pair of TCI states - e.g., among the M=2 (or N=2) TCI states/pairs of TCI states indicated by one or more TCI state codepoints in DCI format 1_1 or 1_2 with or without DL assignment. As discussed before in the present disclosure, a value of CORESETGroupIndex could be indicated in the higher layer parameter ControlResourceSet that configures a (Type-1) CORESET.

For PDCCH and PDSCH repetition schemes, an indicated Rel. 17 unified TCI state could only correspond to a joint DL and UL TCI state or a separate DL TCI state. For this case, the UE may not expect the indicated Rel. 17 unified TCI state to be a separate UL TCI state.

For PUCCH and PUSCH repetition schemes, an indicated Rel. 17 unified TCI state could only correspond to a joint DL and UL TCI state or a separate UL TCI state. For this case, the UE may not expect the indicated Rel. 17 unified TCI state to be a separate DL TCI state.

The above flowcharts illustrate example methods that can be implemented in accordance with the principles of the present disclosure and various changes could be made to the methods illustrated in the flowcharts herein. For example, while shown as a series of steps, various steps in each figure could overlap, occur in parallel, occur in a different order, or occur multiple times. In another example, steps may be omitted or replaced by other steps.

In addition to the foregoing explanations, the following enumerated aspects, which must not be confused with the appended claims, are also relevant for the present disclosure:

1. A user equipment (UE), comprising: a transceiver configured to receive: downlink control information (DCI) indicating a plurality of transmission configuration indication (TCI) states, first information in a control resource set (CORESET) configuration, wherein the first information indicates a value of CORESET group index provided by CORESETGroupIndex and wherein one or more CORESET groups each include one or more CORESETs configured with a same CORESETGroupIndex, and second information indicating an association between one or more of the plurality of TCI states and the one or more CORESET groups; and a processor operably coupled with the transceiver, the processor configured to: identify, based on the CORESETGroupIndex indicated by the first information, a CORESET group of a CORESET in which a physical downlink control channel (PDCCH) carrying the DCI was received, and determine, based on the identified CORESET group and the second information, a TCI state in the plurality of TCI states to use for reception of a physical downlink shared channel (PDSCH), the determined TCI state being a joint or downlink TCI state, wherein the transceiver is further configured to receive the PDSCH using the determined TCI state.

2. The UE of aspect 1, wherein: the PDSCH is a first PDSCH and the determined TCI state is a first TCI state, the processor is further configured to determine, based on the identified CORESET group and the second information, to use a second TCI state in the plurality of TCI states for reception of a second PDSCH, and the transceiver is further configured to receive the second PDSCH using the second TCI state.

3. The UE of aspect 2, wherein: the first and second PDSCHs are repetitions over a plurality of consecutive slots, for a cyclic mapping, the processor is further configured to associate the first and second TCI states with first and second consecutive slots for receiving the first and second PDSCHs, respectively, in the plurality of consecutive slots and continue the cyclic mapping for remaining slots in the plurality of consecutive slots, and the DCI indicating the plurality of TCI states is received in a first slot of the plurality of consecutive slots.

4. The UE of aspect 2, wherein: the first and second PDSCHs are repetitions over a plurality of consecutive slots; for a sequential mapping, the processor is further configured to: associate the first TCI state with first and second consecutive slots for receiving the first PDSCH in the plurality of consecutive slots, associate the second TCI state with third and fourth consecutive slots for receiving the second PDSCH in the plurality of consecutive slots, and continue the sequential mapping for remaining slots in the plurality of consecutive slots; the transceiver is further configured to receive the first and second PDSCHs in the respective consecutive slots using the respectively associated TCI states; and the DCI indicating the plurality of TCI states is received in a first slot of the plurality of consecutive slots.

5. The UE of aspect 2, wherein: the first and second PDSCHs are repetitions over a plurality of consecutive slots, the transceiver is further configured to receive, in a slot in the plurality of consecutive slots, an update for the first TCI state, the processor is further configured to determine to use the updated first TCI state, after a beam application time, to receive the first PDSCH in the slot and remaining slots of the plurality of consecutive slots in which the first PDSCH is transmitted, the transceiver is further configured to receive, in another slot in the plurality of consecutive slots, an update for the second TCI state, and the processor is further configured to determine to use the updated second TCI state, after a beam application time, to receive the second PDSCH in the other slot and remaining slots of the plurality of consecutive slots in which the second PDSCH is transmitted.

6. The UE of aspect 1, wherein: the processor is further configured to determine, based on the identified CORESET group and the second information, a second TCI state in the plurality of TCI states to use for transmission of a first physical uplink shared channel (PUSCH), the determined second TCI state is a joint or uplink TCI state, and the transceiver is further configured to transmit the first PUSCH using the determined second TCI state, the processor is further configured to determine, based on the identified CORESET group and the second information, to use a third TCI state in the plurality of TCI states for transmission of a second PUSCH, the first and second PUSCHs are repetitions over a plurality of consecutive slots, the transceiver is further configured to use the second and third TCI states to transmit the first and second PUSCHs, respectively, in the plurality of consecutive slots, and the DCI indicating the plurality of TCI states is received in a first slot of the plurality of consecutive slots, the transceiver is further configured to receive, in a slot in the plurality of consecutive slots, an update for the second TCI state, the processor is further configured to determine to use the updated second TCI state, after a beam application time, to transmit the first PUSCH in the slot and slots of the plurality of consecutive slots thereafter, the transceiver is further configured to receive, in another slot in the plurality of consecutive slots, an update for the third TCI state, and the processor is further configured to determine to use the updated third TCI state, after a beam application time, to transmit the second PUSCH in the other slot and slots of the plurality of consecutive slots thereafter.

7. A base station (BS), comprising: a processor; and a transceiver operably coupled to the processor, the transceiver configured to transmit: in downlink control information (DCI), a plurality of transmission configuration indication (TCI) states, first information in a control resource set (CORESET) configuration, wherein the first information indicates a value of CORESET group index provided by CORESETGroupIndex, wherein one or more CORESET groups each include one or more CORESETs configured with a same CORESETGroupIndex, and wherein the CORESETGroupIndex indicates a CORESET group of a CORESET in which a physical downlink control channel (PDCCH) carrying the DCI was transmitted, second information indicating an association between one or more of the plurality of TCI states and the one or more CORESET groups, wherein the CORESET group and the second information indicate a TCI state in the plurality of TCI states for a physical downlink shared channel (PDSCH) and wherein the TCI state is a joint or downlink TCI state, and the PDSCH.

8. The BS of aspect 7, wherein: the PDSCH is a first PDSCH and the TCI state is a first TCI state, the and the second information further indicate to use a second TCI state in the plurality of TCI states for a second PDSCH, and the transceiver is further configured to transmit the second PDSCH.

9. The BS of aspect 8, wherein: the first and second PDSCHs are repetitions over a plurality of consecutive slots, for a cyclic mapping, the first and second TCI states are associated with first and second consecutive slots for the first and second PDSCHs, respectively, in the plurality of consecutive slots, and the DCI indicating the plurality of TCI states is transmitted in a first slot of the plurality of consecutive slots.

10. The BS of aspect 8, wherein: the first and second PDSCHs are repetitions over a plurality of consecutive slots, for a sequential mapping, the first TCI state is associated with first and second consecutive slots for the first PDSCH in the plurality of consecutive slots and the second TCI state is associated with third and fourth consecutive slots for the second PDSCH in the plurality of consecutive slots, the transceiver is further configured to transmit the first and second PDSCHs in the respective consecutive slots, and the DCI indicating the plurality of TCI states is transmitted in a first slot of the plurality of consecutive slots.

11. The BS of aspect 8, wherein: the first and second PDSCHs are repetitions over a plurality of consecutive slots, the transceiver is further configured to transmit, in a slot in the plurality of consecutive slots, an update for the first TCI state, the updated first TCI state is applicable, after a beam application time, for the first PDSCH in the slot and remaining slots of the plurality of consecutive slots in which the first PDSCH is transmitted, the transceiver is further configured to transmit, in another slot in the plurality of consecutive slots, an update for the second TCI state, and the updated second TCI state is applicable, after a beam application time, for the second PDSCH in the other slot and remaining slots of the plurality of consecutive slots in which the second PDSCH is transmitted.

12. The BS of aspect 7, wherein: the CORESET group and the second information further indicate a second TCI state in the plurality of TCI states for a first physical uplink shared channel (PUSCH), the second TCI state is a joint or uplink TCI state, and the transceiver is further configured to receive the first PUSCH, the CORESET group and the second information further indicate a third TCI state in the plurality of TCI states for a second PUSCH, the first and second PUSCHs are repetitions over a plurality of consecutive slots, the transceiver is further configured to receive the first and second PUSCHs in the plurality of consecutive slots, and the DCI indicating the plurality of TCI states is transmitted in a first slot of the plurality of consecutive slots, the transceiver is further configured to transmit, in a slot in the plurality of consecutive slots, an update for the second TCI state, the updated second TCI state is applicable, after a beam application time, for the first PUSCH in the slot and slots of the plurality of consecutive slots thereafter, the transceiver is further configured to transmit, in another slot in the plurality of consecutive slots, an update for the third TCI state, and the updated third TCI state is applicable, after a beam application time, for second PUSCH in the other slot and slots of the plurality of consecutive slots thereafter.

13. A method of operating a user equipment (UE), the method comprising: receiving downlink control information (DCI) indicating a plurality of transmission configuration indication (TCI) states; receiving first information in a control resource set (CORESET) configuration, wherein the first information indicates a value of CORESET group index provided by CORESETGroupIndex and wherein one or more CORESET groups each include one or more CORESETs configured with a same CORESETGroupIndex; receiving second information indicating an association between one or more of the plurality of TCI states and the one or more CORESET groups; identifying, based on the CORESETGroupIndex indicated by the first information, a CORESET group of a CORESET in which a physical downlink control channel (PDCCH) carrying the DCI was received; determining, based on the identified CORESET group and the second information, a TCI state in the plurality of TCI states to use for reception of a physical downlink shared channel (PDSCH), the determined TCI state being a joint or downlink TCI state; and receiving the PDSCH using the determined TCI state, wherein the PDSCH is a first PDSCH and the determined TCI state is a first TCI state, the method further comprising: determining, based on the identified CORESET group and the second information, to use a second TCI state in the plurality of TCI states for reception of a second PDSCH, and receiving the second PDSCH using the second TCI state.

14. The method of aspect 13, wherein: the first and second PDSCHs are repetitions over a plurality of consecutive slots, the method further comprises, for a cyclic mapping, associating the first and second TCI states with first and second consecutive slots for receiving the first and second PDSCHs, respectively, in the plurality of consecutive slots and continuing the cyclic mapping for remaining slots in the plurality of consecutive slots, and the DCI indicating the plurality of TCI states is received in a first slot of the plurality of consecutive slots.

15. The method of aspect 13, wherein: the first and second PDSCHs are repetitions over a plurality of consecutive slots; the method further comprises, for a sequential mapping: associating the first TCI state with first and second consecutive slots for receiving the first PDSCH in the plurality of consecutive slots, associating the second TCI state with third and fourth consecutive slots for receiving the second PDSCH in the plurality of consecutive slots, and continuing the sequential mapping for remaining slots in the plurality of consecutive slots; receiving the first and second PDSCHs further comprises receiving the first and second PDSCHs in the respective consecutive slots using the respectively associated TCI states; and the DCI indicating the plurality of TCI states is received in a first slot of the plurality of consecutive slots.

Although the present disclosure has been described with exemplary embodiments, various changes and modifications may be suggested to one skilled in the art. It is intended that the present disclosure encompass such changes and modifications as fall within the scope of the appended claims. None of the description in this application should be read as implying that any particular element, step, or function is an essential element that must be included in the claims scope. The scope of patented subject matter is defined by the claims.

**Claims**

1. A method performed by a user equipment, UE, in a communication system, the method comprising:

   receiving, via higher layer signaling, configuration information on transmission configuration indication, TCI, states and configuration information on a first sounding reference signal, SRS, resource set, wherein the TCI states are (i) joint TCI states for downlink, DL, and uplink, UL, or (ii) separate TCI states for UL;

identifying two indicated TCI states among the TCI states;

identifying an indicated TCI state among the two indicated TCI states based on a first parameter with which the first SRS resource set is configured; and

transmitting at least one SRS based on the first SRS resource set and the indicated TCI state among the two indicated TCI states.

2. The method of claim 1, wherein a first indicated TCI state among the two indicated TCI states corresponds to a value of CORESET pool index being 0 and a second indicated TCI state among the two indicated TCI states corresponds to a value of CORESET pool index being 1, in case that the UE is configured with a physical downlink control channel, PDCCH, configuration that contains two different values of CORESET pool index.

3. The method of claim 1, wherein the first parameter indicates a first or a second indicated TCI state among the two indicated TCI states for the first SRS resource set, and

wherein the first SRS resource set is configured with a second parameter on the first SRS resource set being associated with unified TCI state.

4. The method of claim 1, further comprising:

receiving, via the higher layer signaling, configuration information on a second SRS resource set;

receiving a downlink control information, DCI, format including an SRS resource set indicator, wherein the DCI format is one of DCI format 0_1 or DCI format 0_2; and

transmitting a physical uplink shared channel, PUSCH, transmission of repetitions on K consecutive slots based on at least one of the first SRS resource set or the second SRS resource set, wherein:

in case that the DCI format indicates codepoint "00" for the SRS resource set indicator, a first indicated TCI state among the two indicated TCI states is applied to the K consecutive slots;

in case that the DCI format indicates codepoint "01" for the SRS resource set indicator, a second indicated TCI state among the two indicated TCI states is applied to the K consecutive slots; and

in case that the DCI format indicates codepoint "10" for the SRS resource set indicator, and:

in case that K=2, the first indicated TCI state among the two indicated TCI states is applied to a first slot of the 2 consecutive slots and the second indicated TCI state among the two indicated TCI states is applied to a second slot of 2 consecutive slots;

in case that K>2 and cycling mapping in a PUSCH configuration is enabled, the first indicated TCI state among the two indicated TCI states is applied to a first slot of the K consecutive slots and the second indicated TCI state among the two indicated TCI states is applied to a second slot of the K consecutive slots; and

in case that K>2 and sequential mapping in the PUSCH configuration is enabled, the first indicated TCI state among the two indicated TCI states is applied to first and second slots of the K consecutive slots and the second indicated TCI state among the two indicated TCI states third and fourth slots of the K consecutives slots.

5. The method of claim 1, further comprising transmitting a physical uplink control channel, PUCCH, transmission of repetitions, wherein:

a first indicated TCI state among the two indicated TCI states is applied to a first repetition of the PUCCH transmission and a second indicated TCI state among the two indicated TCI states is applied to a second repetition of the PUCCH transmission; or

the first indicated TCI state and the second indicated TCI state are respectively applied per $N_{PUCCH}$ repetitions of the PUCCH transmission, where $N_{PUCCH}=1$ in case that mapping pattern associated with the PUCCH transmission is cyclic mapping and $N_{PUCCH}=2$ in case that the mapping pattern associated with the PUCCH transmission is not the cyclic mapping.

6. A user equipment, UE, (116) in a communication system, the UE comprising:

a transceiver (310); and

a processor (340) coupled with the transceiver and configured to:

receive, via higher layer signaling, configuration information on transmission configuration indication, TCI, states and configuration information on a first sounding reference signal, SRS, resource set, wherein the TCI states are (i) joint TCI states for downlink, DL, and uplink, UL, or (ii) separate TCI states for UL;

identify two indicated TCI states among the TCI states;

identify an indicated TCI state among the two indicated TCI states based on a first parameter with which the first SRS resource set is configured; and

transmit at least one SRS based on the first SRS resource set and the indicated TCI state among the two indicated TCI states.

7. The UE of claim 6, wherein a first indicated TCI state among the two indicated TCI states corresponds to a value of CORESET pool index being 0 and a second indicated TCI state among the two indicated TCI states corresponds to a value of CORESET pool index being 1, in case that the UE is configured with a physical downlink control channel, PDCCH, configuration that contains two different values of CORESET pool index.

8. The UE of claim 6, wherein the first parameter indicates a first or a second indicated TCI state among the two indicated TCI states for the first SRS resource set, and

wherein the first SRS resource set is configured with a second parameter on the first SRS resource set being associated with unified TCI state.

9. The UE of claim 6, wherein the processor is configured to:

receive, via the higher layer signaling, configuration information on a second SRS resource set;

receive a downlink control information, DCI, format including an SRS resource set indicator, wherein the DCI format is one of DCI format 0_1 or DCI format 0_2; and

transmit a physical uplink shared channel, PUSCH, transmission of repetitions on K consecutive slots based on at least one of the first SRS resource set or the second SRS resource set, wherein:

in case that the DCI format indicates codepoint "00" for the SRS resource set indicator, a first indicated TCI state among the two indicated TCI states is applied to the K consecutive slots;

in case that the DCI format indicates codepoint "01" for the SRS resource set indicator, a second indicated TCI state among the two indicated TCI states is applied to the K consecutive slots; and

in case that the DCI format indicates codepoint "10" for the SRS resource set indicator, and:

in case that K=2, the first indicated TCI state among the two indicated TCI states is applied to a first slot of the 2 consecutive slots and the second indicated TCI state among the two indicated TCI states is applied to a second slot of 2 consecutive slots;

in case that K>2 and cycling mapping in a PUSCH configuration is enabled, the first indicated TCI state among the two indicated TCI states is applied to a first slot of the K consecutive slots and the second indicated TCI state among the two indicated TCI states is applied to a second slot of the K consecutive slots; and

in case that K>2 and sequential mapping in the PUSCH configuration is enabled, the first indicated TCI state among the two indicated TCI states is applied to first and second slots of the K consecutive slots and the second indicated TCI state among the two indicated TCI states third and fourth slots of the K consecutives slots.

10. The UE of claim 6, wherein the processor is configured to transmit a physical uplink control channel, PUCCH, transmission of repetitions, wherein:

a first indicated TCI state among the two indicated TCI states is applied to a first repetition of the PUCCH transmission and a second indicated TCI state among the two indicated TCI states is applied to a second repetition of the PUCCH transmission; or

the first indicated TCI state and the second indicated TCI state are respectively applied per $N_{PUCCH}$ repetitions of the PUCCH transmission, where $N_{PUCCH}$=1 in case that mapping pattern associated with the PUCCH transmission is cyclic mapping and $N_{PUCCH}$=2 in case that the mapping pattern associated with the PUCCH transmission is not the cyclic mapping.

11. A method performed by a base station in a communication system, the method comprising:

transmitting, to a user equipment, UE, via higher layer signaling, configuration information on transmission configuration indication, TCI, states and configuration information on a first sounding reference signal, SRS, resource set, wherein the TCI states are (i) joint TCI states for downlink, DL, and uplink, UL, or (ii) separate TCI states for UL, wherein the first SRS resource set is configured with a first parameter associated with an indicated TCI state among two indicated TCI states; and

receiving, from the UE, at least one SRS associated with the first SRS resource set and the indicated TCI state among the two indicated TCI states.

12. The method of claim 11, wherein a first indicated TCI state among the two indicated TCI states corresponds to a value of CORESET pool index being 0 and a second indicated TCI state among the two indicated TCI states corresponds to a value of CORESET pool index being 1, in case that the UE is configured with a physical downlink control channel, PDCCH, configuration that contains two different values of CORESET pool index.

13. The method of claim 11, wherein the first parameter indicates a first or a second indicated TCI state among the two indicated TCI states for the first SRS resource set, and

wherein the first SRS resource set is configured with a second parameter on the first SRS resource set being associated with unified TCI state.

14. A base station (102) in a communication system, the base station comprising:

a transceiver (210a, 210b, 210c); and
a processor (225) coupled with the transceiver and configured to;
transmit, to a user equipment, UE, via higher layer signaling, configuration information on transmission configuration indication, TCI, states and configuration information on a first sounding reference signal, SRS, resource set, wherein the TCI states are (i) joint TCI states for downlink, DL, and uplink, UL, or (ii) separate TCI states for UL, wherein the first SRS resource set is configured with a first parameter associated with an indicated TCI state among two indicated TCI states; and
receive, from the UE, at least one SRS associated with the first SRS resource set and the indicated TCI state among the two indicated TCI states.

15. The base station of claim 14, wherein a first indicated TCI state among the two indicated TCI states corresponds to a value of CORESET pool index being 0 and a second indicated TCI state among the two indicated TCI states corresponds to a value of CORESET pool index being 1, in case that the UE is configured with a physical downlink control channel, PDCCH, configuration that contains two different values of CORESET pool index,

wherein the first parameter indicates a first or a second indicated TCI state among the two indicated TCI states for the first SRS resource set, and

wherein the first SRS resource set is configured with a second parameter on the first SRS resource set being associated with unified TCI state.

# FIG. 1

# FIG. 2

102

205a 210a          205b 210b                    205n 210c

TRANSCEIVER          TRANSCEIVER          ...          TRANSCEIVER

CONTROLLER
/PROCESSOR          225

235

BACKHAUL
/NETWORK IF

MEMORY          230

# FIG. 3

FIG. 4

FIG. 5

500

From Channel → | 555 DC | → | 560 Remove Cyclic Prefix | → | 565 S-to-P | → | 570 Size N FFT | → | 575 P-to-S | → | 580 Channel Decod. & Demod. | → Data Out

# FIG. 6A

# FIG. 6B

650

Beam Width

Beam Direction

FIG. 7

EP 4 597 875 A2

FIG. 8

# FIG. 9

900

RRC configured list/set/pool of TCI states

| TCI #1 | TCI #2 | TCI #3 | TCI #4 | TCI #5 | · · · | TCI #N_tci |

MAC CE based TCI state/beam indication

TCI State IDs (TCI #3, TCI #5)

FIG. 10

1000

RRC configured list/set/pool of TCI states

| TCI #1 | TCI #2 | TCI #3 | TCI #4 | TCI #5 | • • • | TCI #N_tci |

DCI based TCI state/beam indication

TCI State IDs (TCI #3, TCI #5)

# FIG. 11

1100

RRC configured list/set/pool of TCI states

| TCI #1 | TCI #2 | TCI #3 | TCI #4 | TCI #5 | • • • | TCI #N$_{TCI}$ |

Candidate TCI state activated via MAC-CE activation commnd

| TCI #1 | TCI #3 | TCI #5 | • • • | TCI #63 |

DCI based TCI state/beam indication

TCI State IDs (TCI #3, TCI #5)

EP 4 597 875 A2

FIG. 12

1200

1201

The UE receives, e.g., in PDCCH-Config, two values (0 and 1) of CORESET group index (denoted by CORESETGroupIndex)

1202

The UE receives, e.g., in a DCI format 1_1 or 1_2 with or without DL assignment, two TCI states – denoted by TCI state 1 and TCE state 2

1203

The DCI in 1202 is received in a CORESET associated with value 0 of CORESETGroupIndex?

NO

YES

1204

The UE applies TCI state 1 indicated in the DCI received in 1202 to receive PDCCH candidate(s)

1205

The UE applies TCI state 2 indicated in the DCI received in 1202 to receive PDCCH candidate(s)

# FIG. 13

1300

1301

The UE receives, e.g., in PDCCH-Config, two values (0 and 1) of CORESET group index (denoted by CORESETGroupIndex)

1302

The UE receives, e.g., in a DCI format 1_1 or 1_2 with or without DL assignment, two TCI states – denoted by TCI state 1 and TCE state 2

1303

The DCI in 1302 is received in a CORESET associated with value 0 of CORESETGroupIndex?

NO

YES

1304

The UE applies TCI state 1 indicated in the DCI received in 1302 to receive PDCCH(s) scheduled by the DCI received in 1302

1305

The UE applies TCI state 2 indicated in the DCI received in 1302 to receive PDCCH(s) scheduled by the DCI received in 1302

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 584239 A
- US 584239

**Non-patent literature cited in the description**

- NR; Physical channels and modulation. *3GPP TS 38.211 v16.1.0*
- NR; Multiplexing and Channel coding. *3GPP TS 38.212 v16.1.0*
- NR; Physical Layer Procedures for Control. *3GPP TS 38.213 v16.1.0*
- NR; Physical Layer Procedures for Data. *3GPP TS 38.214 v16.1.0*
- NR; Medium Access Control (MAC) protocol specification. *3GPP TS 38.321 v16.1.0*
- NR; Radio Resource Control (RRC) Protocol Specification.. *3GPP TS 38.331 v16.1.0*